(19) Europäisches Patentamt European Patent Office Office européen des brevets

(11) EP 4 488 199 A1

(12) **EUROPEAN PATENT APPLICATION**
published in accordance with Art. 153(4) EPC

(43) Date of publication:
08.01.2025 Bulletin 2025/02

(21) Application number: 23763363.1

(22) Date of filing: 24.02.2023

(51) International Patent Classification (IPC):
*B65G 1/00* (2006.01)     *B65G 1/137* (2006.01)

(52) Cooperative Patent Classification (CPC):
G05B 19/418; B65G 1/04; B65G 1/0492;
B65G 1/065; G05B 2219/31043

(86) International application number:
PCT/JP2023/006764

(87) International publication number:
WO 2023/167104 (07.09.2023 Gazette 2023/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.03.2022 US 202263315563 P
02.02.2023 US 202363482805 P

(71) Applicant: Rapyuta Robotics Co., Ltd.
Tokyo 135-0023 (JP)

(72) Inventors:
• MOHANARAJAH, Gajamohan
  Tokyo 135-0023 (JP)
• ARUDCHELVAN, Krishnamoorthy
  Tokyo 135-0023 (JP)
• YUNOKI, Kosuke
  Tokyo 135-0023 (JP)
• YAMADA, Toshiaki
  Tokyo 135-0023 (JP)
• SHIGAKI, Seiji
  Tokyo 135-0023 (JP)

(74) Representative: FRKelly
Waterways House
Grand Canal Quay
Dublin D02 PD39 (IE)

(54) **AUTOMATED WAREHOUSE SYSTEM**

(57) There is provided an automated storage and retrieval system including: a rack storing a plurality of bins for containing items; a picking station for picking the item from the bin; and a transportation robot for transporting the bin between the rack and the picking station. The picking station defines a plurality of picking positions at which a plurality of the transportation robots transporting the bins are simultaneously aligned to enable picking work of the item from the bin.

Fig.1-1

**Description**

**TECHNICAL FIELD**

The present disclosure generally relates to a warehouse system such as an Automated Storage and Retrieval System (an ASRS or an AS/RS).

**BACKGROUND**

As Electronic Commerce (EC) markets expand, improvement of item storage efficiency and item picking work efficiency for logistics has become a great problem. In order to resolve this problem, for example, WO2018/189110 A1 discloses a warehouse. This warehouse is partitioned into a storage area 10 and an order preparation area 11. Rack 100 storing trays 102 for containing storage target products are arranged in the storage area 10. On the other hand, order preparation stations 12 for operators 13 to process orders are arranged in the order preparation area 11.

To process an order, an automated device 103 transports the tray 102 containing an order target product from the rack 100 to the order preparation station 12. Subsequently, in the order preparation area 11, the tray 102 is transported to in front of the operator 13 by, for example, another operator other than the operator 13, or another system (e.g., conveyer). The operator 13 picks the product from the tray 102, and sorts the picked product as a transportation package 14. It is demanded to make such work more efficient in response to expansion of the EC markets.

Further, each tray 102 of the rack 100 is transported by an automated device 103. At a time of transportation, each automated device 103 takes out the tray 102 from the rack 100, and therefore the tray 102 needs to face a movement route of the automated device 103 at all times. As a result, the rack 100 employs a configuration where two rows of tray groups are stacked in a state where the tray groups including the plurality of trays 102 are aligned. According to this configuration, movement routes of the two rows of the automated devices 103 are required for two rows of tray groups at all times. It is difficult to realize improvement of efficiency for containing the trays 102 for storing products.

Moreover, to process an order, an automated device 103 which is a transportation robot transports the tray 102 containing an order target product from the rack 100 to the order preparation station 12. The automated device 103 is controlled by a central control device. For example, the automated device 103 receives position information from the central control device by wireless communication, and thus the transportation of the tray 102 containing the order target product is controlled. In the warehouse, a large number of automated devices 103 are used, and the large number of automated devices 103 each are controlled by wireless information from the central control device. The automated device 103 needs to be controlled to avoid a collision with the other automated devices 103. Hence, when a large number of automated devices 103 are used, the amount of communication is very high, with the result that the control may be unstable. Depending on the position of the rack 100, there are cased in which the automated device 103 cannot receive the wireless information. As described above, in a conventional warehouse, there are cases in which a large number of automated devices 103 cannot be stably controlled by wireless communication.

The present disclosure has been made in light of the above problem, and a first object of the present disclosure is to provide an automated storage and retrieval system which can substantially improve efficiency of picking work of items. A second object of the present disclosure is to provide an automated storage and retrieval system which enable flexible design of a form thereof. A third object of the present disclosure is to provide a rack assembly method which can easily assemble a rack without requiring large-scale equipment, and the rack. A fourth object of the present disclosure is to provide an automated storage and retrieval system which can substantially improve efficiency for containing bins for containing items. A fifth object of the present disclosure is to provide a transportation robot control system for a warehouse system and a control method which can stably control a large number of robots by wireless communication.

**SUMMARY**

[First Invention] In order to achieve the above first object, according to one aspect of the present disclosure, an automated storage and retrieval system is provided, and the automated storage and retrieval system includes: a rack storing a plurality of bins for containing items; a picking station for picking the item from the bin; and a transportation robot for transporting the bin between the rack and the picking station, wherein the picking station defines a plurality of picking positions at which a plurality of the transportation robots transporting the bins are simultaneously aligned to enable picking work of the item from the bin..

In such this automated storage and retrieval system, the picking station further defines one or more loading positions at which a plurality of shipment bins for loading the items are arranged.

In such automated storage and retrieval system, the rack includes a plurality of floors each of which stores the plurality of bins and allows the transportation robot run along a surface thereof, and one or more transportation elevators for transporting the transportation robot between the plurality of floors, and wherein the plurality of picking positions is defined on at least one of the floors.

The plurality of picking positions is defined at an edge of the floor which continues from the surface of the floor.

A plurality of the picking stations is defined at the rack.

The transportation robot is configured to be able to transport the bin between the plurality of picking stations.

The plurality of bins is received on the floor by a plurality of support legs extending from bottom surfaces of the plurality of bins, and the transportation robot is configured to be able to enter a space below the bin between a bottom surface of the bin and the floor, and supports the bin so as to enable transportation of the bin by lifting the bottom surface of the bin in the space below.

Each of the plurality of floors defines a storage area storing the plurality of bins, and a movement route allowing the transportation robot to run outside the storage area, and each of the plurality of bins faces the movement passage..

The storage area of the floor allows the transportation robot to run.

An outline of the transportation robot is defined on an inner side of an outline of the bin in plan view in a case where the transportation robot enters the space below the bin.

The bin containing an item of a higher inventory turnover ratio is stored in a floor below the plurality of floors.

The transportation robot which has transported the bin to the picking station stays in a space below the bin at the picking station during the picking work at the picking station.

The transportation robot operates to return the bin from the picking station to the rack after the picking work at the picking station.

[Second invention] In order to achieve the above second object, according to one aspect of the present disclosure, an automated storage and retrieval system is provided, and the automated storage and retrieval system includes: a rack storing a plurality of bins for containing items; a picking station for picking the item from the bin; and a transportation robot for transporting the bin between the rack and the picking station, and the picking station defines one or more picking positions at which the transportation robot transporting the bin is arranged to enable picking work of the item from the bin, and one or more retracted positions at which the transportation robot temporarily retracts the bin from the picking position.

In such automated storage and retrieval system, the picking station further defines one or more loading positions at which a plurality of shipment bins for loading the items are arranged, and the transportation robot is configured to be able to transport the shipment bins between the loading positions and the retracted positions.

The rack includes a plurality of floors each of which stores the plurality of bins and allows the transportation robot to run along a surface thereof, and one or more transportation elevators for transporting the transportation robot between the plurality of floors, and wherein the one or more picking positions are defined on at least one of the floors.

The retracted positions are defined on the same floor as the floor on which the one or more picking positions are defined.

The picking station further defines one or more loading positions at which a plurality of shipment bins for loading the item are arranged, the transportation robot is configured to be able to transport the shipment bins between the loading positions and the retracted positions, and the loading positions are defined on the same floor as the floor on which the one or more picking positions are defined.

The plurality of picking positions is defined at an edge of the floor which continues from the surface of the floor.

The plurality of bins is received on the floor by a plurality of support legs extending from bottom surfaces of the plurality of bins, and the transportation robot is configured to be able to enter a space below the bin between a bottom surface of the bin and the floor, and supports the bin so as to enable transportation of the bin by lifting the bottom surface of the bin in the space below.

Each of the plurality of floors defines a storage area storing the plurality of bins, and a movement route allowing the transportation robot to run outside the storage area, and each of the plurality of bins faces the movement route.

The storage area of the floor allows the transportation robot to run.

An outline of the transportation robot is defined on an inner side of an outline of the bin in plan view in a case where the transportation robot enters the space below the bin.

The bin containing an item of a higher inventory turnover ratio is stored in a floor below the plurality of floors.

The transportation robot which has transported the bin to the picking station stays in a space below the bin at the picking station during the picking work at the picking station.

The transportation robot operates to return the bin from the picking station to the rack after the picking work at the picking station.

[Third invention] In order to achieve the above second object, according to one aspect of the present disclosure, an automated storage and retrieval system is provided, and the automated storage and retrieval system includes: a rack storing a plurality of bins for containing items; a transportation robot transporting the bin in the rack; and a transportation elevator which moves in the rack and can transport the transportation robot. The rack includes a plurality of floors each of which stores each of the plurality of bins, and allows the transportation robot to run along a surface thereof. Furthermore, the rack includes a plurality of support column modules forming a passage of the transportation elevator. Each of the support column modules extends between at least the mutually neighboring floors. One support column module is configured to be able to be coupled to another support column module.

Each of the support column modules includes an engagement member guiding the transportation elevator.

The transportation elevator includes at least one driven part to be rotationally driven, and the engagement member is configured to be able to be engaged with the driven part of the transportation elevator.

The driven part of the transportation elevator is a sprocket, and the engagement member is a roller chain.

Each of the support column modules is configured to be able to support the floor adjacent to the passage of the transportation elevator.

The engagement member of each of the support column modules is configured to be located in a space of the passage of the transportation elevator. Each of the support column modules is configured to be able to support the floor outside the space of the passage of the transportation elevator.

Each of the support column modules includes an insertion plug, an accommodation plug, and a main body extending between the insertion plug and the accommodation plug. The insertion plug and the accommodation plug are configured to be able to be coupled to each other.

The engagement member of the one support column module is configured to be able to be coupled to the engagement member of the another support column module.

[Fourth invention] In order to achieve the above third object, according to one aspect of the present disclosure, a method for assembling a rack is provided, and the method for assembling a rack including a plurality of floors each of which stores a plurality of bins for containing items, and allows a transportation robot to run along a surface thereof, and a plurality of support columns supporting the floors, each of the floors including a plurality of floor modules making up part of the floor, and each of the floor modules being detachably supported by the support column. The method for assembling a rack includes steps of: assembling each of the floors from a lower floor to an upper floor by attaching the floor module to the support column; and keeping the at least one floor module detached from the support column on each of the floors to secure a route for an operator to go down to the floor of the lower floor from the upper floor in the assembling step.

The method for assembling a rack further includes a step of closing the route by the detached floor module on the floor of the upper floor when the operator goes down from the floor of the upper floor to the floor of the lower floor when assembly of all of the floors is completed.

A position of the detached floor module is displaced in a horizontal direction from a position of the floor module detached on the floor above the floor of the upper floor.

The displacement in the horizontal direction corresponds to a space of the one floor module.

The route is formed in a step-like shape.

The floor module can be detached upward from the support column.

Each of the support columns includes a support column module extending between at least the mutually neighboring floors, and the support column module can be coupled to the another support column module in a vertical direction.

The one support column supports corner portions of the plurality of floor modules.

Another aspect of the present disclosure provides a rack, the rack includes: a plurality of floors each of which stores a plurality of bins for containing items, and allows a transportation robot to run along a surface thereof; and a plurality of support columns supporting the floors, each of the floors includes a plurality of floor modules making up part of each of the floors, and each of the floor modules is detachably supported by the support column.

The floor module can be detached upward from the support column.

Each of the support columns includes a support column module extending between at least the mutually neighboring floors, and the support column module can be coupled to the another support column module in a vertical direction.

The one support column supports corner portions of the plurality of floor modules.

[Fifth invention] In order to achieve the above fourth object, according to one aspect of the present disclosure, an automated storage and retrieval system is provided, and the automated storage and retrieval system includes: a rack storing a plurality of bins for containing items; and a transportation robot for transporting the bin in the rack, wherein the rack includes a plurality of floors each of which stores the plurality of bins, and allows the transportation robot to run along a surface thereof, and when the one or more bins obstructive for transportation of the target bin are arranged on the one floor, the one or more transportation robots move the one or more obstructive bins to enable another transportation robot to transport the target bin.

The transportation robot is configured to be able to pass below the bin, and transport the bin in a state where the transportation robot lifts the bin from below.

The bin is supported on the floor by four support legs, and the transportation robot is configured to be able to enter below the bin from between a pair of the neighboring support legs.

Before the one or more transportation robots move the one or more obstructive bins, another transportation robot enters below the target bin, the one or more transportation robots move the one or more obstructive bins, and, at a same time, another transportation robot moves the target bin.

After another transportation robot moves the target bin, the one or more transportation robots arrange one of the one or more obstructive bins at a position of the target bin.

When there is a plurality of the obstructive bins, each of the plurality of obstructive bins is moved by the individual transportation robots respectively.

The floors define one or more retracted positions to which the one or more transportation robots temporarily retract the one or more bins which are the obstacles.

The automated storage and retrieval system further includes a picking station defined in the rack and used to pick the item from the bin, and the transportation robot transports the bin between the rack and the picking station, and at a non-operation time of picking work of the item at the picking station, the transportation robot rearranges the bin containing the item necessary for the picking work after start of an operation.

When the bins are rearranged in advance, the transportation robot aligns the bins to make a movement distance to the picking station shorter.

As an order of the picking work performed at the picking station after the start of the operation becomes earlier, the movement distance is set shorter.

The non-operation time of the picking work is a night time.

The bins are rearranged on the same floor as the floor on which the picking station is defined.

[Sixth invention] In order to achieve the above fifth object, a transportation robot control system for a warehouse system according to the present disclosure is a transportation robot control system for a warehouse system that stores items in a rack and includes a plurality of transportation robots for transporting the items stored, and includes: a central wireless communication unit configured to be able to wirelessly communicate with the transportation robots in a specific region of the warehouse system; an individual wireless communication unit configured to be able to wirelessly communicate with the transportation robots; and individual control units respectively controlling the movements of the transportation robots. The individual wireless communication unit includes information reading units that are respectively provided in the transportation robots and a plurality of information holding units that are arranged in the rack. Each of the information holding units holds position information indicating a position in the rack. At the position, the information holding unit is arranged. Each of the information reading units is configured to be able to read position information held by the information holding units.

In the transportation robot control system for a warehouse system according to the one aspect of the present disclosure, each of the individual control units controls, based on the position information read from the information holding unit by the information reading unit of the transportation robot, the transportation robot being the object of the control by the individual control unit, the movement of the transportation robot being the object.

The transportation robot control system for a warehouse system according to the one aspect of the present disclosure further includes: a central control unit which is a control unit for controlling the movements of the transportation robots, the central control unit generates individual route information indicating a movement route of each of the transportation robots, the central wireless communication unit transmits the individual route information to the transportation robot for which the individual route information is generated and the individual control unit for the transportation robot controls, based on the position information read from the information reading unit, the transportation robot such that the transportation robot moves along the movement route indicated by the route information.

In the transportation robot control system for a warehouse system according to the one aspect of the present disclosure, each of the information reading units is configured to be able to read, in a predetermined range around each of the information holding units, the information held by the information holding unit, and the predetermined ranges of the information holding units do not overlap each other.

In the transportation robot control system for a warehouse system according to the one aspect of the present disclosure, the information holding units are uniformly distributed on each floor in the rack.

The transportation robot control system for a warehouse system according to the one aspect of the present disclosure further includes: mutual wireless communication units allowing each of the transportation robots to wirelessly communicate with the other transportation robots, and each of the individual control units controls, based on the content of wireless communication performed by the mutual wireless communication unit of the transportation robot being the object of the individual control unit, the movement of the corresponding transportation robot.

In the transportation robot control system for a warehouse system according to the one aspect of the present disclosure, each of the individual control units determines, based on the movement route information for the transportation robot being the object of the individual control unit, the position information read from the information holding unit for the transportation robot being the object and the content of the wireless communication performed by the mutual wireless communication unit, a collision between the corresponding transportation robot and another of the transportation robots.

In the transportation robot control system for a warehouse system according to the one aspect of the present disclosure, when each of the individual control units determines that the transportation robot being the object collides with the another of the transportation robots, the individual control unit stops the transportation robot being the object.

In the transportation robot control system for a warehouse system according to the one aspect of the present disclosure, the mutual wireless communication unit of one of the transportation robots exchanges, with the mutual wireless communication units of another of the transportation robots, by wireless communication, the position information and the route information thereof.

In order to achieve the above object, a method for controlling a transportation robot in a warehouse system according to the present disclosure is a method for controlling a transportation robot in a warehouse system that stores items in a rack and includes a plurality of transportation robots for transporting the items stored, and includes: a central wireless communication step of wirelessly communicating with the transportation robots in a specific region of the warehouse system; an individual wireless communication step of wirelessly communicating with the transportation robots; and individual control steps of respectively controlling movements of the transportation robots. The individual wireless communication step includes information reading steps that are respectively performed in the transportation robots and a plurality of information holding steps that are respectively performed in a plurality of positions in the rack. The information holding steps are to hold position information indicating positions in the rack. Each of the information reading steps is to read position information held by the information holding steps.

In the method for controlling a transportation robot in a warehouse system according to the one aspect of the present disclosure, each of the individual control steps controls, based on the position information which is read in the information reading step performed by the transportation robot, the robot being the object of the control by the individual control step and is held in the information holding step, the movement of the transportation robot being the object.

The method for controlling a transportation robot in a warehouse system according to the one aspect of the present disclosure further includes: a central control step of controlling the movements of the transportation robots, the central control step generates individual route information indicating a movement route of each of the transportation robots, the central wireless communication step transmits the individual route information to the transportation robot for which the individual route information is generated and the individual control step for the transportation robot controls, based on the position information read in the information reading step, the transportation robot such that the transportation robot moves along the movement route indicated by the route information.

In the method for controlling a transportation robot in a warehouse system according to the one aspect of the present disclosure, each of the information reading steps is configured to be able to read, in a predetermined range around the position indicated by the position information held in the information holding step, the information held in the information holding step, and the predetermined ranges do not overlap each other.

In the method for controlling a transportation robot in a warehouse system according to the one aspect of the present disclosure, the positions indicated by the position information held in the information holding steps are uniformly distributed on each floor in the rack.

The method for controlling a transportation robot in a warehouse system according to the one aspect of the present disclosure further includes: mutual wireless communication steps of performing wireless communication between each of the transportation robots and the other transportation robots, and each of the individual control steps controls, based on content of the mutual wireless communication step of the transportation robot being the object of the individual control step, the movement of the corresponding transportation robot.

In the method for controlling a transportation robot in a warehouse system according to the one aspect of the present disclosure, each of the individual control steps determines, based on the movement route information for the transportation robot being the object of the individual control step, the position information read in the information holding step for the transportation robot being the object and the content of the mutual wireless communication step, a collision between the corresponding transportation robot and another of the transportation robots.

In the method for controlling a transportation robot in a warehouse system according to the one aspect of the present disclosure, when each of the individual control steps determines that the transportation robot being the object collides with the another of the transportation robots, the individual control step stops the transportation robot being the object.

In the method for controlling a transportation robot in a warehouse system according to the one aspect of the present disclosure, the mutual wireless communication step of one of the transportation robots exchanges, with the mutual wireless communication steps of another of the transportation robots, by wireless communication, the position information and the route information thereof.

In order to achieve the above object, in a non-transitory computer-readable medium including a processor instruction according to the present disclosure, when the processor instruction is executed by one or more processors, the one or more processors are caused to perform, in a warehouse system that stores items in a rack and includes a plurality of transportation robots for transporting the items stored, a central wireless communication step of wirelessly communicating with the transportation robots in a specific region of the warehouse system, an individual wireless communication step of wirelessly communicating with the transportation robots and individual control steps of respectively controlling movements of the transportation robots. The individual wireless communication step includes information reading steps that are respectively performed in the transportation robots and a plurality of information holding steps that are respectively performed in a plurality of positions in the rack. Each of the information holding steps is to hold position information indicating a position of the information holding step in the rack. Each of the information reading steps is to read position information held by the information holding steps.

[Seventh invention] In order to achieve the above first object, according to one aspect of the present disclosure, an automated storage and retrieval system is provided, and the system comprising: a multi-floor storage structure defined with a storage space in each floor of the multi-floor storage structure; a plurality of storage bins arranged in the storage space, wherein each of the plurality of storage bins is configured to store inventory; at least one autonomous vehicle configured to move under and transport the at least one storage bin of the plurality of storage bins and is configured to transport the plurality of storage bins within each floor and across multiple floors of the multi-floor storage structure.

The automated storage and retrieval system comprises one or more vertical elevators installed in the multi-floor storage structure and is configured to transport the at least one autonomous vehicle with or without the plurality of storage bins vertically across the multiple floors.

Each floor of the multi-floor storage structure is defined with at least one opening and the one or more vertical elevators is configured to traverse through the at least one opening.

Each storage bin of the plurality of storage bins is defined with: a base; a side wall structure extending upwardly from the base; and one or more legs extending downwardly from the base such that the base is elevated from the floor.

The side wall structure and the base define an internal volume to store the inventory.

Each floor of the multi-floor storage structure is built with a plurality of pallets adjoined to each other.

The automated storage and retrieval system comprises a plurality of support pillars configured to support the plurality of pallets.

Each of the plurality of support pillars comprises: a foot; and an elongated member extending upwardly from the foot and supporting the plurality of pallets across the multiple floors of the multi-floor storage structure.

The elongated member of each of the plurality of support pillars are defined with ridges to connect with the plurality of pallets.

Each pallet of the plurality of pallets is supported by the plurality of support pillars along corners of the pallet.

Each of the one or more vertical elevators comprises: a plate slidably connected to the plurality of support pillars; and a plurality of wheels mounted on the ridges of the plurality of support pillars to facilitate vertical movement of the one or more vertical elevators.

According to one aspect of the present disclosure, a method for handling inventory in an automatic storage and retrieval system is provided, the method comprising: storing inventory in a plurality of storge bins arranged in a storage space defined in each floor of a multi-floor storage structure; transporting the plurality of storage bins within each floor and across multiple floors of the multi-floor storage structure by at least one autonomous vehicle, wherein at least one autonomous vehicle is configured to move under and transport the at least one storage bin of the plurality of storage bins.

The method for handling inventory in an automatic storage and retrieval system comprises traversing vertically the at least one autonomous vehicle with or without the plurality of storage bins across the multiple floors by one or more vertical elevators.

## BRIEF DESCRIPTION OF DRAWINGS

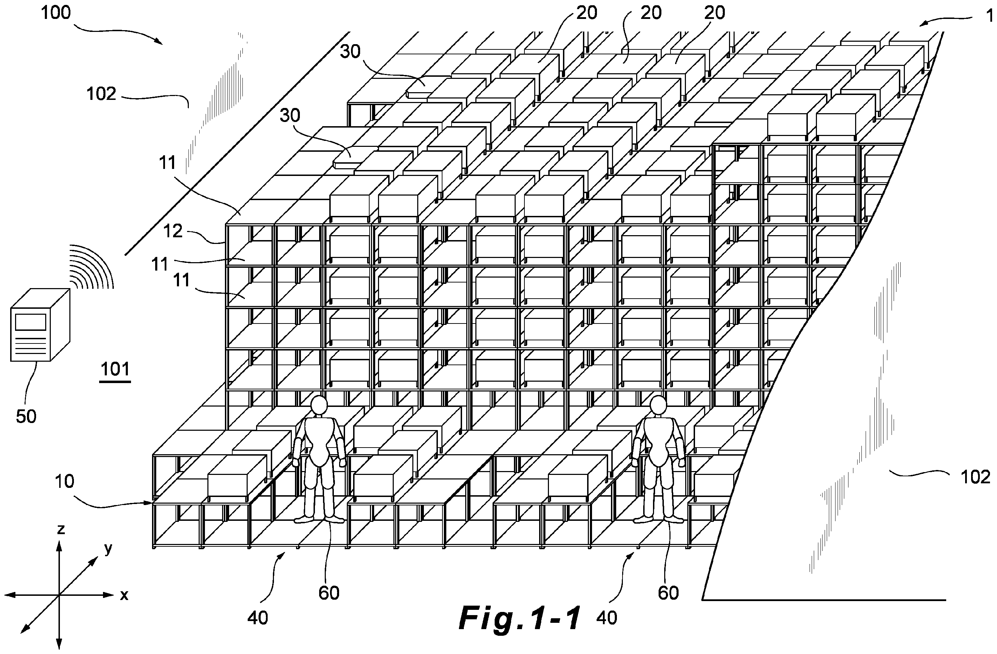

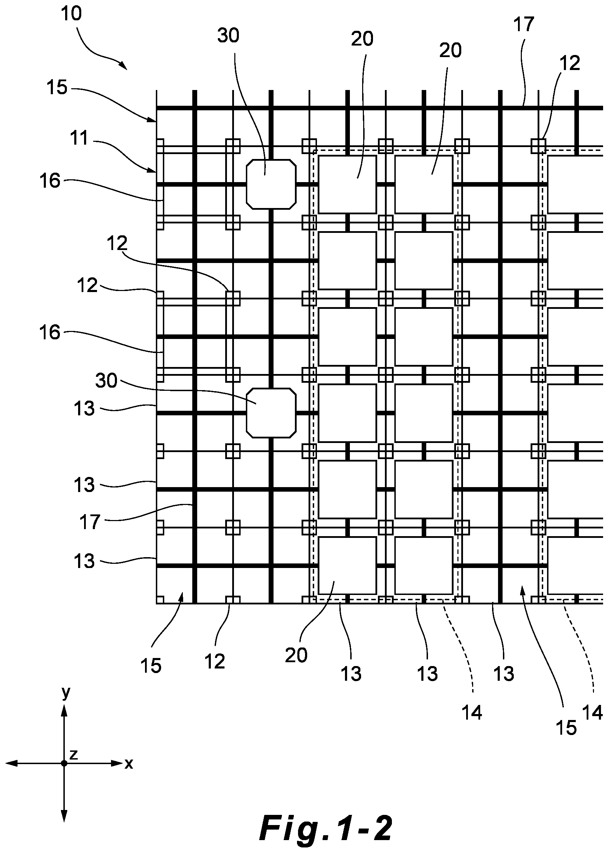

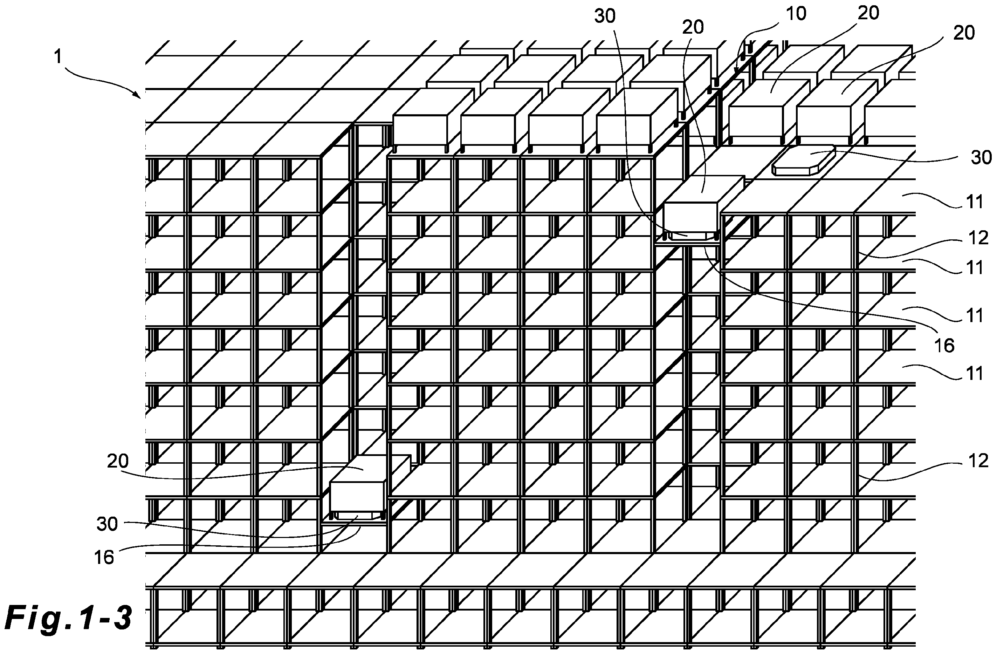

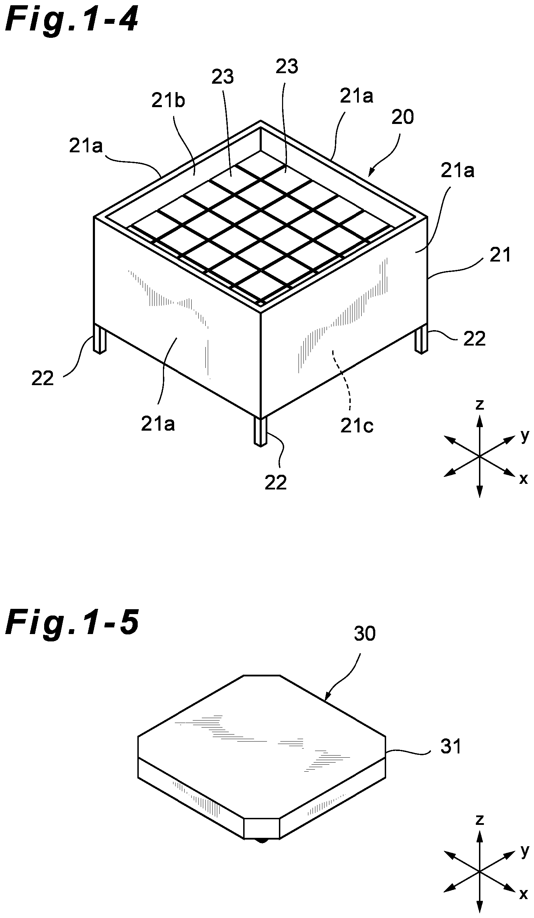

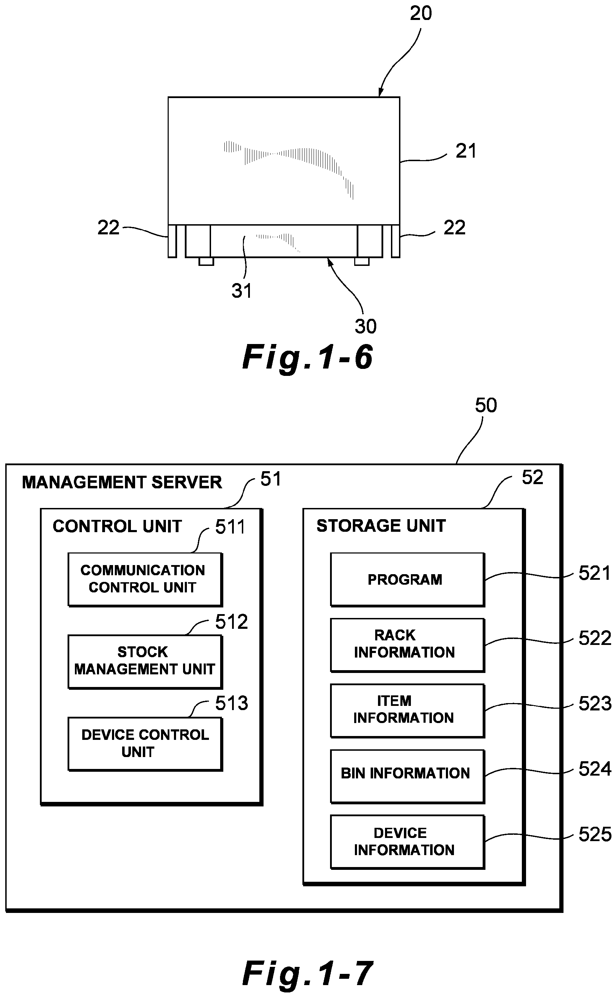

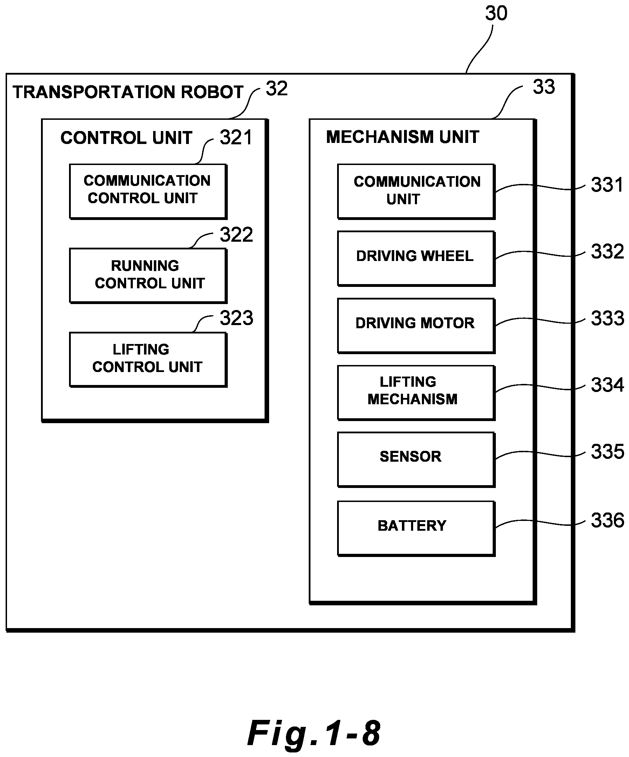

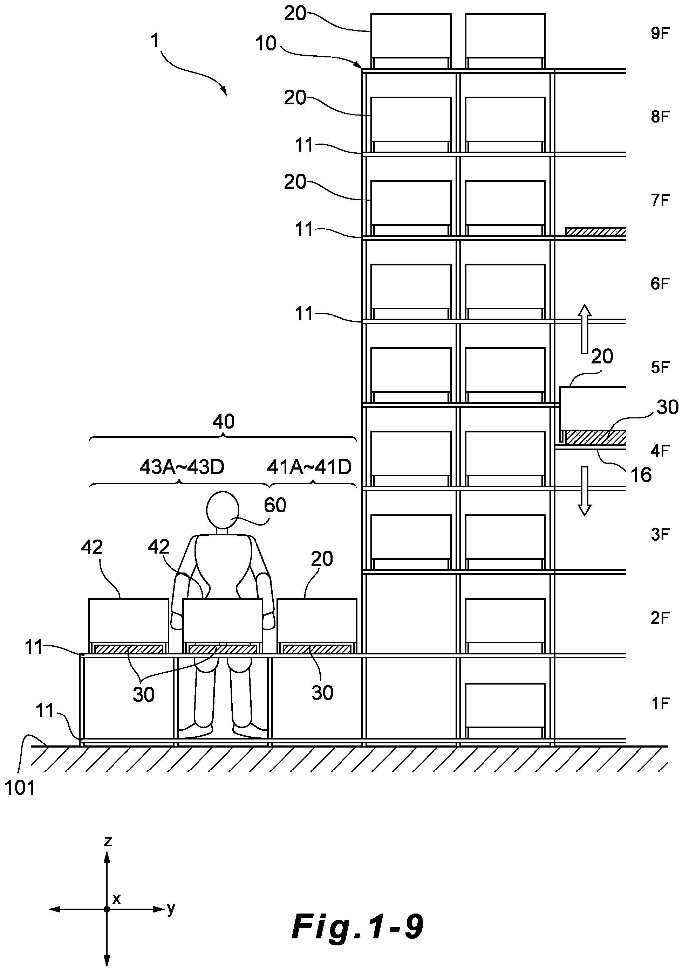

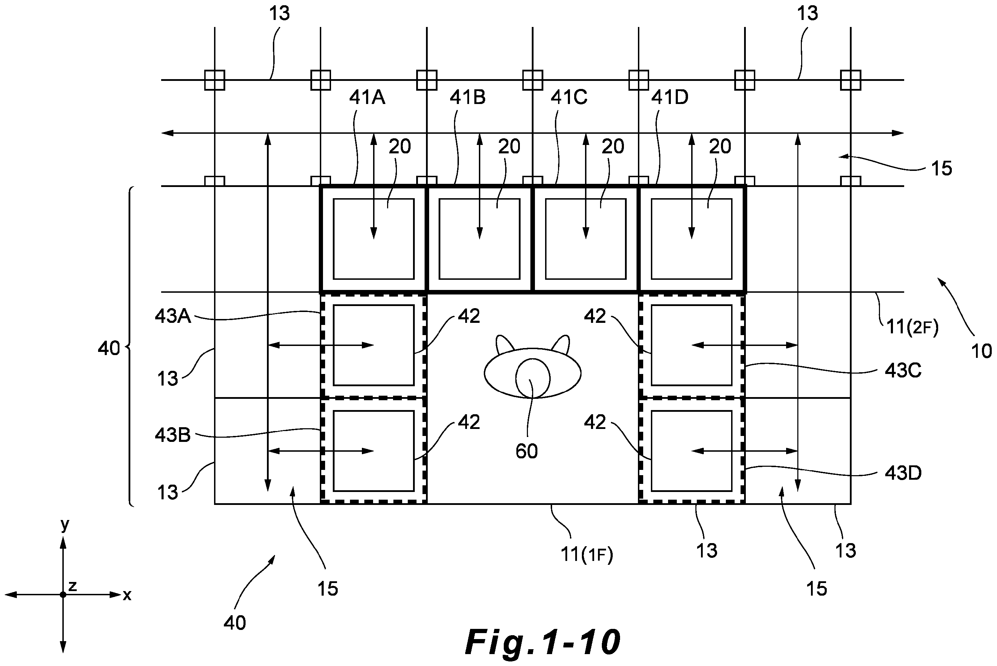

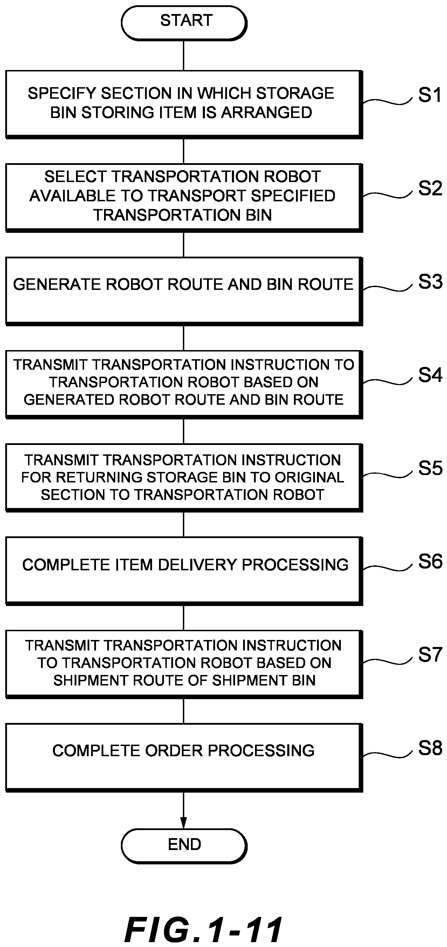

FIG. 1-1 is a perspective view schematically illustrating an external appearance of an automated storage and retrieval system 1 according to an embodiment of the present disclosure;

FIG. 1-2 is a plan view schematically illustrating an example of a structure of floors 11 of a rack 10 of the automated storage and retrieval system 1 according to the present embodiment;

FIG. 1-3 is a perspective view schematically illustrating an example of a structure of the rack 10 of the automated storage and retrieval system 1 according to the embodiment;

FIG. 1-4 schematically illustrates an example of a structure of a storage bin 20 of the automated storage and retrieval system 1 according to the embodiment;

FIG. 1-5 is a perspective view schematically illustrating an external appearance of a transportation robot 30 of the automated storage and retrieval system 1 according to the embodiment;

FIG. 1-6 is a side view illustrating a state where the transportation robot 30 of the automated storage and retrieval system 1 according to the embodiment lifts the storage bin 20;

FIG. 1-7 is a functional block diagram schematically illustrating a configuration of a management server 50;

FIG. 1-8 is a functional block diagram schematically illustrating a configuration of the transportation robot 30;

FIG. 1-9 is a side view of the rack 10 schematically illustrating an example of a configuration of a picking station 40 of the automated storage and retrieval system 1 according to the embodiment;

FIG. 1-10 is a plan view of the rack 10 schematically illustrating an example of a configuration of the picking station 40 of the automated storage and retrieval system 1 according to the embodiment; and

FIG. 1-11 is a flowchart for explaining processing of a control unit 51 of the management server 50 of the automated storage and retrieval system 1 according to the embodiment.

FIG. 2-1 is a perspective view schematically illustrating an external appearance of an automated storage and retrieval system 1 according to an embodiment of the present disclosure;

FIG. 2-2 is a plan view schematically illustrating an example of a structure of floors 11 of a rack 10 of the automated storage and retrieval system 1 according to the present embodiment;

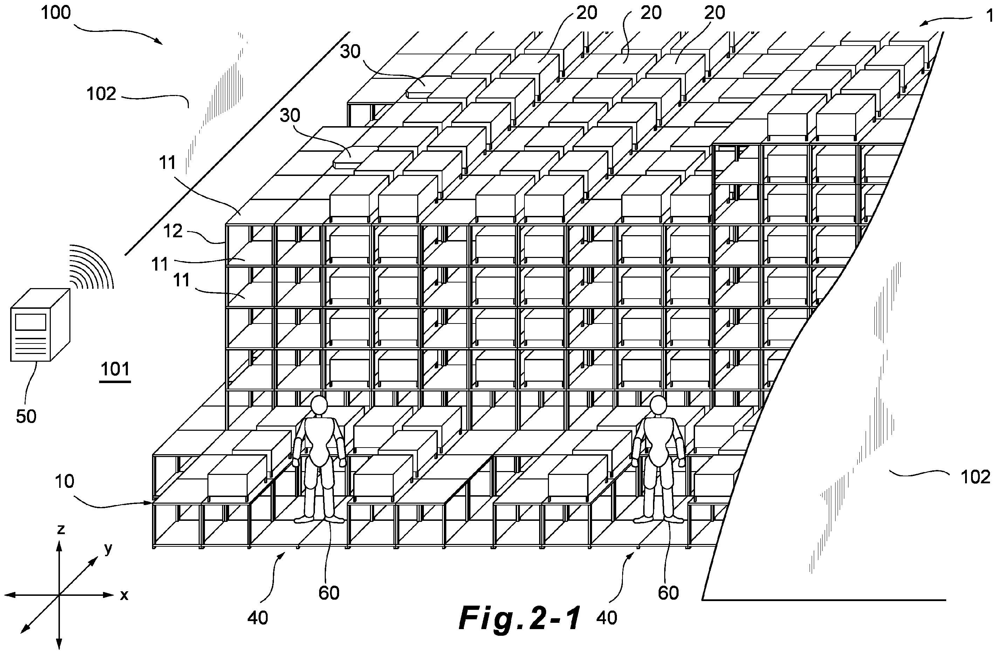

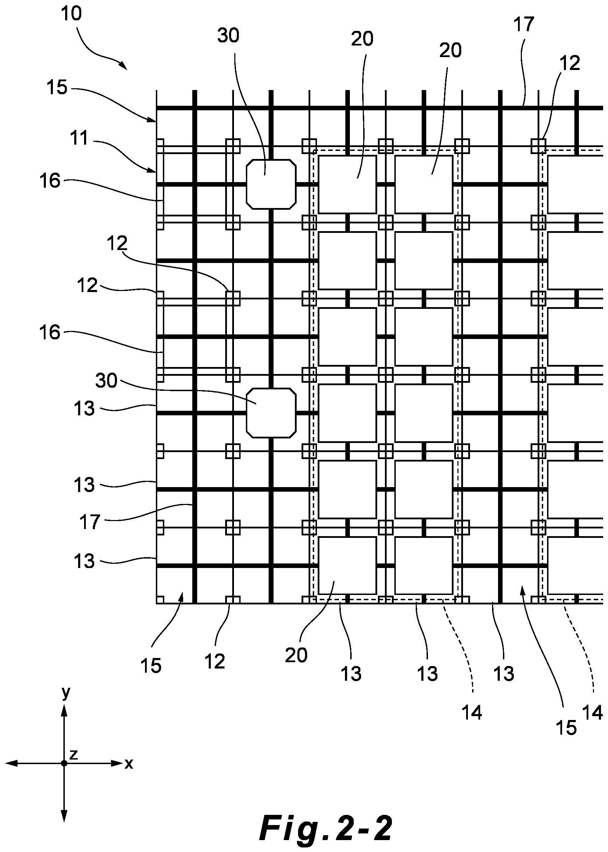

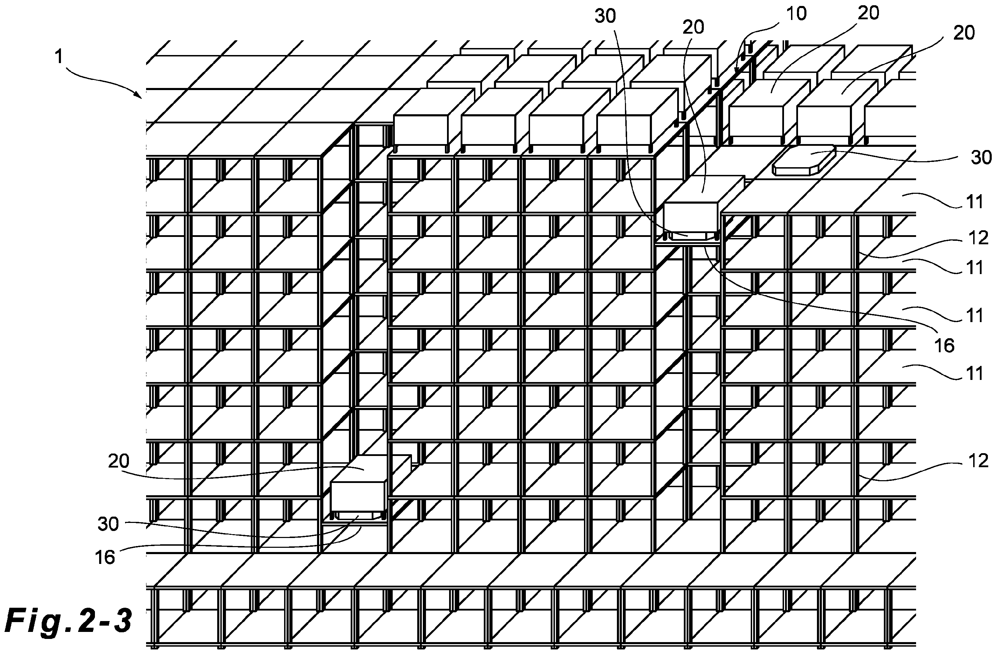

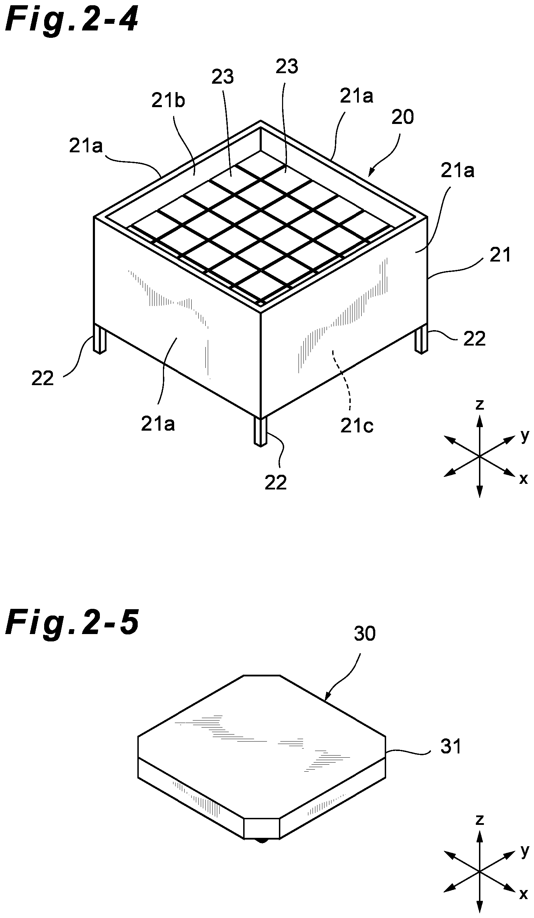

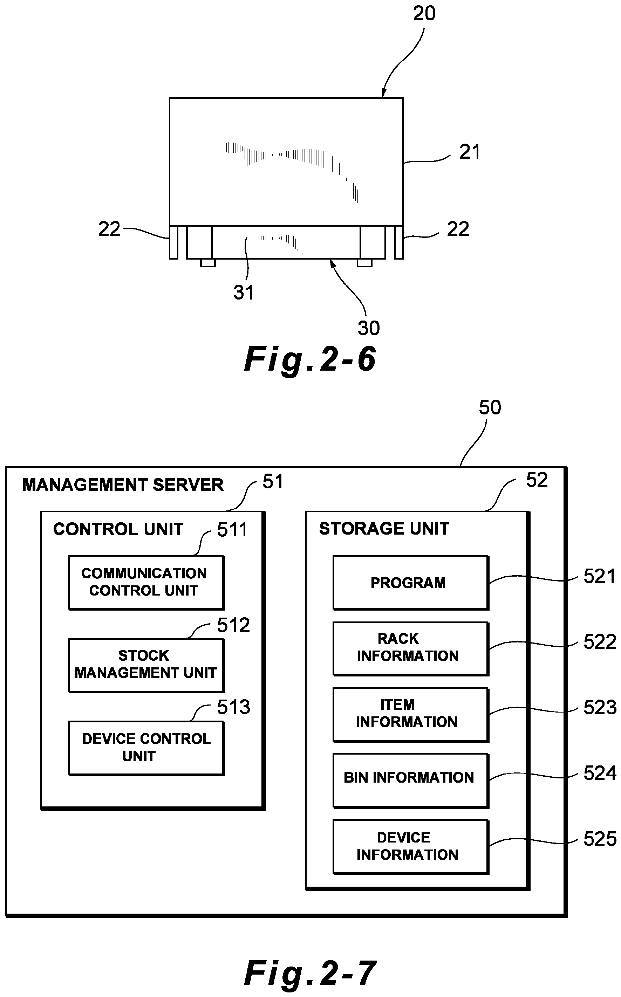

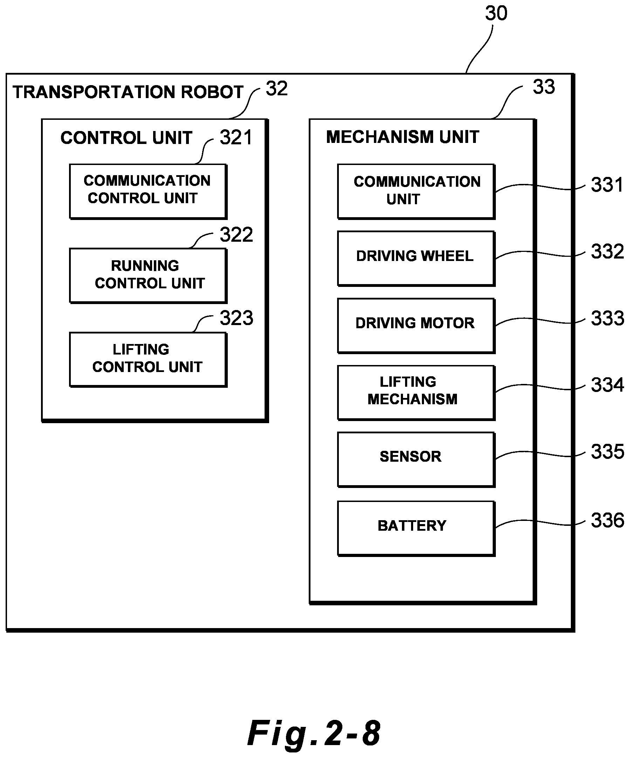

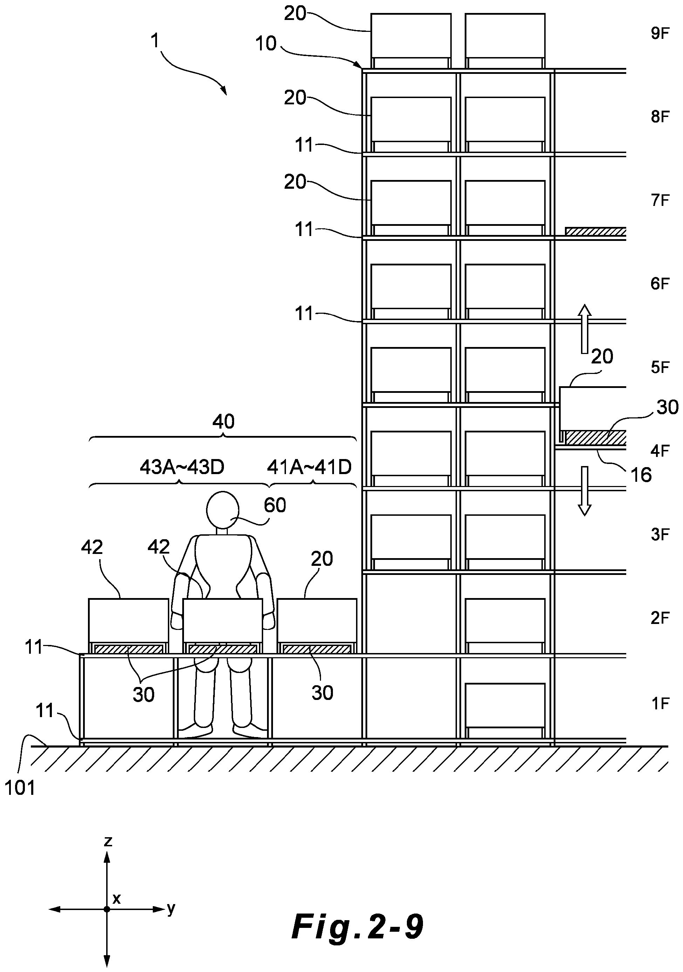

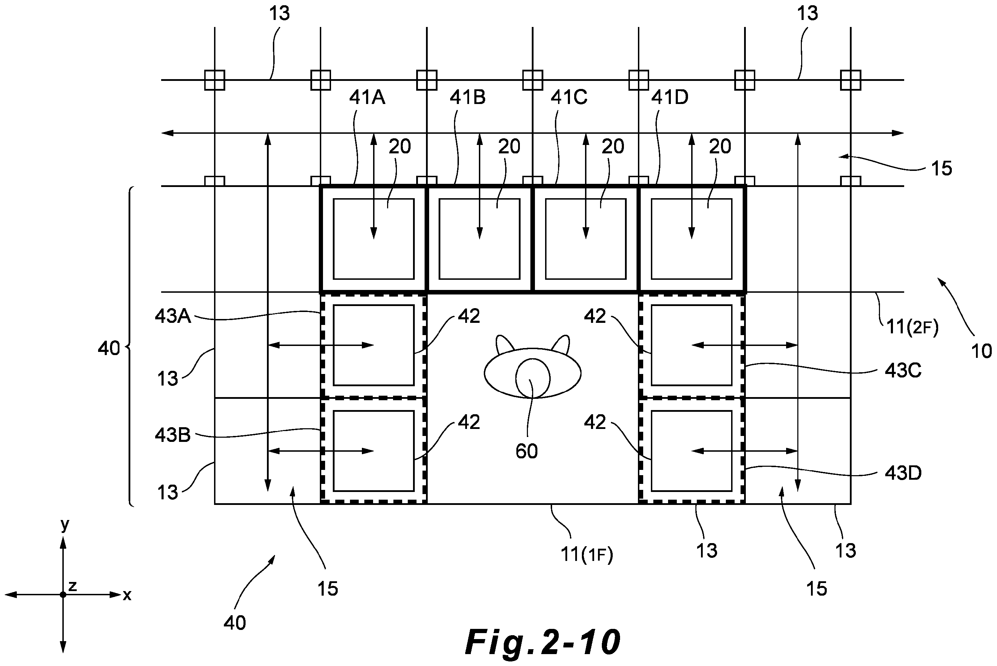

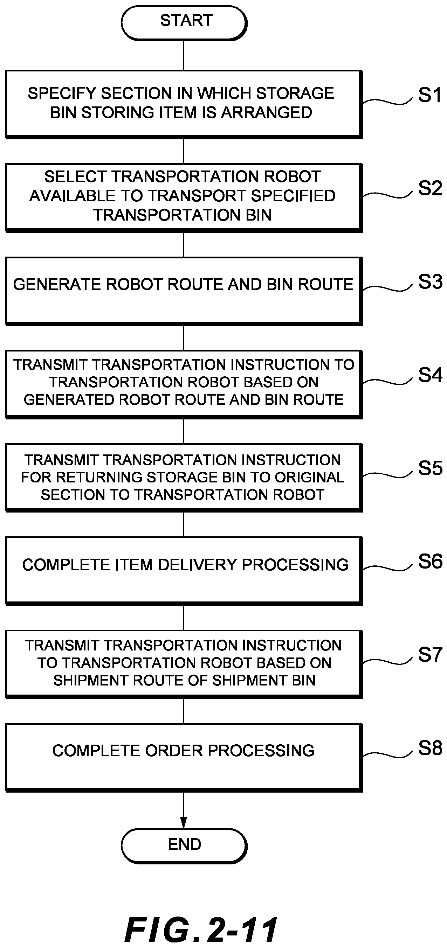

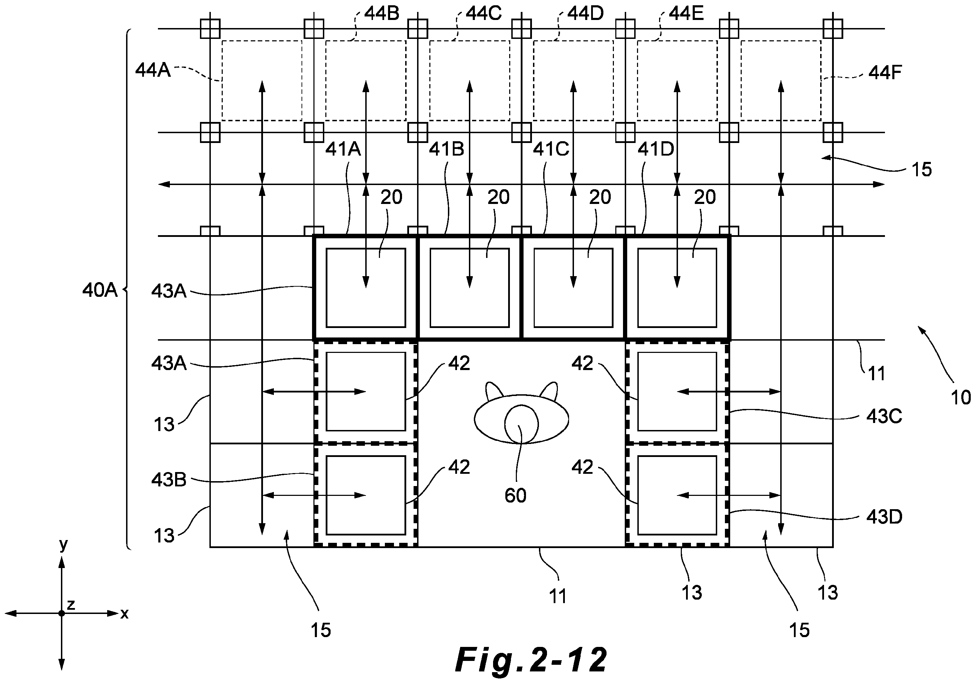

FIG. 2-3 is a perspective view schematically illustrating an example of a structure of the rack 10 of the automated storage and retrieval system 1 according to the embodiment;

FIG. 2-4 schematically illustrates an example of a structure of a storage bin 20 of the automated storage and retrieval system 1 according to the embodiment;

FIG. 2-5 is a perspective view schematically illustrating an external appearance of a transportation robot 30 of the automated storage and retrieval system 1 according to the embodiment;

FIG. 2-6 is a side view illustrating a state where the transportation robot 30 of the automated storage and retrieval system 1 according to the embodiment lifts the storage bin 20;

FIG. 2-7 is a functional block diagram schematically illustrating a configuration of a management server 50;

FIG. 2-8 is a functional block diagram schematically illustrating a configuration of the transportation robot 30;

FIG. 2-9 is a side view of the rack 10 schematically illustrating an example of a configuration of a picking station 40 of the automated storage and retrieval system 1 according to the embodiment;

FIG. 2-10 is a plan view of the rack 10 schematically illustrating an example of a configuration of the picking station 40 of the automated storage and retrieval system 1 according to the embodiment;

FIG. 2-11 is a flowchart for explaining processing of a control unit 51 of the management server 50 of the automated storage and retrieval system 1 according to the embodiment; and

FIG. 2-12 is a plan view of the rack 10 schematically illustrating an example of a configuration of a picking station 40A of the automated storage and retrieval system 1 according to the embodiment

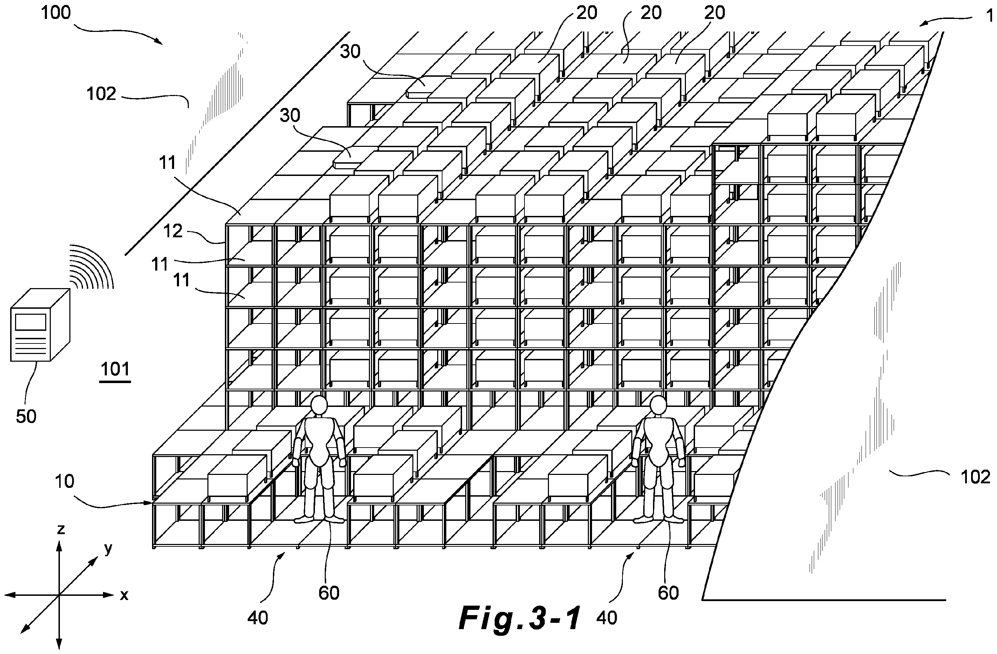

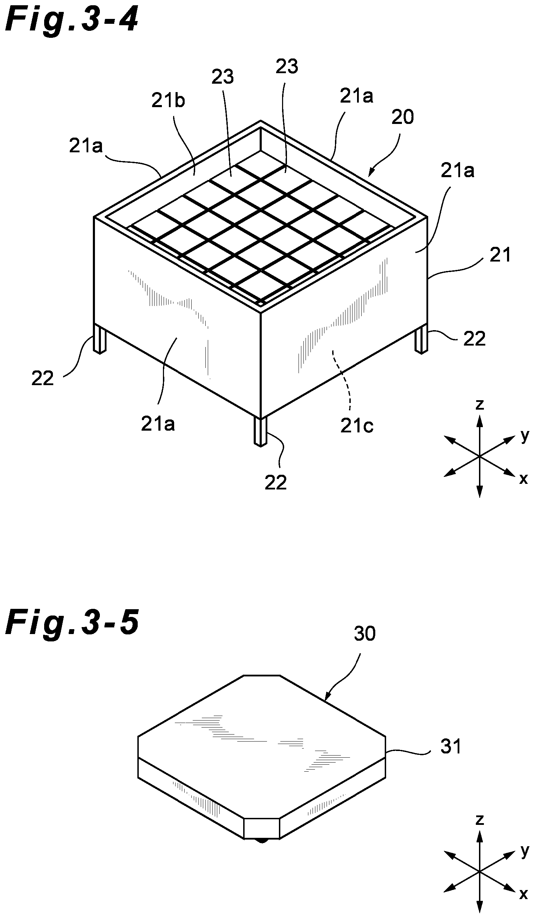

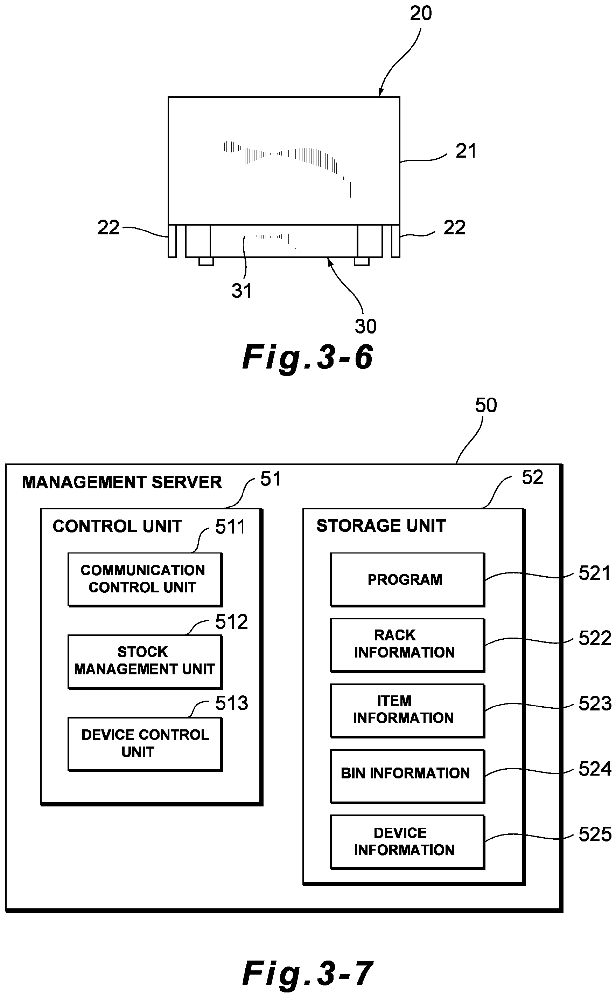

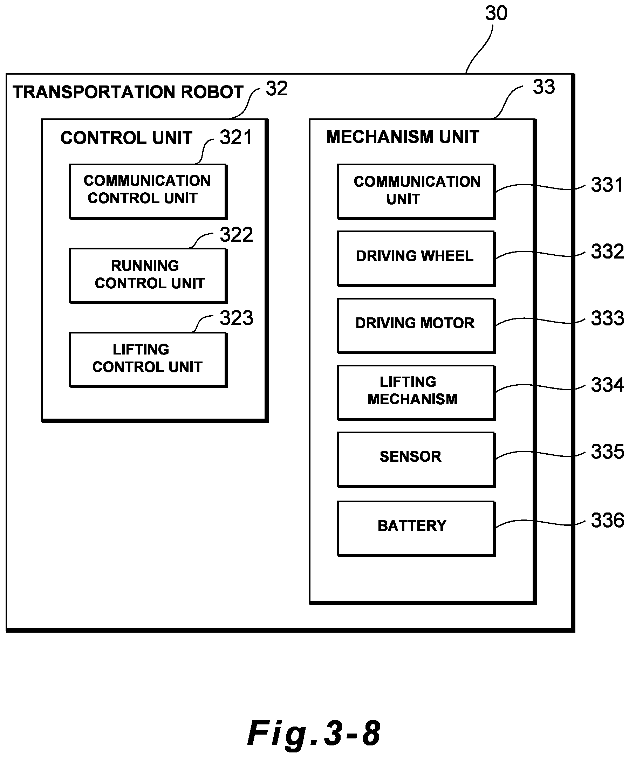

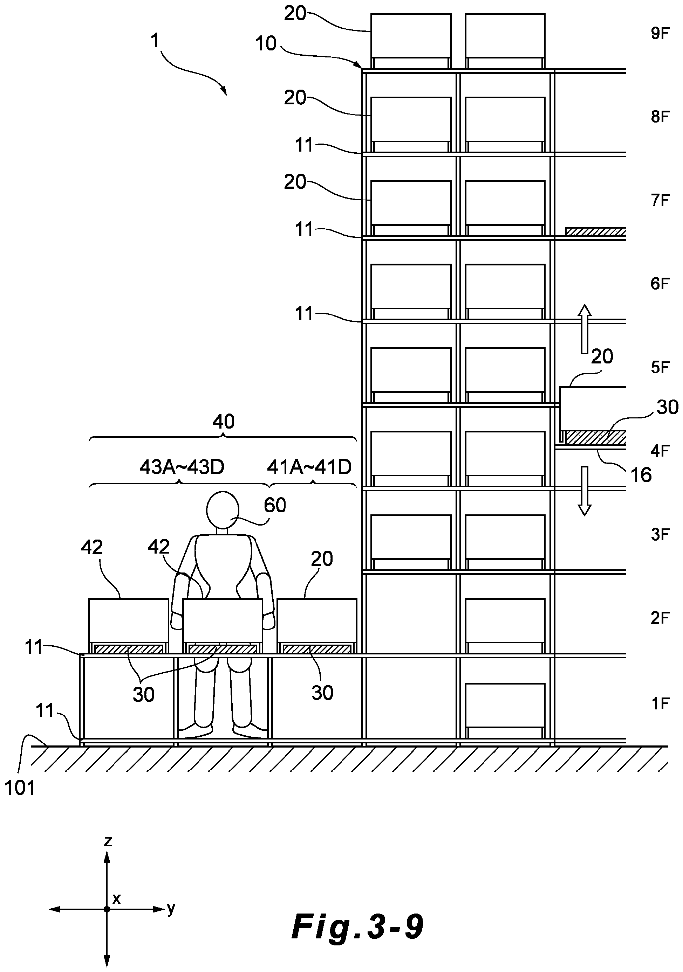

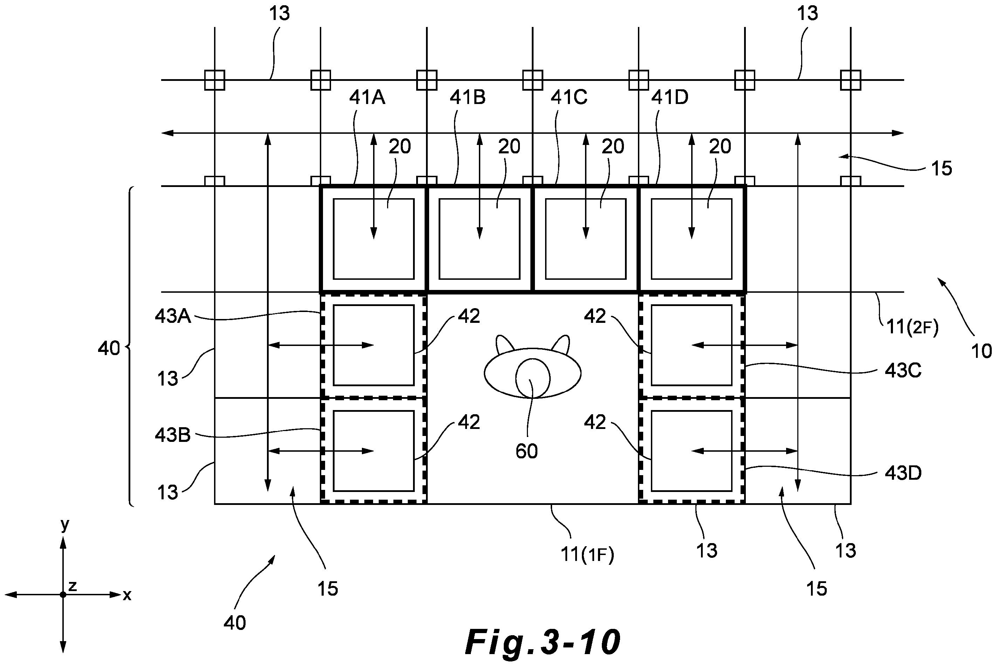

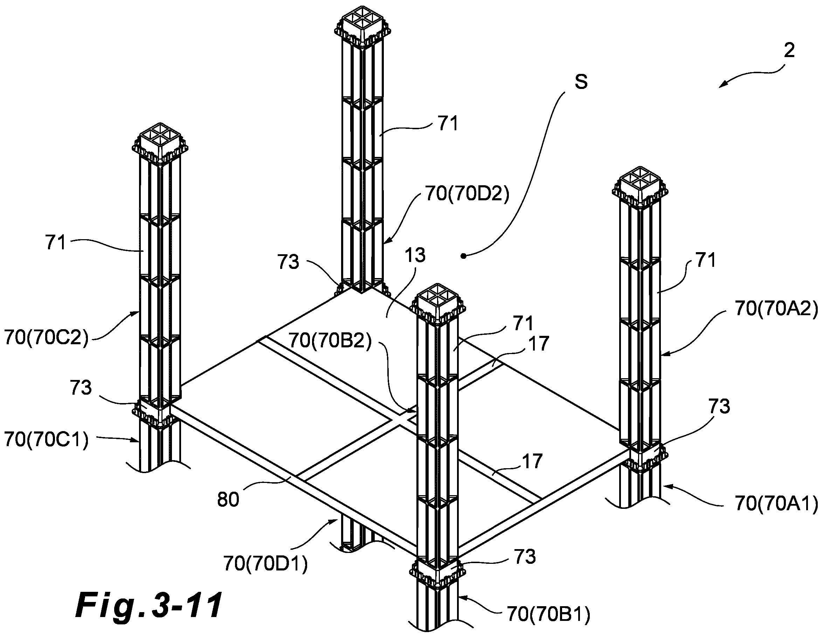

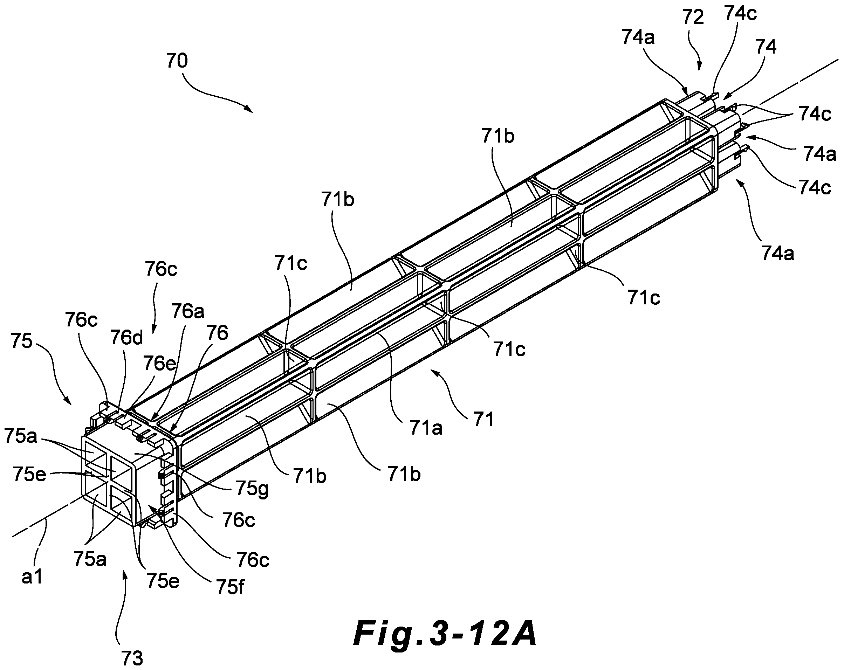

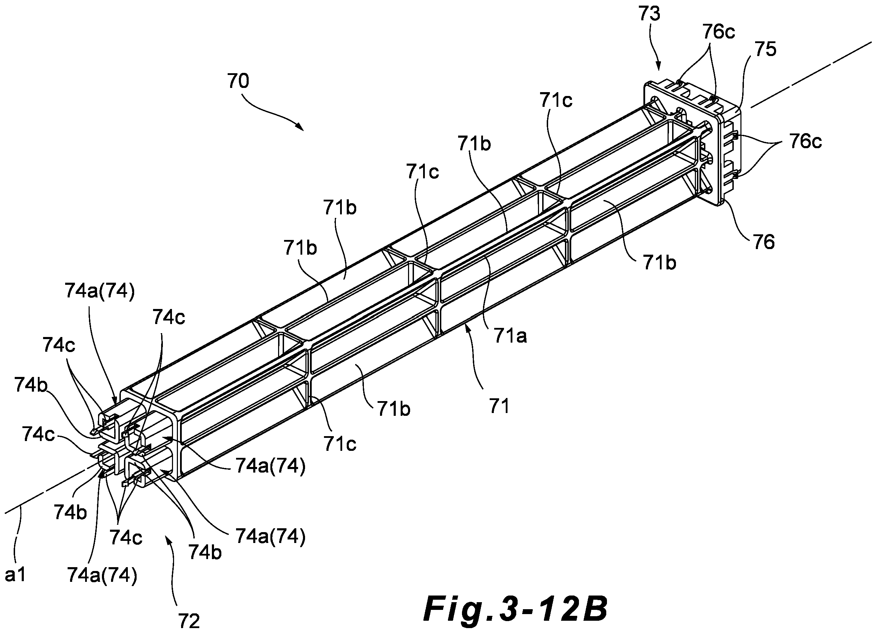

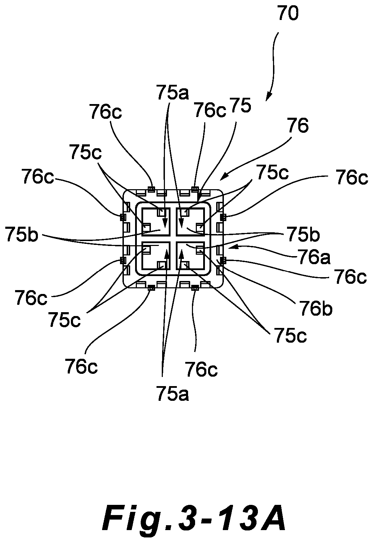

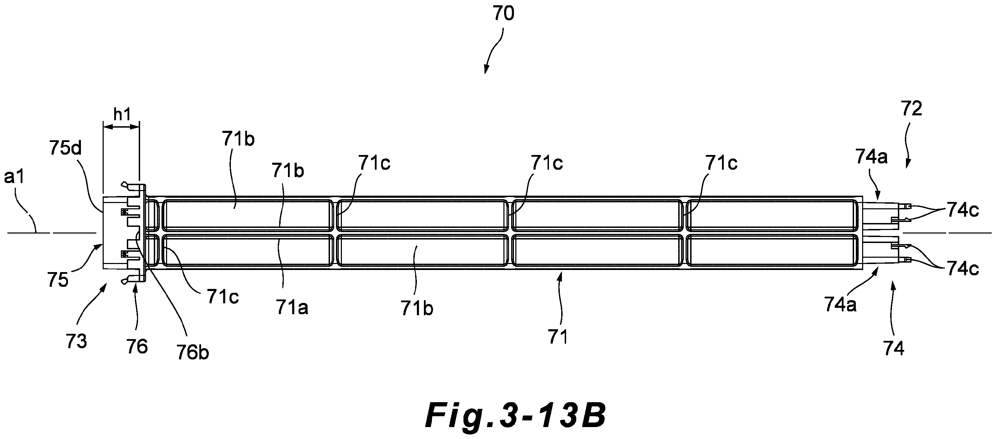

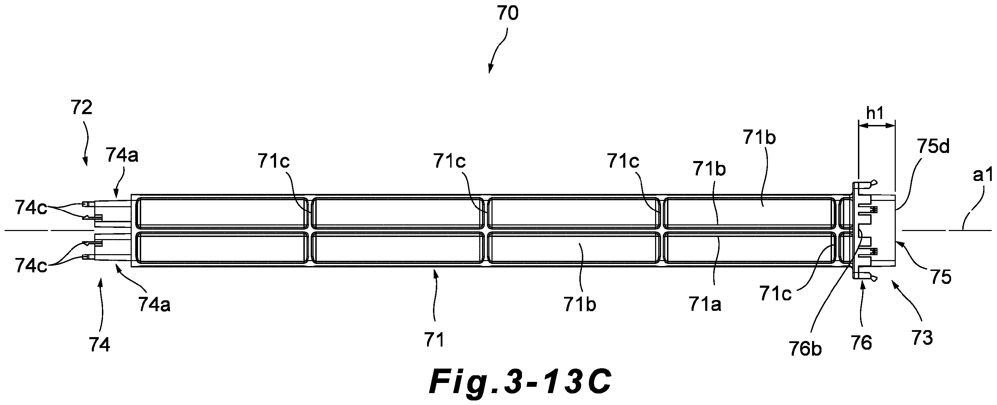

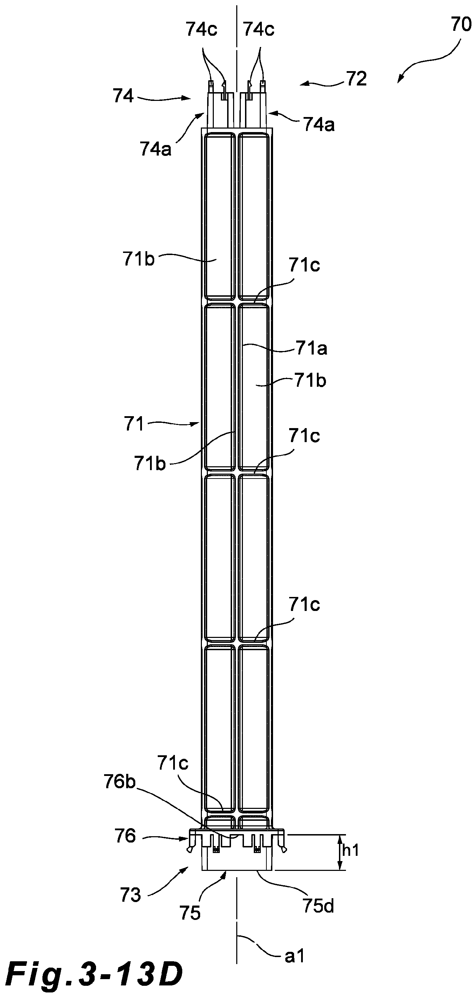

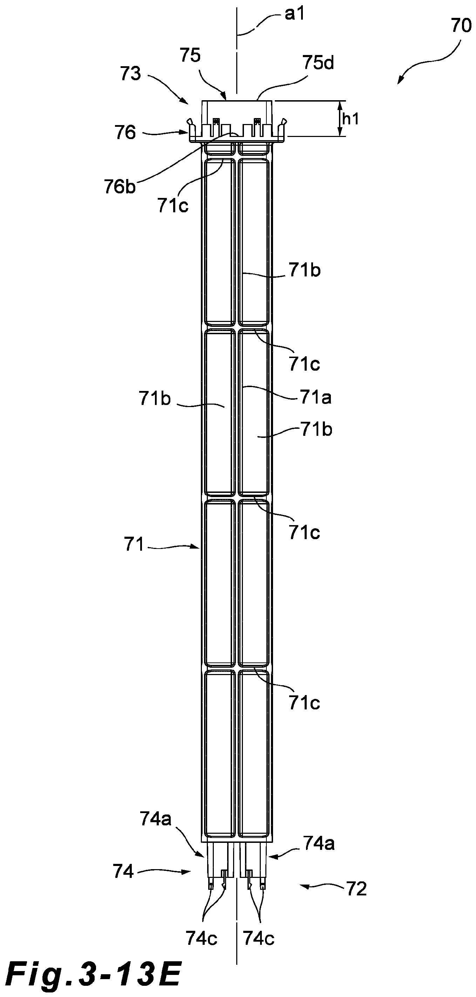

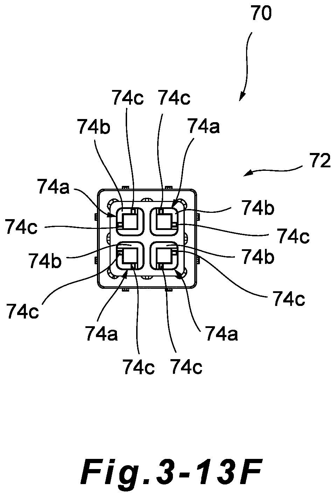

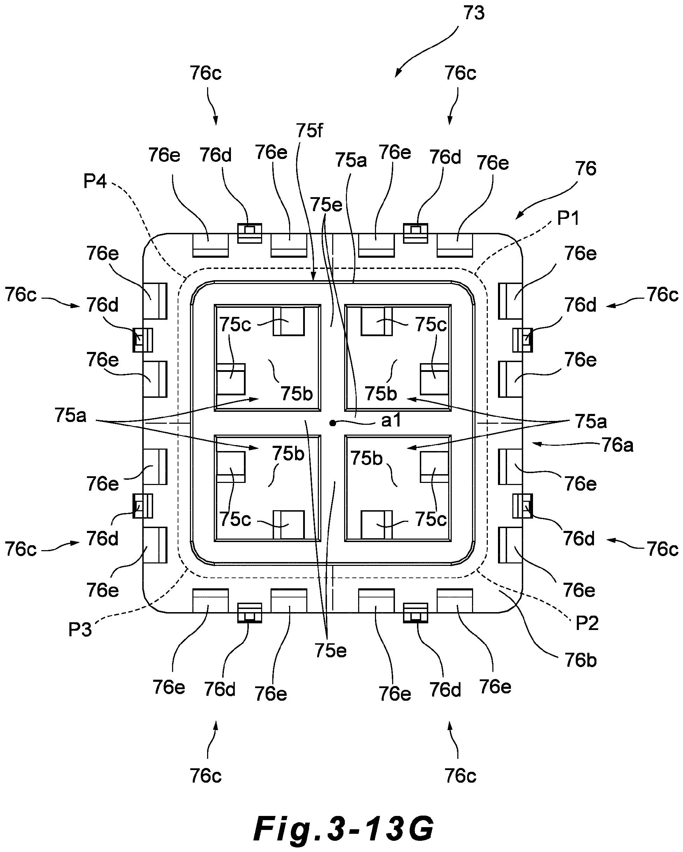

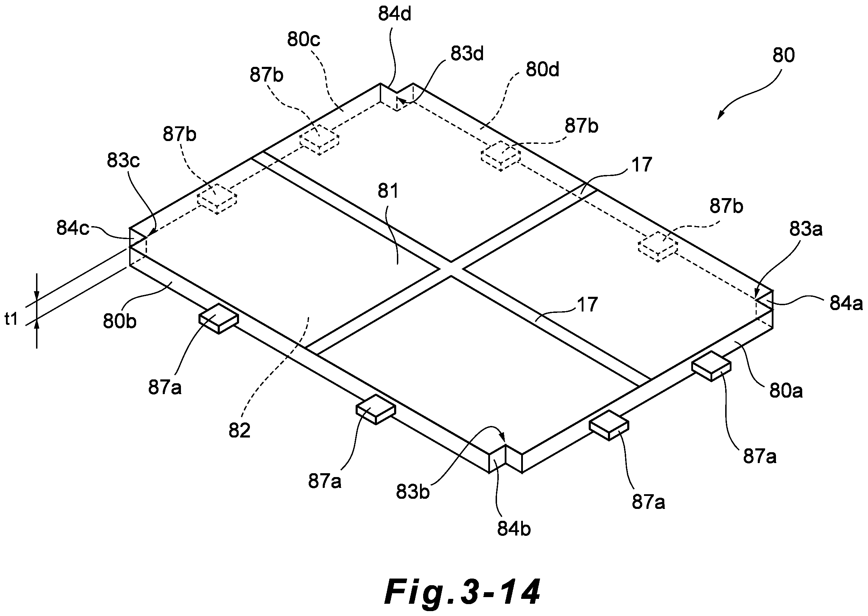

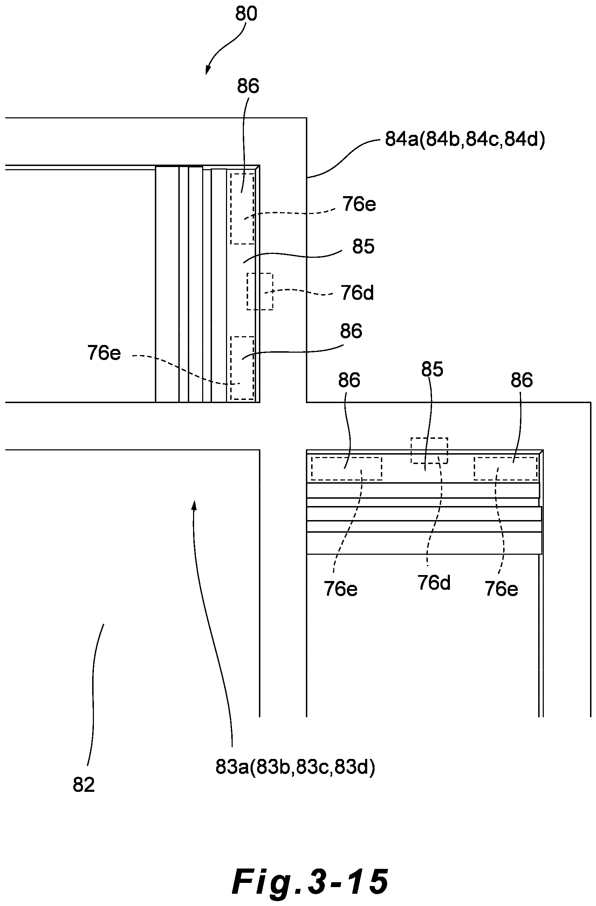

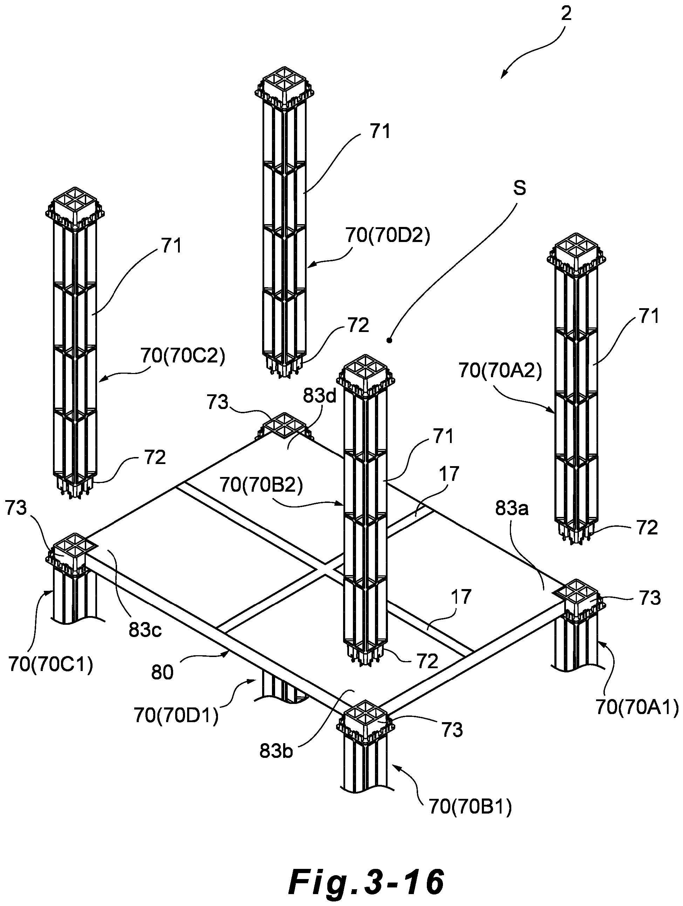

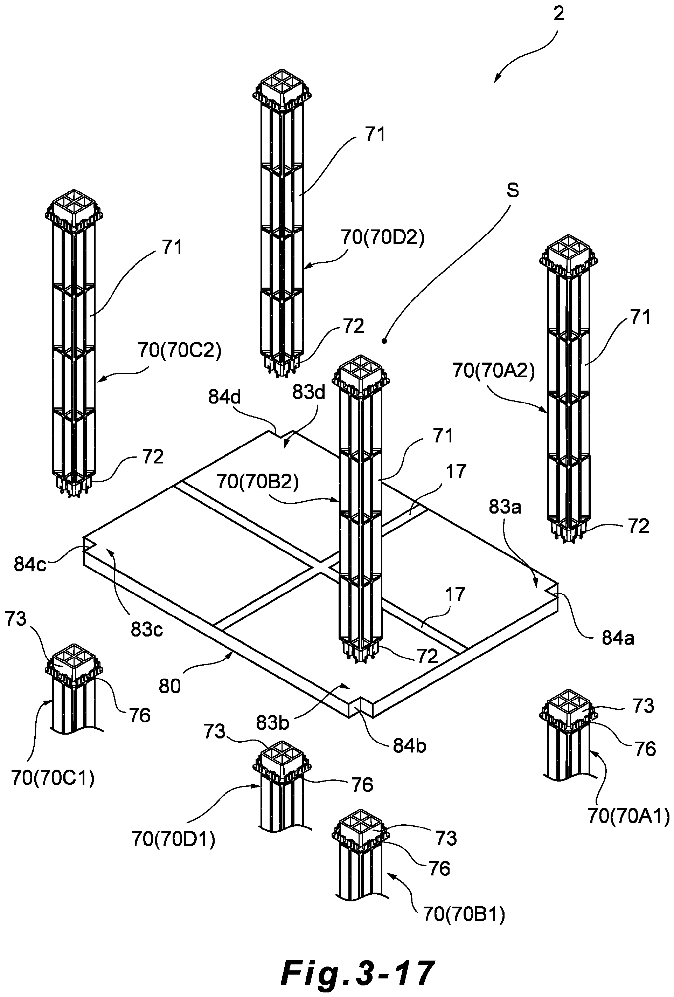

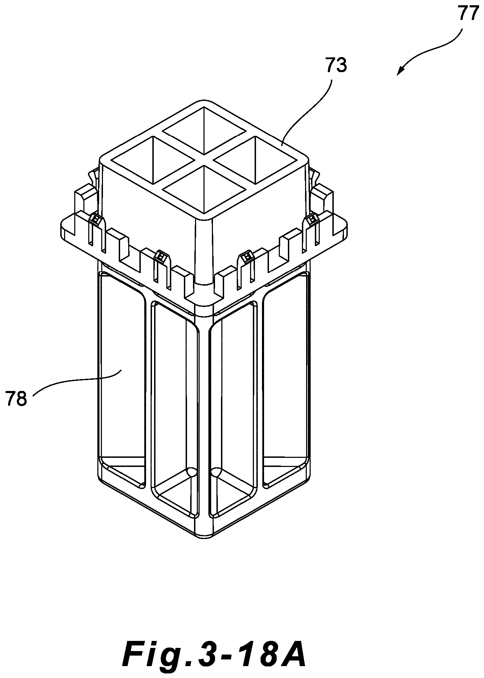

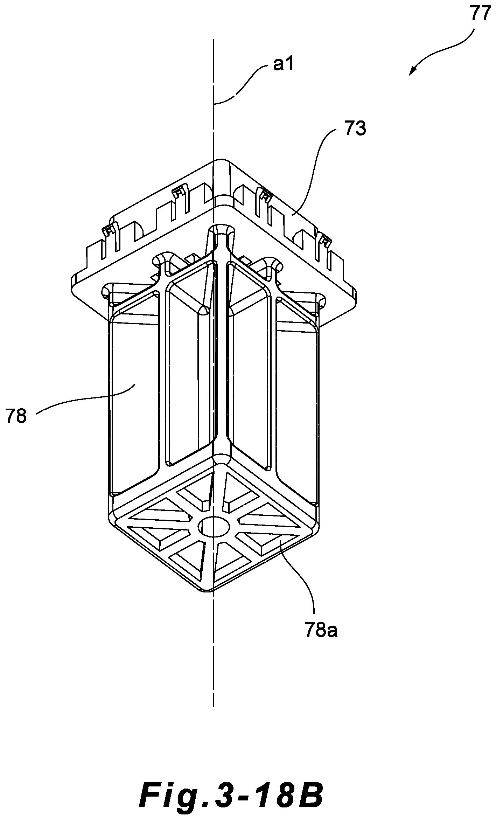

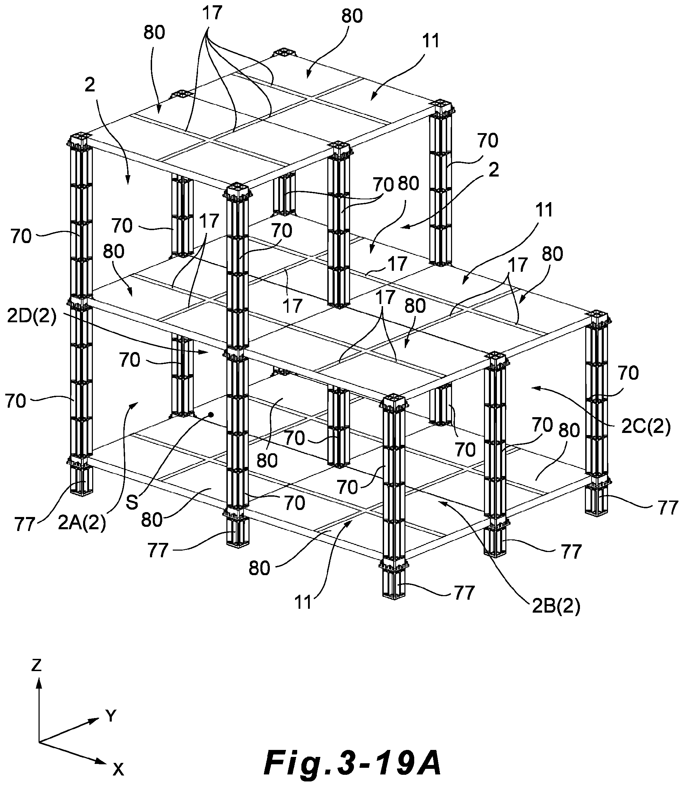

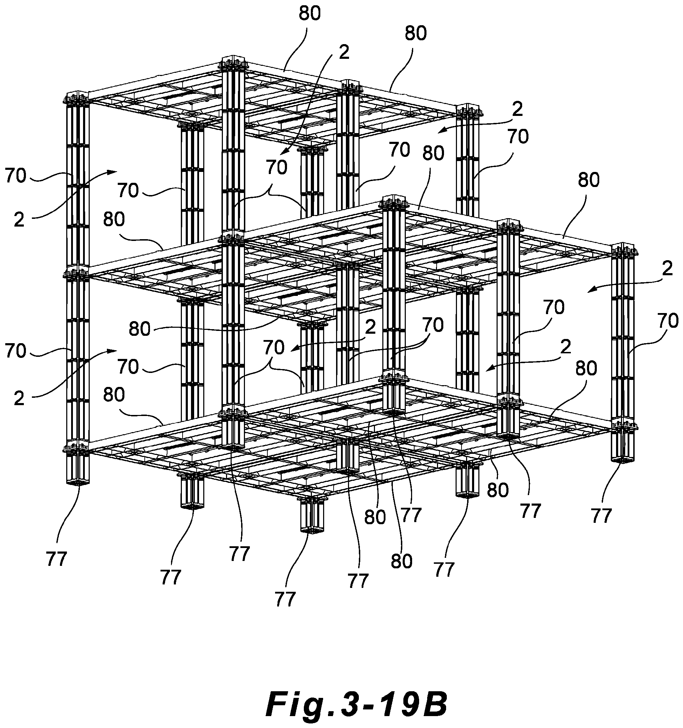

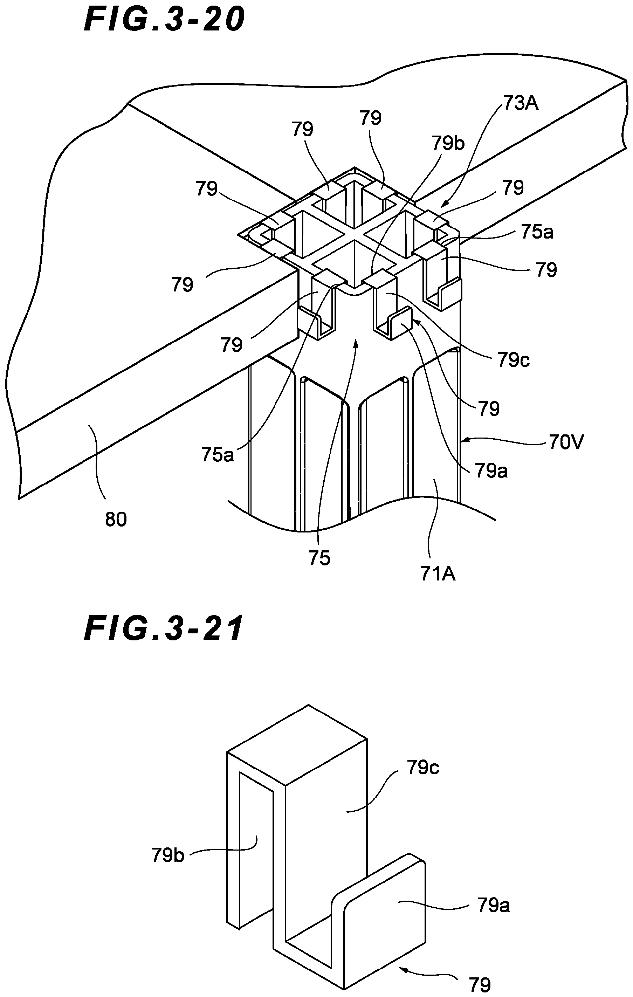

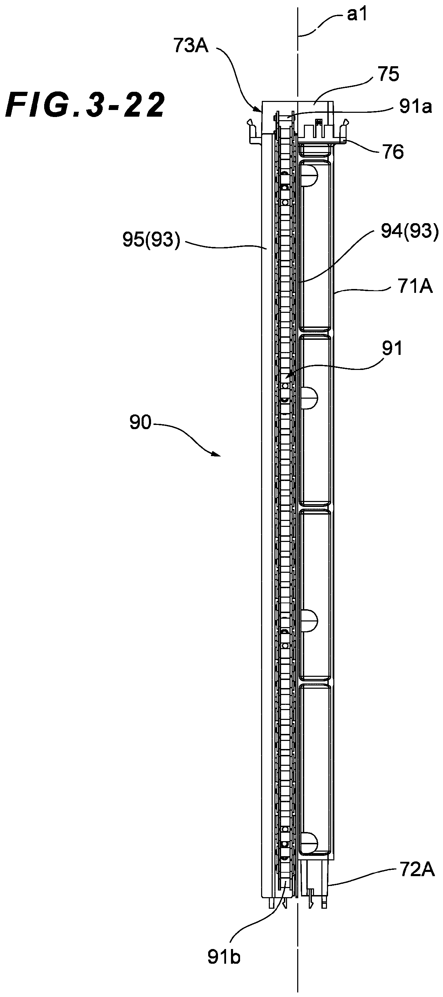

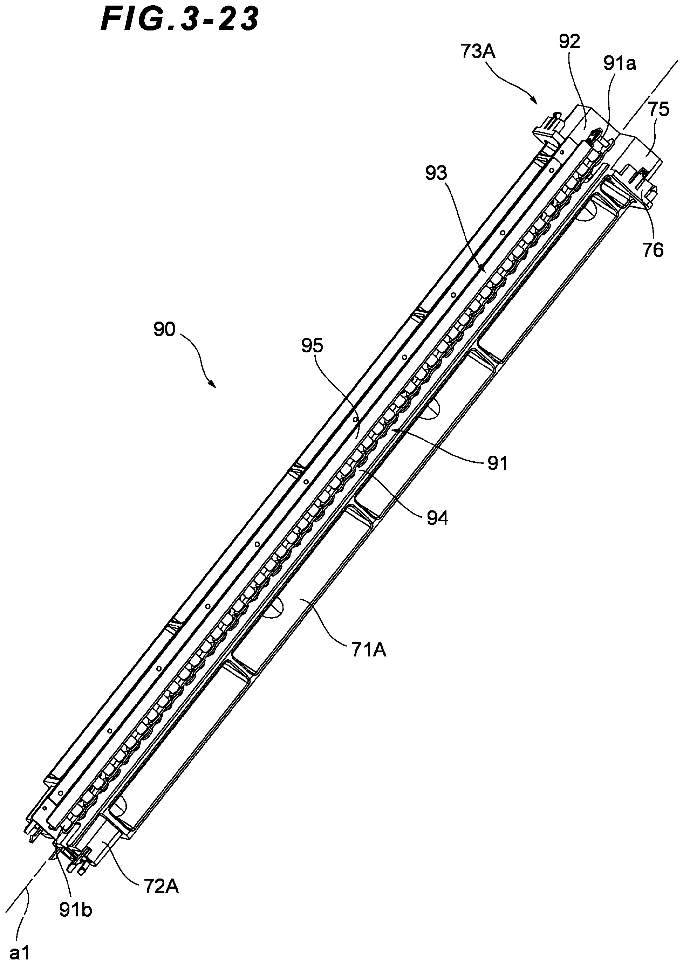

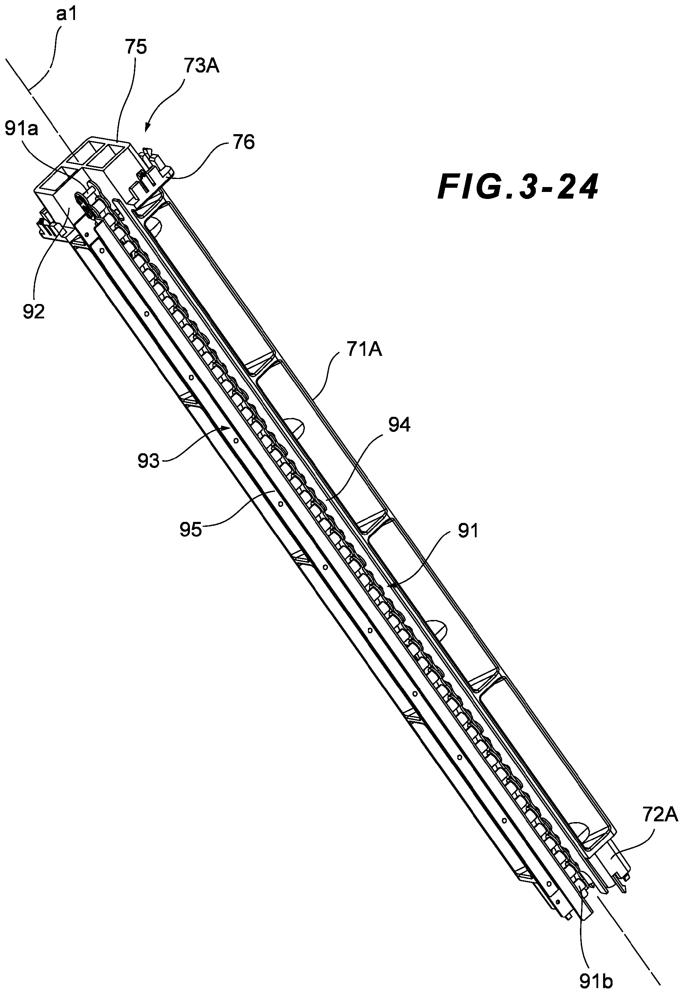

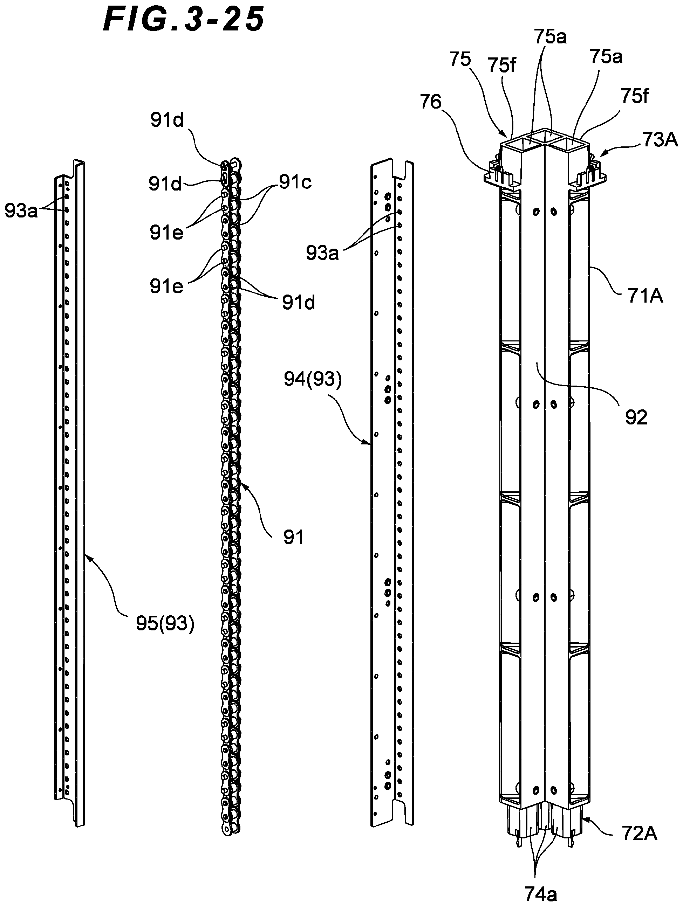

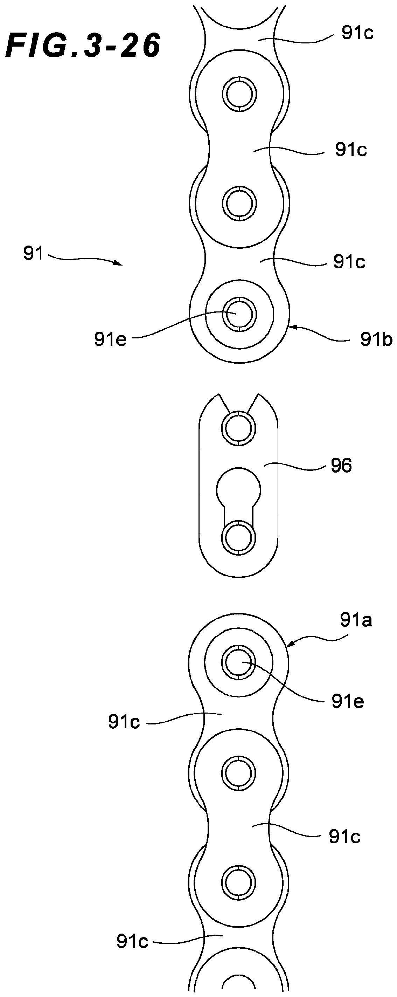

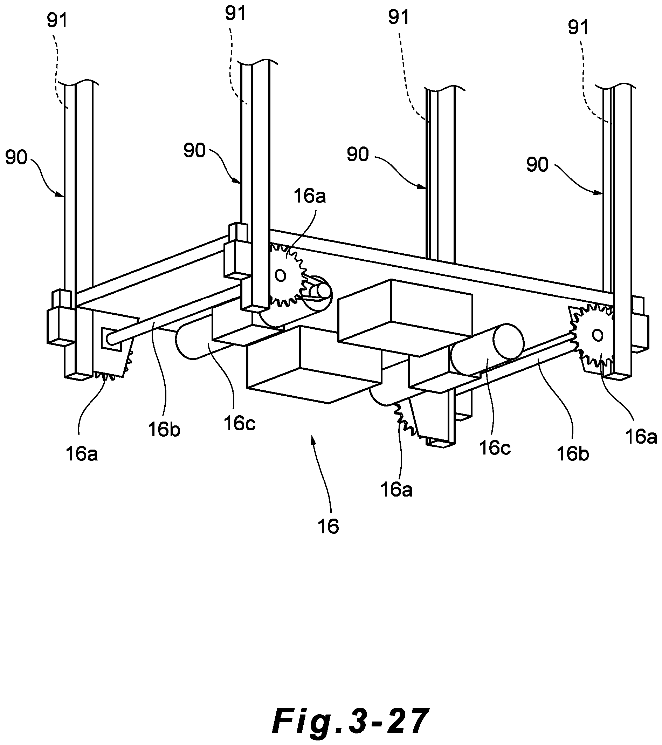

FIG. 3-1 is a perspective view schematically illustrating an external appearance of an automated storage and retrieval system 1 according to an embodiment of the present disclosure;

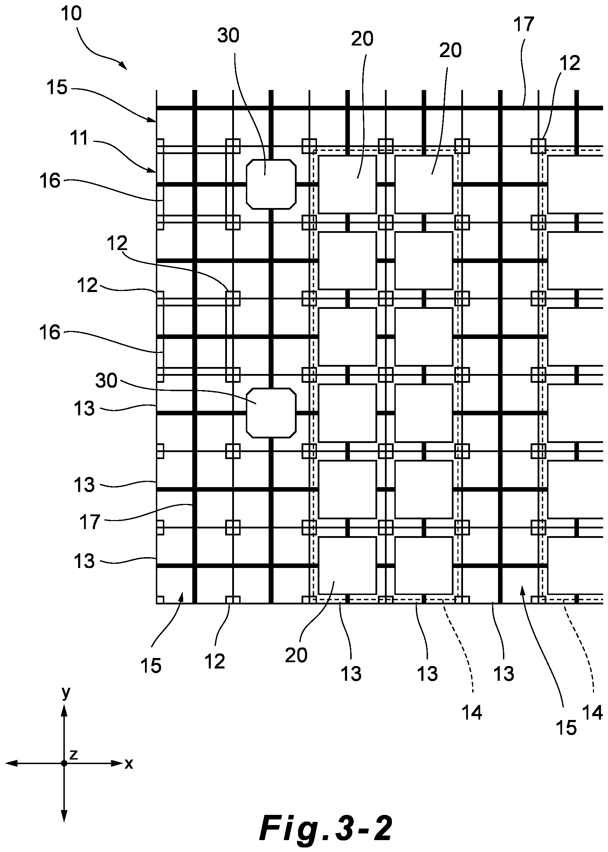

FIG. 3-2 is a top view schematically illustrating an example of a structure of floors 11 of a rack 10 of the automated storage and retrieval system 1 according to the present embodiment;

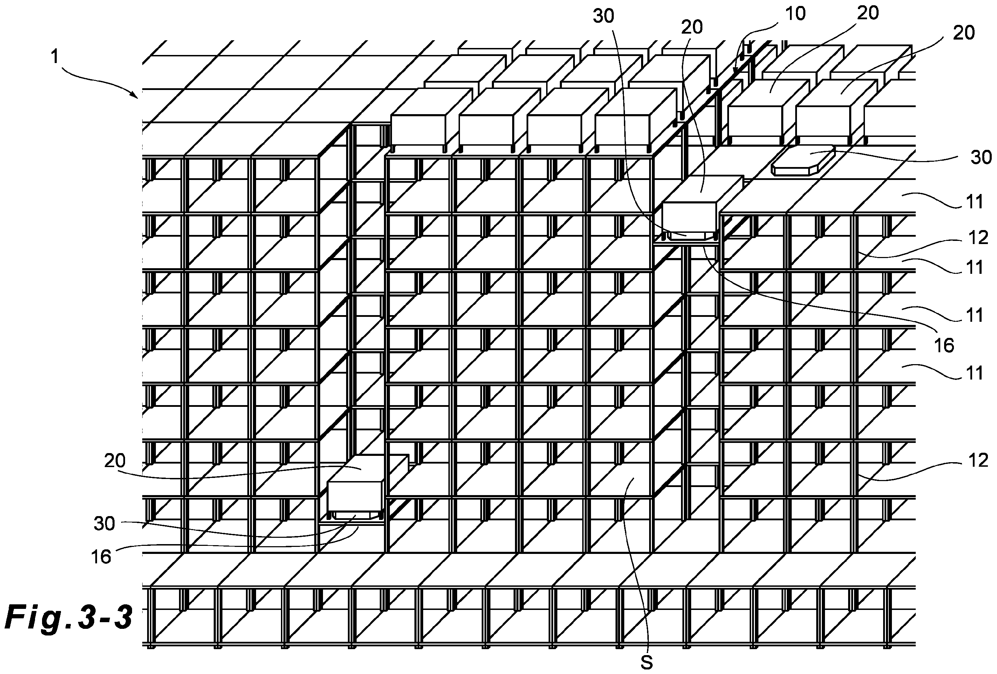

FIG. 3-3 is a perspective view schematically illustrating an example of a structure of the rack 10 of the automated storage and retrieval system 1 according to the embodiment;

FIG. 3-4 schematically illustrates an example of a structure of a storage bin 20 of the automated storage and retrieval system 1 according to the embodiment;

FIG. 3-5 is a perspective view schematically illustrating an external appearance of a transportation robot 30 of the automated storage and retrieval system 1 according to the embodiment;

FIG. 3-6 is a side view illustrating a state where the transportation robot 30 of the automated storage and retrieval system 1 according to the embodiment lifts the storage bin 20;

FIG. 3-7 is a functional block diagram schematically illustrating a configuration of a management server 50;

FIG. 3-8 is a functional block diagram schematically illustrating a configuration of the transportation robot 30;

FIG. 3-9 is a side view of the rack 10 schematically illustrating an example of a configuration of a picking station 40 of the automated storage and retrieval system 1 according to the embodiment;

FIG. 3-10 is a plan view of the rack 10 schematically illustrating an example of a configuration of the picking station 40 of the automated storage and retrieval system 1 according to the embodiment;

FIG. 3-11 is a perspective view illustrating a schematic configuration of a rack module 2 included in the rack 10;

FIGS. 3-12A and 3-12B are perspective views of a support column module 70 included in the rack module 2;

FIG. 3-13A is a plan view of the support column module 70;

FIG. 3-13B is a right side view of the support column module 70;

FIG. 3-13C is a left side view of the support column module 70;

FIG. 3-13D is a top view of the support column module 70;

FIG. 3-13E is a bottom view of the support column module 70;

FIG. 3-13F is a back view of the support column module 70;

FIG. 3-13G is an enlarged view of FIG. 3-13A;

FIG. 3-14 is a perspective view of a floor module 80 included in the rack modules 2;

FIG. 3-15 is a view illustrating an enlarged vicinity of a corner 83 of the floor module 80;

FIG. 3-16 is a partial exploded perspective view of the rack module 2;

FIG. 3-17 is an exploded perspective view of the rack module 2;

FIGS. 3-18A and 3-18B are perspective views of a support column end module 77 included in the rack 10;

FIGS. 3-19A and 3-19B are perspective views illustrating the plurality of rack modules 2 connected in a horizontal direction and a vertical direction;

FIG. 3-20 is a perspective view of a support column module according to a modified example;

FIG. 3-21 is a perspective view illustrating an example of a hook included in the support column module according to the modified example;

FIG. 3-22 is a side view of a support column module for forming a passage of a transportation elevator;

FIG. 3-23 is a perspective view of the support column module illustrated in FIG. 22;

FIG. 3-24 is a perspective view of the support column module illustrated in FIG. 22;

FIG. 3-25 is an exploded perspective view of the support column module illustrated in FIG. 3-23;

FIG. 3-26 is a view for illustrating a configuration for coupling roller chains of the support column module illustrated in FIG. 3-23; and

FIG. 3-27 is a perspective view of a transportation elevator and a part of a passage of the transportation elevator in the rack.

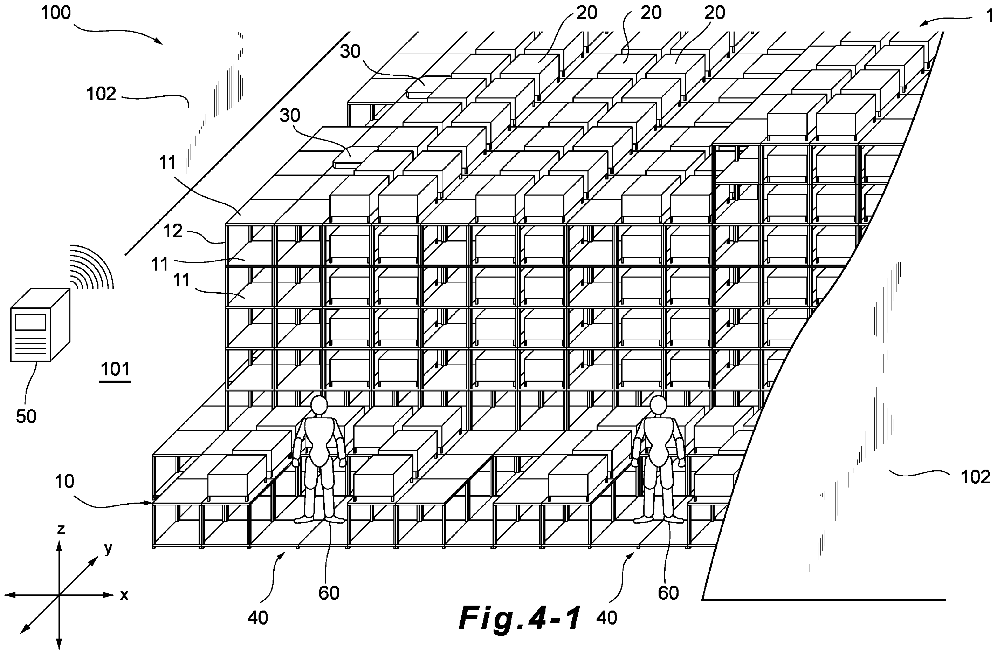

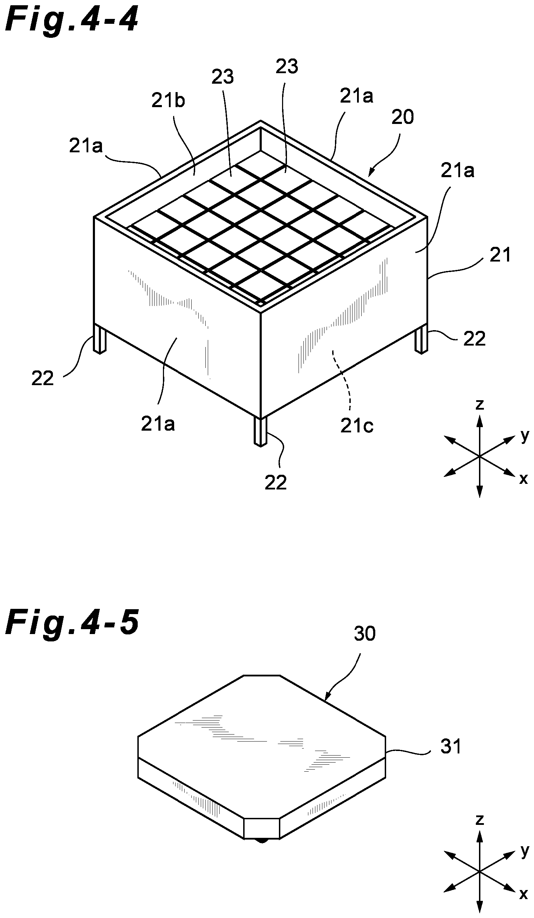

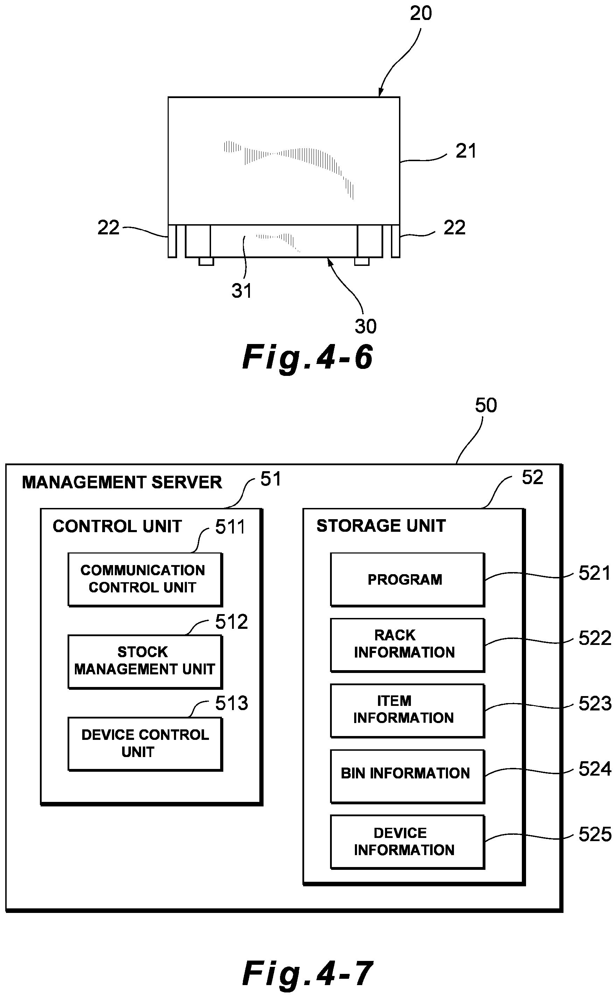

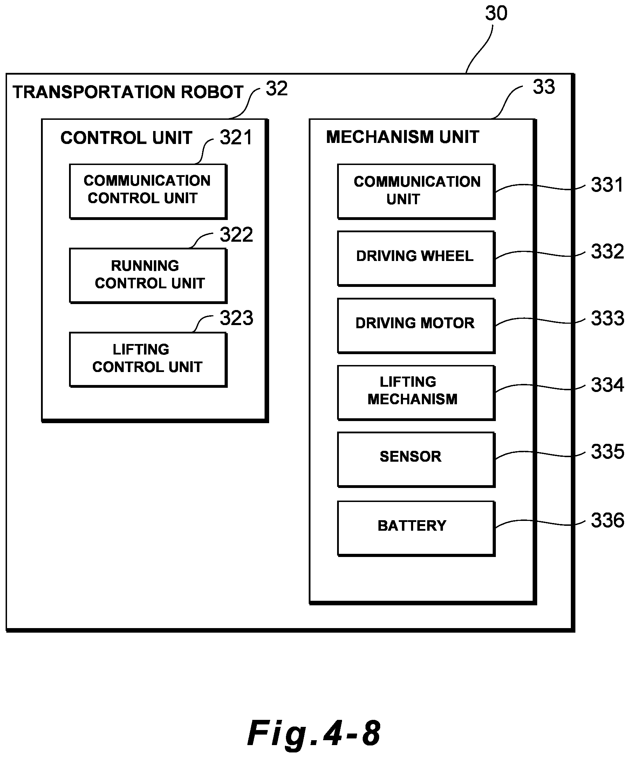

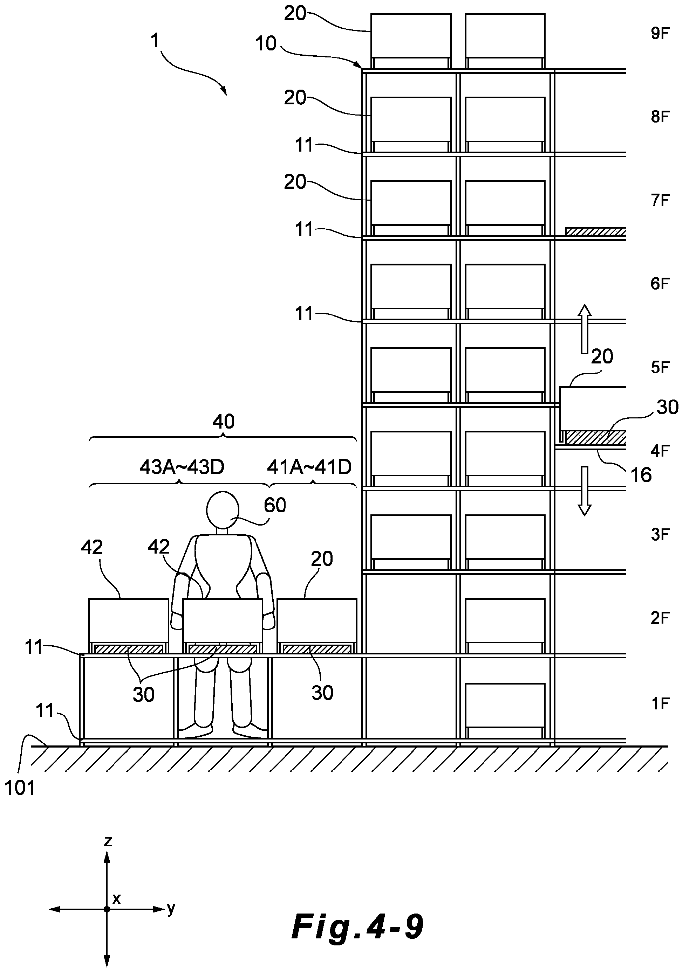

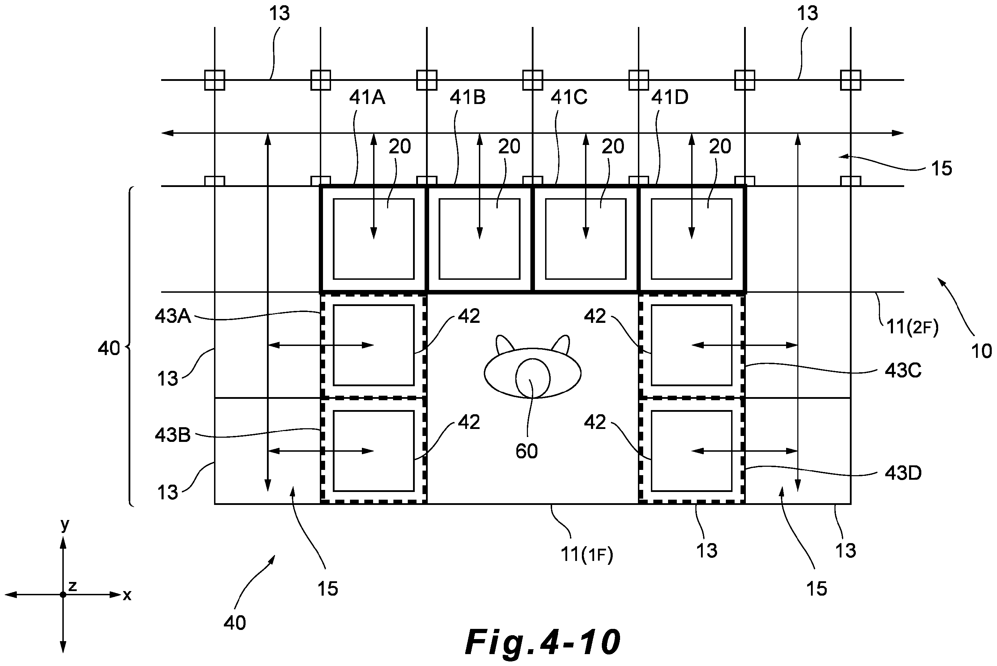

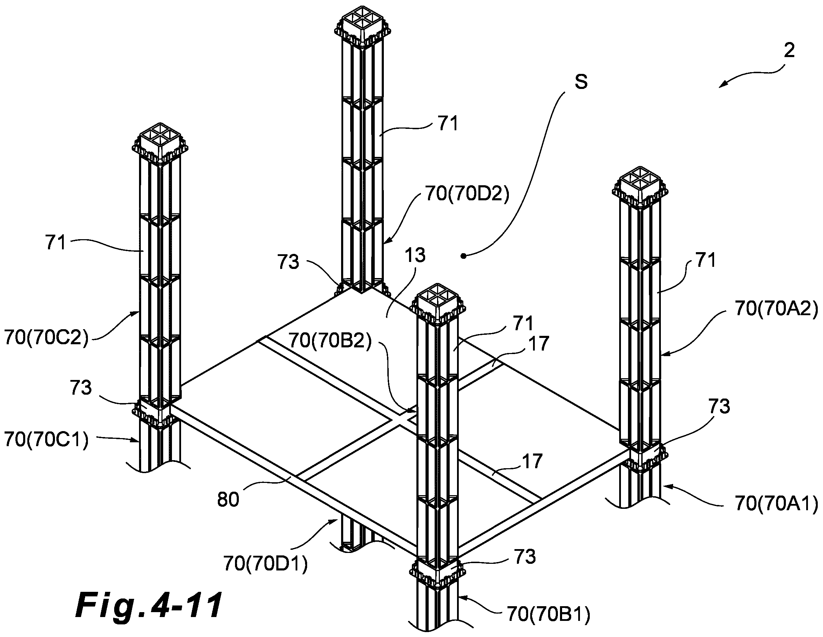

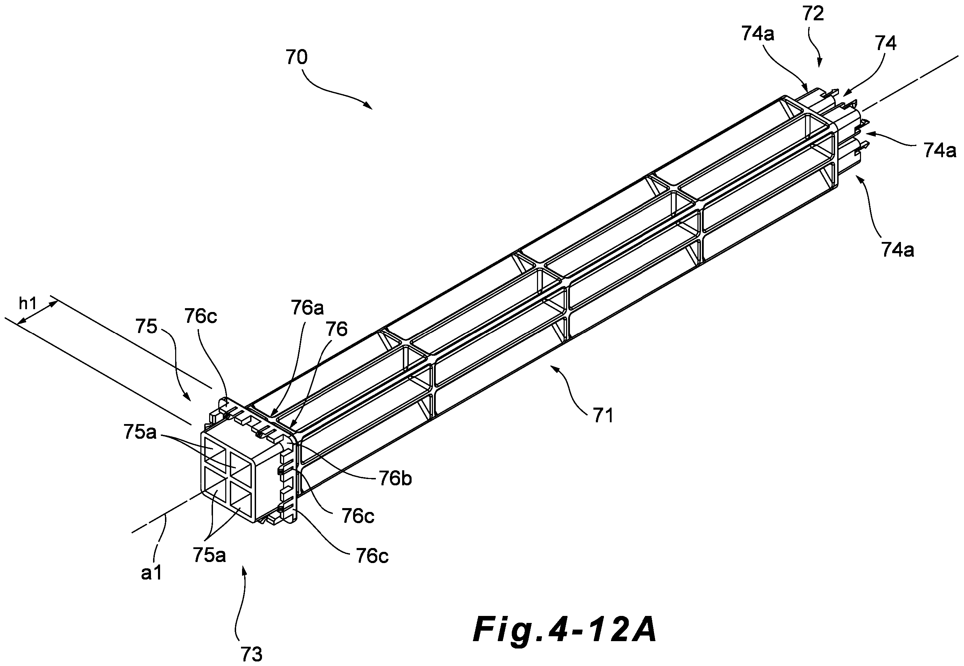

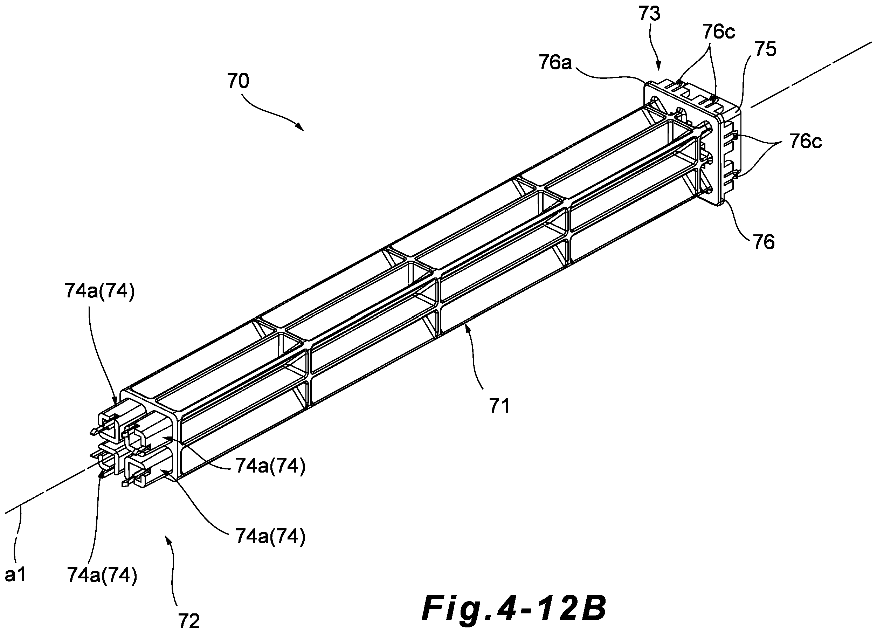

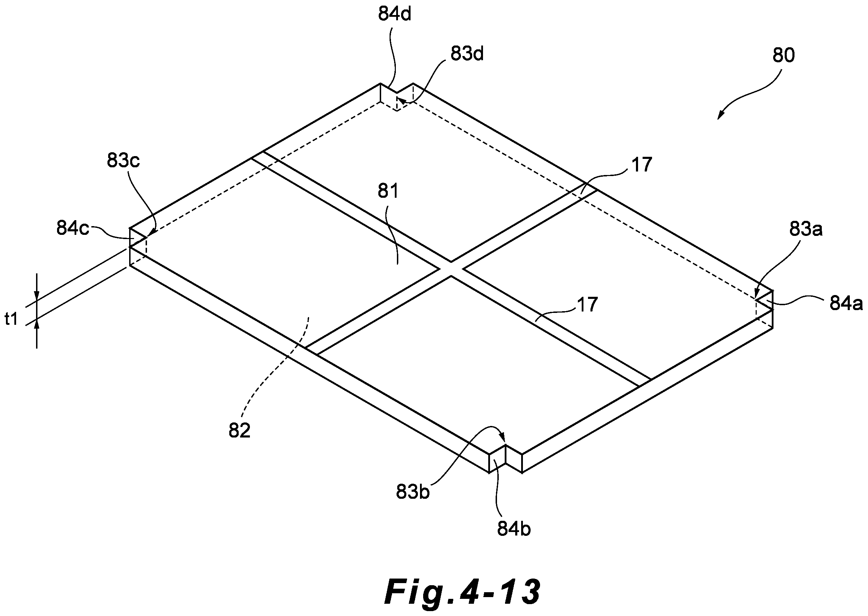

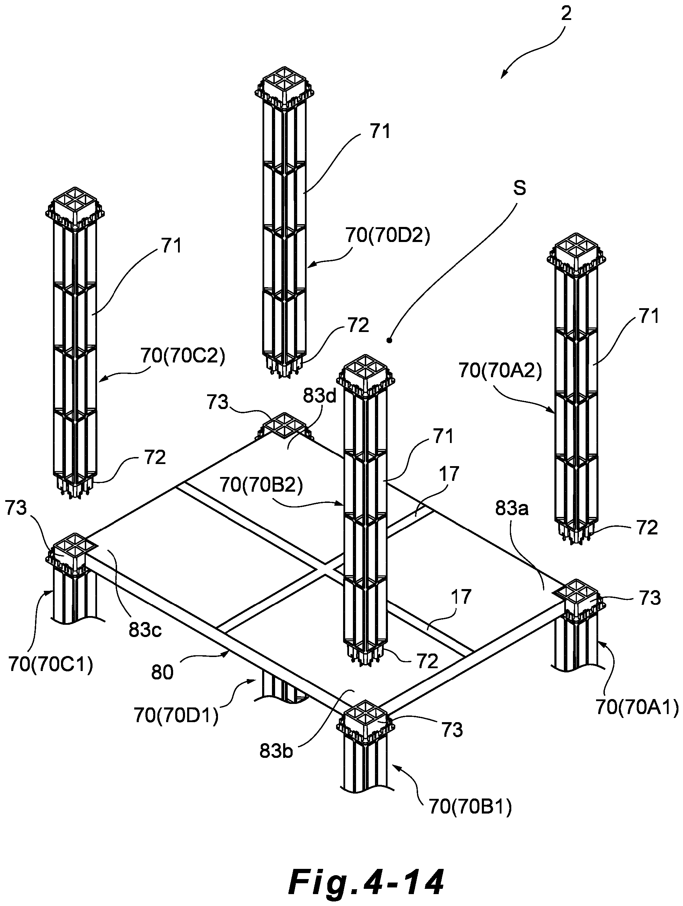

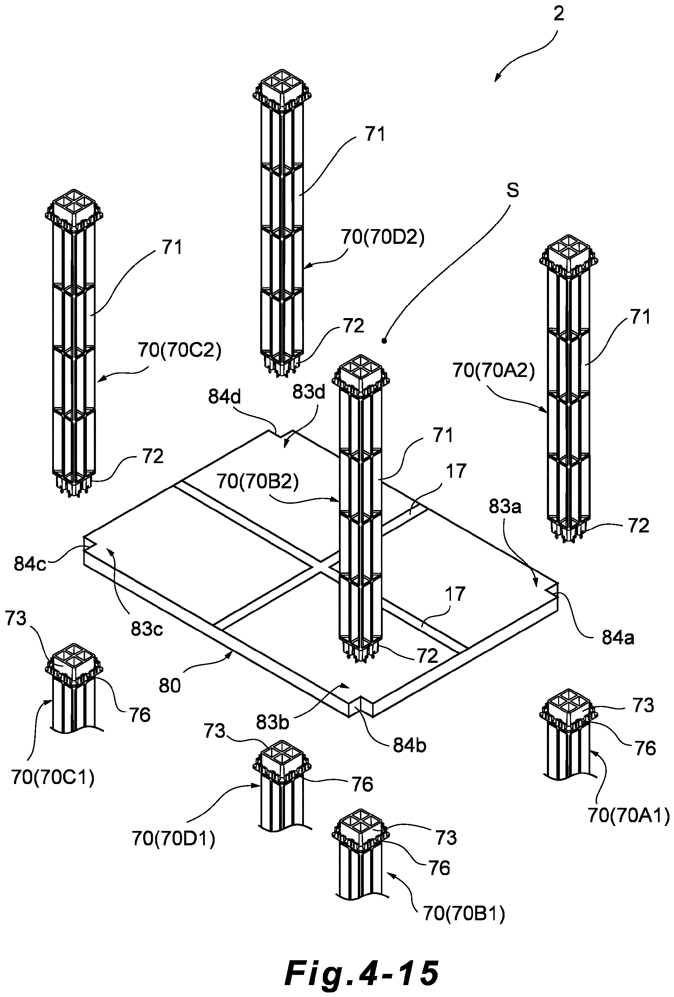

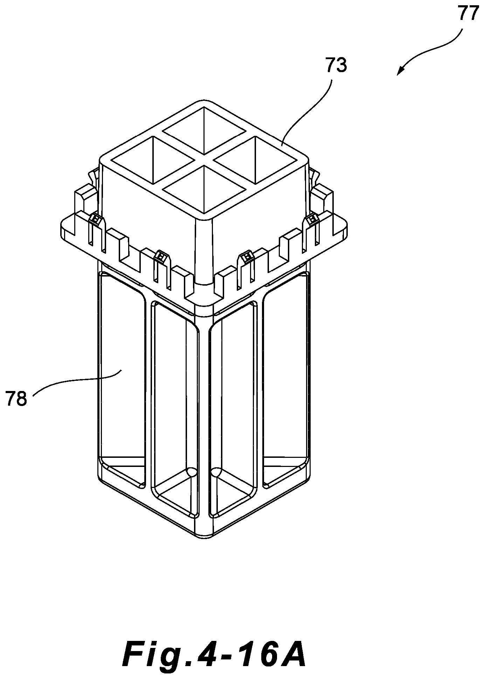

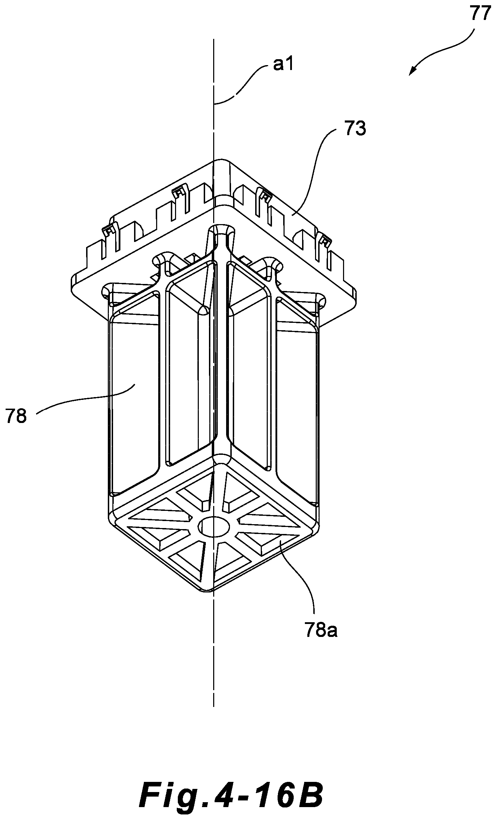

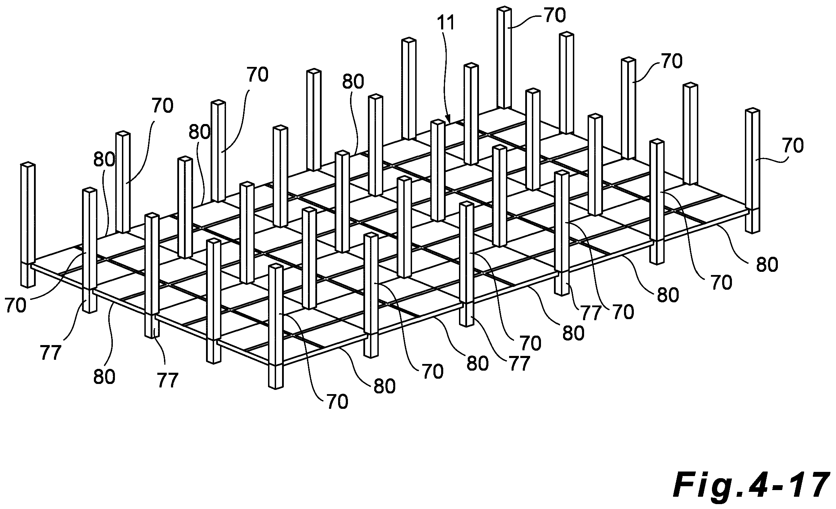

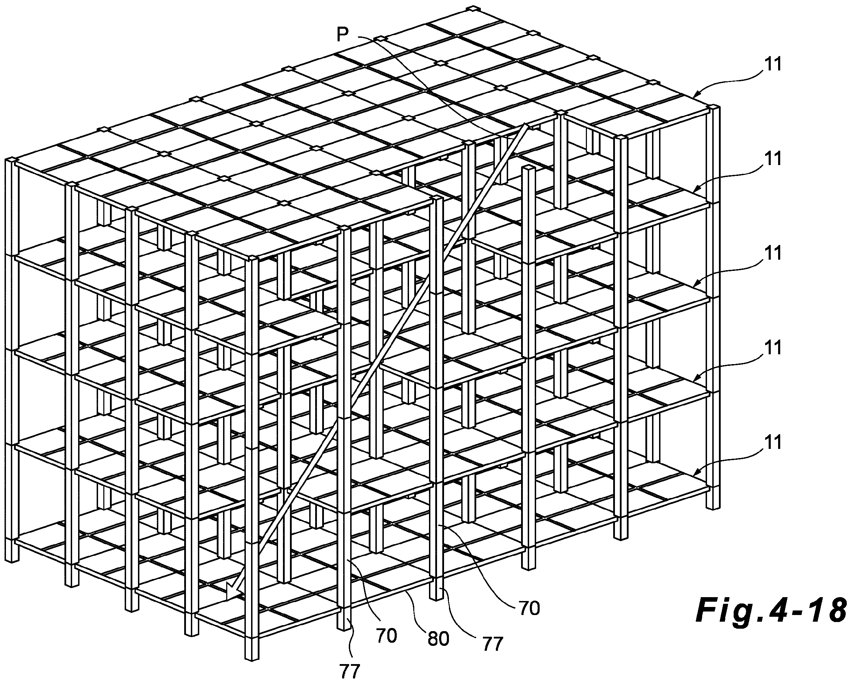

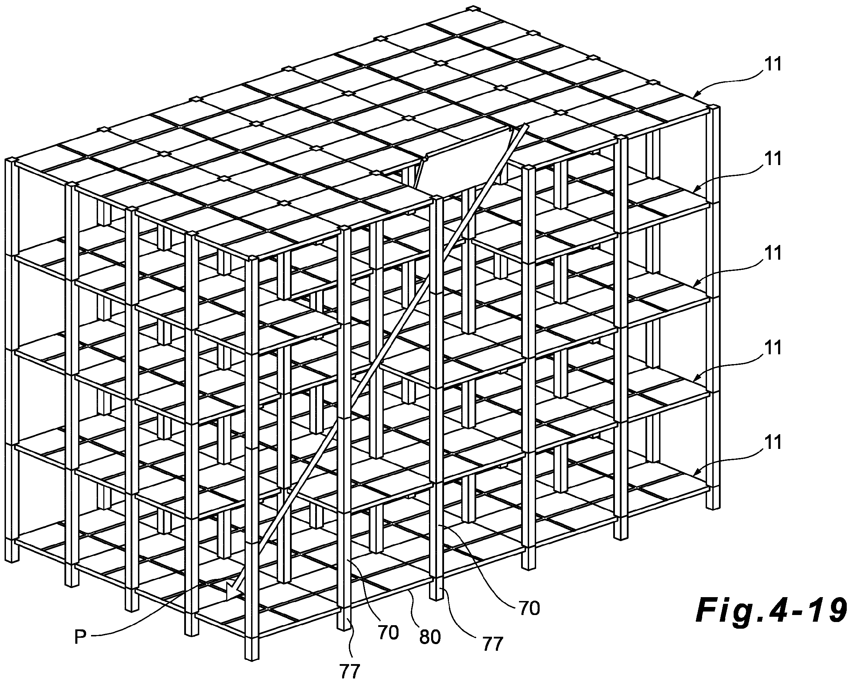

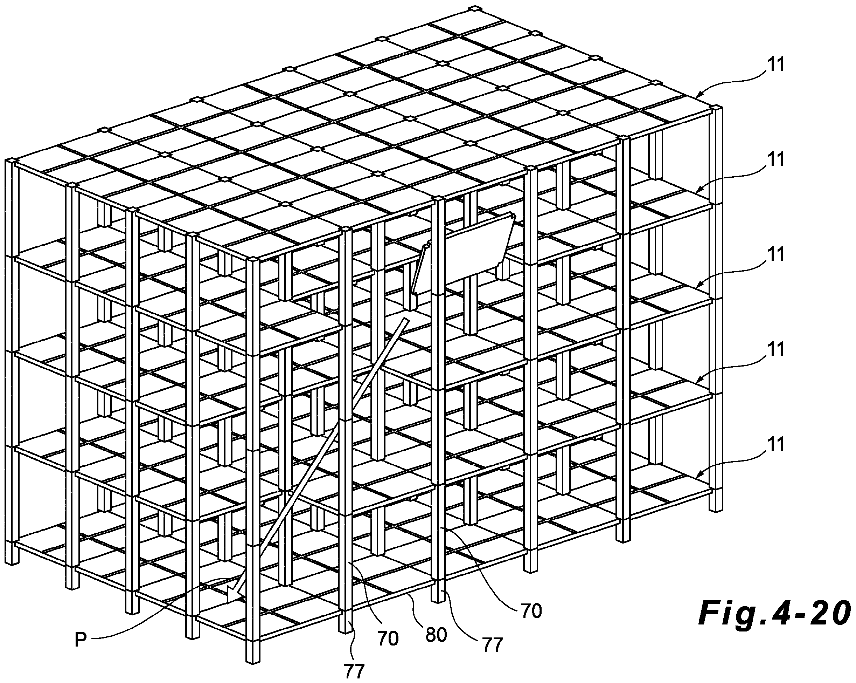

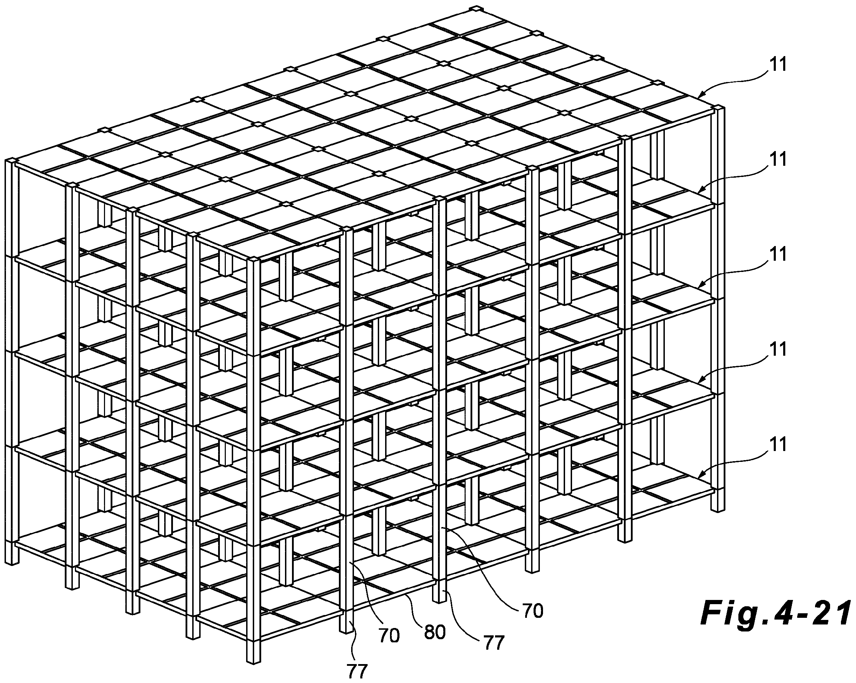

FIG. 4-1 is a perspective view schematically illustrating an external appearance of an automated storage and retrieval system 1 according to an embodiment of the present disclosure;

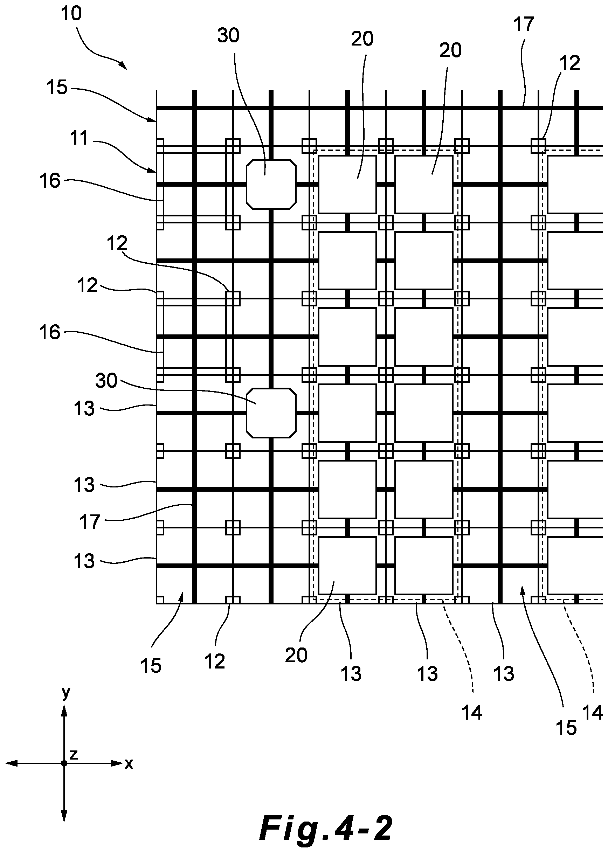

FIG. 4-2 is a plan view schematically illustrating an example of a structure of floors 11 of a rack 10 of the automated storage and retrieval system 1 according to the present embodiment;

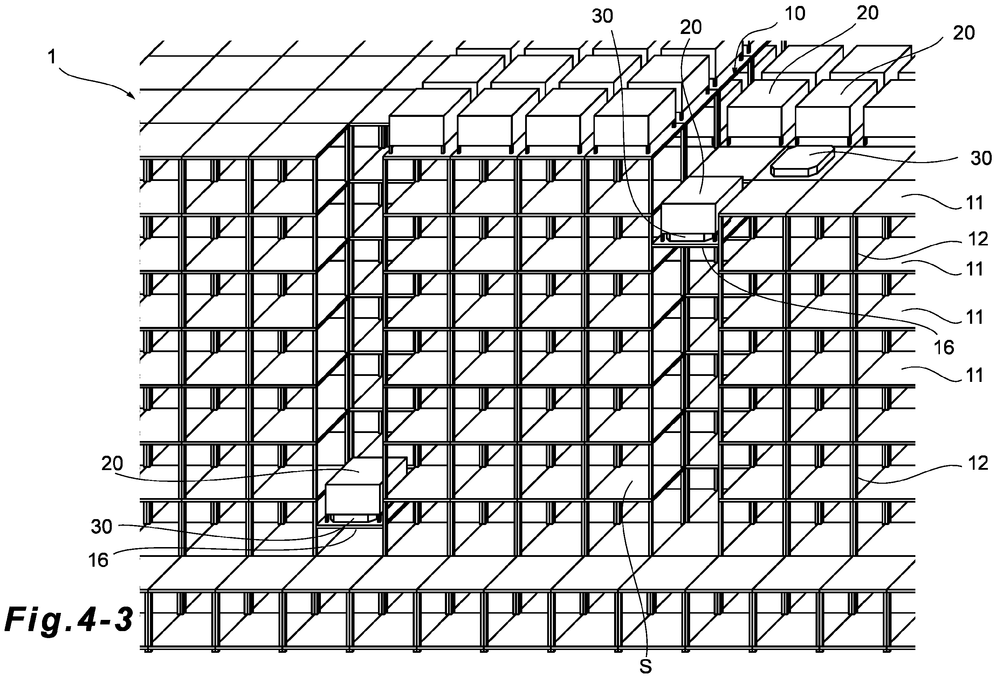

FIG. 4-3 is a perspective view schematically illustrating an example of a structure of the rack 10 of the automated storage and retrieval system 1 according to the embodiment;

FIG. 4-4 schematically illustrates an example of a structure of a storage bin 20 of the automated storage and retrieval system 1 according to the embodiment;

FIG. 4-5 is a perspective view schematically illustrating an external appearance of a transportation robot 30 of the automated storage and retrieval system 1 according to the embodiment;

FIG. 4-6 is a side view illustrating a state where the transportation robot 30 of the automated storage and retrieval system 1 according to the embodiment lifts the storage bin 20;

FIG. 4-7 is a functional block diagram schematically illustrating a configuration of a management server 50;

FIG. 4-8 is a functional block diagram schematically illustrating a configuration of the transportation robot 30;

FIG. 4-9 is a side view of the rack 10 schematically illustrating an example of a configuration of a picking station 40 of the automated storage and retrieval system 1 according to the embodiment;

FIG. 4-10 is a plan view of the rack 10 schematically illustrating an example of a configuration of the picking station 40 of the automated storage and retrieval system 1 according to the embodiment;

FIG. 4-11 is a flowchart for explaining processing of a control unit 51 of the management server 50 of the automated storage and retrieval system 1 according to the embodiment;

FIGS. 4-12A and 4-12B are perspective views of a support column module 70 included in a rack module 2;

FIG. 4-13 is a perspective view of the support column module 70 included in the rack module 2;

FIG. 4-14 is a partial exploded perspective view of the rack module 2;

FIG. 4-15 is a partial exploded perspective view of the rack module 2;

FIGS. 4-16A and 4-16B are perspective views of a support column end module 77 included in the rack 10;

FIG. 4-17 is a perspective view for explaining a method for assembling the rack 10;

FIG. 4-18 is a perspective view for explaining the method for assembling the rack 10;

FIG. 4-19 is a perspective view for explaining the method for assembling the rack 10;

FIG. 4-20 is a perspective view for explaining the method for assembling the rack 10; and

FIG. 4-21 is a perspective view for explaining the method for assembling the rack 10.

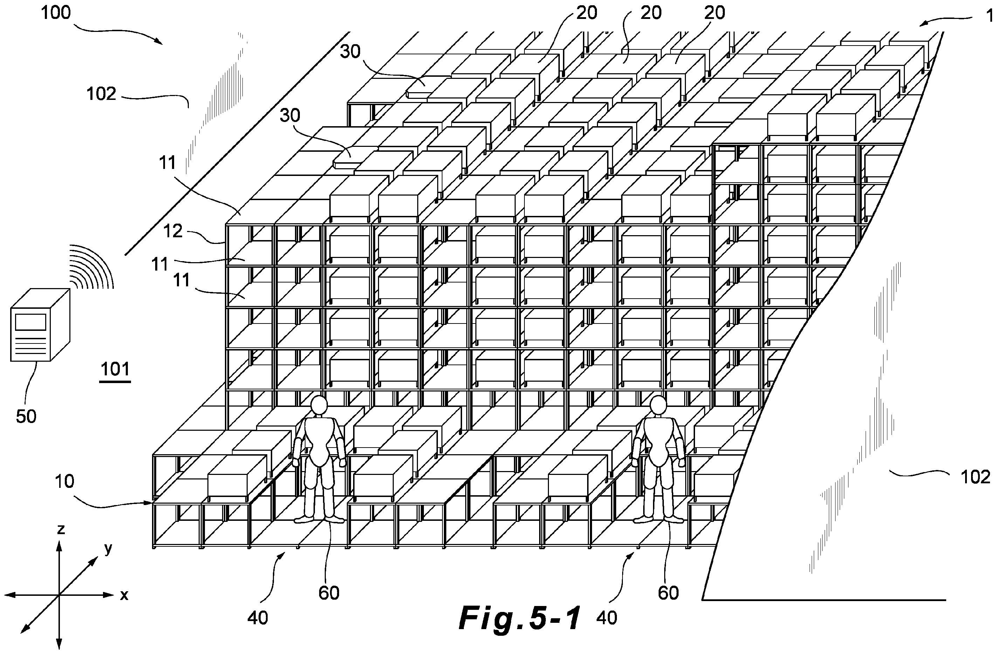

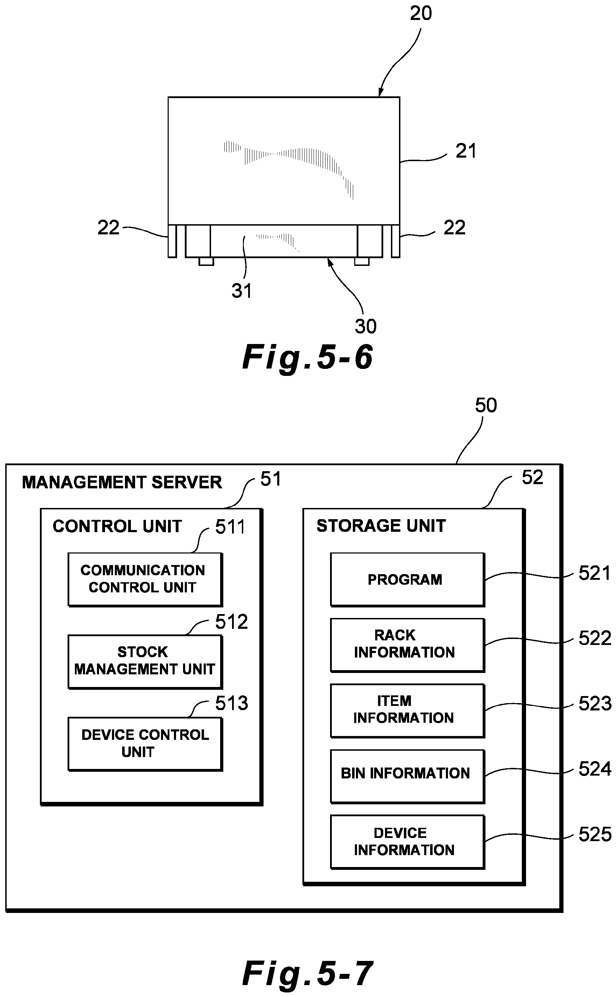

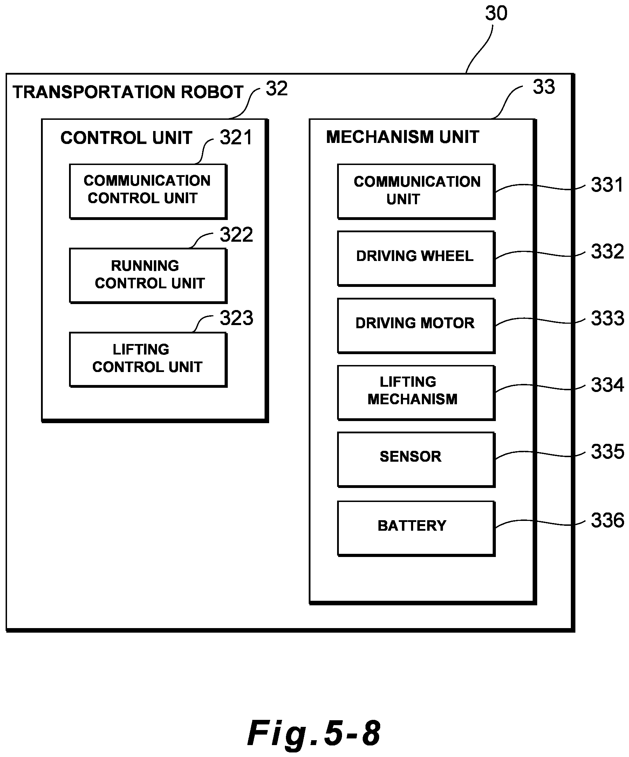

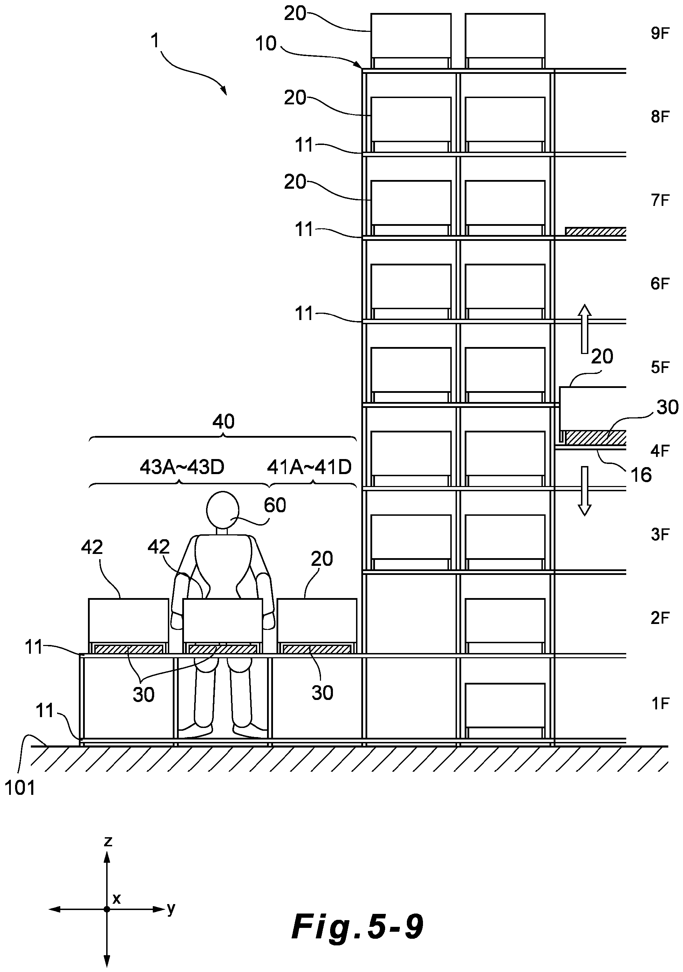

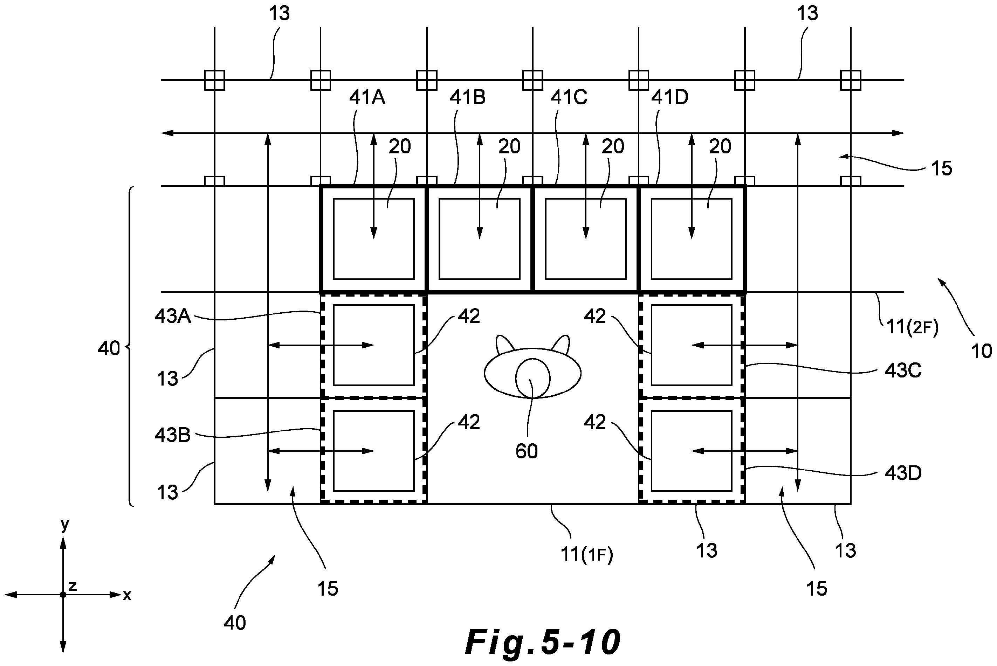

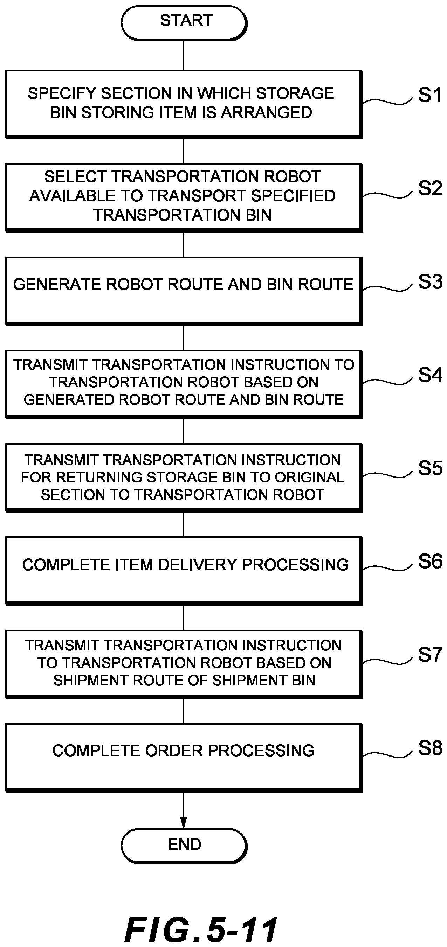

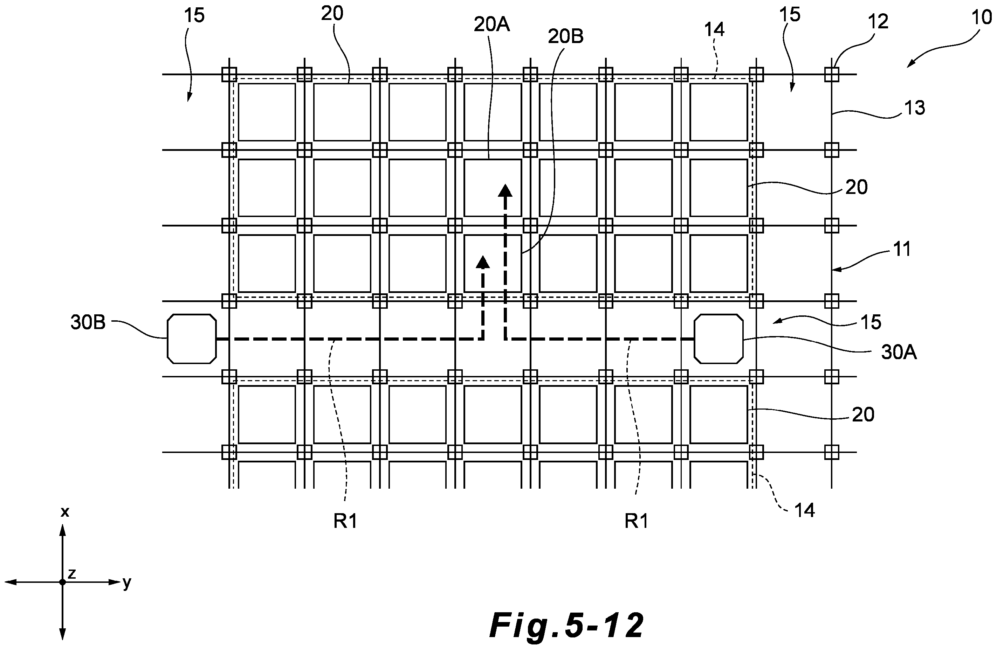

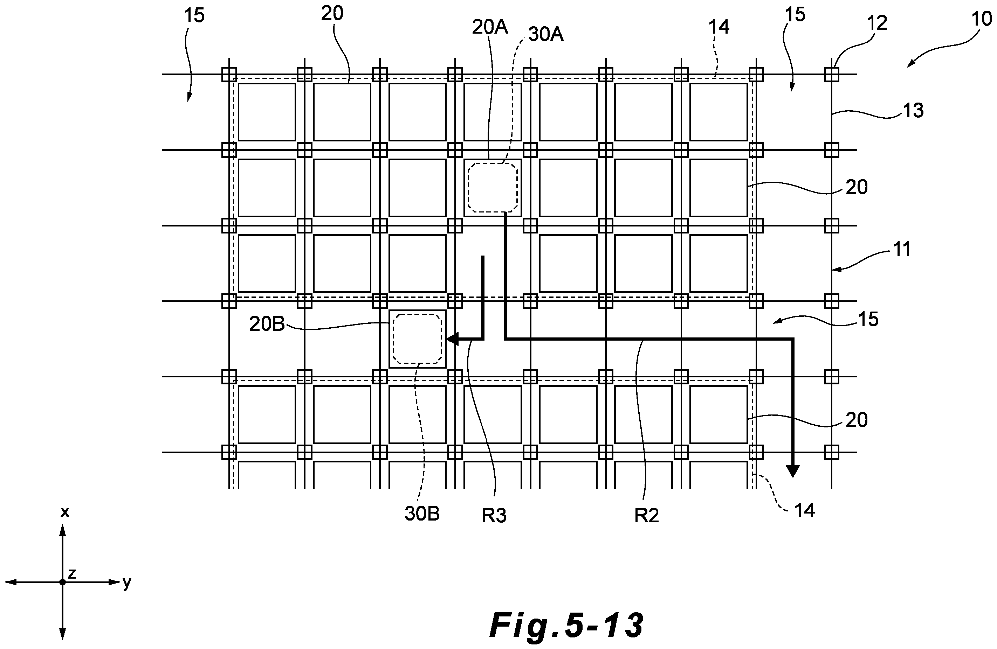

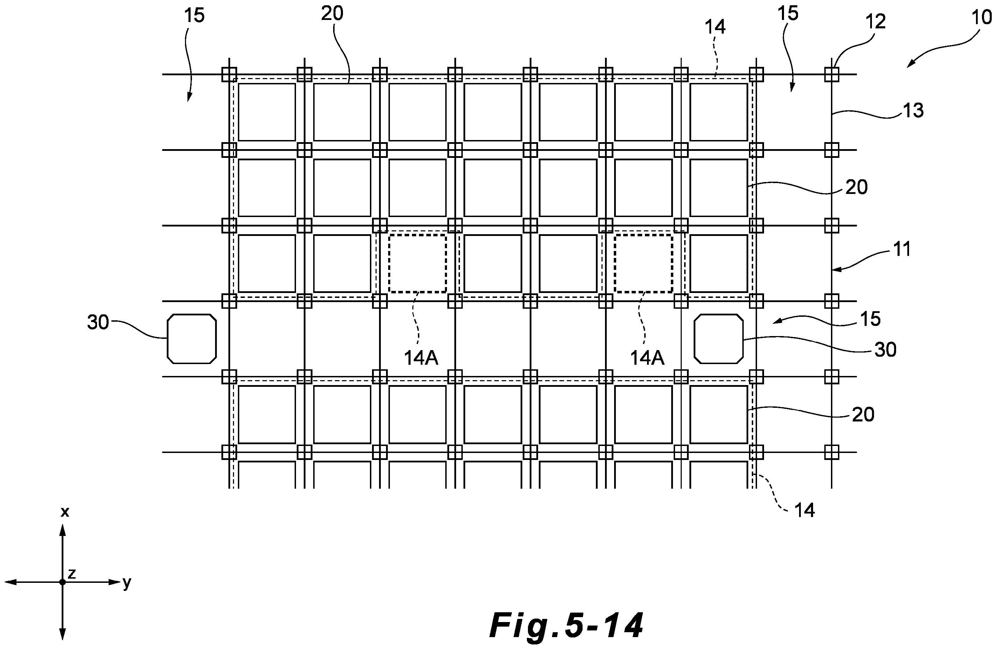

FIG. 5-1 is a perspective view schematically illustrating an external appearance of an automated storage and retrieval system 1 according to an embodiment of the present disclosure;

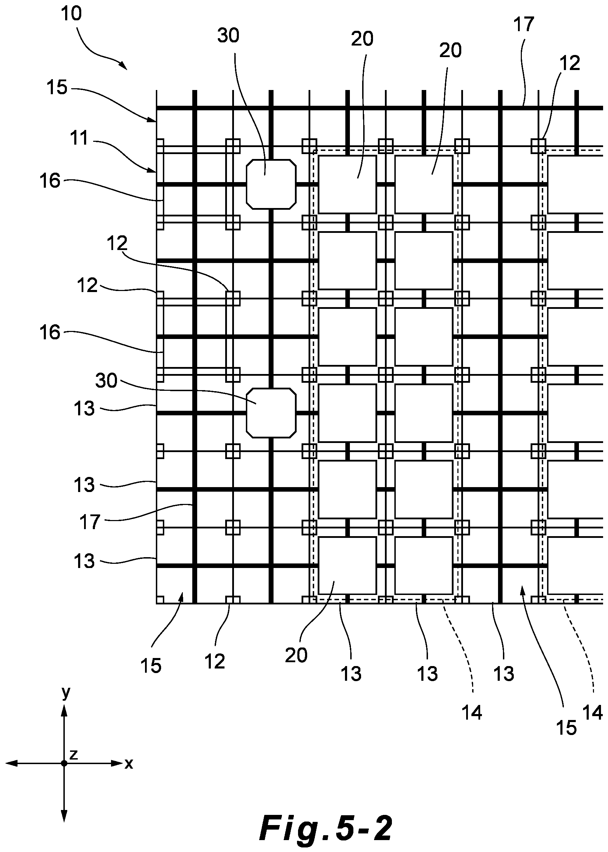

FIG. 5-2 is a plan view schematically illustrating an example of a structure of floors 11 of a rack 10 of the automated storage and retrieval system 1 according to the present embodiment;

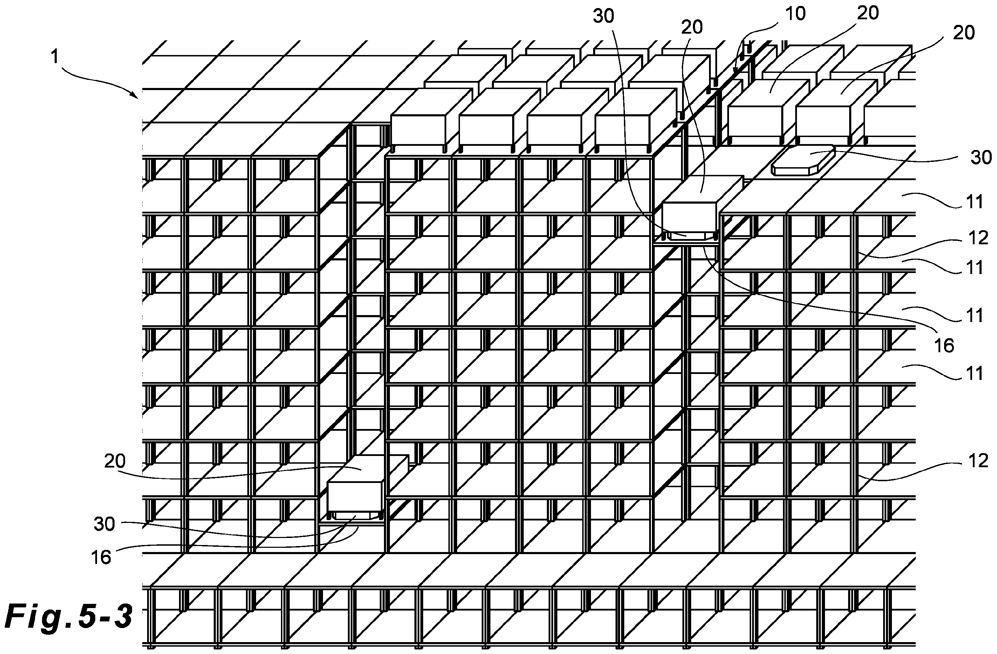

FIG. 5-3 is a perspective view schematically illustrating an example of a structure of the rack 10 of the automated storage and retrieval system 1 according to the embodiment;

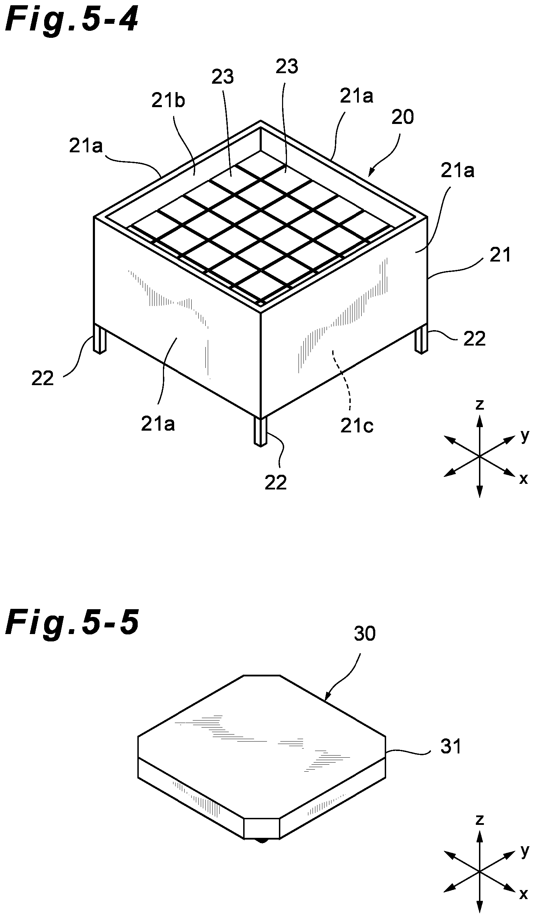

FIG. 5-4 schematically illustrates an example of a structure of a storage bin 20 of the automated storage and retrieval system 1 according to the embodiment;

FIG. 5-5 is a perspective view schematically illustrating an external appearance of a transportation robot 30 of the automated storage and retrieval system 1 according to the embodiment;

FIG. 5-6 is a side view illustrating a state where the transportation robot 30 of the automated storage and retrieval system 1 according to the embodiment lifts the storage bin 20;

FIG. 5-7 is a functional block diagram schematically illustrating a configuration of a management server 50;

FIG. 5-8 is a functional block diagram schematically illustrating a configuration of the transportation robot 30;

FIG. 5-9 is a side view of the rack 10 schematically illustrating an example of a configuration of a picking station 40 of the automated storage and retrieval system 1 according to the embodiment;

FIG. 5-10 is a plan view of the rack 10 schematically illustrating an example of a configuration of the picking station 40 of the automated storage and retrieval system 1 according to the embodiment;

FIG. 5-11 is a flowchart for explaining processing of a control unit 51 of the management server 50 of the automated storage and retrieval system 1 according to the embodiment;

FIG. 5-12 is a plan view of the floor 11 for schematically explaining transportation processing of the storage bin 20;

FIG. 5-13 is a plan view of the floor 11 for schematically explaining the transportation processing of the storage bin 20; and

FIG. 5-14 is a plan view of the floor 11 for schematically explaining the transportation processing of the storage bin 20.

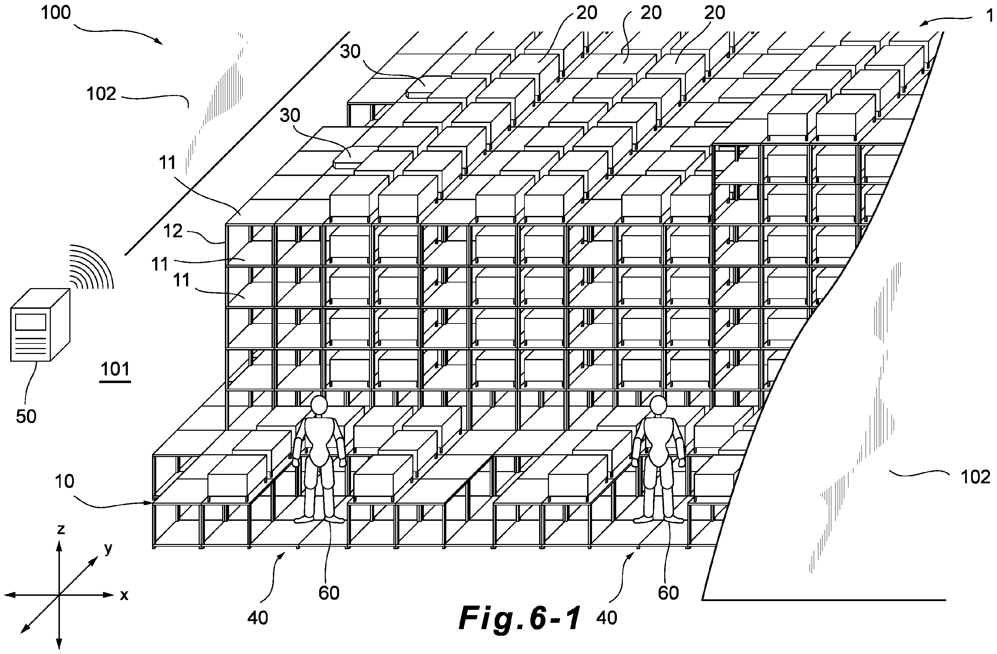

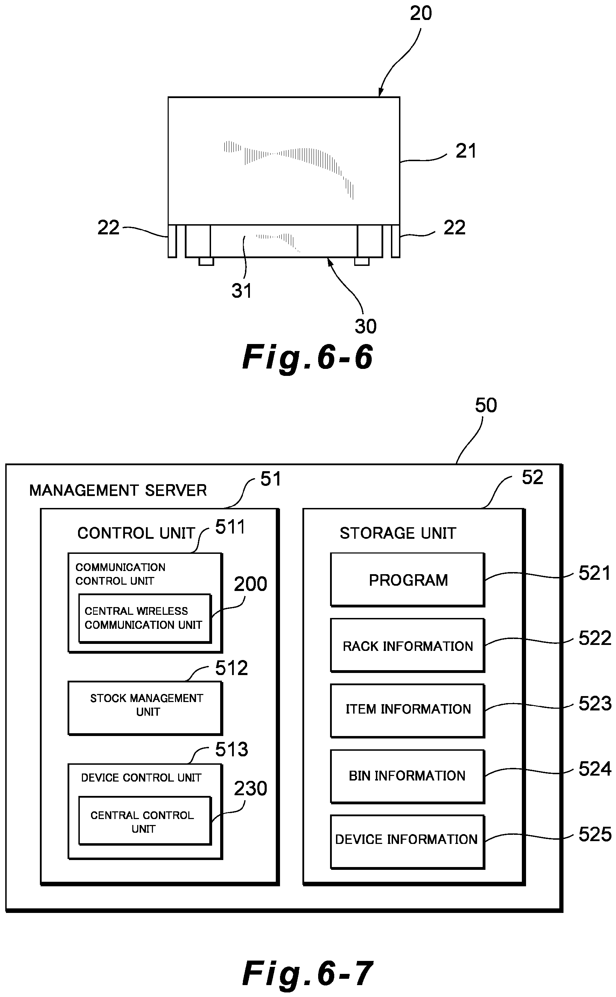

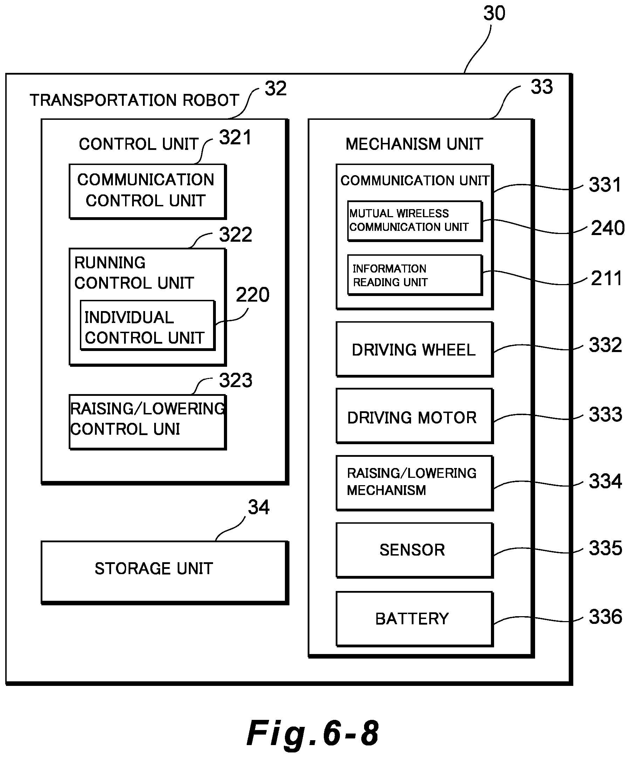

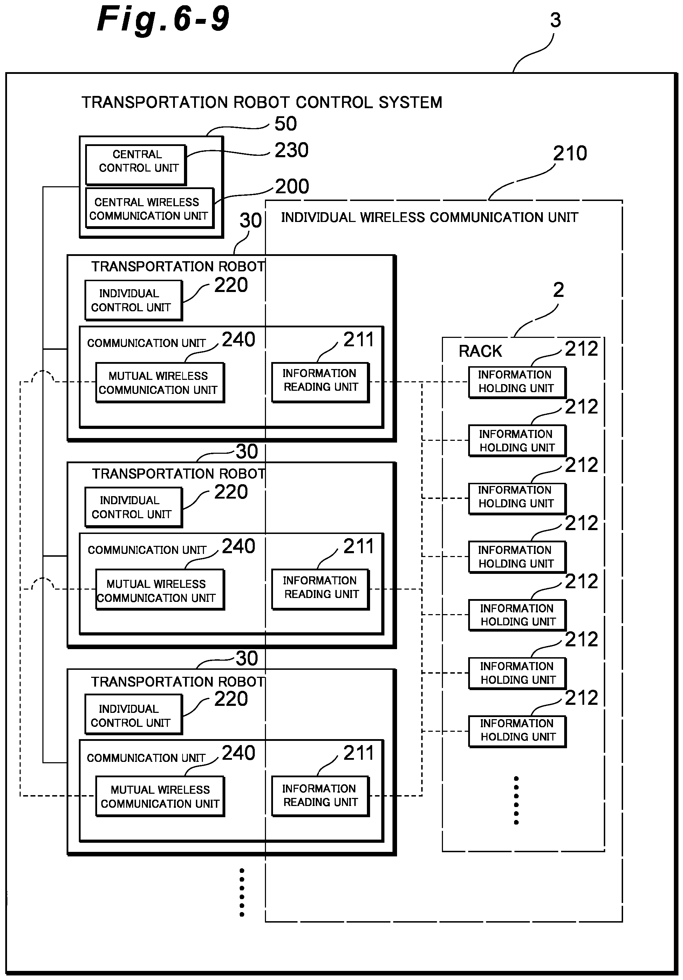

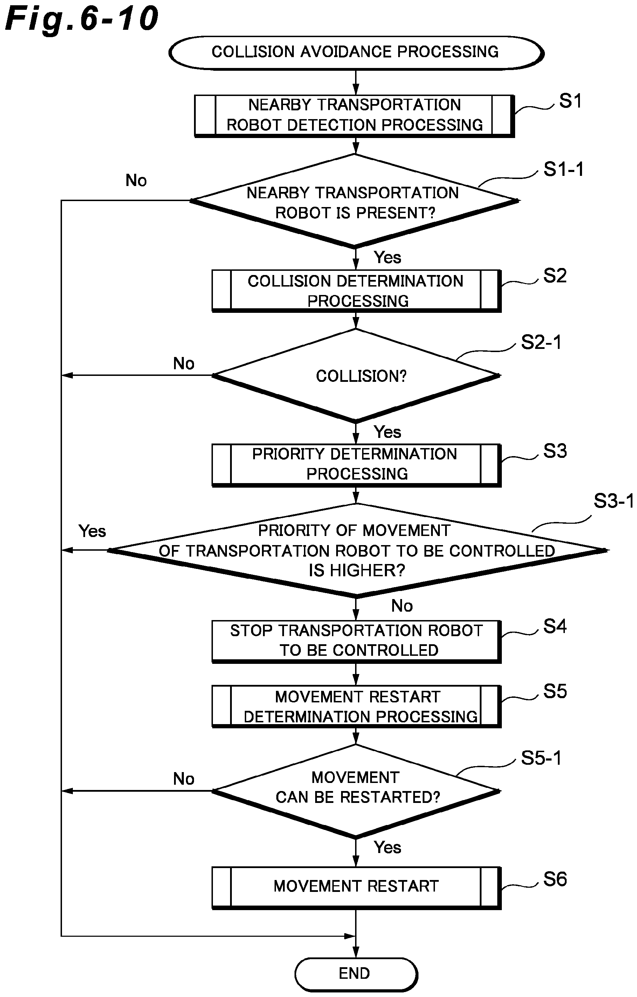

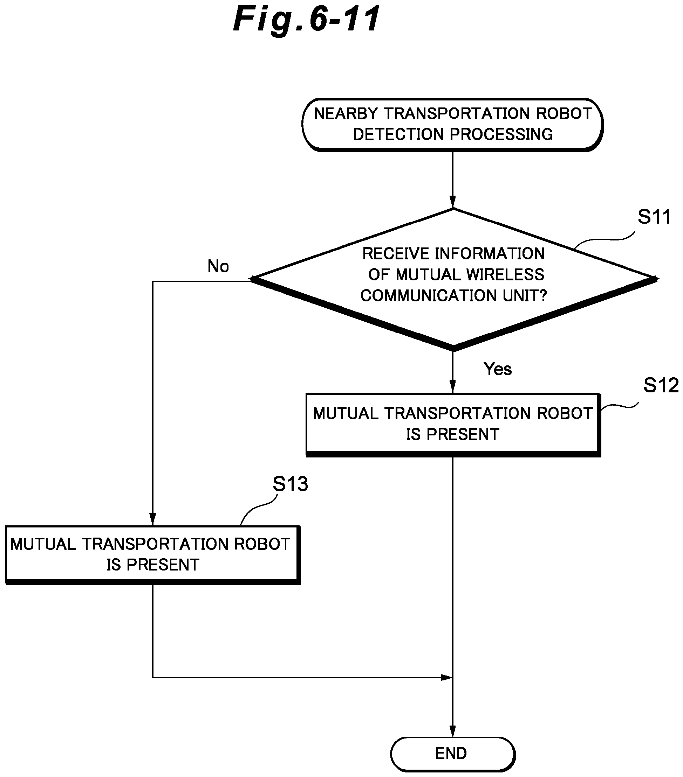

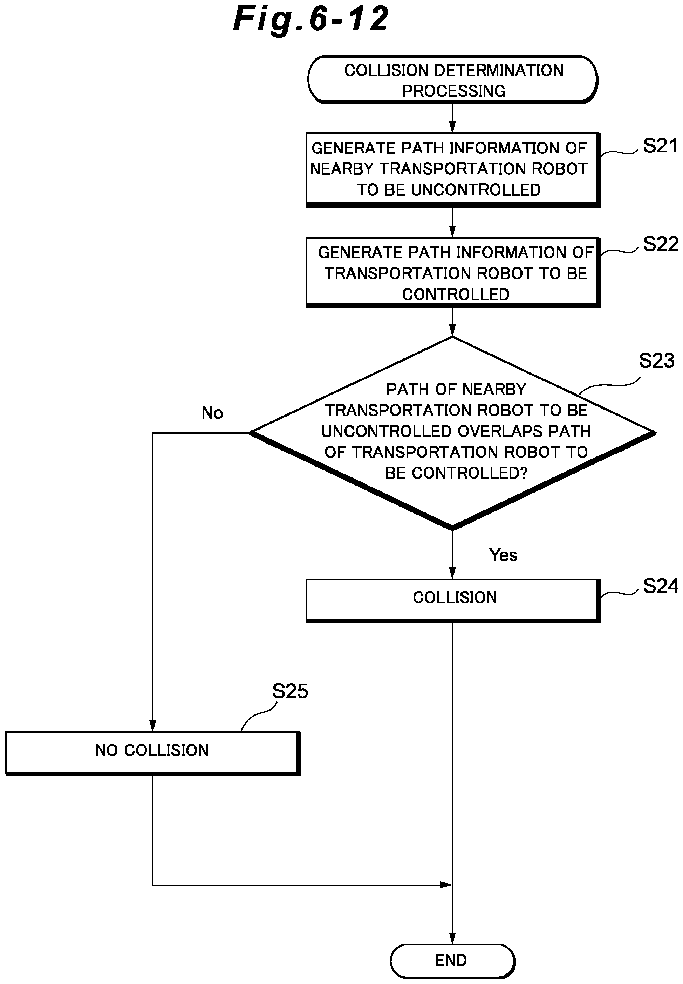

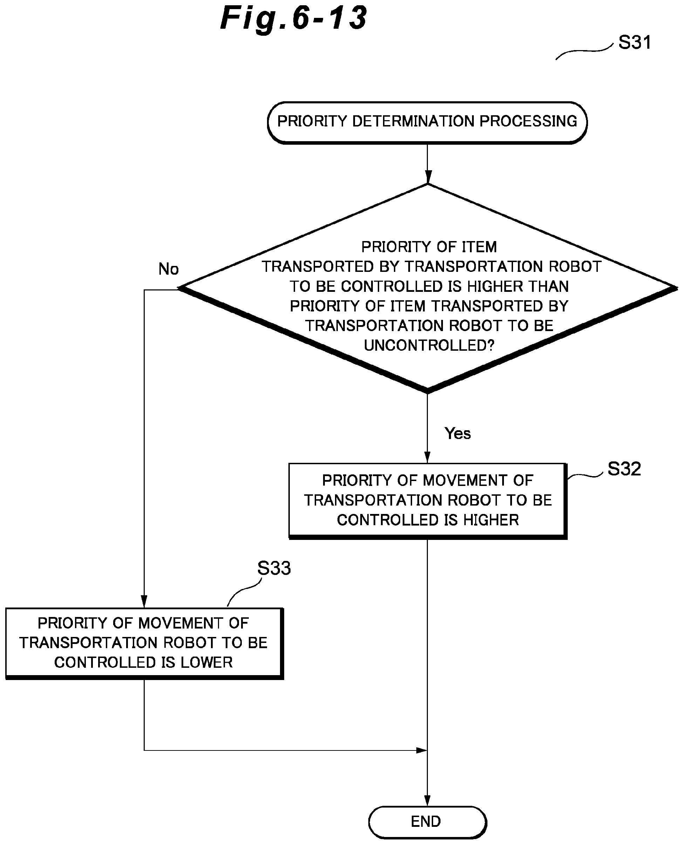

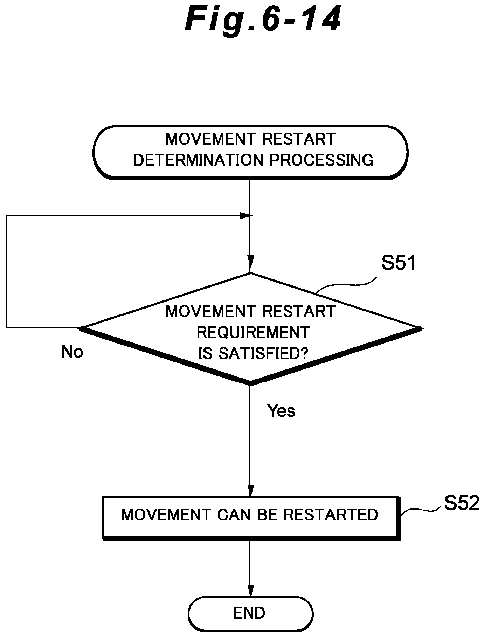

FIG. 6-1 is a perspective view schematically illustrating an external appearance of an example of a warehouse system to which a transportation robot control system for a warehouse system according to an embodiment of the present disclosure is applied;

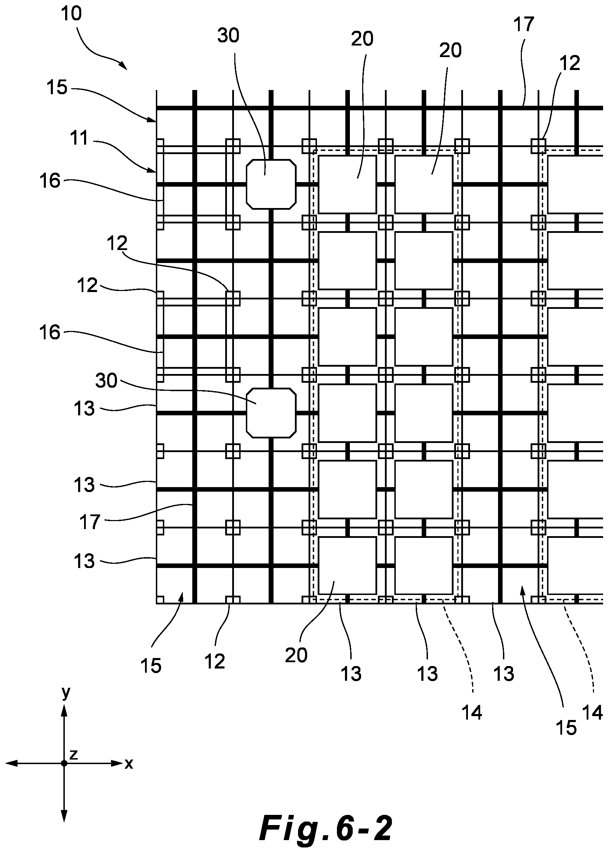

FIG. 6-2 is a top view schematically illustrating an example of the structure of a floor of a rack in the warehouse system illustrated in FIG. 6-1;

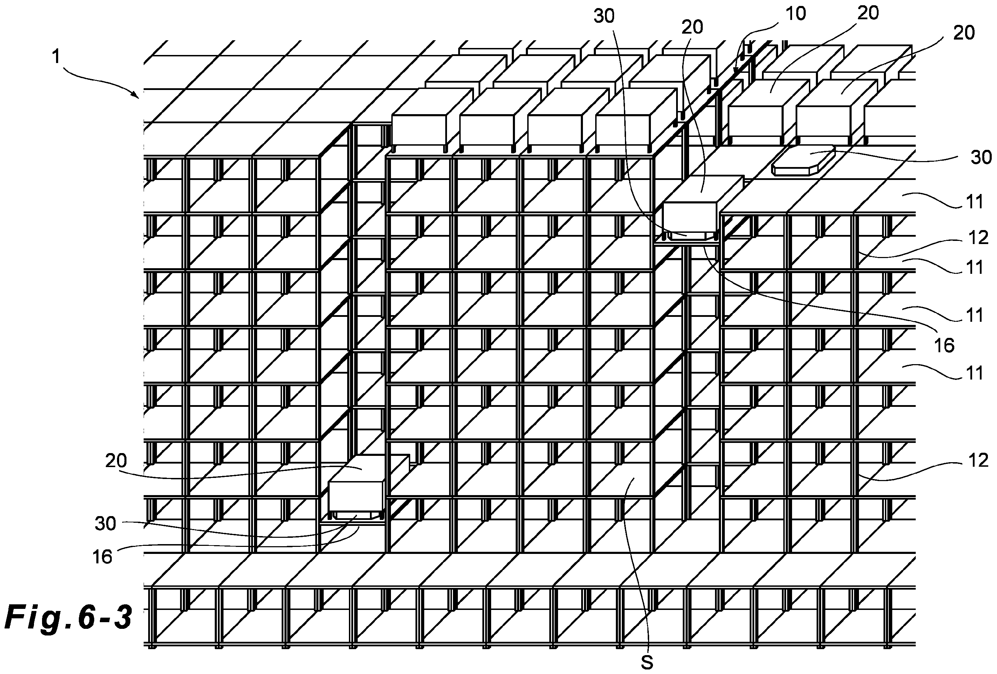

FIG. 6-3 is a perspective view schematically illustrating an example of the structure of the rack in the warehouse system illustrated in FIG. 6-1;

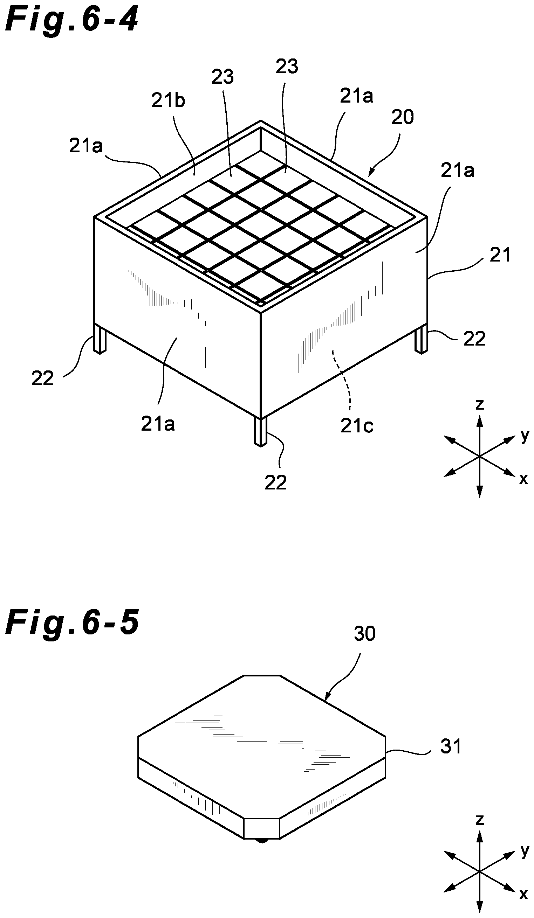

FIG. 6-4 schematically illustrates an example of the structure of a storage bin of the warehouse system illustrated in FIG. 6-1;

FIG. 6-5 is a perspective view schematically illustrating an external appearance of a transportation robot in the warehouse system illustrated in FIG. 6-1;

FIG. 6-6 is a side view illustrating a state where the transportation robot in the warehouse system illustrated in FIG. 6-5 lifts the storage bin;

FIG. 6-7 is a functional block diagram schematically illustrating a configuration of a management server which forms part of the transportation robot control system for a warehouse system according to the embodiment of the present disclosure;

FIG. 6-8 is a functional block diagram schematically illustrating a configuration of the transportation robot which forms part of the transportation robot control system for a warehouse system according to the embodiment of the present disclosure;

FIG. 6-9 is a functional block diagram schematically illustrating the configuration of the transportation robot control system for a warehouse system according to the embodiment of the present disclosure;

FIG. 6-10 is a flowchart illustrating an example of collision avoidance processing performed by the transportation robot control system for a warehouse system according to the embodiment of the present disclosure;

FIG. 6-11 is a flowchart illustrating an example of nearby transportation robot detection processing in the collision avoidance processing illustrated in FIG. 6-10;

FIG. 6-12 is a flowchart illustrating an example of collision determination processing in the collision avoidance processing illustrated in FIG. 6-10;

FIG. 6-13 is a flowchart illustrating an example of priority determination processing in the collision avoidance processing illustrated in FIG. 6-10; and

FIG. 6-14 is a flowchart illustrating an example of movement restart determination processing in the collision avoidance processing illustrated in FIG. 6-10.

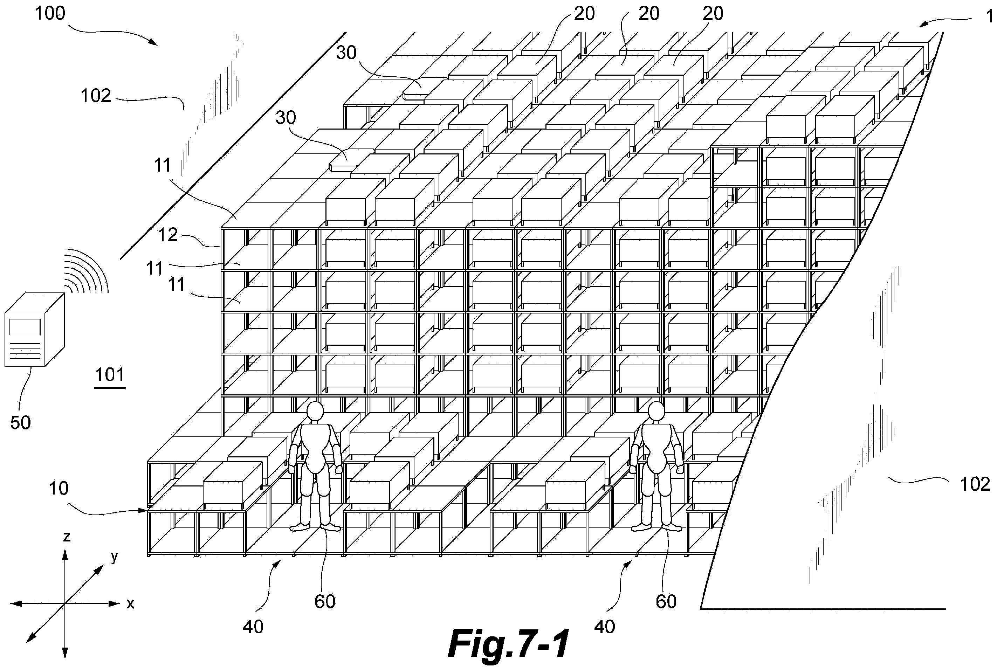

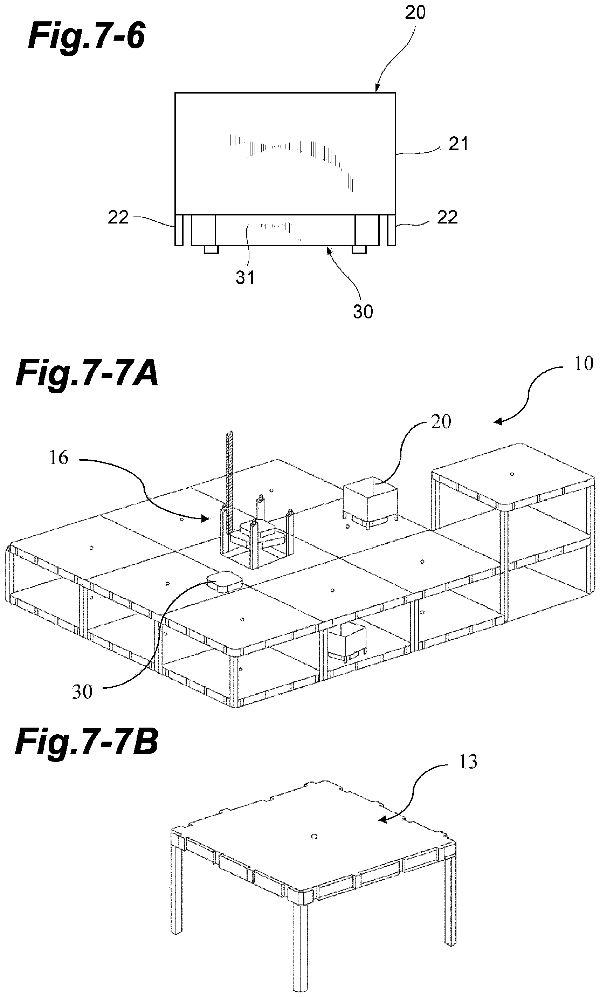

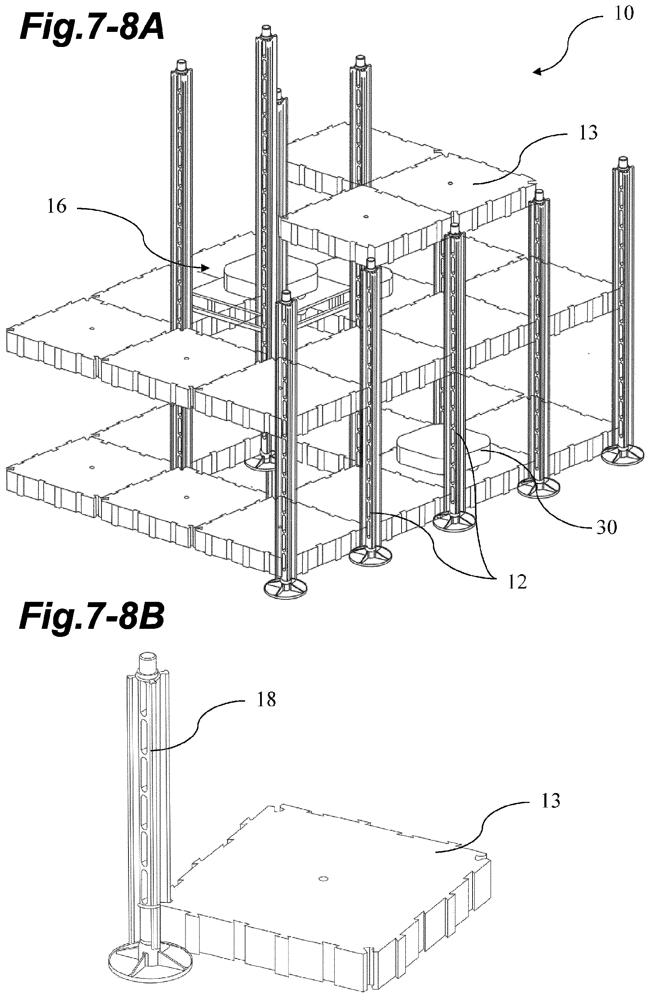

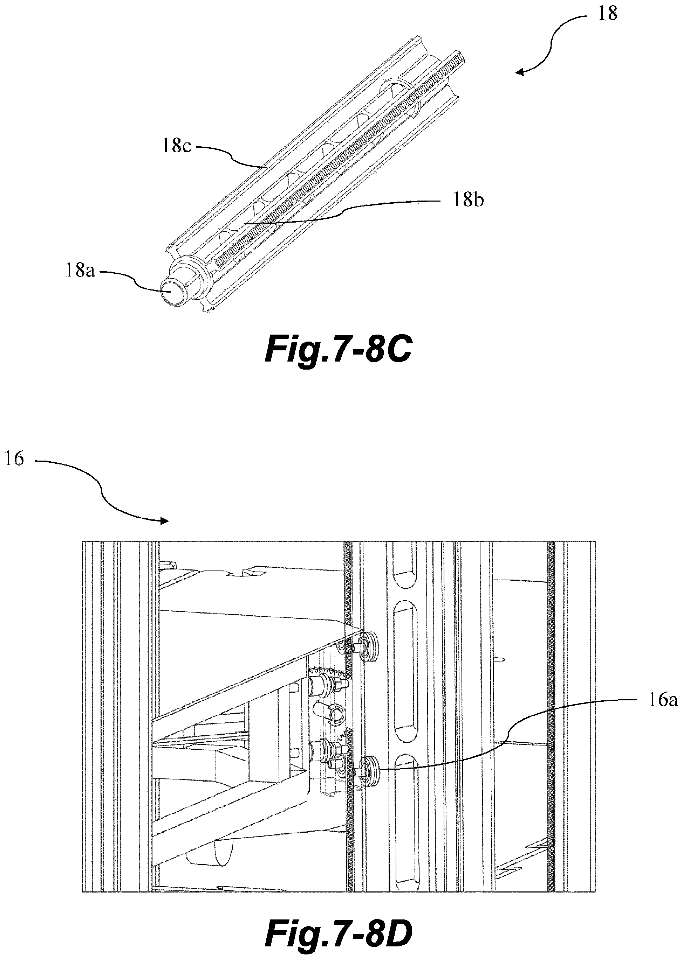

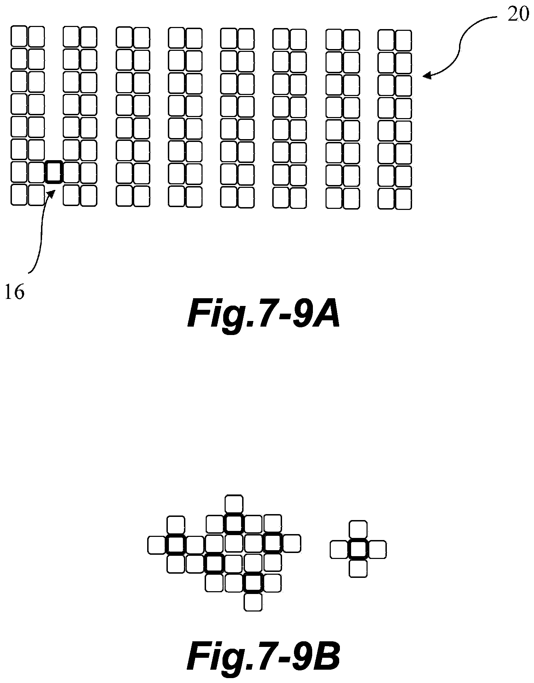

FIG. 7-1 is a perspective view schematically illustrating an external appearance of an automated storage and retrieval system according to an embodiment of the present disclosure;

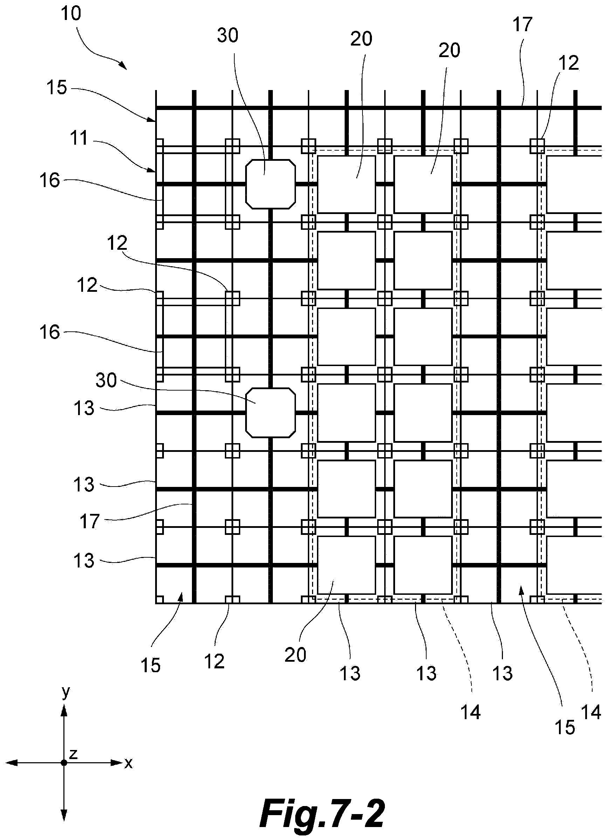

FIG. 7-2 is a plan view schematically illustrating an example of a structure of floors 11 of a multi-floor storage structure of the automated storage and retrieval system 1 according to the present embodiment;.

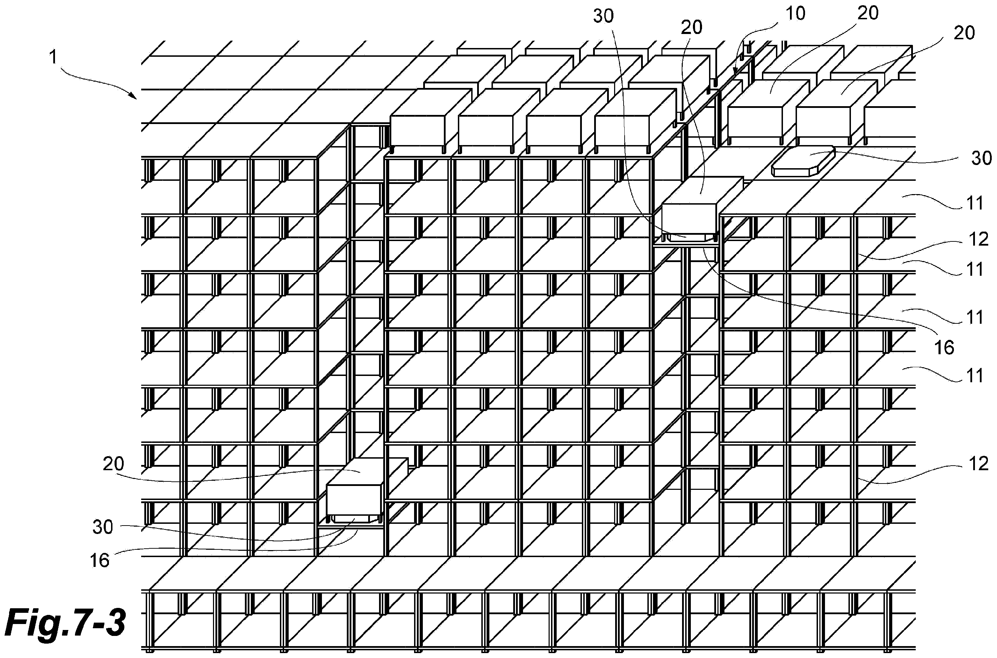

FIG. 7-3 is a perspective view schematically illustrating an example of a multi-storage structure of the automated storage and retrieval system 1 according to the embodiment;

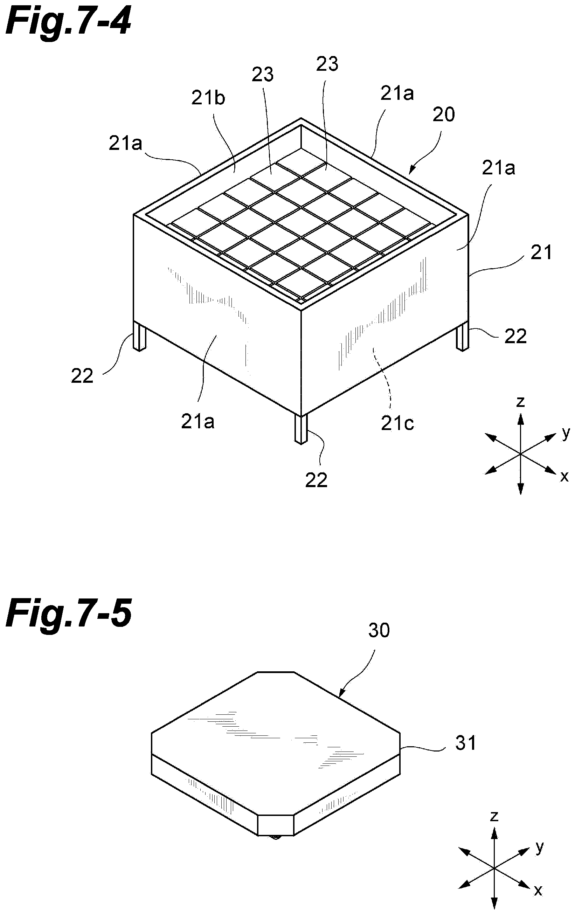

FIG. 7-4 schematically illustrates an example of a structure of a storage bin of the automated storage and retrieval system 1 according to the embodiment;

FIG. 7-5 is a perspective view schematically illustrating an external appearance of a transportation robot of the automated storage and retrieval system 1 according to the embodiment;

FIG. 7-6 is a side view illustrating a state where the transportation robot of the automated storage and retrieval system 1 according to the embodiment lifts the storage bin;

FIGS. 7-7A-7-7B is an expanded view of the multi-floor storage structure, in accordance with some embodiments of the present disclosure;

FIG. 7-8A is a perspective view of the multi-floor storage structure with multiple floors, in accordance with some embodiments of the present disclosure;

FIG. 7-8B is an expanded view of a pallet in the multi-floor storage structure, in accordance with some embodiments of the present disclosure;

FIG. 7-8C is an expanded view of a vertical elevator in the multi-floor storage structure, in accordance with some embodiments of the present disclosure;

FIG. 7-8D is an expanded view of the vertical elevator in operation in the multi-floor storage structure, in accordance with some embodiments of the present disclosure; and

FIG. 7-9A-7-9B are schematic representation of an automated storage and retrieval system with one or more patterns, in accordance with some embodiments of the present disclosure.

## DESCRIPTION OF EMBODIMENTS

[First invention] Hereinafter, an embodiment of the present disclosure will be described with reference to the accompanying drawings. In all drawings, identical reference numerals are used to refer to identical or similar components. The following embodiment does not intend to limit the invention recited in the claims. Examples and features of the disclosed principal will be described in this description, yet can be changed and modified without departing from the idea and the scope of the disclosed embodiment. Furthermore, specific features, structures, or characteristics can be combined by an arbitrary appropriate method in one or more embodiments. The following detailed description is taken into account only as exemplary description, and the true range and idea are intended to be indicated by the claims.

FIG. 1-1 is a perspective view schematically illustrating an external appearance of an automated storage and retrieval system 1 according to an embodiment of the present disclosure. The automated storage and retrieval system 1 is constructed in, for example, a building 100. The building 100 includes a floor surface 101 extending along a horizontal plane, a plurality of sidewalls 102 vertically standing from the floor surface 101, and a ceiling (not illustrated) supported by the plurality of sidewalls 102. For example, the four sidewalls 102 surrounding four sides, and the ceiling extending in parallel to the floor surface 101 establish an internal space between the floor surface 101, and the sidewalls 102 and the ceiling. The automated storage and retrieval system 1 is constructed in this internal space. Note that part of the sidewalls 102 are cut out for ease of description in FIG. 1-1. In the building 100, an x axis and a y axis extending in a direction perpendicular to each other on the horizontal plane, and a z axis extending in a vertical direction and perpendicular to the x axis and the y axis are defined.

The automated storage and retrieval system 1 is an automated storage and retrieval system which can automate a series of work from warehousing and storage to delivery of items including products and the like based on centralized management. The automated storage and retrieval system 1 according to the present embodiment includes a rack 10 arranged on the floor surface 101, a plurality of storage bins 20 which is containers stored in the rack 10, a plurality of transportation robots 30 for transporting the storage bins 20, one or more picking stations 40 for picking items including products and the like contained in the storage bins 20, and a management server 50 for managing the series of work of the automated storage and retrieval system 1. At the picking station 40, a human operator 60 performs picking work of picking an item from the storage bin 20.

The rack 10 includes a plurality of floors 11, each of floors 11 defining a surface which extends in parallel to each other along each xy plane, and a plurality of support columns 12 supporting the plurality of floors 11. In the present embodiment, the floors 11 of a first floor to a ninth floor vertically standing in a z axis direction from the floor surface 101 are formed. A total height of the rack 10 from the floor surface 101 in the z axis direction can be set according to a height in the z axis direction of the ceiling of the building 100. Note that part of the floors 11 of the eighth floor and the ninth floor is omitted for ease of description in FIG. 1-1, and configurations of the floors 11 of the eighth floor and the ninth floor are configured similar to the floor 11 of the seventh floor.

FIG. 1-2 is a plan view schematically illustrating an example of a structure of the floor 11 of the rack 10 of the automated storage and retrieval system 1 according to the present embodiment. In the present embodiment, each floor 11 of the rack 10 defines a plurality of sections 13 aligned along the xy plane. The section 13 defines, for example, outlines of a square or a rectangle in plan view. In the present embodiment, the support columns 12 are respectively arranged at four corners of the one section 13. The one storage bin 20 occupies the one section 13. Similarly, the one transportation robot 30 occupies the one section 13. That is, an outline of the storage bin 20 and an outline of the transportation robot 30 are respectively arranged in the outline of the one section 13 in plan view. Furthermore, an interval between a pair of the mutually neighboring support columns 12, 12 is set larger than widths of the transportation robot 30 and the storage bin 20 defined in an x axis direction and a y axis direction.

Each floor 11 defines storage areas 14 including the sections 13 in which the storage bins 20 are aligned, and movement passages 15 of the transportation robots 30 including the sections 13 other than the storage areas 14. In the present embodiment, for example, two rows of bin groups of the plurality of storage bins 20 aligned along the y axis direction are aligned in the x axis direction in the storage area 14. That is, all of the storage bins 20 making up the bin group of these two rows of the storage bins 20 face the movement passages 15 at all times. On the other hand, the transportation robots 30 can run on the movement passages 15. As described later, the transportation robot 30 can also run in the storage area 14, through a space below a bottom surface of the storage bin 20.

FIG. 1-3 is a perspective schematically illustrating an example of a structure of the rack 10 of the automated storage and retrieval system 1 according to the embodiment. Referring to FIGS. 1-1 to 1-3, the rack 10 includes one or more transportation elevators 16. The transportation elevators 16 can make reciprocating movement in the z axis direction from the first floor to the ninth floor of the floors 11, and stop each floor 11. Each transportation elevator 16 is arranged in one section 13 in the movement passage 15 of the transportation robot 30 on each floor 11. In the present embodiment, the plurality of transportation elevators 16 may be provided to the rack 10. The transportation elevator 16 can have only the transportation robot 30 get thereon or have the transportation robot 30 holding the storage bin 20 get thereon to transport to each floor of the first floor to the ninth floor.

The transportation elevator 16 includes, for example, shafts of four corners attached to the rack 10 and extend in the z axis direction, four roller chains attached to the respective shafts, and extend in the z axis direction, four sprockets meshing with the respective chains, and two electric motors (both of which are not illustrated) for respectively rotating and driving, for example, the two sprockets. The sprockets mesh with the roller chains in response to rotation of the sprockets caused by the electric motors to ascend and descend the transportation elevator 16. Note that the support columns 12 making up the rack 10 may be used in place of the shafts. The above mechanism is a mere example, and an arbitrary another mechanism realizing vertical movement of the transportation elevator 16 may be used.

FIG. 1-4 schematically illustrates an example of the structure of the storage bin 20 of the automated storage and retrieval system 1 according to the embodiment. In the present embodiment, the storage bin 20 includes a bin main body 21 defining an internal space of, for example, a cuboid, and four support legs 22 extending downward from four corners of a bottom surface of the bin main body 21. The bin main body 21 includes four sidewalls 21a surrounding four sides, an opening part 21b opened along upper ends of the sidewalls 21a, and a bottom surface 21c closed along lower ends of the sidewalls 21a. Although the opening part 21b is opened in the present embodiment, the opening part 21b may be closed with, for example, a lid or a cover. The sidewalls 21a extend in parallel to, for example, the z axis. Furthermore, the bottom surface 21c extends along the xy plane. The storage bin 20 is received on the floor 11 by the four support legs 22. The storage bin 20 may be formed by, for example, a resin material. Furthermore, the storage bin 20 may be a foldable bin. An outline of the bin main body 21 in plan view is defined as a square or a rectangle. A size of the storage bin 20 is preferably set appropriately based on a size of the rack 10 or each floor 11 or a size of an item 23.

The one or more items 23 are contained in the internal space in the bin main body 21. The item 23 can be identified by, for example, a unique Stock Keeping Unit (SKU) set to the item 23. Although the item 23 is, for example, one unit of a product or the like, the item 23 may be a so-called case product packaged in a unit of a plurality of identical products. Furthermore, the one storage bin 20 may contain only the items 23 of one type, or may contain the items 23 of a plurality of types. The storage bin 20 can be identified based on a unique ID set to each storage bin 20. The unique ID of this storage bin 20 is managed in correspondence with the SKU of the item 23 contained in the storage bin 20.

FIG. 1-5 is a perspective view schematically illustrating an external appearance of the transportation robot 30 of the automated storage and retrieval system 1 according to the embodiment. In the present embodiment, a plurality of the transportation robots 30 is arranged on each floor 11 of the rack 10. The transportation robot 30 is, for example, an autonomous running transportation robot including a thin housing 31 of a substantially cuboid shape. The housing 31 is formed by, for example, a resin material. The transportation robot 30 can run along a line 17 (see, for example, FIG. 1-2) by tracing the line 17 drawn on the floor 11 of the rack 10 (line tracing function). The line 17 is two strips of lines. The two strips of lines extend passing center positions of the x axis direction and the y axis direction in, for example, each section 13, and are perpendicular to each other at a center of the section 13. These lines 17 are drawn in all of the sections 13 including the storage areas 14, the movement passages 15, and the transportation elevators 16 of the floor 11.

An upper surface of the housing 31 of the transportation robot 30 extends flat along the xy plane. A height of the transportation robot 30 is set smaller than the height of the support leg 22 of the storage bin 20. Furthermore, an outline of the housing 31 in top view is defined substantially as, for example, a square. Similarly, the length of one side of the transportation robot 30 is set smaller than the length of each side of the storage bin 20. That is, the transportation robot 30 can enter the space below the bin main body 21 from between the pair of mutually neighboring support legs 22 of the storage bin 20. In this regard, the size of the transportation robot 30 is preferably set appropriately based on sizes of the rack 10, each floor 11, and the storage bin 20.

The transportation robot 30 can change the height thereof between a first configuration where the height of the upper surface of the housing 31 is set to a first height, and a second configuration where the height is set to a second height higher than the first height. As described above, the transportation robot 30 of the first configuration can enter the space below the bin main body 21 from between the pair of mutually neighboring support legs 22 of the storage bin 20. In this case, when the transportation robot 30 changes the height of the housing 31 from the first configuration to the second configuration, the transportation robot 30 holds the storage bin 20 on the upper surface of the housing 31 as illustrated in FIG. 1-6. As a result, the storage bin 20 can be lifted from the floor 11. The transportation robot 30 can run in both of the first configuration and the second configuration. That is, the transportation robot 30 can run on the floor 11 while lifting the storage bin 20.

Back to FIG. 1-1, in the present embodiment, the picking station 40 is provided along, for example, an edge of the floor 11 which continues from the surface of the floor 11 of the rack 10. That is, the picking station 40 is provided in, for example, the rack 10. In the present embodiment, for example, the two picking stations 40 are provided on the floor 11 of the second floor of the rack 10. The picking station 40 is a station for picking the item 23 from the storage bin 20 transported by the transportation robot 30 from the rack 10. The operator 60 can execute picking work (delivery work) taking a standing posture on, for example, the surface of the floor 11 of the first floor. Note that details of a configuration of the picking station 40 will be described later.

The management server 50 manages all of the rack 10, the storage bins 20, the transportation robots 30, the transportation elevators 16, and the picking stations 40 for warehousing, storage, and delivery of the automated storage and retrieval system 1. This management is realized when a program stored in a storage unit is executed by a control unit as described later. More specifically, operations and processing of the transportation robots 30, the transportation elevators 16, and the picking stations 40 are executed according to information processing described in the program. That is, the information processing described in the program functions as specific means collaborated by software in correspondence with the program, and various hardware resources of the automated storage and retrieval system 1 when the program is read by the control unit.

FIG. 1-7 is a functional block diagram schematically illustrating a configuration of the management server 50. As illustrated in FIG. 1-7, the management server 50 includes a control unit 51 and a storage unit 52. The control unit 51 includes a communication control unit 511, a stock management unit 512, and a device control unit 513. On the other hand, the storage unit 52 stores a program 521, rack information 522, item information 523, bin information 524, and device information 525. The control unit 51 manages the automated storage and retrieval system 1 by executing the program 521 stored in the storage unit 52. This management server 50 may be realized on a physical server, yet may be realized on, for example, a cloud server.

The communication control unit 511 controls communication between the management server 50 and at least the transportation robot 30 and a terminal of the operator 60 at the picking station 40. A communication method may be, for example, Wi-Fi (registered trademark), Ethernet (registered trademark), optic or the like. The stock management unit 512 manages a stock status of the automated storage and retrieval system 1. More specifically, the stock management unit 512 associates and manages information (SKU) for identifying each item 23, information related to the number of stocks of each item 23 specified based on the SKU, information (ID) for identifying the storage bin 20 in which the item 23 is contained, and information related to a position of the section 13 of the floor 11 in which the storage bin 20 is stored. Each of these pieces of information is stored as the rack information 522, the item information 523, and the bin information 524 in the storage unit 52.

The device control unit 513 manages and controls at least states and operations of the transportation robots 30 and the picking stations 40. More specifically, the device control unit 513 associates and manages information for identifying the transportation robot 30, information related to a current state of the transportation robot 30, i.e., a charging state of the transportation robot 30, information related to whether or not the transportation robot 30 engages in transportation, information related to order processing in which the transportation robot 30 engages in a case where the transportation robot 30 engages in the transportation, and information related to a current position of the transportation robot 30 at the floor 11 of the rack 10 or the picking station 40. The information related to the order processing includes, for example, information related to transportation of which item 23 of the order processing the transportation robot 30 engages in. Each of these pieces of information is stored as the device information 525 in the storage unit 52. Furthermore, the device control unit 513 associates and manages information for identifying the picking station 40, and information related to an order for which picking work is executed at the picking station 40. Each of these pieces of information is stored as the device information 525 in the storage unit 52.

Furthermore, the device control unit 513 generates commands for the transportation robot 30 and the transportation elevator 16 per order processed by the automated storage and retrieval system 1. More specifically, the device control unit 513 specifies the storage bin 20 for containing the item 23 designated by the order based on each of the above pieces of information, and specifies the transportation robot 30 which needs to be assigned to transport the storage bin 20. The device control unit 513 specifies a movement route R1 (referred to as a "robot route" below) of the transportation robot 30 to the section 13 in which the storage bin 20 is stored, and a movement route R2 (referred to as a "bin route" below) of the transportation robot 30 from the section 13 to the picking station 40 which is a destination. These pieces of generated information are transmitted as commands to the transportation robot 30 via the communication control unit 511.

FIG. 1-8 is a functional block diagram schematically illustrating a configuration of the transportation robot 30. As illustrated in FIG. 1-8, the transportation robot 30 includes a control unit 32 and a mechanism unit 33. The control unit 32 includes a communication control unit 321, a running control unit 322, and a lifting control unit 323. The mechanism unit 33 includes a communication unit 331, a plurality of driving wheels 332, a plurality of driving motors 333, a lifting mechanism 334, a sensor 335, and a battery 336. The control unit 32 controls an operation of the transportation robot 30 by executing a program (not illustrated) stored in the storage unit (not illustrated). The program may be stored in a physical storage unit incorporated in the transportation robot 30, yet may be stored on, for example, a cloud server.

The communication unit 331 establishes communication between at least the management server 50, the transportation elevator 16, and the terminal of the operator 60 at the picking station 40. A communication method may be, for example, Wi-Fi (registered trademark), Ethernet (registered trademark), optic or the like. Communication performed by the communication unit 331 is controlled by the communication control unit 321. The driving wheel 332 is a wheel for realizing running of the transportation robot 30. The plurality of driving motors 333 drives the driving wheels 332 and the lifting mechanism 334. Driving of the driving wheels 332 is controlled by the running control unit 322. The lifting mechanism 334 establishes the above-described first configuration and second configuration by lifting the housing 31 of the transportation robot 30. An operation of this lifting mechanism 334 is controlled by the lifting control unit 323.

The sensor 335 is, for example, an optical sensor for realizing the above-described line tracing function. More specifically, the sensor 335 is used to control running of the transportation robot 30 along the line 17 by reading a boundary of the line 17 drawn on each section 13. Furthermore, although the two strips of the lines 17 cross at the center of each section 13, the sensor 335 reads the line 17 perpendicular to the line 17 along which the transportation robot 30 is running, so that the transportation robot 30 can specify the center position of each section 13. Thus, the transportation robot 30 can stop at, for example, the center position of each section 13. The battery 336 is, for example, a rechargeable battery. On each floor 11 of the rack 10, one or more charging spots (not illustrated) which enable charging of the battery 336 of the transportation robot 30 may be formed.

FIG. 1-9 is a side view of the rack 10 schematically illustrating an example of the configuration of the picking station 40 of the automated storage and retrieval system 1 according to the embodiment. FIG. 1-10 is a plan view of the rack 10 schematically illustrating the example of the configuration of the picking station 40 of the automated storage and retrieval system 1 according to the embodiment. As illustrated in FIG. 1-9, the picking station 40 is established along the edge of the floor 11 which continues from the surface of the floor 11 of the second floor of the rack 10. More specifically, the picking station 40 is formed on the surface of the floor 11 of the second floor which extends in, for example, the y axis direction toward an outer side of an outer edge of the floors 11 of the third floor to the ninth floor. In the present embodiment, similar to the floor 11 of the second floor, the floor 11 of the first floor also extends toward the outer side of the outer edges of the floors 11 of the third floor to the ninth floor. The operator 60 stands on the surface of the floor 11 of the first floor, and does work of picking the item 23 from the storage bin 20. The height of the surface of the floor 11 of the second floor is suitable for the operator 60 whose height is, for example, 165 cm which is an average height of adults to do the work.

As illustrated in FIG. 1-10, the picking station 40 defines a plurality of picking positions 41A to 41D at which the storage bins 20 used for picking work of the item 23 are arranged on the floor 11 of the second floor. In the present embodiment, the four picking positions 41A to 41D are aligned adjacent to each other in the x axis direction along the edge of the rack 10. Each of the picking positions 41A to 41D occupies the one section 13 of the floor 11. The picking positions 41A to 41D are aligned in front of the operator 60 facing the rack 10, and the picking positions 41B and 41C of the picking positions 41A to 41D directly face the operator 60. As is apparent from FIG. 1-9, no floor 11 is arranged in a space above the picking positions 41A to 41D in the z axis direction.

On the floor 11 of the second floor, for example, the two sections 13 extend toward the outer side in the y axis direction from the picking positions 41A and 41D. These four sections 13 in total define loading positions 43A to 43D at which the items 23 are loaded to shipment bins 42 which need to be shipped to clients of orders. Each of the loading positions 43A to 43D occupies the one section 13 of the floor 11. The shipment bin 42 employs the same configuration as that of the storage bin 20. According to the present embodiment, all of the loading positions 43A to 43D are aligned to a side of the operator 60 who faces the rack 10, and directly face the operator 60. Thus, as is apparent from FIG. 1-10, the four picking positions 41A to 41D and the four loading positions 43A to 43D are aligned surrounding the operator 60 on the floor 11 of the second floor.

Furthermore, the sections 13 further surrounding the four picking positions 41A to 41D and the four loading positions 43A to 43D define the movement route 15 of the transportation robot 30 on the floor 11 of the second floor. Although FIG. 1-10 omits illustration of the lines 17 for ease of description, the lines 17 are drawn in all of the sections 13 in which the four picking positions 41A to 41D and the four loading positions 43A to 43D, and the movement routes 15 are formed. Thus, as indicated by arrows in FIG. 1-10, the transportation robot 30 can enter the four picking positions 41A to 41D and the four loading positions 43A to 43D from the movement routes 15. Note that the storage bin 20 is not arranged in the sections 13 forming the movement routes 15. Thus, the transportation robot 30 can transport the storage bin 20 between the storage area 14 of the rack 10 and the four picking positions 41A to 41D. On the other hand, the transportation robot 30 can transport the shipment bin 42 on which the item 23 has been loaded, to, for example, a shipping station (not illustrated) established in the rack 10.

Although the storage bins 20 are aligned on each floor 11 of the rack 10 as is apparent from FIG. 1-9, the storage bins 20 containing the items 23 of higher inventory turnover ratios are preferably aligned on the lower floors 11. In other words, the storage bins 20 containing the items 23 of lower inventory turnover ratios are preferably aligned in the upper floors 11. In the present embodiment, the picking stations 40 are established on the floor 11 of the second floor, and therefore the items 23 of lower inventory turnover ratios are stored on the upper floors 11 for which physical movement distances of the transportation robots 30 from the second floor are assumed to be long. Similarly, the items 23 of higher inventory turnover ratios are stored on the floors 11 which are close to the second floor and to which physical movement distances are assumed to be short, or the second floor for which the transportation elevator 16 does not need to be used.

Hereinafter, delivery processing of the automated storage and retrieval system 1 according to the embodiment of the present disclosure will be described. FIG. 1-11 is a flowchart for explaining processing of the control unit 51 of the management server 50 of the automated storage and retrieval system 1 according to the embodiment. The operator 60 starts the delivery processing by using the terminal (not illustrated). The delivery processing starts from a time when, for example, the terminal specifies an order. The specified order includes an order line including at least SKUs and the number of the ordered items 23. The order line is displayed on a display screen of the terminal of the operator 60. Note that the terminal of the operator 60 is preferably electronic device terminals including, but not limited to, a personal computer, a smartphone, a tablet terminal, and a touch panel type display.

When the delivery processing is started, the device control unit 513 specifies the storage bin 20 containing each item 23 specified by the order line (step S1). More specifically, the position of the section 13 of the floor 11 storing the storage bin 20 is specified. Specifying the positions is executed for all of the items 23 specified by the order line. On the other hand, the empty shipment bin 42 used for the specified order is arranged at one of the loading positions 43A to 43D. For this arrangement, the transportation robot 30 may be used. Furthermore, as the shipment bin 42, a container such as a shipment cardboard for an orderer may be prepared in advance. The terminal of the operator 60 is notified of the loading position 43A to 43D of the empty shipment bin 42 used for the order.

The device control unit 513 selects the transportation robot 30 available for transportation of the specified storage bin 20 (step S2). For example, the transportation robot 30 whose physical movement distance to the specified storage bin 20 is the shortest is selected. Note that, in addition to or instead of the physical movement distance, the transportation robot 30 located on the same floor 11 as the floor 11 on which the specified storage bin 20 is arranged may be selected. Next, the device control unit 513 generates the robot route R1 which is a movement route from the section 13 in which the selected transportation robot 30 is currently located to the section 13 of the specified storage bin 20, and the bin route R2 which is a movement route from the section 13 of the specified storage bin 20 to one of the picking positions 41A to 41D of the picking station 40 (step S3). The device control unit 513 transmits a transportation instruction to the selected transportation robot 30 based on the generated robot route R1 and bin route R2 (step S4).

The transportation robot 30 which has received the transportation instruction moves to the specified section 13 according to the generated robot route R1. The transportation robot 30 can transmit a use request to the transportation elevator 16 to use the transportation elevator 16. The transportation robot 30 which has moved to the specified section 13 enters the space below the bottom surface 21c of the storage bin 20 according to the first configuration, and stops at the center of the section 13. The transportation robot 30 changes the configuration from the first configuration to the second configuration in response to driving of the lifting mechanism 334. Thus, the upper surface of the housing 31 of the transportation robot 30 lifts the storage bin 20, so that the transportation robot 30 holds the storage bin 20. Next, the transportation robot 30 moves to the specified picking positions 41A to 41D according to the generated bin route R2 while employing the second configuration. This movement may include movement performed by the transportation elevator 16.

The transportation robot 30 which has arrived at the specified picking positions 41A to 41D changes the configuration from the second configuration to the first configuration. The transportation robot 30 stays at this position until picking work of the item 23 is completed. This arrival of the transportation robot 30 is indirectly notified to the terminal of the operator 60 via, for example, the management server 50, or is directly notified to the terminal of the operator 60. This notification may be, for example, an indication on a display of the terminal, may be a notification using a voice, or may be a notification using projection mapping. Thus, the operator 60 picks the ordered item 23 from the storage bin 20 to load in the target shipment bin 42. When loading of the item 23 is completed, the operator 60 notifies the management server 50 of completion of loading via the terminal. The device control unit 513 which has received the notification transmits to the transportation robot 30 a transportation instruction for returning the storage bin 20 to the original section 13 in which the storage bin 20 has been arranged, based on the generated bin route R2 (step S5).

The transportation robot 30 which has received the transportation instruction changes the configuration from the first configuration to the second configuration, and lifts the storage bin 20. The transportation robot 30 transports the storage bin 20 to the original section 13 according to the bin route R2 while employing the second configuration. The transportation robot 30 which has arrived at the original section 13 changes the configuration from the second configuration to the first configuration. Thus, the storage bin 20 is returned to the original section 13. The transportation robot 30 notifies the management server 50 of that the storage bin 20 has been returned. The device control unit 513 which has received the notification completes the delivery processing of the item 23 (step S6). The device control unit 513 executes delivery processing of all of the items 23 listed in the order line specified by the order. This delivery processing of the plurality of items 23 is preferably executed simultaneously in parallel.

When loading of all of the items 23 listed in the order line is completed, the operator 60 notifies the management server 50 of completion of loading via the terminal. The device control unit 513 which has received the notification transmits a transportation instruction to the transportation robot 30 transporting the shipment bin 42 based on the movement route R3 (hereinafter referred to as a "shipping route") to the shipping station (not illustrated) provided in the rack 10 (step S7). The transportation robot 30 which has received the transportation instruction changes the configuration from the first configuration to the second configuration to lift the storage bin 20. The transportation robot 30 transports the shipment bin 42 to a destination shipping station according to the bin route R2 while employing the second configuration. When completing transportation of the shipment bin 42 to the shipping station, the transportation robot 30 notifies the management server 50 of the completion. The device control unit 513 which has received the notification completes the order processing (step S8).

According to the above automated storage and retrieval system 1, the storage bin 20 containing the item 23 specified by the order can be transported by the transportation robot 30 from the section 13 of the floor 11 of the rack 10 to the picking station 40. Mechanisms such as conveyers and operators which transport storage bins from a rack to a picking station and which are required in a conventional system are not required. Furthermore, the plurality of storage bins 20 is aligned at the plurality of picking positions 41A to 41D of the picking station 40. Consequently, the operator 60 can execute work of simultaneously picking the item 23 from each of the plurality of these storage bins 20. Efficiency of the picking work of the item 23 substantially improves. Furthermore, the storage bin 20 from which the item 23 has been picked is returned to the rack 10, so that it is possible to replace the storage bins 20 aligned at the picking positions 41A to 41D. This also contributes to making the picking work efficient.

Furthermore, the picking station 40, that is, the picking positions 41A to 41D are defined along the edge of the floor 11 which continues from the surface of the floor 11 of the second floor of the rack 10, so that the transportation robot 30 which can run on the floor 11 can easily arrive at the picking positions 41A to 41D. Furthermore, the picking stations 40 can be provided at the edge of the surface of the floor 11 of the rack 10, so that it is possible to substantially improve the degree of freedom of arrangement of the picking stations 40. In a case where, for example, in place of the operator 60, a robot arm can perform picking work of the item 23, the picking stations 40 may be provided at the edge of the surface of the upper floor 11 of the rack 10. In this case, the robot arms which can work at the picking stations 40 provided on the upper floor 11 of the rack 10 may be incorporated in the automated storage and retrieval system 1.

Furthermore, while the storage bin 20 is received on the floor 11 by the four support legs 22, the transportation robot 30 can enter the space below the bottom surface 21c of the storage bin 20, and lift the storage bin 20. That is, the transportation robot 30, when not carrying the storage bin 20, can run not only on the movement route 15 of the transportation robot 30, but also in the storage area 14 of the storage bin 20. Consequently, the number of the transportation robots 30 required to the automated storage and retrieval system 1 can be significantly reduced, thereby decreasing a possibility of the collision between the transportation robots 30. Further, the degree of freedom of arrangement of the storage bins 20 on each floor 11 substantially improves. Furthermore, the above embodiment performs an operation of returning to the original section 13 the storage bin 20 to which the item 23 has been loaded. However, the storage bin 20 may be returned to the arbitrary section 13 of the arbitrary floor 11 other than the original section 13.

Furthermore, the outline of the transportation robot 30 in plan view is defined on an inner side of the outline of the storage bin 20 in plan view likewise. That is, the transportation robot 30 is formed smaller than the storage bin 20 in plan view. Consequently, at, for example, the picking positions 41A to 41D of the picking station 40, the storage bin 20 can be aligned close to the neighboring storage bin 20. That is, for example, the four storage bins 20 can be aligned close to each other in front of the operator 60. Similarly, the storage bins 20 are also aligned close to each other on the rack 10, so that an arrangement density of the storage bins 20 improves.

Hereinafter, a first modified example will be described. According to the above-described embodiment of the present disclosure, the automated storage and retrieval system 1 includes the plurality of picking stations 40, that is, for example, the two picking stations 40. In this regard, a scene is assumed that the two first and second picking stations 40 are used for order processing. For example, a case is assumed where the respectively different first item 23 and second item 23 are listed in an order line, the first item 23 is loaded at the first picking station 40, and the second item 23 is loaded at the second picking station 40. At the first picking station 40, the operator 60 loads the first item 23 to the empty shipment bin 42 from the first storage bin 20 arranged at the picking positions 41A to 41D of the second picking station 40. Note that the operator 60 at the first picking station 40 is notified of that loading work of only the first item 23 among the items 23 in the order line is necessary.

When loading is partially completed at the first picking station, the transportation robot 30 transports the shipment bin 42 from the first picking station 40 to the second picking station 40. Note that the operator 60 at the second picking station 40 is notified of that loading work of only the second item 23 among the items 23 in the order line is necessary. When the shipment bin 42 for which loading has been partially completed arrives at the second picking station 40, at the second picking station 40, the operator 60 loads the second item 23 from the another second storage bin 20 arranged at the picking positions 41A to 41D of the second picking station 40 to the shipment bin 42 for which loading has been partially completed. The shipment bin 42 for which loading has been completed is processed similar to the above-described embodiment.

According to this first modified example, in a case where, for example, the number of orders which need to be processed at the first picking station 40 is excessively large, that is, in a case where the first picking station 40 is in a state of an excessive load, the one order can be processed in a distributed manner by the plurality of picking stations 40. Furthermore, for example, a case is assumed where the first item 23 is a popular product for a client of an order as a result of a marketing campaign of this item 23, and the second item 23 is a personal item of this client. In this case, it is predicted that the storage bins 20 containing the first items 23 are continuously aligned at the first picking station 40, and the first picking station 40 falls into the state of the excessive load. In this case, the second item 23 which is the personal item is loaded at the second picking station 40, so that it is possible to efficiently process the order.

Another modified example provides a method for separately using the picking positions 41A to 41D and the loading positions 43A to 43D at the picking station 40 according to the items 23. Referring to FIG. 1-10 again, for example, the picking positions 41A and 41D do not directly face the operator 60 since the loading positions 43A and 43C are respectively arranged on the outer side in the y axis direction. Hence, in a case where the item 23 is a so-called large case product which is packaged in a unit of a plurality of identical products, the storage bin 20 containing the item 23 is preferably aligned at the picking position 41B or 41C taking easiness to pick the item 23 into account. This is realized when, for example, the device control unit 513 performs control to set the picking position 41B or 41C to a destination of the bin route R2 of the transportation robot 30.

According to another modified example, referring to FIG. 1-10, the picking positions 41A and 41B are relatively close to the loading positions 43A and 43B. On the other hand, the picking positions 41C and 41D are relatively close to the loading positions 43C and 43D. Hence, taking easiness of picking and loading into account, the item 23 picked from the storage bin 20 aligned at the picking positions 41A and 41B is preferably loaded to the shipment bin 42 aligned at the loading positions 43A and 43B. Similarly, the item 23 picked from the storage bin 20 aligned at the picking positions 41C and 41D is preferably loaded to the shipment bin 42 aligned at the loading positions 43C and 43D. This is realized when, for example, the device control unit 513 performs control to adjust the positions of the storage bin 20 and the shipment bin 42 at the picking station 40.

Similarly, after the item 23 is loaded to the shipment bin 42 aligned at the loading positions 43A and 43B, the item 23 to be loaded to the shipment bin 42 is next preferably picked from the storage bin 20 aligned at the picking position 41A or 41B. Furthermore, after the item 23 is loaded to the shipment bin 42 aligned at the loading positions 43C and 43D, the item 23 to be loaded to the shipment bin 42 is next preferably picked from the storage bin 20 aligned at the picking position 41C or 41D. This is realized when, for example, the device control unit 513 performs control to adjust the positions of the storage bin 20 and the shipment bin 42 at the picking station 40.

Although the rack 10 includes the floors 11 of the first floor to the ninth floor in the above-described embodiment, the number, sizes, and the like of the floors 11 may be appropriately changed according to sizes of the building 100, the storage bins 20, the shipment bins 42, the transportation robots 30, and the like as described above in the another modified example. Furthermore, in the above-described embodiment, the four picking positions 41A to 41D and the four loading positions 43A to 43D are defined. However, other numbers of the picking positions 41 and/or the loading positions 43 such as two, three, five, or six may be defined. Furthermore, the three or more picking positions 41 may directly face the operator 60.

This description discloses some embodiments of the subject matter of the present disclosure, and uses examples to enable the one of ordinary skilled in the art to carry out the embodiments of the subject matter of the present disclosure including manufacturing and using an arbitrary device and system and executing an arbitrary incorporated method. The patentable scope of the subject matter of the present disclosure is defined by the claims, and may include other examples achieved by the one of ordinary skilled in the art. These other examples intend to be within the claims in a case where the other examples include components which are not different from wordings of the claims, or in a case where the other examples include equivalent components including non-substantial differences from the wordings of the claims.

[Second invention] Hereinafter, an embodiment of the present disclosure will be described with reference to the accompanying drawings. In all drawings, identical reference numerals are used to refer to identical or similar components. The following embodiment does not intend to limit the invention recited in the claims. Examples and features of the disclosed principal will be described in this description, yet can be changed and modified without departing from the idea and the scope of the disclosed embodiment. Furthermore, specific features, structures, or characteristics can be combined by an arbitrary appropriate method in one or more embodiments. The following detailed description is taken into account only as exemplary description, and the true range and idea are intended to be indicated by the claims.

FIG. 2-1 is a perspective view schematically illustrating an external appearance of an automated storage and retrieval system 1 according to an embodiment of the present disclosure. The automated storage and retrieval system 1 is constructed in, for example, a building 100. The building 100 includes a floor surface 101 extending along a horizontal plane, a plurality of sidewalls 102 extending vertically stand from the floor surface 101, and a ceiling (not illustrated) supported by the plurality of sidewalls 102. For example, the four sidewalls 102 surrounding four sides, and the ceiling extending in parallel to the floor surface 101 establish an internal space between the floor surface 101, and the sidewalls 102 and the ceiling. The automated storage and retrieval system 1 is constructed in this internal space. Note that part of the sidewalls 102 are cut out for ease of description in FIG. 2-1. In the building 100, an x axis and a y axis extending in a direction perpendicular to each other on the horizontal plane, and a z axis extending in a vertical direction and is perpendicular to the x axis and the y axis are defined.

The automated storage and retrieval system 1 is an automated storage and retrieval system which can automate a series of work from warehousing and storage to delivery of items including products and the like based on centralized management. The automated storage and retrieval system 1 according to the present embodiment includes a rack 10 arranged on the floor surface 101, a plurality of storage bins 20 which is containers stored in the rack 10, a plurality of transportation robots 30 for transporting the storage bins 20, one or more picking stations 40 for picking items including products and the like contained in the storage bins 20, and a management server 50 for managing the series of work of the automated storage and retrieval system 1. At the picking station 40, a human operator 60 performs picking work of picking an item from the storage bin 20.

The rack 10 includes a plurality of floors 11, each of floors 11 defining a surface which extends in parallel to each other along each xy plane, and a plurality of support columns 12 supporting the plurality of floors 11. In the present embodiment, the floors 11 of a first floor to a ninth floor vertically standing in an x axis direction from the floor surface 101 are formed. A total height of the rack 10 from the floor surface 101 in the x axis direction can be set according to a height in the z axis direction of the ceiling of the building 100. Note that part of the floors 11 of the eighth floor and the ninth floor is omitted for ease of description in FIG. 2-1, and configurations of the floors 11 of the eighth floor and the ninth floor are configured similar to the floor 11 of the seventh floor.

FIG. 2-2 is a plan view schematically illustrating an example of a structure of the floor 11 of the rack 10 of the automated storage and retrieval system 1 according to the present embodiment. In the present embodiment, each floor 11 of the rack 10 defines a plurality of sections 13 aligned along the xy plane. The section 13 defines, for example, outlines of a square or a rectangle in plan view. In the present embodiment, the support columns 12 are respectively arranged at four corners of the one section 13. The one storage bin 20 occupies the one section 13. Similarly, the one transportation robot 30 occupies the one section 13. That is, an outline of the storage bin 20 and an outline of the transportation robot 30 are respectively arranged in the outline of the one section 13 in plan view. Furthermore, an interval between a pair of the mutually neighboring support columns 12, 12 is set larger than widths of the transportation robot 30 and the storage bin 20 defined in an x axis direction and a y axis direction.

Each floor 11 defines storage areas 14 including the sections 13 in which the storage bins 20 are aligned, and movement routes 15 of the transportation robots 30 including the sections 13 other than the storage areas 14. In the present embodiment, for example, two rows of bin groups of the plurality of storage bins 20 aligned along the y axis direction are aligned in the x axis direction in the storage area 14. That is, all of the storage bins 20 which make up the bin group of these two rows of the storage bins 20 face the movement routes 15 at all times. On the other hand, the transportation robots 30 can run on the movement routes 15. As described later, the transportation robot 30 can also run in the storage area 14, through a space below a bottom surface of the storage bin 20.

FIG. 2-3 is a perspective schematically illustrating an example of a structure of the rack 10 of the automated storage and retrieval system 1 according to the embodiment. Referring to FIGS. 2-1 to 2-3, the rack 10 includes one or more transportation elevators 16. The transportation elevators 16 can make reciprocating movement in the z axis direction from the first floor to the ninth floor of the floors 11, and stop each floor 11. Each transportation elevator 16 is arranged in one section in the movement route 15 of the transportation robot 30 on each floor 11. In the present embodiment, the plurality of transportation elevators 16 may be provided to the rack 10. The transportation elevator 16 can have only the transportation robot 30 get thereon or have the transportation robot 30 holding the storage bin 20 get thereon to transport to each floor of the first floor to the ninth floor.

The transportation elevator 16 includes, for example, shafts of four corners attached to the rack 10 and extend in the z axis direction, four roller chains attached to the respective shafts, and extend in the z axis direction, four sprockets meshing with the respective chains, and two electric motors (both of which are not illustrated) for respectively rotating and driving, for example, the two sprockets. The sprockets mesh with the roller chains in response to rotation of the sprockets caused by the electric motors to ascend and descend the transportation elevator 16. Note that the support columns 12 making up the rack 10 may be used in place of the shafts. The above mechanism is a mere example, and an arbitrary another mechanism realizing vertical movement of the transportation elevator 16 may be used.

FIG. 2-4 schematically illustrates an example of the structure of the storage bin 20 of the automated storage and retrieval system 1 according to the embodiment. In the present embodiment, the storage bin 20 includes a bin main body 21 defining an internal space of, for example, a cuboid, and four support legs 22 extending downward from four corners of a bottom surface of the bin main body 21. The bin main body 21 includes four sidewalls 21a surrounding four sides, an opening part 21b opened along upper ends of the sidewalls 21a, and a bottom surface 21c which is closed along lower ends of the sidewalls 21a. Although the opening part 21b is opened in the present embodiment, the opening part 21b may be closed with, for example, a lid or a cover. The sidewalls 21a extend in parallel to, for example, the z axis. Furthermore, the bottom surface 21c expands along the xy plane. The storage bin 20 is recieved on the floor 11 by the four support legs 22. The storage bin 20 may be formed by, for example, a resin material. Furthermore, the storage bin 20 may be a foldable bin. A size of the storage bin 20 is preferably set appropriately based on a size of the rack 10 or each floor 11 or a size of an item 23.

The one or more items 23 are contained in the internal space in the bin main body 21. The item 23 can be identified by, for example, a unique Stock Keeping Unit (SKU) set to the item 23. Although the item 23 is, for example, one unit of a product or the like, the item 23 may be a so-called case product which is packaged in a unit of a plurality of identical products. Furthermore, the one storage bin 20 may contain only the items 23 of one type, or may contain the items 23 of a plurality of types. The storage bin 20 can be identified based on a unique ID set to each storage bin 20. The unique ID of this storage bin 20 is managed in correspondence with the SKU of the item 23 contained in the storage bin 20 .

FIG. 2-5 is a perspective view schematically illustrating an external appearance of the transportation robot 30 of the automated storage and retrieval system 1 according to the embodiment. In the present embodiment, a plurality of the transportation robots 30 is arranged on each floor 11 of the rack 10. The transportation robot 30 is, for example, an autonomous running transportation robot including a thin housing 31 of a substantially cuboid shape. The housing 31 is formed by, for example, a resin material. The transportation robot 30 can run along a line 17 (see, for example, FIG. 2-2) by tracing the line 17 drawn on the floor 11 of the rack 10 (line tracing function). The line 17 is two strips of lines. The two strips of lines extend passing center positions of the x axis direction and the y axis direction in, for example, each section 13, and are perpendicular to each other at a center of the section 13. These lines 17 are drawn in all of the sections 13 including the storage areas 14, the movement routes 15, and the transportation elevators 16 of the floor 11.

An upper surface of the housing 31 of the transportation robot 30 extends flat along the xy plane. A height of the transportation robot 30 is set smaller than the height of the support leg 22 of the storage bin 20. Furthermore, an outline of the housing 31 in top view is defined substantially as, for example, a square. Similarly, the length of one side of the transportation robot 30 is set smaller than the length of each side of the storage bin 20. That is, the transportation robot 30 can enter the space below the bin main body 21 from between the pair of mutually neighboring support legs 22 of the storage bin 20. In this regard, the size of the transportation robot 30 is preferably set appropriately based on sizes of the rack 10, each floor 11, and the storage bin 20.

The transportation robot 30 can change the height thereof between a first configuration where the height of the upper surface of the housing 31 is set to a first height, and a second configuration where the height is set to a second height higher than the first height. As described above, the transportation robot 30 of the first configuration can enter the space below the bin main body 21 from between the pair of mutually neighboring support legs 22 of the storage bin 20. In this case, when the transportation robot 30 changes the height of the housing 31 from the first configuration to the second configuration, the transportation robot 30 holds the storage bin 20 on the upper surface of the housing 31 as illustrated in FIG. 2-6. As a result, the storage bin 20 can be lifted from the floor 11. The transportation robot 30 can run in both of the first configuration and the second configuration. That is, the transportation robot 30 can run on the floor 11 while lifting the storage bin 20.

Back to FIG. 2-1, in the present embodiment, the picking station 40 is provided along, for example, an edge of the floor 11 which continues from the surface of the floor 11 of the rack 10. That is, the picking station 40 is provided in, for example, the rack 10. In the present embodiment, for example, the two picking stations 40 are provided on the floor 11 of the second floor of the rack 10. The picking station 40 is a station for picking the item 23 from the storage bin 20 transported by the transportation robot 30 from the rack 10. The operator 60 can execute picking work (delivery work) taking a standing posture on, for example, the surface of the floor 11 of the first floor. Note that details of a configuration of the picking station 40 will be described later.

The management server 50 manages all of the rack 10, the storage bins 20, the transportation robots 30, the transportation elevators 16, and the picking stations 40 for warehousing, storage, and delivery of the automated storage and retrieval system 1. This management is realized when a program stored in a storage unit is executed by a control unit as described later. More specifically, operations and processing of the transportation robots 30, the transportation elevators 16, and the picking stations 40 are executed according to information processing described in the program. That is, the information processing described in the program functions as specific means collaborated by software in correspondence with the program, and various hardware resources of the automated storage and retrieval system 1 when the program is read by the control unit.

FIG. 2-7 is a functional block diagram schematically illustrating a configuration of the management server 50. As illustrated in FIG. 2-7, the management server 50 includes a control unit 51 and a storage unit 52. The control unit 51 includes a communication control unit 511, a stock management unit 512, and a device control unit 513. On the other hand, the storage unit 52 stores a program 521, rack information 522, item information 523, bin information 524, and device information 525. The control unit 51 manages the automated storage and retrieval system 1 by executing the program 521 stored in the storage unit 52. This management server 50 may be realized on a physical server, yet may be realized on, for example, a cloud server.

The communication control unit 511 controls communication between the management server 50 and at least the transportation robot 30 and a terminal of the operator 60 at the picking station 40. A communication method may be, for example, Wi-Fi (registered trademark), Ethernet (registered trademark), light or the like. The stock management unit 512 manages a stock status of the automated storage and retrieval system 1. More specifically, the stock management unit 512 associates and manages information (SKU) for identifying each item 23, information related to the number of stocks of each item 23 specified based on the SKU, information (ID) for identifying the storage bin 20 in which the item 23 is contained, and information related to a position of the section 13 of the floor 11 in which the storage bin 20 is stored. Each of these pieces of information is stored as the rack information 522, the item information 523, and the bin information 524 in the storage unit 52.

The device control unit 513 manages and controls at least states and operations of the transportation robots 30 and the picking stations 40. More specifically, the device control unit 513 associates and manages information for identifying the transportation robot 30, information related to a current state of the transportation robot 30, i.e., a charging state of the transportation robot 30, information related to whether or not the transportation robot 30 engages in transportation, information related to order processing in which the transportation robot 30 engages in a case where the transportation robot 30 engages in the transportation, and information related to a current position of the transportation robot 30 at the floor 11 of the rack 10 or the picking station 40. The information related to the order processing includes, for example, information related to transportation of which item 23 of the order processing the transportation robot 30 engages in. Each of these pieces of information is stored as the device information 525 in the storage unit 52. Furthermore, the device control unit 513 associates and manages information for identifying the picking station 40, and information related to an order for which picking work is executed at the picking station 40. Each of these pieces of information is stored as the device information 525 in the storage unit 52.

Furthermore, the device control unit 513 generates commands for the transportation robot 30 and the transportation elevator 16 per order processed by the automated storage and retrieval system 1. More specifically, the device control unit 513 specifies the storage bin 20 for containing the item 23 designated by the order based on each of the above pieces of information, and specifies the transportation robot 30 which needs to be assigned to transport the storage bin 20. The device control unit 513 specifies a movement route R1 (referred to as a "robot route" below) of the transportation robot 30 to the section 13 in which the storage bin 20 is stored, and a movement route R2 (referred to as a "bin route" below) of the transportation robot 30 from the section 13 to the picking station 40 which is a destination. These pieces of generated information are transmitted as commands to the transportation robot 30 via the communication control unit 511.

FIG. 2-8 is a functional block diagram schematically illustrating a configuration of the transportation robot 30. As illustrated in FIG. 2-8, the transportation robot 30 includes a control unit 32 and a mechanism unit 33. The control unit 32 includes a communication control unit 321, a running control unit 322, and a lifting control unit 323. The mechanism unit 33 includes a communication unit 331, a plurality of driving wheels 332, a plurality of driving motors 333, a lifting mechanism 334, a sensor 335, and a battery 336. The control unit 32 controls an operation of the transportation robot 30 by executing a program (not illustrated) stored in the storage unit (not illustrated). The program may be stored in a physical storage unit incorporated in the transportation robot 30, yet may be stored on, for example, a cloud server.

The communication unit 331 establishes communication between at least the management server 50, the transportation elevator 16, and the terminal of the operator 60 at the picking station 40. A communication method may be, for example, Wi-Fi (registered trademark), Ethernet (registered trademark), optic or the like. Communication performed by the communication unit 331 is controlled by the communication control unit 321. The driving wheel 332 is a wheel for realizing running of the transportation robot 30. The plurality of driving motors 333 drives the driving wheels 332 and the lifting mechanism 334. Driving of the driving wheels 332 is controlled by the running control unit 322. The lifting mechanism 334 establishes the above-described first configuration and second configuration by lifting the housing 31 of the transportation robot 30. An operation of this lifting mechanism 334 is controlled by the lifting control unit 323.

The sensor 335 is, for example, an optical sensor for realizing the above-described line tracing function. More specifically, the sensor 335 is used to control running of the transportation robot 30 along the line 17 by reading a boundary of the line 17 drawn on each section 13. Furthermore, although the two strips of the lines 17 and 17 cross at the center of each section 13, the sensor 335 reads the line 17 perpendicular to the line 17 along which the transportation robot 30 is running, so that the transportation robot 30 can specify the center position of each section 13. Thus, the transportation robot 30 can stop at, for example, the center position of each section 13. The battery 336 is, for example, a rechargeable battery. On each floor 11 of the rack 10, one or more charging spots (not illustrated) which enable charging of the battery 336 of the transportation robot 30 may be formed.

FIG. 2-9 is a side view of the rack 10 schematically illustrating an example of the configuration of the picking station 40 of the automated storage and retrieval system 1 according to the embodiment. FIG. 2-10 is a plan view of the rack 10 schematically illustrating the example of the configuration of the picking station 40 of the automated storage and retrieval system 1 according to the embodiment. As illustrated in FIG. 2-9, the picking station 40 is established along the edge of the floor 11 which continues from the surface of the floor 11 of the second floor of the rack 10. More specifically, the picking station 40 is formed on the surface of the floor 11 of the second floor which extends in, for example, the y axis direction toward an outer side of an outer edge of the floors 11 of the third floor to the ninth floor. In the present embodiment, similar to the floor 11 of the second floor, the floor 11 of the first floor also extends toward the outer side of the outer edges of the floors 11 of the third floor to the ninth floor. The operator 60 stands on the surface of the floor 11 of the first floor, and does work of picking the item 23 from the storage bin 20. The height of the surface of the floor 11 of the second floor is suitable for the operator 60 whose height is, for example, 165 cm which is an average height of adults to do the work.

As illustrated in FIG. 2-10, the picking station 40 defines a plurality of picking positions 41A to 41D at which the storage bins 20 used for picking work of the item 23 are arranged on the floor 11 of the second floor. In the present embodiment, the four picking positions 41A to 41D are aligned adjacent to each other in the x axis direction along the edge of the rack 10. Each of the picking positions 41A to 41D occupies the one section 13 of the floor 11. The picking positions 41A to 41D are aligned in front of the operator 60 facing the rack 10, and the picking positions 41B and 41C of the picking positions 41A to 41D directly face the operator 60. As is clear from FIG. 2-9, no floor 11 is arranged in a space above the picking positions 41A to 41D in the z axis direction.

On the floor 11 of the second floor, for example, the two sections 13 extend toward the outer side in the y axis direction from the picking positions 41A and 41D. These four sections 13 in total define loading positions 43A to 43D at which the items 23 are loaded to shipment bins 42 which need to be shipped to clients of orders. Each of the loading positions 43A to 43D occupies the one section 13 of the floor 11. The shipment bin 42 employs the same configuration as that of the storage bin 20. According to the present embodiment, all of the loading positions 43A to 43D are aligned to a side of the operator 60 who faces the rack 10, and directly face the operator 60. Thus, as is apparent from FIG. 2-10, the four picking positions 41A to 41D and the four loading positions 43A to 43D are aligned surrounding the operator 60 on the floor 11 of the second floor.

Furthermore, the sections 13 further surrounding the four picking positions 41A to 41D and the four loading positions 43A to 43D define the movement route 15 of the transportation robot 30 on the floor 11 of the second floor. Although FIG. 2-10 omits illustration of the lines 17 for ease of description, the lines 17 are drawn in all of the sections 13 in which the four picking positions 41A to 41D and the four loading positions 43A to 43D, and the movement routes 15 are formed. Thus, as indicated by arrows in FIG. 2-10, the transportation robot 30 can enter the four picking positions 41A to 41D and the four loading positions 43A to 43D from the movement routes 15. Note that the storage bin 20 is not arranged in the sections 13 which form the movement routes 15. Thus, the transportation robot 30 can transport the storage bin 20 between the storage area 14 of the rack 10 and the four picking positions 41A to 41D. On the other hand, the transportation robot 30 can transport the shipment bin 42 on which the item 23 has been loaded, to, for example, a shipping station (not illustrated) established in the rack 10.

Although the storage bins 20 are aligned on each floor 11 of the rack 10 as is apparent from FIG. 2-9, the storage bins 20 containing the items 23 of higher inventory turnover ratios are preferably aligned on the lower floors 11. In other words, the storage bins 20 containing the items 23 of lower inventory turnover ratios are preferably aligned in the upper floors 11. In the present embodiment, the picking stations 40 are established on the floor 11 of the second floor, and therefore the items 23 of lower inventory turnover ratios are stored on the upper floors 11 for which physical movement distances of the transportation robots 30 from the second floor are assumed to be long. Similarly, the items 23 of higher inventory turnover ratios are stored on the floors 11 which are close to the second floor and to which physical movement distances are assumed to be short, or the second floor for which the transportation elevator 16 does not need to be used.

Hereinafter, delivery processing of the automated storage and retrieval system 1 according to the embodiment of the present disclosure will be described. FIG. 2-11is a flowchart for explaining processing of the control unit 51 of the management server 50 of the automated storage and retrieval system 1 according to the embodiment. The operator 60 starts the delivery processing by using the terminal (not illustrated). The delivery processing starts from a time when, for example, the terminal specifies an order. The specified order includes an order line including at least SKUs and the number of the ordered items 23. The order line is displayed on a display screen of the terminal of the operator 60. Note that the terminal of the operator 60 is preferably electronic device terminals including, but not limited to, a personal computer, a smartphone, a tablet terminal, and a touch panel type display.

When the delivery processing is started, the device control unit 513 specifies the storage bin 20 containing each item 23 specified by the order line (step S1). More specifically, the position of the section 13 of the floor 11 storing the storage bin 20 is specified. Specifying the positions is executed for all of the items 23 specified by the order line. On the other hand, the empty shipment bin 42 used for the specified order is arranged at one of the loading positions 43A to 43D. For this arrangement, the transportation robot 30 may be used. Furthermore, as the shipment bin 42, a container such as a shipment cardboard for an orderer may be prepared in advance. The terminal of the operator 60 is notified of the loading position 43A to 43D of the empty shipment bin 42 used for the order.

The device control unit 513 selects the transportation robot 30 available for transportation of the specified storage bin 20 (step S2). For example, the transportation robot 30 whose physical movement distance to the specified storage bin 20 is the shortest is selected. Note that, in addition to or instead of the physical movement distance, the transportation robot 30 located on the same floor 11 as the floor 11 on which the specified storage bin 20 is arranged may be selected. Next, the device control unit 513 generates the robot route R1 which is a movement route from the section 13 in which the selected transportation robot 30 is currently located to the section 13 of the specified storage bin 20, and the bin route R2 which is a movement route from the section 13 of the specified storage bin 20 to one of the picking positions 41A to 41D of the picking station 40 (step S3). The device control unit 513 transmits a transportation instruction to the selected transportation robot 30 based on the generated robot route R1 and bin route R2 (step S4).

The transportation robot 30 which has received the transportation instruction moves to the specified section 13 according to the generated robot route R1. The transportation robot 30 can transmit a use request to the transportation elevator 16 to use the transportation elevator 16. The transportation robot 30 which has moved to the specified section 13 enters the space below the bottom surface 21c of the storage bin 20 according to the first configuration, and stops at the center of the section 13. The transportation robot 30 changes the configuration from the first configuration to the second configuration in response to driving of the lifting mechanism 334. Thus, the upper surface of the housing 31 of the transportation robot 30 lifts the storage bin 20, so that the transportation robot 30 holds the storage bin 20. Next, the transportation robot 30 moves to the specified picking positions 41A to 41D according to the generated bin route R2 while employing the second configuration. This movement may include movement performed by the transportation elevator 16.

The transportation robot 30 which has arrived at the specified picking positions 41A to 41D changes the configuration from the second configuration to the first configuration. The transportation robot 30 stays at this position until picking work of the item 23 is completed. This arrival of the transportation robot 30 is indirectly notified to the terminal of the operator 60 via, for example, the management server 50, or is directly notified to the terminal of the operator 60. This notification may be, for example, an indication on a display of the terminal, may be a notification using a voice, or may be a notification using projection mapping. Thus, the operator 60 picks the ordered item 23 from the storage bin 20 to load in the target shipment bin 42. When loading of the item 23 is completed, the operator 60 notifies the management server 50 of completion of loading via the terminal. The device control unit 513 which has received the notification transmits to the transportation robot 30 a transportation instruction for returning the storage bin 20 to the original section 13 in which the storage bin 20 has been arranged, based on the generated bin route R2 (step S5).

The transportation robot 30 which has received the transportation instruction changes the configuration from the first configuration to the second configuration, and lifts the storage bin 20. The transportation robot 30 transports the storage bin 20 to the original section 13 according to the bin route R2 while employing the second configuration. The transportation robot 30 which has arrived at the original section 13 changes the configuration from the second configuration to the first configuration. Thus, the storage bin 20 is returned to the original section 13. The transportation robot 30 notifies the management server 50 of that the storage bin 20 has been returned. The device control unit 513 which has received the notification completes the delivery processing of the item 23 (step S6). The device control unit 513 executes delivery processing of all of the items 23 listed in the order line specified by the order. This delivery processing of the plurality of items 23 is preferably executed simultaneously in parallel.

When loading of all of the items 23 listed in the order line is completed, the operator 60 notifies the management server 50 of completion of loading via the terminal. The device control unit 513 which has received the notification transmits a transportation instruction to the transportation robot 30 transporting the shipment bin 42 based on the movement route R3 (hereinafter referred to as a "shipping route") to the shipping station (not illustrated) provided in the rack 10 (step S7). The transportation robot 30 which has received the transportation instruction changes the configuration from the first configuration to the second configuration to lift the storage bin 20. The transportation robot 30 transports the shipment bin 42 to a destination shipping station according to the bin route R2 while employing the second configuration. When completing transportation of the shipment bin 42 to the shipping station, the transportation robot 30 notifies the management server 50 of the completion. The device control unit 513 which has received the notification completes the order processing (step S8).

According to the above automated storage and retrieval system 1, the storage bin 20 containing the item 23 specified by the order can be transported by the transportation robot 30 from the section 13 of the floor 11 of the rack 10 to the picking station 40. Mechanisms such as conveyers and operators which transport storage bins from a rack to a picking station and which are required in a conventional system are not required. Furthermore, the plurality of storage bins 20 is aligned at the plurality of picking positions 41A to 41D of the picking station 40. Consequently, the operator 60 can execute work of simultaneously picking the item 23 from each of the plurality of these storage bins 20. Efficiency of the picking work of the item 23 substantially improves. Furthermore, the storage bin 20 from which the item 23 has been picked is returned to the rack 10, so that it is possible to replace the storage bins 20 aligned at the picking positions 41A to 41D. This also contributes to making the picking work efficient.

Furthermore, the picking station 40, that is, the picking positions 41A to 41D are defined along the edge of the floor 11 which continues from the surface of the floor 11 of the second floor of the rack 10, so that the transportation robot 30 which can run on the floor 11 can easily arrive at the picking positions 41A to 41D. Furthermore, the picking stations 40 can be provided at the edge of the surface of the floor 11 of the rack 10, so that it is possible to substantially improve the degree of freedom of arrangement of the picking stations 40. In a case where, for example, in place of the operator 60, a robot arm can perform picking work of the item 23, the picking stations 40 may be provided at the edge of the surface of the upper floor 11 of the rack 10. In this case, the robot arms which can work at the picking stations 40 provided on the upper floor 11 of the rack 10 may be incorporated in the automated storage and retrieval system 1.

Furthermore, while the storage bin 20 is received on the floor 11 by the four support legs 22, the transportation robot 30 can enter the space below the bottom surface 21c of the storage bin 20, and lift the storage bin 20. That is, the transportation robot 30 can run not only on the movement route 15 of the transportation robot 30, but also in the storage area 14 of the storage bin 20. Consequently, the degree of freedom of arrangement of the storage bins 20 on each floor 11 substantially improves. Furthermore, the above embodiment performs an operation of returning to the original section 13 the storage bin 20 to which the item 23 has been loaded. However, the storage bin 20 may be returned to the arbitrary section 13 of the arbitrary floor 11 other than the original section 13.

Furthermore, the outline of the transportation robot 30 in plan view is defined on an inner side of the outline of the storage bin 20 in plan view likewise. That is, the transportation robot 30 is formed smaller than the storage bin 20 in plan view. Consequently, at, for example, the picking positions 41A to 41D of the picking station 40, the storage bin 20 can be aligned close to the neighboring storage bin 20. That is, for example, the four storage bins 20 can be aligned close to each other in front of the operator 60. Similarly, the storage bins 20 are also aligned close to each other on the rack 10, so that an arrangement density of the storage bins 20 improves.

FIG. 2-12 is a plan view of the rack 10 schematically illustrating an example of a configuration of a picking station 40A of the rack 10 of the automated storage and retrieval system 1 according to another embodiment of the present disclosure. This picking station 40A further defines one or more retracted positions 44A to 44F in addition to the picking positions 41A to 41D and the loading positions 43A to 43D of the above-described picking station 40. Each of the retracted positions 44A to 44F occupies the one section 13 of the floor 11. In the present embodiment, the six retracted positions 44A to 44F are defined on the floor 11 of the same second floor as the floor 11 on which the picking positions 41A to 41D and the loading positions 43A to 43D are defined. These retracted positions 44A to 44F are positions for temporarily retracting the storage bins 20 arranged at the picking positions 41A to 41D and/or the shipment bins 42 arranged at the loading positions 43A to 43D.

The six retracted positions 44A to 44F are defined on an inner side of the rack 10 in parallel to the picking positions 41A to 41D and across the sections 13 of the movement routes 15 in the y axis direction. In the y axis direction, the positions of the retracted positions 44B to 44E respectively match with the positions of the picking positions 41A to 41D. Similarly, in the y axis direction, the positions of the retracted positions 44A to 44F respectively match with the positions of the movement routes 15 of the transportation robots 30. The transportation robots 30 can enter the respective retracted positions 44A to 44F from the movement routes 15 adjacent to the retracted positions 44A to 44F in the y axis direction. That is, the transportation robots 30 can retract to the retracted positions 44A to 44F while holding the storage bins 20 arranged at the picking positions 41A to 41D and/or the shipment bins 42 arranged at the loading positions 43A to 43D.

A case is assumed at this picking station 40A where the item 23 stored in the storage bin 20 arranged at one of the picking positions 41A to 41D is picked for a first order, for example, is included in a second order different from the first order, and there is a certain period of time from processing of the first order to processing of the second order. In this case, the storage bin 20 for which picking work for the processing of the first order has been completed is transported and temporarily retracted by the transportation robot 30 from one of the picking positions 41A to 41D to one of the retracted positions 44A to 44F. The retracted storage bin 20 is returned again from the retracted positions 44A to 44F to the picking positions 41A to 41D at a time of the processing of the second order. Picking work of the item 23 is performed during the processing of the second order in this way.

Furthermore, a case is assumed where the storage bin 20 containing the item 23 which needs to be loaded to the shipment bin 42 arranged at one of the loading positions 43A to 43D is used at, for example, the another picking station 40A, and there is a certain period of time until the storage bin 20 arrives at this picking station 40A. In this case, the shipment bin 42 for which loading processing of the certain item 23 to the shipment bin 42 has been completed is transported and temporarily retracted by the transportation robot 30 from one of the loading positions 43A to 43D to one of the retracted positions 44A to 44F. The retracted shipment bin 42 is returned again from the retracted positions 44A to 44F to the loading positions 43A to 43D before or at the same time as that of arrival of the storage bin 20 of the desired item 23 at this picking station 40A. The loading work of the desired item 23 is performed in this way.

At the above picking station 40A, the storage bins 20 arranged at the picking positions 41A to 41D and/or the shipment bins 42 arranged at the loading positions 43A to 43D can be temporarily retracted to the retracted positions 44A to 44F. Consequently, it is possible to temporarily replace the storage bins 20 and the shipment bins 42 arranged at the picking positions 41A to 41D and the loading positions 43A to 43D if necessary, so that it is possible to efficiently use the picking positions 41A to 41D and the loading positions 43A to 43D. As a result, it is possible to substantially improve efficiency of the picking work and the loading work of the items 23. Note that the positions and the number of the retracted positions 44A to 44F may be appropriately changed according to the configuration of the picking station 40A. For example, retracted positions may be further defined on the floor 11 of the first floor or the third floor close to the floor 11 of the second floor at which the picking stations 40A are formed. Furthermore, the sections 13 which are two sections away from the loading positions 43A and 43B in the x axis direction toward a side opposite to the operator 60 may be further formed respectively, and the sections 13 may be defined at the retracted positions. Similarly, the sections 13 which are two sections away from the loading positions 43C and 43D in the x axis direction toward the side opposite to the operator 60 may be further formed respectively, and the sections may be defined as the retracted positions.

Hereinafter, a first modified example will be described. According to the above-described embodiment of the present disclosure, the automated storage and retrieval system 1 includes the plurality of picking stations 40 and 40, that is, for example, the two picking stations 40 and 40. In this regard, a scene is assumed that the two first and second picking stations 40 are used for order processing. For example, a case is assumed where the respectively different first item 23 and second item 23 are listed in an order line, the first item 23 is loaded at the first picking station 40, and the second item 23 is loaded at the second picking station 40. At the first picking station 40, the operator 60 loads the first item 23 to the empty shipment bin 42 from the first storage bin 20 arranged at the picking positions 41A to 41D of the second picking station 40.

Note that the operator 60 at the first picking station 40 is notified of that loading work of only the first item 23 among the items 23 in the order line is necessary.

When loading is partially completed at the first picking station, the transportation robot 30 transports the shipment bin 42 from the first picking station 40 to the second picking station 40. Note that the operator 60 at the second picking station 40 is notified of that loading work of only the second item 23 among the items 23 in the order line is necessary. When the shipment bin 42 for which loading has been partially completed arrives at the second picking station 40, at the second picking station 40, the operator 60 loads the second item 23 from the another second storage bin 20 arranged at the picking positions 41A to 41D of the second picking station 40 to the shipment bin 42 for which loading has been partially completed. The shipment bin 42 for which loading has been completed is processed similar to the above-described embodiment.

According to this first modified example, in a case where, for example, the number of orders which need to be processed at the first picking station 40 is excessively large, that is, in a case where the first picking station 40 is in a state of an excessive load, the one order can be processed in a distributed manner by the plurality of picking stations 40. Furthermore, for example, a case is assumed where the first item 23 is a popular product for a client of an order as a result of a marketing campaign of this item 23, and the second item 23 is a personal item of this client. In this case, it is predicted that the storage bins 20 containing the first items 23 are continuously aligned at the first picking station 40, and the first picking station 40 falls into the state of the excessive load. In this case, the second item 23 which is the personal item is loaded at the second picking station 40, so that it is possible to efficiently process the order.

Another modified example provides a method for separately using the picking positions 41A to 41D and the loading positions 43A to 43D at the picking station 40 according to the items 23. Referring to FIG. 2-10 again, for example, the picking positions 41A and 41D do not directly face the operator 60 since the loading positions 43A and 43C are respectively arranged on the outer side in the y axis direction. Hence, in a case where the item 23 is a so-called large case product which is packaged in a unit of a plurality of identical products, the storage bin 20 containing the item 23 is preferably aligned at the picking position 41B or 41C taking easiness to pick the item 23 into account. This is realized when, for example, the device control unit 513 performs control to set the picking position 41B or 41C to a destination of the bin route R2 of the transportation robot 30.

According to another modified example, referring to FIG. 2-10, the picking positions 41A and 41B are relatively close to the loading positions 43A and 43B. On the other hand, the picking positions 41C and 41D are relatively close to the loading positions 43C and 43D. Hence, taking easiness of picking and loading into account, the item 23 picked from the storage bin 20 aligned at the picking positions 41A and 41B is preferably loaded to the shipment bin 42 aligned at the loading positions 43A and 43B. Similarly, the item 23 picked from the storage bin 20 aligned at the picking positions 41C and 41D is preferably loaded to the shipment bin 42 aligned at the loading positions 43C and 43D. This is realized when, for example, the device control unit 513 performs control to adjust the positions of the storage bin 20 and the shipment bin 42 at the picking station 40.

Similarly, after the item 23 is loaded to the shipment bin 42 aligned at the loading positions 43A and 43B, the item 23 to be loaded to the shipment bin 42 is next preferably picked from the storage bin 20 aligned at the picking position 41A or 41B. Furthermore, after the item 23 is loaded to the shipment bin 42 aligned at the loading positions 43C and 43D, the item 23 to be loaded to the shipment bin 42 is next preferably picked from the storage bin 20 aligned at the picking position 41C or 41D. This is realized when, for example, the device control unit 513 performs control to adjust the positions of the storage bin 20 and the shipment bin 42 at the picking station 40.

Although the rack 10 includes the floors 11 of the first floor to the ninth floor in the above-described embodiment, the number, sizes, and the like of the floors 11 may be appropriately changed according to sizes of the building 100, the storage bins 20, the shipment bins 42, the transportation robots 30, and the like as described above in the another modified example. Furthermore, in the above-described embodiment, the four picking positions 41A to 41D and the four loading positions 43A to 43D are defined. However, other numbers of the picking positions 41 and/or the loading positions 43 such as two, three, five, or six may be defined. Furthermore, the three or more picking positions 41 may directly face the operator 60.

This description discloses some embodiments of the subject matter of the present disclosure, and uses examples to enable the one of ordinary skilled in the art to carry out the embodiments of the subject matter of the present disclosure including manufacturing and using an arbitrary device and system and executing an arbitrary incorporated method. The patentable scope of the subject matter of the present disclosure is defined by the claims, and may include other examples achieved by the one of ordinary skilled in the art. These other examples intend to be within the claims in a case where the other examples include components which are not different from wordings of the claims, or in a case where the other examples include equivalent components including non-substantial differences from the wordings of the claims.

[Third invention] Hereinafter, an embodiment of the present disclosure will be described with reference to the accompanying drawings. In all drawings, identical reference numerals are used to refer to identical or similar components. The following embodiment does not intend to limit the disclosure recited in the claims. Examples and features of the disclosed principal will be described in this description, yet can be changed and modified without departing from the idea and the scope of the disclosed embodiment. Furthermore, specific features, structures, or characteristics can be combined by an arbitrary appropriate method in one or more embodiments. The following detailed description is taken into account only as exemplary description, and the true range and idea are intended to be indicated by the claims.

FIG. 3-1 is a perspective view schematically illustrating an external appearance of an automated storage and retrieval system 1 according to an embodiment of the present disclosure. The automated storage and retrieval system 1 is constructed in, for example, a building 100. The building 100 includes a floor surface 101 extending along a horizontal plane, a plurality of sidewalls 102 vertically standing from the floor surface 101, and a ceiling (not illustrated) supported by the plurality of sidewalls 102. For example, the four sidewalls 102 surrounding four sides, and the ceiling extending in parallel to the floor surface 101 establish an internal space between the floor surface 101, and the sidewalls 102 and the ceiling. The automated storage and retrieval system 1 is constructed in this internal space. Note that part of the sidewalls 102 are cut out for ease of description in FIG. 3-1. In the building 100, an x axis and a y axis extending in a direction perpendicular to each other on the horizontal plane, and a z axis extending in a vertical direction and perpendicular to the x axis and the y axis are defined.

The automated storage and retrieval system 1 is an automated storage and retrieval system which can automate a series of work from warehousing and storage to delivery of items including products and the like based on centralized management. The automated storage and retrieval system 1 according to the present embodiment includes a rack 10 arranged on the floor surface 101, a plurality of storage bins 20 which are containers stored in the rack 10, a plurality of transportation robots 30 for transporting the storage bins 20, one or more picking stations 40 for picking items including products and the like contained in the storage bins 20, and a management server 50 for managing the series of work of the automated storage and retrieval system 1. At the picking station 40, a human operator 60 performs picking work of picking an item from the storage bin 20.

The rack 10 includes a plurality of floors 11, each of floors 11 defining a surface which extends in parallel to each other along each xy plane, and a plurality of support columns 12 supporting the plurality of floors 11. In the present embodiment, the floors 11 of a first floor to a ninth floor vertically standing in an x axis direction from the floor surface 101 are formed. A total height of the rack 10 from the floor surface 101 in the x axis direction can be set according to a height in the z axis direction of the ceiling of the building 100. Note that part of the floors 11 of the eighth floor and the ninth floor is omitted in FIG. 3-1 for explanatory convenience, and configurations of the floors 11 of the eighth floor and the ninth floor are configured similar to the floor 11 of the seventh floor.

FIG. 3-2 is a top view schematically illustrating an example of a structure of the floor 11 of the rack 10 of the automated storage and retrieval system 1 according to the present embodiment. In the present embodiment, each floor 11 of the rack 10 defines a plurality of sections 13 which are aligned along the xy plane. The section 13 defines, for example, outlines of a square or a rectangle in plan view. In the present embodiment, the support columns 12 are respectively arranged at four corners of the one section 13. The one storage bin 20 occupies the one section 13. Similarly, the one transportation robot 30 occupies the one section 13. That is, an outline of the storage bin 20 and an outline of the transportation robot 30 are respectively arranged in the outline of the one section 13 in plan view. Furthermore, an interval between a pair of the mutually neighboring support columns 12 and 12 is set larger than widths of the transportation robot 30 and the storage bin 20 defined in the x axis direction and a y axis direction.

Each floor 11 defines storage areas 14 including the sections 13 in which the storage bins 20 are aligned, and movement passages 15 of the transportation robots 30 including the sections 13 other than the storage areas 14. In the illustrated example, for example, two rows of bin groups of the plurality of storage bins 20 aligned along the y axis direction are aligned in the x axis direction in the storage area 14. That is, all of the storage bins 20 making up the bin group of these two rows of the storage bins 20 face the movement passages 15 at all times. On the other hand, the transportation robots 30 can run on the movement passages 15. As described later, the transportation robot 30 can also run in the storage area 14, through a space below a bottom surface of the storage bin 20.

FIG. 3-3 is a perspective view schematically illustrating an example of a structure of the rack 10 of the automated storage and retrieval system 1 according to the embodiment. Referring to FIGS. 3-1 to 3-3 together, the rack 10 includes one or more transportation elevators 16. The transportation elevators 16 can make reciprocating movement in the z axis direction from the first floor to the ninth floor of the floors 11, and stop each floor 11. Each transportation elevator 16 is arranged in one section in the movement passage 15 of the transportation robot 30 on each floor 11. In the present embodiment, the plurality of transportation elevators 16 may be provided to the rack 10. The transportation elevator 16 can have only the transportation robot 30 get thereon or have the transportation robot 30 holding the storage bin 20 get thereon to move to each floor of the first floor to the ninth floor.

The transportation elevator 16 includes, for example, shafts of four corners attached to the rack 10 and extend in the z axis direction, four roller chains attached to the respective shafts, and extend in the z axis direction, four sprockets enmeshing with the respective chains, and two electric motors (both of which are not illustrated) for respectively rotating and driving, for example, the two sprockets. The sprockets enmesh with the roller chains in response to rotation of the sprockets caused by the power of electric motors to ascend and descend the transportation elevator 16. Note that the shafts may be formed by the support columns 12 of the rack 10. The above mechanism is a mere example, and an arbitrary another mechanism realizing vertical movement of the transportation elevator 16 may be used.

FIG. 3-4 schematically illustrates an example of the structure of the storage bin 20 of the automated storage and retrieval system 1 according to the embodiment. In the present embodiment, the storage bin 20 includes a bin main body 21 defining an internal space of, for example, a cuboid, and four support legs 22 extending downward from four corners of a bottom surface of the bin main body 21. The bin main body 21 includes four sidewalls 21a surrounding four sides, an opening part 21b opened along upper ends of the sidewalls 21a, and a bottom surface 21c closed along lower ends of the sidewalls 21a. Although the opening part 21b is opened in the present embodiment, the opening part 21b may be closed with, for example, a lid or a cover. The sidewalls 21a extend along the xz plane or the yz plane. Furthermore, the bottom surface 21c extends along the xy plane. The storage bin 20 is in contact with the floor 11 with the four support legs 22. The storage bin 20 may be formed by, for example, a resin material. Furthermore, the storage bin 20 may be a foldable bin. A size of the storage bin 20 is preferably set appropriately based on a size of the rack 10 or each floor 11 or a size of an item 23.

The one or more items 23 are contained in the internal space in the bin main body 21. The item 23 can be identified by, for example, a unique Stock Keeping Unit (SKU) set to the item 23. Although the item 23 is, for example, one unit of a product or the like, the item 23 may be a so-called case product packaged in a unit of a plurality of identical products. Furthermore, the one storage bin 20 may contain only the items 23 of one type, or may contain the items 23 of a plurality of types. The storage bin 20 can be identified based on a unique ID set to each storage bin 20. The unique ID of this storage bin 20 is managed in correspondence with the SKU of the item 23 contained in the storage bin 20.

FIG. 3-5 is a perspective view schematically illustrating an external appearance of the transportation robot 30 of the automated storage and retrieval system 1 according to the embodiment. In the present embodiment, a plurality of the transportation robots 30 is preferably arranged on each floor 11 of the rack 10. The transportation robot 30 is, for example, an autonomous running transportation robot including a thin housing 31 of a substantially cuboid shape. The housing 31 is formed by, for example, a resin material. The transportation robot 30 can run along a line 17 (see, for example, FIG. 3-2) by tracing the line 17 drawn on the floor 11 of the rack 10 (line tracing function). The line 17 is lines of two directions which extend passing center positions of the x axis direction and the y axis direction in, for example, each section 13, and are perpendicular to each other at a center of the section 13. These lines 17 are drawn in all of the sections 13 including the storage areas 14, the movement passages 15, and the transportation elevators 16 of the floor 11.

An upper surface of the housing 31 of the transportation robot 30 extends flat along the xy plane. A height of the transportation robot 30 is set smaller than the height of the support leg 22 of the storage bin 20. Furthermore, an outline of the housing 31 in top view is defined substantially as, for example, a square. Similarly, the length of one side of the transportation robot 30 is set smaller than the length of each side of the storage bin 20. That is, the transportation robot 30 can enter the space below the bin main body 21 from between the pair of mutually neighboring support legs 22 of the storage bin 20. In this regard, the size of the transportation robot 30 is preferably set appropriately based on sizes of the rack 10, each floor 11, and the storage bin 20.

The transportation robot 30 can change the height thereof between a first configuration where the height of the upper surface of the housing 31 is set to a first height, and a second configuration where the height is set to a second height higher than the first height. As described above, the transportation robot 30 of the first configuration can enter the space below the bin main body 21 from between the pair of mutually neighboring support legs 22 of the storage bin 20. In this case, when the transportation robot 30 changes the height of the housing 31 from the first configuration to the second configuration, the transportation robot 30 holds the storage bin 20 on the upper surface of the housing 31 as illustrated in FIG. 3-6. As a result, the storage bin 20 can be lifted from the floor 11. The transportation robot 30 can run in both of the first configuration and the second configuration. That is, the transportation robot 30 can run on the floor 11 while lifting the storage bin 20.

Back to FIG. 3-1, in the present embodiment, the picking stations 40 are established along, for example, the peripheral edge of the surface of the floor 11 of the rack 10. That is, the picking station 40 is established in, for example, the rack 10. In the present embodiment, for example, the two picking stations 40 are established on the floor 11 of the second floor of the rack 10. The picking station 40 is a station for picking the item 23 from the storage bin 20 transported by the transportation robot 30 from the rack 10. The operator 60 can execute picking work (delivery work) taking a standing posture on, for example, the surface of the floor 11 of the first floor. Note that details of a configuration of the picking station 40 will be described later.

The management server 50 manages all of the rack 10, the storage bins 20, the transportation robots 30, the transportation elevators 16, and the picking stations 40 for warehousing, storage, and delivery of the automated storage and retrieval system 1. This management is realized when a program stored in a storage unit is executed by a control unit as described later. More specifically, operations and processing of the transportation robots 30, the transportation elevators 16, and the picking stations 40 are executed according to information processing described in the program. That is, the information processing described in the program functions as specific means collaborated by software in correspondence with the program, and various hardware resources of the automated storage and retrieval system 1 when the program is read by the control unit.

FIG. 3-7 is a functional block diagram schematically illustrating a configuration of the management server 50. As illustrated in FIG. 3-7, the management server 50 includes a control unit 51 and a storage unit 52. The control unit 51 includes a communication control unit 511, a stock management unit 512, and a device control unit 513. On the other hand, the storage unit 52 stores a program 521, rack information 522, item information 523, bin information 524, and device information 525. The control unit 51 manages the automated storage and retrieval system 1 by executing the program 521 stored in the storage unit 52. This management server 50 may be realized on a physical server, yet may be realized on, for example, a cloud server.

The communication control unit 511 controls communication between the management server 50 and at least the transportation robot 30 and a terminal of the operator 60 at the picking station 40. A communication method may be, for example, Wi-Fi (registered trademark), Ethernet (registered trademark), optic or the like. The stock management unit 512 manages a stock status of the automated storage and retrieval system 1. More specifically, the stock management unit 512 associates and manages information (SKU) for identifying each item 23, information related to the number of stocks of each item 23 specified based on the SKU, information (ID) for identifying the storage bin 20 in which the item 23 is stored, and information related to a position of the section 13 of the floor 11 in which the storage bin 20 is stored. Each of these pieces of information is stored as the rack information 522, the item information 523, and the bin information 524 in the storage unit 52.

The device control unit 513 manages and controls at least states and operations of the transportation robots 30 and the picking stations 40. More specifically, the device control unit 513 associates and manages information for identifying the transportation robot 30, information related to a current state of the transportation robot 30, i.e., a charging state of the transportation robot 30, information related to whether or not the transportation robot 30 engages in transportation, information related to order processing in which the transportation robot 30 engages in a case where the transportation robot 30 engages in the transportation, and information related to a current position of the transportation robot 30 at the floor 11 of the rack 10 or the picking station 40. The information related to the order processing includes, for example, information related to transportation of which item 23 of the order processing the transportation robot 30 engages in. Each of these pieces of information is stored as the device information 525 in the storage unit 52. Furthermore, the device control unit 513 associates and manages information for identifying the picking station 40, and information related to an order for which picking work is executed at the picking station 40. Each of these pieces of information is stored as the device information 525 in the storage unit 52.

Furthermore, the device control unit 513 generates commands for the transportation robot 30 and the transportation elevator 16 per order processed by the automated storage and retrieval system 1. More specifically, the device control unit 513 specifies the storage bin 20 for containing the item 23 designated by the order based on each of the above pieces of information, and specifies the transportation robot 30 which needs to be assigned to transport the storage bin 20. The device control unit 513 specifies a movement route R1 (referred to as a "robot route" below) of the transportation robot 30 to the section 13 in which the storage bin 20 is stored, and a movement route R2 (referred to as a "bin route" below) of the transportation robot 30 from the section 13 to the picking station 40 which is a destination. These pieces of generated information are transmitted as commands to the transportation robot 30 via the communication control unit 511.

FIG. 3-8 is a functional block diagram schematically illustrating a configuration of the transportation robot 30. As illustrated in FIG. 3-8, the transportation robot 30 includes a control unit 32 and a mechanism unit 33. The control unit 32 includes a communication control unit 321, a running control unit 322, and a lifting control unit 323. The mechanism unit 33 includes a communication unit 331, a plurality of driving wheels 332, a plurality of driving motors 333, a lifting mechanism 334, a sensor 335, and a battery 336. The control unit 32 controls an operation of the transportation robot 30 by executing a program (not illustrated) stored in the storage unit (not illustrated). The program may be stored in a physical storage unit incorporated in the transportation robot 30, yet may be stored on, for example, a cloud server.

The communication unit 331 establishes communication between at least the management server 50, the transportation elevator 16, and the terminal of the operator 60 at the picking station 40. A communication method may be, for example, Wi-Fi (registered trademark), Ethernet (registered trademark), optic or the like. Communication performed by the communication unit 331 is controlled by the communication control unit 321. The driving wheel 332 is a wheel for realizing running of the transportation robot 30. The plurality of driving motors 333 drive the driving wheels 332 and the lifting mechanism 334. Driving of the driving wheels 332 is controlled by the running control unit 322. The lifting mechanism 334 establishes the above-described first configuration and second configuration by lifting the housing 31 of the transportation robot 30. An operation of this lifting mechanism 334 is controlled by the lifting control unit 323.

The sensor 335 is, for example, an optical sensor for realizing the above-described line tracing function. More specifically, the sensor 335 is used to control running of the transportation robot 30 along the line 17 by reading a boundary of the line 17 drawn on each section 13. Furthermore, although the two strips of the lines 17, 17 cross at the center of each section 13, the sensor unit 337 reads the line 17 perpendicular to the line 17 along which the transportation robot 30 is running, so that the transportation robot 30 can specify the center position of each section 13. Thus, the transportation robot 30 can stop at, for example, the center position of each section 13. The battery 336 is, for example, a rechargeable battery. On each floor 11 of the rack 10, one or more charging spots (not illustrated) which enable charging of the battery 336 of the transportation robot 30 may be formed.

FIG. 3-9 is a side view of the rack 10 schematically illustrating an example of the configuration of the picking station 40 of the automated storage and retrieval system 1 according to the embodiment. FIG. 3-10 is a plan view of the rack 10 schematically illustrating the example of the configuration of the picking station 40 of the automated storage and retrieval system 1 according to the embodiment. As illustrated in FIG. 3-9, the picking station 40 is established continuing to this floor 11 at the peripheral edge of the floor 11 of the second floor of the rack 10. More specifically, the picking station 40 is formed on the surface of the floor 11 of the second floor which extends in, for example, the y axis direction toward an outer side of an outer peripheral edge of the floors 11 of the third floor to the ninth floor. In the present embodiment, similar to the floor 11 of the second floor, the floor 11 of the first floor also extends toward the outer side of the outer peripheral edges of the floors 11 of the third floor to the ninth floor. The operator 60 stands on the surface of the floor 11 of the first floor, and does work of picking the item 23 from the storage bin 20. The height of the surface of the floor 11 of the second floor is suitable for the operator 60 whose height is, for example, 165 cm which is an average height of adults to do the work.

As illustrated in FIG. 3-10, the picking station 40 defines a plurality of picking positions 41A to 41D at which the storage bins 20 used for picking work of the item 23 are arranged on the floor 11 of the second floor. In the present embodiment, for example, the four picking positions 41A to 41D are aligned adjacent to each other in the x axis direction along the peripheral edge of the second floor 11 of the rack 10. Each of the picking positions 41A to 41D occupies the one section 13 of the floor 11. The picking positions 41A to 41D are aligned in front of the operator 60 facing the rack 10, and the picking positions 41B and 41C of the picking positions 41A to 41D directly face the operator 60. As is apparent from FIG. 3-9, the upper floors 11 do not extend to a space above the picking positions 41A to 41D in the z axis direction. In this regard, the upper floors 11 may extend to the space above the picking positions 41A to 41D in the z axis direction.

On the floor 11 of the second floor, for example, the two sections 13 extend toward the outer side in the y axis direction from the picking positions 41A and 41D. These four sections 13 in total define loading positions 43A to 43D at which the items 23 are loaded to shipment bins 42 which need to be shipped to clients of orders. Each of the loading positions 43A to 43D occupies the one section 13 of the floor 11. The shipment bin 42 employs the same configuration as that of the storage bin 20. According to the present embodiment, all of the loading positions 43A to 43D are aligned to a side of the operator 60 who faces the rack 10, and directly face the operator 60. Thus, as is clear from FIG. 3-10, the four picking positions 41A to 41D and the four loading positions 43A to 43D are aligned surrounding the operator 60 on the floor 11 of the second floor.

Furthermore, the sections 13 further surrounding the four picking positions 41A to 41D and the four loading positions 43A to 43D define the movement passage 15 of the transportation robot 30 on the floor 11 of the second floor. Although FIG. 3-10 omits illustration of the lines 17 for ease of description, the lines 17 are drawn in all of the sections 13 in which the four picking positions 41A to 41D and the four loading positions 43A to 43D, and the movement passages 15 are formed. Thus, as indicated by arrows in FIG. 3-10, the transportation robot 30 can enter the four picking positions 41A to 41D and the four loading positions 43A to 43D from the movement passages 15. Note that the storage bin 20 is not arranged in the sections 13 forming the movement passages 15. Thus, the transportation robot 30 can transport the storage bin 20 between the storage area 14 of the rack 10 and the four picking positions 41A to 41D. On the other hand, the transportation robot 30 can transport the shipment bin 42 on which the item 23 has been loaded, to, for example, a shipping station (not illustrated) established in the rack 10.

Although the storage bins 20 are aligned on each floor 11 of the rack 10 as is apparent from FIG. 3-9, the storage bins 20 for containing the items 23 of higher inventory turnover ratios are preferably aligned on the lower floors 11. In other words, the storage bins 20 for containing the items 23 of lower inventory turnover ratios are preferably aligned in the upper floors 11. In the present embodiment, the picking stations 40 are established on the floor 11 of the second floor, and therefore the items 23 of lower inventory turnover ratios are stored on the upper floors 11 for which physical movement distances of the transportation robots 30 from the second floor are assumed to be long. Similarly, the items 23 of higher inventory turnover ratios are stored on the floors 11 which are close to the second floor and to which physical movement distances are assumed to be short, or the second floor for which the transportation elevator 16 does not need to be used. Furthermore, the picking stations 40 are not limited to the picking stations provided adjacent to the floor 11 of the second floor. The picking stations 40 may be provided adjacent to the other floors 11 likewise according to installation environment such as a shape, a size, and the like of a warehouse in which the automated storage and retrieval system 1 is installed, or a control mode or the like of the automated storage and retrieval system 1. Furthermore, the automated storage and retrieval system 1 may be provided with the plurality of picking stations 40. Furthermore, the picking positions are not limited to the above-described four picking positions 41A to 41D, and the loading positions are not limited to the above-described four loading positions 43A to 43D.

Next, a configuration of the rack 10 will be specifically described. FIG. 3-11 is a perspective view illustrating a schematic configuration of a rack module 2 included in the rack 10. The rack 10 includes the plurality of rack modules 2, and is formed by connecting the plurality of rack modules 2. Furthermore, as described above, the rack 10 stores the plurality of storage bins 20, and includes the plurality of floors 11 allowing the transportation robots 30 to run along surfaces thereof. The rack module 2 includes a floor module 80 which is part of each floor 11, and a plurality of support column modules 70 supporting the floor module 80. A configuration of the rack module 2 will be specifically described below.

The rack module 2 is a minimum unit structure making up the rack 10, and the rack 10 is formed by the plurality of rack modules 2. More specifically, the rack 10 is formed by coupling the plurality of rack modules 2 in a horizontal direction and the vertical direction. The rack module 2 forms a zone space S in the rack 10. The zone space S is a space corresponding to the section 13 of the floor 11, and is a space between the neighboring sections 13 in the z direction (see FIG. 3-3). That is, each zone space S is a space in which the one storage bin 20 is stored, and is a minimum unit space making up the storage area 14, and each zone space S is a minimum unit space making up the movement passage 15. Note that, although part of components is shared between the neighboring rack modules 2, the shared components are also components of each rack module 2.

More specifically, as illustrated in FIG. 3-11, each rack module 2 includes part of the eight respective support column modules 70 and the floor module 80. FIGS. 3-12A and 3-12B are perspective views of the support column module 70, and FIGS. 3-13A to 3-13F are respectively a plan view, a right side view, a left side view, a top view, a bottom view, and a back view of the support column module 70. Furthermore, FIG. 3-14 is a perspective view of the floor module 80. Furthermore, FIG. 3-13G is an enlarged view of FIG. 3-13A.

As illustrated in FIGS. 3-12A, 3-12B, and 3-13A to 3-13F, the support column module 70 is a member having a columnar shape extending in an axial line a1 direction and having rigidity, and includes a main body 71, an insertion plug 72, and an accommodation plug 73. The main body 71 includes, for example, a base part 71a which is a bar-shaped part extending with the axis a1 arranged as the center axis or the substantial center axis, a plurality of rib parts 71b which is plate-like parts extending in the axis a1 direction, and a plurality of rib parts 71c which is plate-like parts extending in a direction perpendicular to the axis a1. The base part 71a, the plurality of rib parts 71b, and the plurality of rib parts 71c are integrally connected to form the support column module 70.

As illustrated in FIGS. 3-12A and 3-12B, the insertion plug 72 is connected to one end in the axis a1 direction of the main body 71 at which an insertion part 74 protruding toward one side of the axis a1 direction is formed. The insertion part 74, for example, includes four insertion protrusion parts 74a which are parts protruding in the axis a1 direction. The insertion protrusion parts 74a are arranged at equal intervals with the axis a1 arranged at the center, and for example, the two insertion protrusion parts 74a are respectively aligned in a direction perpendicular to the axis a1 to form two rows of the insertion protrusion parts 74a. These two rows face each other. Note that the number of the insertion protrusion parts 74a provided at the insertion plug 72 is not limited to four, and may be one or other plural numbers. The number of the insertion protrusion parts 74a provided at the insertion plug 72 is determined to match with, for example, the number of accommodation recess parts 75a of the accommodation plug 73 described below.

As illustrated in FIG. 3-13F, each insertion protrusion part 74a has, for example, a cylindrical shape extending along the axis a1, and, more specifically, has, for example, a square cylindrical shape whose corner edge is a curved surface having an arc-shaped cross section. Furthermore, claw parts 74c extending along the axis a1 are formed at a distal end 74b of each insertion protrusion part 74a. The claw part 74c has a shape which can engage with a corresponding part, and has, for example, a shape which can engage with a corresponding part by snap-fit. For example, the two claw parts 74c are provided at each insertion protrusion part 74a.

As illustrated in FIGS. 3-12A and 3-12B, the accommodation plug 73 is connected to an other end in the axis a1 direction of the main body 71, and the insertion plug 72 and the accommodation plug 73 of the support column module 70 oppose to each other in the axis a1 direction. The accommodation plug 73 includes an accommodation part 75, and the accommodation part 75 can accommodate the insertion part 74 of the insertion plug 72 of the support column module 70. More specifically, the accommodation part 75 includes the four accommodation recess parts 75a which can respectively accommodate the four insertion protrusion parts 74a of the insertion part 74 of the insertion plug 72. As illustrated in FIG. 3-13A, the accommodation recess part 75a has a shape matching the insertion protrusion part 74a, and is a recess part recessed toward the insertion plug 72 side in the axis a1 direction. Each accommodation recess part 75a can accommodate the corresponding insertion protrusion part 74a. Each accommodation recess part 75a may be able to accommodate the corresponding insertion protrusion part 74a by clearance fit, accommodate the corresponding insertion protrusion part 74a by stationary fit, or accommodate the corresponding insertion protrusion part 74a by transition fit. Note that the number of the accommodation recess parts 75a provided to the accommodation plug 73 is not limited to four, and may be one or other plural numbers. The number of the insertion protrusion parts 74a provided to the insertion plug 72 may be determined according to, for example, the number of the floor modules 80 supported by the support column module 70.

More specifically, the four accommodation recess parts 75a are arranged to meet the four insertion protrusion parts 74a of the insertion part 74, and are arranged at equal intervals with the axis a1 arranged at the center, and the two accommodation recess parts 75a are respectively aligned in a direction perpendicular to the axis a1 to form two rows of the accommodation recess parts 75a facing each other. Furthermore, each accommodation recess part 75 is a recess part defining a bottomed cylindrical surface extending along the axis a1, has a square cross-sectional outline perpendicular to the axis a1 as illustrated in, for example, FIGS. 3-12A, 3-13A, and 3-13G, and can accommodate the corresponding insertion protrusion part 74a by stationary fit. Furthermore, at a bottom part 75b of each accommodation recess part 75a, engagement recess parts 75c extending along the axis a1 are formed. Each engagement recess part 75c can accommodate the claw part 74c of the corresponding insertion protrusion part 74a, and can engage with the accommodated claw part 74c. Each engagement recess part 75c has, for example, a shape which can engage with the corresponding claw part 74c by snap-fit. Each accommodation recess part 75a is provided with, for example, the two engagement recess parts 75c.

Furthermore, as illustrated in, for example, FIGS. 3-12A, 3-13A, and 3-13G, the accommodation plug 73 is formed with a floor reception part 76 formed around the accommodation part 75. The floor reception part 76 is a part to support the floor module 80 in the axis a1 direction. The floor reception part 76 includes a flange part 76a forming a face (floor reception face 76b) extending along a plane perpendicular to the axis a1, and engagement protrusion parts 76c protruding from the flange part 76a to a side opposite to the main body 71 in the axis a1 direction. As illustrated in, for example, FIG. 3-13G, the floor reception face 76b extends in parallel to the plane perpendicular to the axis a1. The engagement protrusion part 76c has a shape which can engage with a corresponding part, and includes, for example, a claw part 76d having a shape which can engage with a corresponding part by snap-fit, and pins 76e which can be accommodated in corresponding parts. The floor reception part 76 is provided with, for example, the plurality of claw parts 76d, and is provided with the plurality of pins 76e.

The accommodation part 75 protrudes from the flange part 76a of the floor reception part 76 toward a side opposite to the main body 71 in the axis a1 direction. A height h1 (see FIGS. 3-13B to 3-13E) of the accommodation part 75 is a thickness t1 (see FIG. 3-14) of the floor module 80 or more. Note that the height h1 of the accommodation part 75 is a distance in the axis a1 direction between the floor reception face 76b of the flange part 76a and a distal end face 75d of the accommodation part 75. Note that the height h1 of the accommodation part 75 may be smaller than the thickness t1 of the floor module 80. As illustrated in FIGS. 3-12A and 3-13G, the accommodation part 75 includes plate-like inner wall parts 75e, and an outer wall part 75f surrounding these four inner wall parts 75e. These inner wall parts 75e and outer wall part 75f define the four accommodation recess parts 75a. The inner wall part 75e is, for example, a plate-like part extending in the direction perpendicular to the axis a1, and the outer wall part 75f is, for example, an annular cylindrical part around the axis a1. An outer circumferential surface 75g of the outer wall part 75f is a cylindrical surface, and has, for example, a square or substantial square outline in plan view as illustrated in FIG. 3-13G. Note that the shape of the outer circumferential surface 75g of the outer wall part 75f is not limited to a shape having the square outline in plan view, and may have a shape having an outline of another shape in plan view. For example, the shape of the outer circumferential surface 75g of the outer wall part 75f may be other polygons or circles in plan view, or may be a shape substantially having an outline of these shapes.

The main body 71, the insertion plug 72, and the accommodation plug 73 are parts of the support column module 70 which are integrally formed by the same material, and the main body 71, the insertion plug 72, and the accommodation plug 73 are integrally formed. A material of the support column module 70 is, for example, a resin. The material of the support column module 70 is not limited to the resin, and may be, for example, metal.

The support column module 70 employs the above-described configuration, and the two support column modules 70 are coupled to each other by accommodating and connecting the insertion plug 72 of the one support column module 70 in and to the accommodation plug 73 of the other support column module 70. Furthermore, at a time of this coupling, the claw parts 74c of each insertion protrusion part 74a of the insertion plug 72 of the one support column module 70 are accommodated in the corresponding engagement recess parts 75c of the corresponding accommodation recess part 75a of the accommodation plug 73 of the other support column module 70, and these claw parts 74c and engagement recess parts 75c are engaged by snap-fit. On the other hand, the two support column modules 70 coupled as described above are detached by pulling the insertion plug 72 of the one support column module 70 from the accommodation plug 73 of the other support column module 70.

The plurality of support column modules 70 are coupled in this way, so that the one support column 12 can be formed. When the support column modules 70 are coupled, each insertion protrusion part 74a fits to the corresponding accommodation recess part 75a, and the claw parts 74c and the engagement recess parts 75c engage with each other. Consequently, it is possible to increase coupling strength between these support column modules 70, and increase strength of the support column 12. On the other hand, as described above, it is possible to decouple the support column modules 70 of the support column 12.

The floor module 80 is a plate-like member corresponding to the one section 13 of the floor 11, and includes a surface 81 which is a face on which the section 13 is formed. The floor module 80 includes a plurality of corner portions. As described above, the section 13 defines, for example, the square or rectangular outline in plan view, and, similarly, as illustrated in FIG. 3-14, the floor module 80 defines, for example, a square or rectangular outline in plan view, and includes four corner portions 83a to 83d. The thickness t1 of the floor module 80 is a distance between the surface 81 and a back surface 82 which is a face opposing to the surface 81. The corner parts of the floor module 80 can be supported by the accommodation plugs 73 of the support column modules 70. For example, the floor module 80 has a structure in which the floor modules 80 the number of which is the same as the number of the corner portions included in the floor module 80 can be supported by the accommodation part 75 and the floor reception part 76 of the one accommodation plug 73. Note that the floor module 80 may have a structure in which the floor modules 80 the number of which is different from the number of corner portions included in the floor module 80 can be supported by the accommodation part 75 and the floor reception part 76 of the one accommodation plug 73.

Respectively at the four corner portions 83a to 83d of the floor module 80, cutout faces 84a to 84d are formed. Note that the corner portions 83a to 83d are aligned clockwise in order in plan view. The cutout faces 84a to 84d are each a part defining, at each of the corner portions 83a to 83d, a space recessed in an extension direction of the floor module 80, and is a face facing this space. The cutout faces 84a to 84d are each a face corresponding to part of the outer circumferential surface 75g of the outer wall part 75f of the accommodation part 75 of the support column module 70. For example, the cutout faces 84a to 84d are each a face which can come into contact with part of the outer circumferential surface 75g of the outer wall part 75f of the accommodation part 75, or a face facing a fixed or substantially fixed interval apart from each other.

More specifically, for example, the cutout face 84a is a face corresponding to a 1/4 or substantially 1/4 part of the outer circumferential surface 75g of the outer wall part 75f around the axis a1. The cutout face 84b is a face corresponding to another 1/4 or substantially 1/4 part of the outer circumferential surface 75g of the outer wall part 75f around the axis a1. The cutout face 84c is a face corresponding to another 1/4 or substantially 1/4 part of the outer circumferential surface 75g of the outer wall part 75f around the axis a1. The cutout face 84d is a face corresponding to another 1/4 or substantially 1/4 part of the outer circumferential surface 75g of the outer wall part 75f around the axis a1. Note that the 1/4 part of the outer circumferential surface 75g of the outer wall part 75f which each of the cutout faces 84a to 84d faces is aligned clockwise in order around the axis a1. Hence, when the four floor modules 80 are annularly aligned facing the same direction such that the surfaces 81 are coplanar, the cutout faces 84a to 84d of the four respective floor modules 80 form through-holes surrounding outer circumferential surfaces 75g of the accommodation parts 75. That is, the cutout face 84a of the one floor module 80, the cutout face 84b of the one floor module 80, the cutout face 84c of the one floor module 80, and the cutout face 84d of the one floor module 80 are annularly aligned in this order. Note that one cutout face may not be the face corresponding to the 1/4 or substantially 1/4 part of the outer circumferential surface 75g of the outer wall part 75f around the axis a1, and may be a face corresponding to a part of another size of the outer circumferential surface 75g. According to, for example, the number of the corner portions of the floor module 80, the number of the floor modules 80 supported by the one accommodation plug 73, or the like, the one cutout face may be a face corresponding to a part of a predetermined size of the outer circumferential surface 75g.

The 1/4 or substantially 1/4 part of the outer circumferential surface 75g of the outer wall part 75f around the axis a1 which the cutout faces 84a to 84d face is a part of the outer circumferential surface 75g of the outer wall part 75f facing the one accommodation recess part 75a. More specifically, as illustrated in FIG. 3-13G, the part of the outer circumferential surface 75g which the cutout face 84a faces is a part of the outer circumferential surface 75g facing the one accommodation recess part 75a along a dotted line p1. Furthermore, the part of the outer circumferential surface 75g which the cutout face 84b faces is a part of the outer circumferential surface 75g facing the one accommodation recess part 75a along a dotted line p2. Furthermore, the part of the outer circumferential surface 75g which the cutout face 84c faces is a part of the outer circumferential surface 75g facing the one accommodation recess part 75a along a dotted line p3. Furthermore, the part of the outer circumferential surface 75g which the cutout face 84d faces is a part of the outer circumferential surface 75g facing the one accommodation recess part 75a along a dotted line p4.

Furthermore, as illustrated in FIG. 3-15, near the four cutout faces 84a to 84d of the floor module 80, an engagement recess part 85 and recess parts 86 which can respectively accommodate the claw part 76d and the pins 76e of the engagement protrusion part 76c provided to the floor reception part 76 of the support column module 70 are formed. The engagement recess part 85 can engage with the accommodated claw part 76d by snap-fit. The pin 76e is accommodated in the recess part 86 to position the floor module 80 with respect to the support column module 70. In a state where the cutout faces 84a, 84b, 84c, or 84d faces the corresponding part p1, p2, p3, or p4 of the outer circumferential surface 75g of the outer wall part 75f of the accommodation part 75 in desired forms, the claw part 76d and the pins 76e may be respectively accommodated in the corresponding engagement recess part 85 and the recess parts 86. Note that, although the engagement recess part 85 and the recess parts 86 continue in the illustrated example, the forms of the engagement recess part 85 and the recess parts 86 are not limited to these.

Furthermore, as illustrated in FIG. 3-14, the floor module 80 includes a coupling part 87 for coupling to the other floor modules 80. The coupling part 87 includes, for example, the engagement protrusion parts 87a provided on one side surfaces of respective surfaces (side surfaces 80a and 80c and side surfaces 80b and 80d) of a pair of two opposing side surfaces of the floor module 80, and the engagement recess parts 87b provided on other side surfaces of respective surfaces (the side surfaces 80a and 80c and the side surfaces 80b and 80d) of a pair of two opposing side surfaces. The engagement protrusion part 87a is a protrusion protruding from the side surface, and the engagement recess part 87b is a recess part recessed from the side surface. When the floor module 80 is aligned at a desired position adjacent to the other floor module 80, the engagement protrusion part 87a is accommodated in the corresponding engagement recess part 87b. In the illustrated example, the side surface 80a and the side surface 80b of the floor module 80 are provided with the engagement protrusion parts 87a, and the side surface 80c and the side surface 80d of the floor module 80 are provided with the engagement recess parts 87b. Furthermore, although the two engagement protrusion parts 87a or the two engagement recess parts 87b are provided on one side surface, the numbers of the engagement protrusion parts 87a and the engagement recess parts 87b are not limited to these.

Furthermore, on the surface 81 of the floor module 80, the two lines 17 intersecting at a center or a substantial center of the surface 81 is provided. For example, the two lines 17 are perpendicular or substantially perpendicular to each other. As described above, the transportation robot 30 can run along the lines 17 or stop on the line 17 by tracing these lines 17.

Note that, although the floor module 80 is the plate-like member, the floor module 80 may be solid or have a cavity inside. For example, the floor module 80 may be formed by stretching a plate-like surface member on a surface of a framework assembled in a grid pattern. Furthermore, the number of the corner portions 83 of the floor module 80 is not limited to four, and the shape of the floor module 80 in plan view is not limited to the square or the rectangle, and may be other shapes such as other polygons and circles.

As illustrated in FIGS. 3-11, 3-16, and 3-17, the rack module 2 includes the respective accommodation plugs 73 of the four support column modules 70 meeting the four corner portions 83a to 83d of the floor module 80, the respective main bodies 71 and insertion plugs 72 of the other four support column modules 70 respectively coupled to the accommodation plugs 73 of these four support column modules 70, and the one floor module 80. Note that FIGS. 3-16 and 3-17 are exploded perspective views of the rack module 2, FIG. 3-16 illustrates that the four support column modules 70 and the other four support column modules 70 are detached, and FIG. 3-17 further illustrates that the respective accommodation plugs 73 of the four support column modules 70 are detached from the floor module 80. In the rack module 2, the respective accommodation plugs 73 of the four support column modules 70 are perpendicular or substantially perpendicular to the surface 81 of the floor module 80, and respectively support the floor module 80 at the four corner portions 83a to 83d.

More specifically, as illustrated in FIGS. 3-11, 3-16, and 3-17, in the rack module 2, the accommodation plug 73 of the one support column module 70A1 among the four support column modules 70 supports the floor module 80 at the corner portion 83a of the floor module 80. More specifically, the corner portion 83a of the floor module 80 comes into contact with part of the floor reception face 76b (see FIG. 3-13G) of the floor reception part 76 of the accommodation plug 73, and the floor module 80 is supported by the support column module 70A1 at the corner portion 83a. Part of the floor reception face 76b coming into contact with the corner portion 83a of the floor module 80 is a part of the floor reception face 76b (along the dotted line p1 in FIG. 3-3-13G) facing the one accommodation recess part 75a of the accommodation plug 73. Furthermore, the part (see FIG. 3-13G) along the dotted line p1 of the outer circumferential surface 75g of the outer wall part 75f faces the cutout face 84a of the corner portion 83a of the floor module 80. Furthermore, the pin 76e near the part along the dotted line p1 of the outer circumferential surface 75g of the accommodation recess part 75a is accommodated in the recess part 86 of the corner portion 83a, and the support column module 70A1 is positioned with respect to the floor module 80. Furthermore, the claw part 76d near the part along the dotted line p1 of the outer circumferential surface 75g is accommodated in and engaged with the engagement recess part 85 of the corner portion 83a by snap-fit, and the support column module 70A1 is fixed to the floor module 80. Furthermore, the insertion plug 72 of one support column module 70A2 among the four other support column modules 70 is inserted in the accommodation plug 73 of the support column module 70A1, and the support column module 70A2 is coupled to the support column module 70A1. In this state, the claw parts 74c of the insertion protrusion part 74a of the insertion plug 72 of the support column module 70A2 are engaged with the engagement recess parts 75c of the accommodation recess part 75a of the accommodation plug 73 of the support column module 70A1 by snap-fit.

Similarly, as illustrated in FIGS. 3-11, 3-16, and 3-17, in the rack module 2, the accommodation plug 73 of the one support column module 70B1 among the four support column modules 70 supports the floor module 80 at the corner portion 83b of the floor module 80. More specifically, the corner portion 83b of the floor module 80 comes into contact with part of the floor reception face 76b (see FIG. 3-13G) of the floor reception part 76 of the accommodation plug 73, and the floor module 80 is supported by the support column module 70B1 at the corner portion 83b. Part of the floor reception face 76b coming into contact with the corner portion 83b of the floor module 80 is a part of the floor reception face 76b (along the dotted line p2 in FIG. 3-13G) facing the one accommodation recess part 75a of the accommodation plug 73. Furthermore, the part (see FIG. 3-13G) along the dotted line p2 of the outer circumferential surface 75g of the outer wall part 75f faces the cutout face 84b of the corner portion 83b of the floor module 80. Furthermore, the pin 76e near the part along the dotted line p2 of the outer circumferential surface 75g of the accommodation recess part 75a is accommodated in the recess part 86 of the corner portion 83b, and the support column module 70B1 is positioned with respect to the floor module 80. Furthermore, the claw part 76d near the part along the dotted line p2 of the outer circumferential surface 75g is accommodated in and engaged with the engagement recess part 85 of the corner portion 83b by snap-fit, and the support column module 70B1 is fixed to the floor module 80. Furthermore, the insertion plug 72 of the one support column module 70B2 among the four other support column modules 70 is inserted in the accommodation plug 73 of the support column module 70B1, and the support column module 70B2 is coupled to the support column module 70B1. In this state, the claw parts 74c of the insertion protrusion part 74a of the insertion plug 72 of the support column module 70B2 are engaged with the engagement recess parts 75c of the accommodation recess part 75a of the accommodation plug 73 of the support column module 70B1 by snap-fit.

Similarly, as illustrated in FIGS. 3-11, 3-16, and 3-17, in the rack module 2, the accommodation plug 73 of the one support column module 70C1 among the four support column modules 70 supports the floor module 80 at the corner portion 83c of the floor module 80. More specifically, the corner portion 83c of the floor module 80 comes into contact with part of the floor reception face 76b (see FIG. 3-13G) of the floor reception part 76 of the accommodation plug 73, and the floor module 80 is supported by the support column module 70C1 at the corner portion 83c. Part of the floor reception face 76b coming into contact with the corner portion 83c of the floor module 80 is a part of the floor reception face 76b (along the dotted line p3 in FIG. 3-13G) facing the one accommodation recess part 75a of the accommodation plug 73. Furthermore, the part (see FIG. 3-13G) along the dotted line p3 of the outer circumferential surface 75g of the outer wall part 75f faces the cutout face 84c of the corner portion 83c of the floor module 80. Furthermore, the pin 76e near the part along the dotted line p3 of the outer circumferential surface 75g of the accommodation recess part 75a is accommodated in the recess part 86 of the corner portion 83b, and the support column module 70C1 is positioned with respect to the floor module 80. Furthermore, the claw part 76d near the part along the dotted line p3 of the outer circumferential surface 75g is accommodated in and engaged with the engagement recess part 85 of the corner portion 83c by snap-fit, and the support column module 70C1 is fixed to the floor module 80. Furthermore, the insertion plug 72 of the one support column module 70C2 among the four other support column modules 70 is inserted in the accommodation plug 73 of the support column module 70C1, and the support column module 70C2 is coupled to the support column module 70C1. In this state, the claw parts 74c of the insertion protrusion part 74a of the insertion plug 72 of the support column module 70C2 are engaged with the engagement recess parts 75c of the accommodation recess part 75a of the accommodation plug 73 of the support column module 70C1 by snap-fit.

Similarly, as illustrated in FIGS. 3-11, 3-16, and 3-17, in the rack module 2, the accommodation plug 73 of the one support column module 70D 1 among the four support column modules 70 supports the floor module 80 at the corner portion 83d of the floor module 80. More specifically, the corner portion 83d of the floor module 80 comes into contact with part of the floor reception face 76b (see FIG. 3-13G) of the floor reception part 76 of the accommodation plug 73, and the floor module 80 is supported by the support column module 70D1 at the corner portion 83d. Part of the floor reception face 76b coming into contact with the corner portion 83d of the floor module 80 is a part of the floor reception face 76b (along the dotted line p4 in FIG. 3-13G) facing the one accommodation recess part 75a of the accommodation plug 73. Furthermore, the part (see FIG. 3-13G) along the dotted line p4 of the outer circumferential surface 75g of the outer wall part 75f faces the cutout face 84d of the corner portion 83d of the floor module 80. Furthermore, the pin 76e near the part along the dotted line p4 of the outer circumferential surface 75g of the accommodation recess part 75a is accommodated in the recess part 86 of the corner portion 83d, and the support column module 70D1 is positioned with respect to the floor module 80. Furthermore, the claw part 76d near the part along the dotted line p4 of the outer circumferential surface 75g is accommodated in and engaged with the engagement recess part 85 of the corner portion 83d by snap-fit, and the support column module 70D 1 is fixed to the floor module 80. Furthermore, the insertion plug 72 of the one support column module 70D2 among the four other support column modules 70 is inserted in the accommodation plug 73 of the support column module 70D1, and the support column module 70D2 is coupled to the support column module 70D1. In this state, the claw parts 74c of the insertion protrusion part 74a of the insertion plug 72 of the support column module 70D2 are engaged with the engagement recess parts 75c of the accommodation recess part 75a of the accommodation plug 73 of the support column module 70D1 by snap-fit.

As described above, the rack module 2 includes the floor module 80, the accommodation plugs 73 of the respective support column modules 70A1, 70B1, 70C1, and 70D1 supporting the floor module 80, and the respective main bodies 71 and insertion plugs 72 of the support column modules 70A2, 70B2, 70C2, and 70D2 protruding from the surface 81 of the floor module 80.

Note that the respective main bodies 71 and insertion plugs 72 of the support column modules 70A2, 70B2, 70C2, and 70D2 of the one rack module 2 are components of the rack module 2 adjacent to this rack module 2 in the rack 10. Thus, the respective main bodies 71 and insertion plugs 72 of the support column modules 70A2, 70B2, 70C2, and 70D2 of the one rack module 2 are components shared with the other rack module 2 (see FIGS. 3-19A and 3-19B).

Furthermore, for the rack module 2 making up the lowermost floor 11 in the rack 10, support column end modules 77 illustrated in FIGS. 3-18A and 3-18B are used as members supporting the floor module 80 instead of the support column modules 70 (support column modules 70A1, 70B1, 70C1, and 70D1) (see FIGS. 3-19A and 3-19B). The support column end module 77 is the same member as part of the accommodation plug 73 side of the support column module 70, and includes the accommodation plug 73 and the main body 78 which is part of the accommodation plug 73 side of the main body 71. An end face 78a of the main body 78 is a face which is perpendicular or substantially perpendicular to the axis a1.

Furthermore, the other floor module 80 is attached to the rack module 2 making up the uppermost floor 11 or the rack module 2 which is the uppermost part in the rack 10 (see FIGS. 3-19A and 3-19B). That is, similar to the floor module 80 of the rack module 2, the other floor module 80 is attached to the flange parts 76a of the respective accommodation plugs 73 of the support column modules 70 (support column modules 70A2, 70B2, 70C2, and 70D2) protruding from the surface 81 of the floor module 80.

A plurality of the above-described rack modules 2 is used and assembled arbitrarily to form the rack 10. FIGS. 3-19A and 3-19B are perspective views illustrating an example of the plurality of rack modules 2 connected in the horizontal direction and the vertical direction. As illustrated in FIGS. 3-19A and 3-19B, the rack modules 2 (a rack module 2A and a rack module 2B, or the rack module 2A and a rack module 2D) adjacent in the horizontal direction (an X direction or a Y direction) share the respective accommodation plugs 73 of the two support column modules 70 supporting the floor module 80, and share the respective main bodies 71 and insertion plugs 72 of the two support column modules 70 protruding from the floor module 80. On the other hand, as illustrated in FIGS. 3-19A and 3-19B, the rack modules 2 (the rack module 2A and a rack module 2C) adjacent in the horizontal direction (a direction oblique to the X direction or the Y direction) share the accommodation plug 73 of the one support column module 70 supporting the floor module 80, and share the main body 71 and the insertion plug 72 of the one support column module 70 protruding from the floor module 80.

As described above, the one rack module 2 forms the zone space S corresponding to the one storage bin 20, so that the rack module 2 can make a component unit of the rack 10 smaller. Consequently, it is possible to adopt various forms of the rack 10, and flexibly design the form of the automated storage and retrieval system 1 at various places at which the automated storage and retrieval system 1 is installed. Consequently, it is possible to form the rack 10 in a shape and a size matching a place at which the automated storage and retrieval system 1 is installed, and improve space efficiency of the rack 10. For example, it is possible to connect part of the rack 10 to a space in a basement of a warehouse. Furthermore, it is possible to form the shape of the rack 10 in a complex shape, more efficiently form the movement passages 15 of the transportation robots 30 and the storage areas 14, and improve transportation efficiency and storage efficiency of the item 23. Furthermore, it is possible to more flexibly determine installation positions, shapes, and the like of the transportation elevator 16. More specifically, it is possible to provide the transportation elevators 16 at arbitrary places of the rack 10 including the plurality of floors. Consequently, it is possible to change the lengths, the positions, and the like of the transportation elevators 16 according to, for example, a form of the rack 10, various processing procedures of the automated storage and retrieval system 1, and item liquidity at the automated storage and retrieval system 1. Furthermore, unlike conventional automated storage and retrieval systems, it is possible to install the transportation elevators 16 at an inside of the rack 10, too, which is not surroundings of the rack 10.

Furthermore, each rack module 2 includes the two crossing lines 17 which are minimum component units of the movement passage of the transportation robot 30. Consequently, it is possible to form the movement passages of arbitrary shapes of the transportation robots 30 by arbitrarily connecting the plurality of rack modules 2. Thus, the rack module 2 makes it possible to form the movement passages of the transportation robots 30 in arbitrary shapes, and make the movement passages of the transportation robots 30 complicated.

Furthermore, the rack module 2 can also make up the picking station 40. Consequently, it is possible to more flexibly determine installation positions, shapes, sizes, and the like of the picking stations 40 in the rack 10. The rack module 2 makes it possible to form the movement routes of the transportation robots 30 on each floor 11, and form complicated movement routes. Consequently, it is possible to provide the picking stations 40 on the middle floors 11 in the rack 10. In this case, for example, a robot arm can perform work of picking the item 23 at the picking station 40. Furthermore, for example, it is possible to provide the picking stations 40 near warehouse windows in a small warehouse, and perform work of picking the items 23 through the windows.

Furthermore, it is possible to partially form the rack 10 at a place at which the automated storage and retrieval system 1 is installed, and improve installation efficiency of the rack 10. For example, it is possible to disassemble an existing rack, and partially form the rack 10 in a space left as a result of disassembly. Furthermore, it is possible to easily increase the zone spaces S in the existing rack 10, and easily disassemble the rack 10 and easily change a layout. Consequently, when the automated storage and retrieval system 1 causes a failure, it is possible to partially disassemble the rack 10 by detaching the rack module 2, and easily and efficiently repair the automated storage and retrieval system 1. Furthermore, it is possible to easily and efficiently maintain the automated storage and retrieval system 1.

Thus, the automated storage and retrieval system 1 according to the embodiment of the present disclosure enables flexible design of the form thereof.

Note that the support column module 70 may not include the floor reception part 76. FIG. 3-20 is a perspective view illustrating a support column module 70V according to a modified example of the support column module 70. As illustrated in FIG. 3-20, the support column module 70V may include hooks 79 fixed to the accommodation part 75 instead of the flange part 76a. FIG. 3-21 is a perspective view illustrating an example of the hook 79. The hook 79 includes the same functions as those of the floor reception face 76b and the engagement protrusion part 76c of the above-described floor reception part 76. More specifically, for example, the hook 79 includes a floor engagement part 79a as illustrated in FIGS. 3-20 and 3-21. The floor engagement part 79a can engage with the floor module 80 from below at each of the corner portions 83a to 83d of the floor module 80, and support the floor module 80. Furthermore, the hook 79 includes a support column engagement part 79b as illustrated in FIGS. 3-20 and 3-21. The support column engagement part 79b engages with the accommodation part 75 of the support column module 70V so as to meet each accommodation recess part 75a, and is fixed thereto.

As illustrated in, for example, FIGS. 3-20 and 3-21, the floor engagement part 79a of the hook 79 is a part bent from one end of a base part 79c of the hook 79 to an other end side (upper side) and extending upward, and is formed such that the floor engagement part 79a can engage with and be fixed to the engagement recess part 85 (see FIG. 3-15) of the floor module 80. Furthermore, as illustrated in, for example, FIGS. 3-20 and 21, the support column engagement part 79b of the hook 79 is a part bent from the other end of the base part 79c of the hook 79 to the one end side (lower side) and extending downward, and is formed such that the support column engagement part 79b can enter the accommodation recess part 75a of the support column module 70V and engage with and be fixed to the outer wall part 75f of the accommodation part 75. Furthermore, as illustrated in FIGS. 3-20 and 3-21, for example, the base part 79c of the hook 79 is formed extending along the outer wall part 75f of the accommodation part 75 of the support column module 70.

Furthermore, as illustrated in FIG. 3-20, for example, the hook 79 can engage with and be fixed to the corresponding outer wall part 75f of each accommodation recess part 75a of the accommodation part 75, i.e., a part of the outer wall part 75f corresponding to each of the dotted lines P1 to P4 (see FIG. 3-13G). More specifically, the hook 79 is attachable to the two crossing wall parts at the part of the outer wall part 75f corresponding to each of the dotted lines P1 to P4. Furthermore, as illustrated in FIG. 3-20, a recess part 75h accommodating the support column engagement part 79b and the base part 79c of the hook 79 may be formed on the outer wall part 75f.

Similar to the support column module 70, the support column module 70V can be coupled to the other support column module 70, and can support the floor module 80 at each of the corner portions 83a to 83d. Consequently, the support column module 70V can also make up the rack 10 similar to the support column module 70. Note that the support column end module 77 can also be formed like the above-described support column module 70V. That is, the support column end module 77 may include the hooks 79 instead of the flange part 76a.

The hook 79 functions similar to the floor reception part 76, engages the floor module 80 with the engagement recess part 85 at each of the corner portions 83a to 83d, and supports the floor module 80. Thus, the support column module 70V functions similar to the support column module 70.

Next, a support column module 90 for forming a passage for movement of the above-described transportation elevator 16 will be described. FIG. 3-22 is a side view of the support column module 90, FIGS. 3-23 and 3-24 are perspective views of the support column modules 90, and FIG. 3-25 is an exploded perspective view of the support column module 90. Furthermore, FIG. 3-27 is a perspective view of the transportation elevator 16 and part of a passage of the transportation elevator 16 in the rack 10. The automated storage and retrieval system 1 or the rack 10 may include the support column modules 90. Each of the support column modules 90 extends between at least mutually neighboring floors 11, specifically at least between one floor 11 and another floor 11 located immediately above or beneath the one floor 11. One support column module 90 is configured to be able to be coupled to another support column module 90. The support column module 90 differs from the above-described support column module 70 in that a component for movement of the transportation elevator 16 is attached. Furthermore, to attach the component for movement of the transportation elevator 16, the support column module 90 includes a main body 71A different from the main body 71, an insertion plug 72A different from the insertion plug 72, and an accommodation plug 73A different from the accommodation plug 73. Hereinafter, the components of the support column module 90 which are the same as or have similar functions to those of the support column module 70 will be assigned the same reference numerals, description thereof will be omitted, and the different components will be described.

The component of the support column module 90 for movement of the transportation elevator 16 is, for example, an engagement member 91 which a driving member of the transportation elevator 16 engages with, and is more specifically, for example, a roller chain 91 which one of sprockets 16a (see FIG. 3-27) of the transportation elevator 16 engages with as illustrated in FIGS. 3-22 to 3-25. The roller chain 91 extends in parallel or substantially parallel to the axis a1 in the support column module 90. Furthermore, the roller chain 91 extends between the main body 71A and the accommodation plug 73A. Furthermore, the roller chain 91 is provided to the support column module 90 such that the roller chain 91 is located in a space which is the passage of the transportation elevator 16 in the rack 10. Note that the space which is the passage of the transportation elevator 16 is, for example, a space corresponding to the zone space S. Hence, the main body 71A, the insertion plug 72A, and the accommodation plug 73A do not have a part overlapping the space which is the passage of the transportation elevator 16. As illustrated in, for example, FIG. 3-25, the main body 71A, the insertion plug 72A, and the accommodation plug 73A form a space 92 extending along the axis a1.

More specifically, as illustrated in, for example, FIG. 3-25, the main body 71A has no part corresponding to the main body 71 located in the one zone space S compared to the main body 71 of the support column module 70, and does not include, for example, the 1/4 part of the main body 71 around the axis a1 corresponding to one of the dotted lines P1 to P4 (see FIG. 3-13G). Furthermore, as illustrated in, for example, FIG. 3-25, the insertion plug 72A has no part corresponding to the insertion plug 72 located in the one zone space S compared to the insertion plug 72, and does not include, for example, the 1/4 part of the insertion plug 72 around the axis a1 corresponding to one of the dotted lines P1 to P4 (see FIG. 3-13G). Furthermore, as illustrated in, for example, FIG. 3-25, the accommodation plug 73A has no part corresponding to the accommodation plug 73 located in the one zone space S compared to the accommodation plug 73, and does not include, for example, the 1/4 part of the accommodation plug 73 around the axis a1 corresponding to one of the dotted lines P1 to P4 (see FIG. 3-13G). Thus, the support column module 90 has the space 92 formed at, for example, parts of the main body 71A, the insertion plug 72A, and the accommodation plug 73A located in the space which is the passage of the transportation elevator 16. The space 92 corresponds to, for example, a projection space in the axis a1 direction at one of the corner portions 83a to 83d of the floor module 80.

As illustrated in, for example, FIGS. 3-22 to 3-25, the roller chain 91 is a chain with ends including a pair of end parts 91a and 91b, and extends in the space 92 in the axis a1 direction. The one end part 91a of the roller chain 91 is located at a position of the accommodation plug 73A in the axis a1 direction in the space 92, and the one end part 91b of the roller chain 91 is located at a position of the insertion plug 72A in the axis a1 direction in the space 92. Furthermore, the roller chain 91 is fixed to a fixing member 93 provided in the space 92 and forming a space which can accommodate the roller chain 91. As illustrated in, for example, FIGS. 3-22 to 3-25, the fixing member 93 is a member whose cross-sectional shape perpendicular to the axis a1 is a substantially U shape, and includes a fixing member piece 94 which is a member whose cross-sectional shape perpendicular to the axis a1 is a substantially L shape, and a fixing member piece 95 which is a member fixed to this fixing member piece 94. The fixing member piece 94 is fixed to, for example, a part of the main body 71A defining the space 92, and extends from the position of the insertion plug 72a to the position of the accommodation plug 73A in the axis a1 direction in the space 92 as illustrated in FIGS. 3-22 to 3-25. Furthermore, the fixing member piece 95 is fixed to the fixing member piece 94 facing the fixing member piece 94 in the direction perpendicular to the axis a1 with a gap extending in the axis a1 direction interposed therebetween.

As illustrated in FIGS. 3-22 to 3-25, the roller chain 91 includes pins 91d for coupling each chain piece 91c. Part of the pins 91d is/are a pin/pins 91e whose both ends each protrude from the chain piece 91c. Although the pin 91d and the pin 91e are alternately provided with a fixed interval interposed therebetween in the illustrated examples, and arrangement of the pins 91d and 91e is not limited to this. Furthermore, all pins of the roller chain 91 may be the pins 91e. Note that reference numerals are not assigned to all of the pins 91d and 91e, and are omitted in FIG. 3-25.

Furthermore, as illustrated in FIG. 3-25, recess parts 93a which can accommodate distal ends of the pins 91d are formed in the fixing member pieces 94 and 95 so as to meet the pins 91d of the roller chain 91. When the pins 91d are accommodated in the recess parts 93a, the roller chain 91 is fixed to the fixing member 93 (fixing member pieces 94 and 95). Note that the components for fixing the roller chain 91 to the fixing member 93 are not limited to these pins 91d and recess parts 93a. Components or a method for fixing the roller chain 91 to the fixing member 93 may be other components or methods such as screwing or welding. Note that, similar to the pins 91d and 91e, reference numerals are not assigned to all of the recess parts 93a, and are omitted in FIG. 3-25.

Furthermore, as illustrated in FIG. 3-26, the roller chain 91 includes clips 96 for coupling to the roller chain 91 of the other support column module 90 to which this support column module 90 is coupled. The clip 96 is a member for coupling the chain piece 91c of the end part 91a of the one roller chain 91 and the chain piece 91c of the end part 91b of the other roller chain 91, and can engage with the respective pins 91e of the two chain pieces 91c to be coupled. Note that components or a method for coupling the two roller chains 91 are not limited to these clips 96, and may be other components or methods.

The plurality of support column modules 90 is coupled in the rack 10 similar to the support column modules 70 to form shafts of the transportation elevator 16 extending in the z axis direction. Furthermore, as illustrated in FIG. 3-27, the four shafts of this transportation elevator 16 are arranged facing each other such that the roller chains 91 extending along the respective shafts face each other so as to form a movement space of the transportation elevator 16, so that a movement rail and the movement space of the transportation elevator 16 are formed. As described above, the respective roller chains 91 of the plurality of support column modules 90 are coupled by coupling the end part 91a or the end part 91b of the one roller chain 91 and the end part 91b or the end part 91a of the other roller chain 91 by using the clip 96. Thus, in the shafts of the transportation elevator 16 formed by coupling the plurality of support column modules 90, the plurality of roller chains 91 becomes a string of a roller chain.

As illustrated in FIG. 3-27, in the movement space of the transportation elevator 16, the four respective sprockets 16a of the transportation elevator 16 mesh with the roller chains 91 of the four shafts. By driving two electric motors 16c of the transportation elevator 16, each sprocket 16a is rotated via a shaft 16b, each sprocket 16a moves on the roller chain 91, and thereby the transportation elevator 16 moves along the shaft in the z axis direction.

As described above, the rack 10 includes the support column modules 90 forming the movement rails of the transportation elevators 16, and makes it possible to form the movement rails and the movement spaces of the transportation elevators 16 by combining the support column modules 90. Furthermore, the support column module 90 has the same or substantially same length (the length in the axis a1 direction) as that of the support column module 70. Furthermore, the support column module 90 has part of the floor reception part 76 outside the movement space of the transportation elevator 16, and can support the floor module 80 outside the movement space of the transportation elevator 16 similar to the support column module 70. Consequently, by changing to the support column modules 90 the support column modules 70 facing a single zone space S in the rack modules 2 surrounding the one zone space S in an xy axis plane direction, it is possible to form the movement space of the transportation elevator 16 in this one zone space S.

As described above, the four support column modules 90 facing each other form the movement space of the transportation elevator 16 corresponding to the one zone space S, so that the support column modules 90 can make a component unit of the movement space of the transportation elevator 16 smaller. By combining the support column modules 90 with the rack modules 2, it is possible to easily form the movement spaces of the transportation elevators 16 in the rack 10. Furthermore, the support column modules 90 can form the movement space of the transportation elevator 16 only in the one zone space S. Consequently, it is possible to form the complicated movement spaces of the transportation elevators 16 in the rack 10. Furthermore, it is possible to form the movement spaces of the transportation elevators 16 inside the rack 10, too. Consequently, it is possible to flexibly design the form of the automated storage and retrieval system 1.

Note that, although the above-described support column modules 90 have the roller chains 91 as the engagement members engaging with the sprockets 16a of the transportation elevator 16, the engagement members included in the support column modules 90 are not limited to the roller chains, may be members which the sprockets 16a can engage with, and may be a rack of a rack and pinion. Furthermore, the support column module 90 may not include the fixing member 93, and the roller chain 91 may be fixed to the main body 71A, the insertion plug 72A, and the accommodation plug 73A. Furthermore, the support column module 90 may include the hooks 79 instead of the floor reception part 76 similar to the support column module 70V. Furthermore, the support column module 90 may extend over heights of a plurality of floors, or may extend shorter than the height of one floor. Furthermore, the roller chain 91 may extend longer than the support column module 90 (the main body 71A, the insertion plug 72A, and the accommodation plug 73A), or may be shared between the plurality of support column modules 90. Furthermore, the support column modules 90 may form a passage of the transportation elevator 16 outside the rack in the automated storage and retrieval system 1.

This description discloses some embodiments of the subject matter of the present disclosure, and uses examples to enable the one of ordinary skilled in the art to carry out the embodiments of the subject matter of the present disclosure including manufacturing and using an arbitrary device and system and executing an arbitrary incorporated method. The patentable scope of the subject matter of the present disclosure is defined by the claims, and may include other examples achieved by the one of ordinary skilled in the art. These other examples intend to be within the claims in a case where the other examples include components which are not different from wordings of the claims, or in a case where the other examples include equivalent components including non-substantial differences from the wordings of the claims.

[Fourth invention] Hereinafter, an embodiment of the present disclosure will be described with reference to the accompanying drawings. In all drawings, identical reference numerals are used to refer to identical or similar components. The following embodiment does not intend to limit the invention recited in the claims. Examples and features of the disclosed principal will be described in this description, yet can be changed and modified without departing from the idea and the scope of the disclosed embodiment. Furthermore, specific features, structures, or characteristics can be combined by an arbitrary appropriate method in one or more embodiments. The following detailed description is taken into account only as exemplary description, and the true range and idea are intended to be indicated by the claims.

FIG. 4-1 is a perspective view schematically illustrating an external appearance of an automated storage and retrieval system 1 according to an embodiment of the present disclosure. The automated storage and retrieval system 1 is constructed in, for example, a building 100. The building 100 includes a floor surface 101 extending along a horizontal plane, a plurality of sidewalls 102 vertically standing from the floor surface 101, and a ceiling (not illustrated) supported by the plurality of sidewalls 102. For example, the four sidewalls 102 surrounding four sides, and the ceiling extending in parallel to the floor surface 101 establish an internal space between the floor surface 101, and the sidewalls 102 and the ceiling. The automated storage and retrieval system 1 is constructed in this internal space. Note that part of the sidewalls 102 are cut out for ease of description in FIG. 4-1. In the building 100, an x axis and a y axis extending in a direction perpendicular to each other on the horizontal plane, and a z axis extending in a vertical direction and perpendicular to the x axis and the y axis are defined.

The automated storage and retrieval system 1 is an automated storage and retrieval system which can automate a series of work from warehousing and storage to delivery of items including products and the like based on centralized management. The automated storage and retrieval system 1 according to the present embodiment includes a rack 10 arranged on the floor surface 101, a plurality of storage bins 20 which is a container stored in the rack 10, a plurality of transportation robots 30 for transporting the storage bins 20, one or more picking stations 40 for picking items including products and the like contained in the storage bins 20, and a management server 50 for managing the series of work of the automated storage and retrieval system 1. At the picking station 40, a human operator 60 performs picking work of picking an item from the storage bin 20.

The rack 10 includes a plurality of floors 11, each of floors 11 defining a surface which extends in parallel to each other along each xy plane, and a plurality of support columns 12 supporting the plurality of floors 11. In the present embodiment, the floors 11 of a first floor to a ninth floor vertically standing in a z axis direction from the floor surface 101 are formed. A total height of the rack 10 from the floor surface 101 in the z axis direction can be set according to a height in the z axis direction of the ceiling of the building 100. Note that part of the floors 11 of the eighth floor and the ninth floor is omitted for ease of description in FIG. 4-1, and configurations of the floors 11 of the eighth floor and the ninth floor are configured similar to the floor 11 of the seventh floor.

FIG. 4-2 is a plan view schematically illustrating an example of a structure of the floor 11 of the rack 10 of the automated storage and retrieval system 1 according to the present embodiment. In the present embodiment, each floor 11 of the rack 10 defines a plurality of sections 13 which are aligned along the xy plane. The section 13 defines, for example, outlines of a square or a rectangle in plan view. In the present embodiment, the support columns 12 are respectively arranged at four corners of the one section 13. The one storage bin 20 occupies the one section 13. Similarly, the one transportation robot 30 occupies the one section 13. That is, an outline of the storage bin 20 and an outline of the transportation robot 30 are respectively arranged in the outline of the one section 13 in plan view. Furthermore, an interval between a pair of the mutually neighboring support columns 12 and 12 is set larger than widths of the transportation robot 30 and the storage bin 20 defined in an x axis direction and a y axis direction.

Each floor 11 defines storage areas 14 including the sections 13 in which the storage bins 20 are aligned, and movement routes 15 of the transportation robots 30 including the sections 13 other than the storage areas 14. In the illustrated example, for example, two rows of bin groups of the plurality of storage bins 20 aligned along the y axis direction are aligned in the x axis direction in the storage area 14. That is, all of the storage bins 20 making up the bin group of these two rows of the storage bins 20 face the movement routes 15 at all times. On the other hand, the transportation robots 30 can run on the movement routes 15. As described later, the transportation robot 30 can also run in the storage area 14, through a space below a bottom surface of the storage bin 20.

FIG. 4-3 is a perspective view schematically illustrating an example of a structure of the rack 10 of the automated storage and retrieval system 1 according to the embodiment. Referring to FIGS. 4-1 to 4-3 together, the rack 10 includes one or more transportation elevators 16. The transportation elevators 16 can make reciprocating movement in the z axis direction from the first floor to the ninth floor of the floors 11, and stop each floor 11. Each transportation elevator 16 is arranged in one section in the movement route 15 of the transportation robot 30 on each floor 11. In the present embodiment, the plurality of transportation elevators 16 may be provided to the rack 10. The transportation elevator 16 can have only the transportation robot 30 get thereon or have the transportation robot 30 holding the storage bin 20 get thereon to transport to each floor of the first floor to the ninth floor.

The transportation elevator 16 includes, for example, shafts of four corners attached to the rack 10 and extend in the z axis direction, four roller chains attached to the respective shafts, and extend in the z axis direction, four sprockets meshing with the respective chains, and two electric motors (both of which are not illustrated) for respectively rotating and driving, for example, the two sprockets. The sprockets mesh with the roller chains in response to rotation of the sprockets caused by the electric motors to ascend and descend the transportation elevator 16. Note that the support columns 12 making up the rack 10 may be used in place of the shafts. The above mechanism is a mere example, and an arbitrary another mechanism realizing vertical movement of the transportation elevator 16 may be used.

FIG. 4-4 schematically illustrates an example of the structure of the storage bin 20 of the automated storage and retrieval system 1 according to the embodiment. In the present embodiment, the storage bin 20 includes a bin main body 21 defining an internal space of, for example, a cuboid, and four support legs 22 extending downward from four corners of a bottom surface of the bin main body 21. The bin main body 21 includes four sidewalls 21a surrounding four sides, an opening part 21b opened along upper ends of the sidewalls 21a, and a bottom surface 21c closed along lower ends of the sidewalls 21a. Although the opening part 21b is opened in the present embodiment, the opening part 21b may be closed with, for example, a lid or a cover. The sidewalls 21a extend along the xz plane or the yz plane. Furthermore, the bottom surface 21c extends along the xy plane. The storage bin 20 is in contact with the floor 11 with the four support legs 22. The storage bin 20 may be formed by, for example, a resin material. Furthermore, the storage bin 20 may be a foldable bin. An outline of the bin main body 21 in plan view is defined as a square or a rectangle. A size of the storage bin 20 is preferably set appropriately based on a size of the rack 10 or each floor 11 or a size of an item 23.

The one or more items 23 are contained in the internal space in the bin main body 21. The item 23 can be identified by, for example, a unique Stock Keeping Unit (SKU) set to the item 23. Although the item 23 is, for example, one unit of a product or the like, the item 23 may be a so-called case product packaged in a unit of a plurality of identical products. Furthermore, the one storage bin 20 may contain only the items 23 of one type, or may contain the items 23 of a plurality of types. The storage bin 20 can be identified based on a unique ID set to each storage bin 20. The unique ID of this storage bin 20 is managed in correspondence with the SKU of the item 23 contained in the storage bin 20.

FIG. 4-5 is a perspective view schematically illustrating an external appearance of the transportation robot 30 of the automated storage and retrieval system 1 according to the embodiment. In the present embodiment, a plurality of the transportation robots 30 is preferably arranged on each floor 11 of the rack 10. The transportation robot 30 is, for example, an autonomous running transportation robot including a thin housing 31 of a substantially cuboid shape. The housing 31 is formed by, for example, a resin material. The transportation robot 30 can run along a line 17 (see, for example, FIG. 4-2) by tracing the line 17 drawn on the floor 11 of the rack 10 (line tracing function). The line 17 is two strips of lines which extend passing center positions of the x axis direction and the y axis direction in, for example, each section 13, and are perpendicular to each other at a center of the section 13. These lines 17 are drawn in all of the sections 13 including the storage areas 14, the movement routes 15, and the transportation elevators 16 of the floor 11.

An upper surface of the housing 31 of the transportation robot 30 extends flat along the xy plane. A height of the transportation robot 30 is set smaller than the height of the support leg 22 of the storage bin 20. Furthermore, an outline of the housing 31 in top view is defined substantially as, for example, a square. Similarly, the length of one side of the transportation robot 30 is set smaller than the length of each side of the storage bin 20. That is, the transportation robot 30 can enter the space below the bin main body 21 from between the pair of mutually neighboring support legs 22 of the storage bin 20. In this regard, the size of the transportation robot 30 is preferably set appropriately based on sizes of the rack 10, each floor 11, and the storage bin 20.

The transportation robot 30 can change the height thereof between a first configuration where the height of the upper surface of the housing 31 is set to a first height, and a second configuration where the height is set to a second height higher than the first height. As described above, the transportation robot 30 of the first configuration can enter the space below the bin main body 21 from between the pair of mutually neighboring support legs 22 of the storage bin 20. In this case, when the transportation robot 30 changes the height of the housing 31 from the first configuration to the second configuration, the transportation robot 30 holds the storage bin 20 on the upper surface of the housing 31 as illustrated in FIG. 4-6. As a result, the storage bin 20 can be lifted from the floor 11. The transportation robot 30 can run in both of the first configuration and the second configuration. That is, the transportation robot 30 can run on the floor 11 while lifting the storage bin 20.

Back to FIG. 4-1, in the present embodiment, the picking station 40 is established along, for example, a peripheral edge of the floor 11 which continues from the surface of the floor 11 of the rack 10. That is, the picking station 40 is established in, for example, the rack 10. In the present embodiment, for example, the two picking stations 40 are established on the floor 11 of the second floor of the rack 10. The picking station 40 is a station for picking the item 23 from the storage bin 20 transported by the transportation robot 30 from the rack 10. The operator 60 can execute picking work (delivery work) taking a standing posture on, for example, the surface of the floor 11 of the first floor. Note that details of a configuration of the picking station 40 will be described later.

The management server 50 manages all of the rack 10, the storage bins 20, the transportation robots 30, the transportation elevators 16, and the picking stations 40 for warehousing, storage, and delivery of the automated storage and retrieval system 1. This management is realized when a program stored in a storage unit is executed by a control unit as described later. More specifically, operations and processing of the transportation robots 30, the transportation elevators 16, and the picking stations 40 are executed according to information processing described in the program. That is, the information processing described in the program functions as specific means collaborated by software in correspondence with the program, and various hardware resources of the automated storage and retrieval system 1 when the program is read by the control unit.

FIG. 4-7 is a functional block diagram schematically illustrating a configuration of the management server 50. As illustrated in FIG. 4-7, the management server 50 includes a control unit 51 and a storage unit 52. The control unit 51 includes a communication control unit 511, a stock management unit 512, and a device control unit 513. On the other hand, the storage unit 52 stores a program 521, rack information 522, item information 523, bin information 524, and device information 525. The control unit 51 manages the automated storage and retrieval system 1 by executing the program 521 stored in the storage unit 52. This management server 50 may be realized on a physical server, yet may be realized on, for example, a cloud server.

The communication control unit 511 controls communication between the management server 50 and at least the transportation robot 30 and a terminal of the operator 60 at the picking station 40. A communication method may be, for example, Wi-Fi (registered trademark), Ethernet (registered trademark), optic or the like. The stock management unit 512 manages a stock status of the automated storage and retrieval system 1. More specifically, the stock management unit 512 associates and manages information (SKU) for identifying each item 23, information related to the number of stocks of each item 23 specified based on the SKU, information (ID) for identifying the storage bin 20 in which the item 23 is stored, and information related to a position of the section 13 of the floor 11 in which the storage bin 20 is stored. Each of these pieces of information is stored as the rack information 522, the item information 523, and the bin information 524 in the storage unit 52.

The device control unit 513 manages and controls at least states and operations of the transportation robots 30 and the picking stations 40. More specifically, the device control unit 513 associates and manages information for identifying the transportation robot 30, information related to a current state of the transportation robot 30, i.e., a charging state of the transportation robot 30, information related to whether or not the transportation robot 30 engages in transportation, information related to order processing in which the transportation robot 30 engages in a case where the transportation robot 30 engages in the transportation, and information related to a current position of the transportation robot 30 at the floor 11 of the rack 10 or the picking station 40. The information related to the order processing includes, for example, information related to transportation of which item 23 of the order processing the transportation robot 30 engages in. Each of these pieces of information is stored as the device information 525 in the storage unit 52. Furthermore, the device control unit 513 associates and manages information for identifying the picking station 40, and information related to an order for which picking work is executed at the picking station 40. Each of these pieces of information is stored as the device information 525 in the storage unit 52.

Furthermore, the device control unit 513 generates commands for the transportation robot 30 and the transportation elevator 16 per order processed by the automated storage and retrieval system 1. More specifically, the device control unit 513 specifies the storage bin 20 for containing the item 23 designated by the order based on each of the above pieces of information, and specifies the transportation robot 30 which needs to be assigned to transport the storage bin 20.

The device control unit 513 specifies a movement route R1 (referred to as a "robot route" below) of the transportation robot 30 to the section 13 in which the storage bin 20 is stored, and a movement route R2 (referred to as a "bin route" below) of the transportation robot 30 from the section 13 to the picking station 40 which is a destination. These pieces of generated information are transmitted as commands to the transportation robot 30 via the communication control unit 511.

FIG. 4-8 is a functional block diagram schematically illustrating a configuration of the transportation robot 30. As illustrated in FIG. 4-8, the transportation robot 30 includes a control unit 32 and a mechanism unit 33. The control unit 32 includes a communication control unit 321, a running control unit 322, and a lifting control unit 323. The mechanism unit 33 includes a communication unit 331, a plurality of driving wheels 332, a plurality of driving motors 333, a lifting mechanism 334, a sensor 335, and a battery 336. The control unit 32 controls an operation of the transportation robot 30 by executing a program (not illustrated) stored in the storage unit (not illustrated). The program may be stored in a physical storage unit incorporated in the transportation robot 30, yet may be stored on, for example, a cloud server.

The communication unit 331 establishes communication between at least the management server 50, the transportation elevator 16, and the terminal of the operator 60 at the picking station 40. A communication method may be, for example, Wi-Fi (registered trademark), Ethernet (registered trademark), optic or the like. Communication performed by the communication unit 331 is controlled by the communication control unit 321. The driving wheel 332 is a wheel for realizing running of the transportation robot 30. The plurality of driving motors 333 drive the driving wheels 332 and the lifting mechanism 334. Driving of the driving wheels 332 is controlled by the running control unit 322. The lifting mechanism 334 establishes the above-described first configuration and second configuration by lifting the housing 31 of the transportation robot 30. An operation of this lifting mechanism 334 is controlled by the lifting control unit 323.

The sensor 335 is, for example, an optical sensor for realizing the above-described line tracing function. More specifically, the sensor 335 is used to control running of the transportation robot 30 along the line 17 by reading a boundary of the line 17 drawn on each section 13. Furthermore, although the two strips of the lines 17, 17 cross at the center of each section 13, the sensor 335 reads the line 17 perpendicular to the line 17 along which the transportation robot 30 is running, so that the transportation robot 30 can specify the center position of each section 13. Thus, the transportation robot 30 can stop at, for example, the center position of each section 13. The battery 336 is, for example, a rechargeable battery. On each floor 11 of the rack 10, one or more charging spots (not illustrated) which enable charging of the battery 336 of the transportation robot 30 may be formed.

FIG. 4-9 is a side view of the rack 10 schematically illustrating an example of the configuration of the picking station 40 of the automated storage and retrieval system 1 according to the embodiment. FIG. 4-10 is a plan view of the rack 10 schematically illustrating the example of the configuration of the picking station 40 of the automated storage and retrieval system 1 according to the embodiment. As illustrated in FIG. 4-9, the picking station 40 is established along the peripheral edge of the floor 11 which continues from the surface of the floor 11 of the second floor of the rack 10. More specifically, the picking station 40 is formed on the surface of the floor 11 of the second floor which extends in, for example, the y axis direction toward an outer side of an outer peripheral edge of the floors 11 of the third floor to the ninth floor. In the present embodiment, similar to the floor 11 of the second floor, the floor 11 of the first floor also extends toward the outer side of the outer peripheral edges of the floors 11 of the third floor to the ninth floor. The operator 60 stands on the surface of the floor 11 of the first floor, and does work of picking the item 23 from the storage bin 20. The height of the surface of the floor 11 of the second floor is suitable for the operator 60 whose height is, for example, 165 cm which is an average height of adults to do the work.

As illustrated in FIG. 4-10, the picking station 40 defines a plurality of picking positions 41A to 41D at which the storage bins 20 used for picking work of the item 23 are arranged on the floor 11 of the second floor. In the present embodiment, the four picking positions 41A to 41D are aligned adjacent to each other in the x axis direction along the peripheral edge of the rack 10. Each of the picking positions 41A to 41D occupies the one section 13 of the floor 11. The picking positions 41A to 41D are aligned in front of the operator 60 facing the rack 10, and the picking positions 41B and 41C of the picking positions 41A to 41D directly face the operator 60. As is apparent from FIG. 4-9, no floor 11 is arranged in a space above the picking positions 41A to 41D in the z axis direction.

On the floor 11 of the second floor, for example, the two sections 13 extend toward the outer side in the y axis direction from the picking positions 41A and 41D. These four sections 13 in total define loading positions 43A to 43D at which the items 23 are loaded to shipment bins 42 which need to be shipped to clients of orders. Each of the loading positions 43A to 43D occupies the one section 13 of the floor 11. The shipment bin 42 employs the same configuration as that of the storage bin 20. According to the present embodiment, all of the loading positions 43A to 43D are aligned to a side of the operator 60 who faces the rack 10, and directly face the operator 60. Thus, as is clear from FIG. 4-10, the four picking positions 41A to 41D and the four loading positions 43A to 43D are aligned surrounding the operator 60 on the floor 11 of the second floor.

Furthermore, the sections 13 further surrounding the four picking positions 41A to 41D and the four loading positions 43A to 43D define the movement route 15 of the transportation robot 30 on the floor 11 of the second floor. Although FIG. 4-10 omits illustration of the lines 17 for ease of description, the lines 17 are drawn in all of the sections 13 in which the four picking positions 41A to 41D and the four loading positions 43A to 43D, and the movement routes 15 are formed. Thus, as indicated by arrows in FIG. 4-10, the transportation robot 30 can enter the four picking positions 41A to 41D and the four loading positions 43A to 43D from the movement routes 15. Note that the storage bin 20 is not arranged in the sections 13 forming the movement routes 15. Thus, the transportation robot 30 can transport the storage bin 20 between the storage area 14 of the rack 10 and the four picking positions 41A to 41D. On the other hand, the transportation robot 30 can transport the shipment bin 42 on which the item 23 has been loaded, to, for example, a shipping station (not illustrated) established in the rack 10.

Although the storage bins 20 are aligned on each floor 11 of the rack 10 as is apparent from FIG. 4-9, the storage bins 20 for containing the items 23 of higher inventory turnover ratios are preferably aligned on the lower floors 11. In other words, the storage bins 20 for containing the items 23 of lower inventory turnover ratios are preferably aligned in the upper floors 11. In the present embodiment, the picking stations 40 are established on the floor 11 of the second floor, and therefore the items 23 of lower inventory turnover ratios are stored on the upper floors 11 for which physical movement distances of the transportation robots 30 from the second floor are assumed to be long. Similarly, the items 23 of higher inventory turnover ratios are stored on the floors 11 which are close to the second floor and to which physical movement distances are assumed to be short, or the second floor for which the transportation elevator 16 does not need to be used. Furthermore, the picking stations 40 are not limited to the picking stations provided adjacent to the floor 11 of the second floor. The picking stations 40 may be provided adjacent to the other floors 11 likewise according to installation environment such as a shape, a size, and the like of a warehouse in which the automated storage and retrieval system 1 is installed, or a control mode or the like of the automated storage and retrieval system 1. Furthermore, the automated storage and retrieval system 1 may be provided with the plurality of picking stations 40. Furthermore, the picking positions are not limited to the above-described four picking positions 41A to 41D, and the loading positions are not limited to the above-described four loading positions 43A to 43D.

Next, a configuration of the rack 10 will be specifically described. FIG. 4-11 is a perspective view illustrating a schematic configuration of a rack module 2 included in the rack 10. The rack 10 includes the plurality of rack modules 2, and is formed by connecting the plurality of rack modules 2. Furthermore, as described above, the rack 10 stores the plurality of storage bins 20, and includes the plurality of floors 11 allowing the transportation robots 30 to run along surfaces thereof. The rack module 2 includes a floor module 80 which is part of each floor 11, and a plurality of support column modules 70 supporting the floor module 80. A configuration of the rack module 2 will be specifically described below.

The rack module 2 is a minimum unit structure making up the rack 10, and the rack 10 is formed by the plurality of rack modules 2. More specifically, the rack 10 is formed by coupling the plurality of rack modules 2 in a horizontal direction and the vertical direction. The rack module 2 forms a zone space S in the rack 10. The zone space S is a space corresponding to the section 13 of the floor 11, and is a space between the neighboring sections 13 in the z direction (see FIG. 4-3). That is, each zone space S is a space in which the one storage bin 20 is stored, and is a minimum unit space making up the storage area 14, and each zone space S is a minimum unit space making up the movement route 15. Note that, although part of components is shared between the neighboring rack modules 2, the shared components are also components of each rack module 2.

More specifically, as illustrated in FIG. 4-11, each rack module 2 includes part of the eight respective support column modules 70 and the floor module 80. FIGS. 4-12A and 4-12B are perspective views of the support column module 70. FIG. 4-13 is a perspective view of the floor module 80. As illustrated in FIGS. 4-12A and 4-12B, the support column module 70 is a member having a columnar shape extending in an axial line a1 direction and has rigidity, and includes a main body 71, an insertion plug 72, and an accommodation plug 73. The main body 71 is, for example, a bar-shaped member whose axis a1 extends as a center axis or a substantial center axis.

The insertion plug 72 is connected to one end in an axis a1 direction of the main body 71 at which an insertion part 74 protruding toward one side of the axis a1 direction is formed. The insertion part 74 includes four insertion protrusion parts 74a which are, for example, parts protruding in the axis a1 direction. The insertion protrusion parts 74a are arranged at equal intervals with the axis a1 arranged at the center, and for example, the two insertion protrusion parts 74a are respectively aligned in a direction perpendicular to the axis a1 to form two rows of the insertion protrusion parts 74a. These two rows face each other. Note that the number of the insertion protrusion parts 74a provided at the insertion plug 72 is not limited to four, and may be one or other plural numbers. The number of the insertion protrusion parts 74a provided at the insertion plug 72 is determined to match with, for example, the number of accommodation recess parts 75a of the accommodation plug 73 described below. Each insertion part 74a has, for example, a cylindrical shape extending along the axis a1, and, more specifically, has, for example, a square cylindrical shape whose corner edge is a curved surface having an arc-shaped cross section.

The accommodation plug 73 is connected with an other end in the axis a1 direction of the main body 71, and the insertion plug 72 and the accommodation plug 73 of the support column module 70 oppose to each other in the axis a1 direction. The accommodation plug 73 includes an accommodation part 75, and the accommodation part 75 can accommodate the insertion part 74 of the insertion plug 72 of the support column module 70. More specifically, the accommodation part 75 includes the four accommodation recess parts 75a which can respectively accommodate the four insertion protrusion parts 74a of the insertion part 74 of the insertion plug 72. The accommodation recess part 75a has a shape matching the insertion protrusion part 74a, and is a recess part which is recessed toward the insertion plug 72 in the axis a1 direction. Each accommodation recess part 75a can accommodate the corresponding insertion protrusion part 74a. Each accommodation recess part 75a may be able to accommodate the corresponding insertion protrusion part 74a by clearance fit, accommodate the corresponding insertion protrusion part 74a by stationary fit, or accommodate the corresponding insertion protrusion part 74a by transition fit. Note that the number of the accommodation recess parts 75a provided to the accommodation plug 73 is not limited to four, and may be one or other plural numbers. The number of the insertion protrusion parts 74a provided to the insertion plug 72 may be determined according to, for example, the number of the floor modules 80 supported by the support column modules 70.

Furthermore, the accommodation plug 73 is formed with a floor reception part 76 around the accommodation part 75. The floor reception part 76 is a part supporting the floor module 80 in the axis a1 direction. The floor reception part 76 includes a flange part 76a forming a face (floor reception face 76b) extending along a plane perpendicular to the axis a1, and engagement protrusion parts 76c protruding from the flange part 76a to a side opposite to the main body 71 in the axis a1 direction. The floor reception face 76b extends in parallel to the plane perpendicular to the axis a1. The engagement protrusion part 76c has a shape which can engage with a corresponding part. The accommodation part 75 protrudes from the flange part 76a of the floor reception part 76 toward a side opposite to the main body 71 in the axis a1 direction. A height h1 of the accommodation part 75 is a thickness t1 (see FIG. 4-13) of the floor module 80 or more. Note that the height h1 of the accommodation part 75 is a distance in the axis a1 direction between the floor reception face 76b of the flange part 76a and a distal end face of the accommodation part 75. Note that the height h1 of the accommodation part 75 may be smaller than the thickness t1 of the floor module 80.

The main body 71, the insertion plug 72, and the accommodation plug 73 are parts of the support column module 70 which are integrally formed by the same material, and the main body 71, the insertion plug 72, and the accommodation plug 73 are integrally formed. A material of the support column module 70 is, for example, a resin. The material of the support column module 70 is not limited to the resin, and may be, for example, metal.

The support column module 70 employs the above-described configuration, and the two support column modules 70 are coupled to each other by accommodating and bonding the insertion plug 72 of the one support column module 70 in and to the accommodation plug 73 of the other support column module 70. On the other hand, the two support column modules 70 coupled as described above are detached by pulling the insertion plug 72 of the one support column module 70 from the accommodation plug 73 of the other support column module 70. The plurality of support column modules 70 are coupled in this way, so that the one support column 12 can be formed. When the support column modules 70 are coupled, each insertion protrusion part 74a fits to the corresponding accommodation recess part 75a. Consequently, it is possible to increase coupling strength between these support column modules 70, and increase strength of the support column 12. On the other hand, as described above, it is possible to decouple the support column modules 70 of the support column 12.

As illustrated in FIG. 4-13, the floor module 80 is a plate-like member corresponding to the one section 13 of the floor 11, and includes a surface 81 which is a face on which the section 13 is formed. The floor module 80 includes a plurality of corner portions. As described above, the section 13 defines, for example, the outline of the square or the rectangle in plan view, and, similarly, the floor module 80 defines, for example, an outline of a square and a rectangle in plan view and includes four corner portions 83a to 83d. The thickness t1 of the floor module 80 is a distance between the surface 81 and a back surface 82 which is a face opposing to the surface 81. The corner portions of the floor module 80 can be supported by the accommodation plugs 73 of the support column modules 70. For example, the floor module 80 has a structure that the floor modules 80 the number of which is the same as the number of the corner portions included in the floor module 80 can be detachably supported by the accommodation part 75 and the floor reception part 76 of the one accommodation plug 73. Note that the floor module 80 may have a structure that the floor modules 80 the number of which is different from the number of corner portions included in the floor module 80 can be supported by the accommodation part 75 and the floor reception part 76 of the one accommodation plug 73.

Respectively at the four corner portions 83a to 83d of the floor module 80, cutout faces 84a to 84d are formed. Note that the corner portions 83a to 83d are aligned clockwise in order in plan view. The cutout faces 84a to 84d are each a part defining, at each of the corner portions 83a to 83d, a space recessed in an extension direction of the floor module 80, and is a face facing this space. When the four floor modules 80 are annularly aligned facing the same direction such that the surfaces 81 are coplanar, the cutout faces 84a to 84d of the four respective floor modules 80 form through-holes surrounding outer circumferential surfaces of the accommodation parts 75. That is, the cutout face 84a of the one floor module 80, the cutout face 84b of the one floor module 80, the cutout face 84c of the one floor module 80, and the cutout face 84d of the one floor module 80 are annularly aligned in this order. According to, for example, the number of the corner portions of the floor module 80, the number of the floor modules 80 supported by the one accommodation plug 73, or the like, the one cutout face may be a face corresponding to a part of a predetermined size of the outer circumferential surface of the accommodation part 75.

Furthermore, on the surface 81 of the floor module 80, the two lines 17 intersecting at a center or a substantial center of the surface 81 is provided. For example, the two lines 17 are perpendicular or substantially perpendicular to each other. As described above, the transportation robot 30 can run along the lines 17 or stop on the line 17 by tracing these lines 17. Note that, although the floor module 80 is the plate-like member, the floor module 80 may be solid or have a cavity inside. For example, the floor module 80 may be formed by stretching a plate-like surface member on a surface of a framework assembled in a grid pattern. Furthermore, the number of the corner portions 83 of the floor module 80 is not limited to four, and the shape of the floor module 80 in plan view is not limited to the square or the rectangle, and may be other shapes such as other polygons and circles.

As illustrated in FIGS. 4-11, 4-14, and 4-15, the rack module 2 includes the respective accommodation plugs 73 of the four support column modules 70 meeting the four corner portions 83a to 83d of the floor module 80, the respective main bodies 71 and insertion plugs 72 of the other four support column modules 70 respectively coupled to the accommodation plugs 73 of these four support column modules 70, and the one floor module 80. Note that FIGS. 4-14 and 4-15 are exploded perspective views of the rack module 2, FIG. 4-14 illustrates that the four support column modules 70 and the other four support column modules 70 are detached, and FIG. 4-15 further illustrates that the respective accommodation plugs 73 of the four support column modules 70 are detached from the floor module 80. In the rack module 2, the respective accommodation plugs 73 of the four support column modules 70 are perpendicular or substantially perpendicular to the surface 81 of the floor module 80, and respectively support the floor module 80 at the four corner portions 83a to 83d.

More specifically, in the rack module 2, the accommodation plug 73 of one support column module 70A1 among the four support column modules 70 supports the floor module 80 at the corner portion 83a of the floor module 80. More specifically, the corner portion 83a of the floor module 80 comes into contact with part of the floor reception face 76b of the floor reception part 76 of the accommodation plug 73, and the floor module 80 is supported by the support column module 70A1 at the corner portion 83a. Part of the floor reception face 76b coming into contact with the corner portion 83a of the floor module 80 is a part of the floor reception face 76b facing the one accommodation recess part 75a of the accommodation plug 73. Furthermore, the engagement protrusion part 76c of the floor reception face 76b is accommodated in a recess part (not illustrated) of the corner portion 83a of the floor module 80. Furthermore, the insertion plug 72 of one support column module 70A2 among the four other support column modules 70 is inserted in the accommodation plug 73 of the support column module 70A1, and the support column module 70A2 is coupled to the support column module 70A1.

Similarly, the respective accommodation plugs 73 of support column modules 70B1, 70C1, and 70D among the four support column modules 70 support the floor module 80 at the corner portions 83b, 83c, and 83d of the floor module 80. Furthermore, the respective insertion plugs 72 of support column modules 70B2, 70C2, and 70D2 among the other four support column modules 70 are inserted into the accommodation plugs 73 of the support column modules 70B1, 70C1, and 70D1, and the support column modules 70B2, 70C2, and 70D2 are coupled to the support column modules 70B1, 70C1, and 70D 1, respectively. Thus, each floor module 80 can be attached to the support column modules 70 from an upper side to a lower side in the z axis direction. In other words, each floor module 80 can be detached from the support column modules 70 from the lower side to the upper side in the z axis direction.

As described above, the rack module 2 includes the floor module 80, the accommodation plugs 73 of the respective support column modules 70A1, 70B1, 70C1, and 70D1 supporting the floor module 80, and the respective main bodies 71 and insertion plugs 72 of the support column modules 70A2, 70B2, 70C2, and 70D2 protruding from the surface 81 of the floor module 80. Note that the respective main bodies 71 and insertion plugs 72 of the support column modules 70A2, 70B2, 70C2, and 70D2 of the one rack module 2 are components of the rack module 2 adjacent to this rack module 2 in the rack 10. Thus, the respective main bodies 71 and insertion plugs 72 of the support column modules 70A2, 70B2, 70C2, and 70D2 of the one rack module 2 are components shared with the other rack module 2.

Furthermore, for the rack module 2 making up the lowermost floor 11 in the rack 10, support column end modules 77 illustrated in FIGS. 4-16A and 4-16B are used as members supporting the floor module 80 instead of the support column modules 70 (support column modules 70A1, 70B1, 70C1, and 70D1). The support column end module 77 is the same member as part of the accommodation plug 73 side of the support column module 70, and includes the accommodation plug 73 and the main body 78 which is part of the accommodation plug 73 side of the main body 71. An end face 78a of the main body 78 is a face which is perpendicular or substantially perpendicular to the axis a1.

Furthermore, the other floor module 80 is attached to the rack module 2 making up the uppermost floor 11 or the rack module 2 which is the uppermost part in the rack 10. That is, similar to the floor module 80 of the rack module 2, the other floor module 80 is attached to the flange parts 76a of the respective accommodation plugs 73 of the support column modules 70 (support column modules 70A2, 70B2, 70C2, and 70D2) protruding from the surface 81 of the floor module 80.

A plurality of the above-described rack modules 2 is used and assembled arbitrarily to form the rack 10. Here, a case where the rack 10 including the floors 11 of the five floors is assumed. As illustrated in FIG. 4-17, the floor modules 80 are first attached to the plurality of support column end modules 77 aligned on the floor surface from above in the z axis direction. That is, each floor module 80 is supported by the respective support column end modules 77 at the four corners. This attachment is repeated to form the floor 11 of the first floor. Subsequently, the support column modules 70 are respectively coupled to the support column end modules 77, so that the plurality of support column modules 70 vertically stand from the floor 11 of the first floor. The floor modules 80 are attached to the vertically standing support column modules 70 from above. A step of attaching the floor modules 80 to the vertically standing support column modules 70, and a step of further coupling the support column modules 70 to the support column modules 70 are repeated to assemble the floors 11 from the first floor to the fifth floor. This assembly work is performed by operators.

As illustrated in FIG. 4-18, in the step of assembling the floors 11 from the first floor to the fifth floor, the at least one floor module 80 is detached from the support column modules 70 on each floor 11 to secure a route P for the operators to go down from the floor 11 of the upper floor to the floor 11 of the lower floor. In the present embodiment, for example, the two neighboring floor modules 80 on each floor 11 are detached to allow the operators to go down to the floor 11 of the first floor from the fifth floor. In this regard, the two floor modules 80 are displaced by only a space corresponding to the one floor module 80 toward the horizontal direction between the neighboring floors 11. In the present embodiment, the displacement directions are the same on all of the floors 11 from the first floor to the fifth floor. As a result, as illustrated in FIG. 4-18, the route P is formed in a step-like shape.

When assembly of the floors 11 up to the fifth floor is completed, the operators pass the route P to go down to the floor 11 of the lower floor from the upper floor. In this case, as illustrated in FIG. 4-19, at, for example, a time when the operators go down to the floor 11 of the fourth floor, the floor modules 80 detached on the floor 11 of the fifth floor are attached to the support column modules 70. Thus, the route P is closed on the floor 11 of the fifth floor. Subsequently, as illustrated in FIG. 4-20, at a time when the operators go down to the floor 11 of the third floor from the fourth floor, the floor modules 80 detached on the floor 11 of the fourth floor are attached to the support column modules 70. As illustrated in FIG. 4-21, as a result of repeating the same work on the third floor and the second floor, too, the route P is closed on all of the floors 11. The operators go outside the rack 10 from the floor 11 of the first floor. Assembly of the rack 10 is completed in this way.

As described above, the rack 10 is assembled from the plurality of rack modules 2. More specifically, for example, the human operators repeat a process of attaching the floor modules 80 to the support column modules 70 to assemble the rack 10 including the floors 11 of a plurality of floors. At this time, the route P for the operators to go down to the floor 11 of the lower floor from the upper floor is secured. After all of the floors 11 are formed, the operators can go down to the first floor, i.e., the ground passing this route P. Consequently, large-scale equipment such as scaffolds and aerial work platforms is not required at all to assemble the rack 10. Furthermore, the route P is closed by the floor modules 80 when the operators go down to the floor 11 of the lower floor from the upper floor. Consequently, it is possible to easily assemble the rack 10.

Furthermore, assembly is easy, so that it is possible to partially form the rack 10 at a place at which the automated storage and retrieval system 1 is installed, and improve installation efficiency of the rack 10. For example, it is possible to disassemble an existing rack, and partially form the rack 10 in a space left as a result of disassembly. Furthermore, it is possible to easily increase the zone spaces S in the existing rack 10, and easily disassemble the rack 10 and easily change a layout. Consequently, when the automated storage and retrieval system 1 causes a failure, it is possible to partially disassemble the rack 10 by detaching the rack module 2, and easily and efficiently repair the automated storage and retrieval system 1. By, for example, detaching the one or more floor modules 80 stepwise on the floors 11 from the first floor to the fifth floor to form the route P in the rack 10, the operators can easily go up to the floor 11 of each floor. Consequently, it is possible to easily and efficiently maintain the automated storage and retrieval system 1.

According to the above rack 10 and assembly method of the rack 10, the route P is formed on the outermost side of the rack 10, yet may be formed, for example, inside the rack 10. Furthermore, the number of the floor modules 80 to be detached may be, for example, one or may be three or more according to the sizes of the support column modules 70 and the floor modules 80. Furthermore, positions to detach the floor modules 80 only need to be displaced between the neighboring floors 11, and displacement may correspond to, for example, the two or more floor modules 80. Furthermore, the positions to detach the floor modules 80 may not necessarily need to be displaced in the same direction between the plurality of floors 11, and may be displaced in, for example, a same first direction on the fifth floor to the third floor and in a second direction opposite to the first direction on the third floor to the first floor.

This description discloses some embodiments of the subject matter of the present disclosure, and uses examples to enable the one of ordinary skilled in the art to carry out the embodiments of the subject matter of the present disclosure including manufacturing and using an arbitrary device and system and executing an arbitrary incorporated method. The patentable scope of the subject matter of the present disclosure is defined by the claims, and may include other examples achieved by the one of ordinary skilled in the art. These other examples intend to be within the claims in a case where the other examples include components which are not different from wordings of the claims, or in a case where the other examples include equivalent components including non-substantial differences from the wordings of the claims.

[Fifth invention] Hereinafter, an embodiment of the present disclosure will be described with reference to the accompanying drawings. In all drawings, identical reference numerals are used to refer to identical or similar components. The following embodiment does not intend to limit the invention recited in the claims. Examples and features of the disclosed principal will be described in this description, yet can be changed and modified without departing from the idea and the scope of the disclosed embodiment. Furthermore, specific features, structures, or characteristics can be combined by an arbitrary appropriate method in one or more embodiments. The following detailed description is taken into account only as exemplary description, and the true range and idea are intended to be indicated by the claims.

FIG. 5-1 is a perspective view schematically illustrating an external appearance of an automated storage and retrieval system 1 according to an embodiment of the present disclosure. The automated storage and retrieval system 1 is constructed in, for example, a building 100. The building 100 includes a floor surface 101 extending along a horizontal plane, a plurality of sidewalls 102 vertically standing from the floor surface 101, and a ceiling (not illustrated) supported by the plurality of sidewalls 102. For example, the four sidewalls 102 surrounding four sides, and the ceiling extending in parallel to the floor surface 101 establish an internal space between the floor surface 101, and the sidewalls 102 and the ceiling. The automated storage and retrieval system 1 is constructed in this internal space. Note that part of the sidewalls 102 are cut out for ease of description in FIG. 5-1. In the building 100, an x axis and a y axis extending in a direction perpendicular to each other on the horizontal plane, and a z axis extending in a vertical direction and perpendicular to the x axis and the y axis are defined.

The automated storage and retrieval system 1 is an automated storage and retrieval system which can automate a series of work from warehousing and storage to delivery of items including products and the like based on centralized management. The automated storage and retrieval system 1 according to the present embodiment includes a rack 10 arranged on the floor surface 101, a plurality of storage bins 20 which are containers stored in the rack 10, a plurality of transportation robots 30 for transporting the storage bins 20, one or more picking stations 40 for picking items including products and the like contained in the storage bins 20, and a management server 50 for managing the series of work of the automated storage and retrieval system 1. At the picking station 40, a human operator 60 performs picking work of picking an item from the storage bin 20.

The rack 10 includes a plurality of floors 11, each of floors 11 defining a surface which extends in parallel to each other along each xy plane, and a plurality of support columns 12 supporting the plurality of floors 11. In the present embodiment, the floors 11 of a first floor to a ninth floor vertically standing in a z axis direction from the floor surface 101 are formed. A total height of the rack 10 from the floor surface 101 in the z axis direction can be set according to a height in the z axis direction of the ceiling of the building 100. Note that part of the floors 11 of the eighth floor and the ninth floor is omitted for ease of description in FIG. 5-1, and configurations of the floors 11 of the eighth floor and the ninth floor are configured similar to the floor 11 of the seventh floor.

FIG. 5-2 is a plan view schematically illustrating an example of a structure of the floor 11 of the rack 10 of the automated storage and retrieval system 1 according to the present embodiment. In the present embodiment, each floor 11 of the rack 10 defines a plurality of sections 13 which are aligned along the xy plane. The section 13 defines, for example, outlines of a square or a rectangle in plan view. In the present embodiment, the support columns 12 are respectively arranged at four corners of the one section 13. The one storage bin 20 occupies the one section 13. Similarly, the one transportation robot 30 occupies the one section 13. That is, an outline of the storage bin 20 and an outline of the transportation robot 30 are respectively arranged in the outline of the one section 13 in plan view. Furthermore, an interval between a pair of the mutually neighboring support columns 12 and 12 is set larger than widths of the transportation robot 30 and the storage bin 20 defined in an x axis direction and a y axis direction.

Each floor 11 defines storage areas 14 including the sections 13 in which the storage bins 20 are aligned, and movement routes 15 of the transportation robots 30 including the sections 13 other than the storage areas 14. In the present embodiment, for example, two rows of bin groups of the plurality of storage bins 20 aligned along the y axis direction are aligned in the x axis direction in the storage area 14. That is, all of the storage bins 20 making up the bin group of these two rows of the storage bins 20 face the movement routes 15 at all times. On the other hand, the transportation robots 30 can run on the movement routes 15. As described later, the transportation robot 30 can also run in the storage area 14, through a space below a bottom surface of the storage bin 20.

FIG. 5-3 is a perspective view schematically illustrating an example of a structure of the rack 10 of the automated storage and retrieval system 1 according to the embodiment. Referring to FIGS. 5-1 to 5-3 together, the rack 10 includes one or more transportation elevators 16. The transportation elevators 16 can make reciprocating movement in the z axis direction from the first floor to the ninth floor of the floors 11, and stop each floor 11. Each transportation elevator 16 is arranged in one section in the movement route 15 of the transportation robot 30 on each floor 11. In the present embodiment, the plurality of transportation elevators 16 may be provided to the rack 10. The transportation elevator 16 can have only the transportation robot 30 get thereon or have the transportation robot 30 holding the storage bin 20 get thereon to transport to each floor of the first floor to the ninth floor.

The transportation elevator 16 includes, for example, shafts of four corners attached to the rack 10 and extend in the z axis direction, four roller chains attached to the respective shafts, and extend in the z axis direction, four sprockets meshing with the respective chains, and two electric motors (both of which are not illustrated) for respectively rotating and driving, for example, the two sprockets. The sprockets mesh with the roller chains in response to rotation of the sprockets caused by the electric motors to ascend and descend the transportation elevator 16. Note that the support columns 12 making up the rack 10 may be used in place of the shafts. The above mechanism is a mere example, and an arbitrary another mechanism realizing vertical movement of the transportation elevator 16 may be used.

FIG. 5-4 schematically illustrates an example of the structure of the storage bin 20 of the automated storage and retrieval system 1 according to the embodiment. In the present embodiment, the storage bin 20 includes a bin main body 21 defining an internal space of, for example, a cuboid, and four support legs 22 extending downward from four corners of a bottom surface of the bin main body 21. The bin main body 21 includes four sidewalls 21a surrounding four sides, an opening part 21b opened along upper ends of the sidewalls 21a, and a bottom surface 21c closed along lower ends of the sidewalls 21a. Although the opening part 21b is opened in the present embodiment, the opening part 21b may be closed with, for example, a lid or a cover. The sidewalls 21a extend in parallel to, for example, the z axis. Furthermore, the bottom surface 21c extends along the xy plane. The storage bin 20 is received on the floor 11 by the four support legs 22. The storage bin 20 may be formed by, for example, a resin material. Furthermore, the storage bin 20 may be a foldable bin. An outline of the bin main body 21 in plan view is defined as a square or a rectangle. A size of the storage bin 20 is preferably set appropriately based on a size of the rack 10 or each floor 11 or a size of an item 23.

The one or more items 23 are contained in the internal space in the bin main body 21. The item 23 can be identified by, for example, a unique Stock Keeping Unit (SKU) set to the item 23. Although the item 23 is, for example, one unit of a product or the like, the item 23 may be a so-called case product packaged in a unit of a plurality of identical products. Furthermore, the one storage bin 20 may contain only the items 23 of one type, or may contain the items 23 of a plurality of types. The storage bin 20 can be identified based on a unique ID set to each storage bin 20. The unique ID of this storage bin 20 is managed in correspondence with the SKU of the item 23 contained in the storage bin 20.

FIG. 5-5 is a perspective view schematically illustrating an external appearance of the transportation robot 30 of the automated storage and retrieval system 1 according to the embodiment. In the present embodiment, a plurality of the transportation robots 30 is preferably arranged on each floor 11 of the rack 10. The transportation robot 30 is, for example, an autonomous running transportation robot including a thin housing 31 of a substantially cuboid shape. The housing 31 is formed by, for example, a resin material. The transportation robot 30 can run along a line 17 (see, for example, FIG. 5-2) by tracing the line 17 drawn on the floor 11 of the rack 10 (line tracing function). The line 17 is two strips of lines which extend passing center positions of the x axis direction and the y axis direction in, for example, each section 13, and are perpendicular to each other at a center of the section 13. These lines 17 are drawn in all of the sections 13 including the storage areas 14, the movement routes 15, and the transportation elevators 16 of the floor 11.

An upper surface of the housing 31 of the transportation robot 30 extends flat along the xy plane. A height of the transportation robot 30 is set smaller than the height of the support leg 22 of the storage bin 20. Furthermore, an outline of the housing 31 in top view is defined substantially as, for example, a square. Similarly, the length of one side of the transportation robot 30 is set smaller than the length of each side of the storage bin 20. That is, the transportation robot 30 can enter the space below the bin main body 21 from between the pair of mutually neighboring support legs 22 of the storage bin 20. In this regard, the size of the transportation robot 30 is preferably set appropriately based on sizes of the rack 10, each floor 11, and the storage bin 20.

The transportation robot 30 can change the height thereof between a first configuration where the height of the upper surface of the housing 31 is set to a first height, and a second configuration where the height is set to a second height higher than the first height. As described above, the transportation robot 30 of the first configuration can enter the space below the bin main body 21 from between the pair of mutually neighboring support legs 22 of the storage bin 20. In this case, when the transportation robot 30 changes the height of the housing 31 from the first configuration to the second configuration, the transportation robot 30 holds the storage bin 20 on the upper surface of the housing 31 as illustrated in FIG. 5-6. As a result, the storage bin 20 can be lifted from the floor 11. The transportation robot 30 can run in both of the first configuration and the second configuration. That is, the transportation robot 30 can run on the floor 11 while lifting the storage bin 20.

Back to FIG. 5-1, in the present embodiment, the picking station 40 is established along, for example, a peripheral edge of the floor 11 which continues from the surface of the floor 11 of the rack 10. That is, the picking station 40 is established in, for example, the rack 10. In the present embodiment, for example, the two picking stations 40 are provided on the floor 11 of the second floor of the rack 10. The picking station 40 is a station for picking the item 23 from the storage bin 20 transported by the transportation robot 30 from the rack 10. The operator 60 can execute picking work (delivery work) taking a standing posture on, for example, the surface of the floor 11 of the first floor. Note that details of a configuration of the picking station 40 will be described later.

The management server 50 manages all of the rack 10, the storage bins 20, the transportation robots 30, the transportation elevators 16, and the picking stations 40 for warehousing, storage, and delivery of the automated storage and retrieval system 1. This management is realized when a program stored in a storage unit is executed by a control unit as described later. More specifically, operations and processing of the transportation robots 30, the transportation elevators 16, and the picking stations 40 are executed according to information processing described in the program. That is, the information processing described in the program functions as specific means collaborated by software in correspondence with the program, and various hardware resources of the automated storage and retrieval system 1 when the program is read by the control unit.

FIG. 5-7 is a functional block diagram schematically illustrating a configuration of the management server 50. As illustrated in FIG. 5-7, the management server 50 includes a control unit 51 and a storage unit 52. The control unit 51 includes a communication control unit 511, a stock management unit 512, and a device control unit 513. On the other hand, the storage unit 52 stores a program 521, rack information 522, item information 523, bin information 524, and device information 525. The control unit 51 manages the automated storage and retrieval system 1 by executing the program 521 stored in the storage unit 52. This management server 50 may be realized on a physical server, yet may be realized on, for example, a cloud server.

The communication control unit 511 controls communication between the management server 50 and at least the transportation robot 30 and a terminal of the operator 60 at the picking station 40. A communication method may be, for example, Wi-Fi (registered trademark), Ethernet (registered trademark), light or the like. The stock management unit 512 manages a stock status of the automated storage and retrieval system 1. More specifically, the stock management unit 512 associates and manages information (SKU) for identifying each item 23, information related to the number of stocks of each item 23 specified based on the SKU, information (ID) for identifying the storage bin 20 in which the item 23 is stored, and information related to a position of the section 13 of the floor 11 in which the storage bin 20 is stored. Each of these pieces of information is stored as the rack information 522, the item information 523, and the bin information 524 in the storage unit 52.

The device control unit 513 manages and controls at least states and operations of the transportation robots 30 and the picking stations 40. More specifically, the device control unit 513 associates and manages information for identifying the transportation robot 30, information related to a current state of the transportation robot 30, i.e., a charging state of the transportation robot 30, information related to whether or not the transportation robot 30 engages in transportation, information related to order processing in which the transportation robot 30 engages in a case where the transportation robot 30 engages in the transportation, and information related to a current position of the transportation robot 30 at the floor 11 of the rack 10 or the picking station 40. The information related to the order processing includes, for example, information related to transportation of which item 23 of the order processing the transportation robot 30 engages in. Each of these pieces of information is stored as the device information 525 in the storage unit 52. Furthermore, the device control unit 513 associates and manages information for identifying the picking station 40, and information related to an order for which picking work is executed at the picking station 40. Each of these pieces of information is stored as the device information 525 in the storage unit 52.

Furthermore, the device control unit 513 generates commands for the transportation robot 30 and the transportation elevator 16 per order processed by the automated storage and retrieval system 1. More specifically, the device control unit 513 specifies the storage bin 20 for containing the item 23 designated by the order based on each of the above pieces of information, and specifies the transportation robot 30 which needs to be assigned to transport the storage bin 20. The device control unit 513 specifies a movement route R1 (referred to as a "robot route" below) of the transportation robot 30 to the section 13 in which the storage bin 20 is stored, and a movement route R2 (referred to as a "bin route" below) of the transportation robot 30 from the section 13 to the picking station 40 which is a destination. These pieces of generated information are transmitted as commands to the transportation robot 30 via the communication control unit 511.

FIG. 5-8 is a functional block diagram schematically illustrating a configuration of the transportation robot 30. As illustrated in FIG. 5-8, the transportation robot 30 includes a control unit 32 and a mechanism unit 33. The control unit 32 includes a communication control unit 321, a running control unit 322, and a lifting control unit 323. The mechanism unit 33 includes a communication unit 331, a plurality of driving wheels 332, a plurality of driving motors 333, a lifting mechanism 334, a sensor 335, and a battery 336. The control unit 32 controls an operation of the transportation robot 30 by executing a program (not illustrated) stored in the storage unit (not illustrated). The program may be stored in a physical storage unit incorporated in the transportation robot 30, yet may be stored on, for example, a cloud server.

The communication unit 331 establishes communication between at least the management server 50, the transportation elevator 16, and the terminal of the operator 60 at the picking station 40. A communication method may be, for example, Wi-Fi (registered trademark), Ethernet (registered trademark), light or the like. Communication performed by the communication unit 331 is controlled by the communication control unit 321. The driving wheel 332 is a wheel for realizing running of the transportation robot 30. The plurality of driving motors 333 drive the driving wheels 332 and the lifting mechanism 334. Driving of the driving wheels 332 is controlled by the running control unit 322. The lifting mechanism 334 establishes the above-described first configuration and second configuration by lifting the housing 31 of the transportation robot 30. An operation of this lifting mechanism 334 is controlled by the lifting control unit 323.

The sensor 335 is, for example, an optical sensor for realizing the above-described line tracing function. More specifically, the sensor 335 is used to control running of the transportation robot 30 along the line 17 by reading a boundary of the line 17 drawn on each section 13. Furthermore, although the two strips of the lines 17 and 17 cross at the center of each section 13, the sensor 335 reads the line 17 perpendicular to the line 17 along which the transportation robot 30 is running, so that the transportation robot 30 can specify the center position of each section 13. Thus, the transportation robot 30 can stop at, for example, the center position of each section 13. The battery 336 is, for example, a rechargeable battery. On each floor 11 of the rack 10, one or more charging spots (not illustrated) which enable charging of the battery 336 of the transportation robot 30 may be formed.

FIG. 5-9 is a side view of the rack 10 schematically illustrating an example of the configuration of the picking station 40 of the automated storage and retrieval system 1 according to the embodiment. FIG. 5-10 is a plan view of the rack 10 schematically illustrating the example of the configuration of the picking station 40 of the automated storage and retrieval system 1 according to the embodiment. As illustrated in FIG. 5-9, the picking station 40 is established along the peripheral edge of the floor 11 which continues from the surface of the floor 11 of the second floor of the rack 10. More specifically, the picking station 40 is formed on the surface of the floor 11 of the second floor which extends in, for example, the y axis direction toward an outer side of an outer peripheral edge of the floors 11 of the third floor to the ninth floor. In the present embodiment, similar to the floor 11 of the second floor, the floor 11 of the first floor also extends toward the outer side of the outer peripheral edges of the floors 11 of the third floor to the ninth floor. The operator 60 stands on the surface of the floor 11 of the first floor, and does work of picking the item 23 from the storage bin 20. The height of the surface of the floor 11 of the second floor is suitable for the operator 60 whose height is, for example, 165 cm which is an average height of adults to do the work.

As illustrated in FIG. 5-10, the picking station 40 defines a plurality of picking positions 41A to 41D at which the storage bins 20 used for picking work of the item 23 are arranged on the floor 11 of the second floor. In the present embodiment, the four picking positions 41A to 41D are aligned adjacent to each other in the x axis direction along the peripheral edge of the rack 10. Each of the picking positions 41A to 41D occupies the one section 13 of the floor 11. The picking positions 41A to 41D are aligned in front of the operator 60 facing the rack 10, and the picking positions 41B and 41C of the picking positions 41A to 41D directly face the operator 60. As is apparent from FIG. 5-9, no floor 11 is arranged in a space above the picking positions 41A to 41D in the z axis direction.

On the floor 11 of the second floor, for example, the two sections 13 extend toward the outer side in the y axis direction from the picking positions 41A and 41D. These four sections 13 in total define loading positions 43A to 43D at which the items 23 are loaded to shipment bins 42 which need to be shipped to clients of orders. Each of the loading positions 43A to 43D occupies the one section 13 of the floor 11. The shipment bin 42 employs the same configuration as that of the storage bin 20. According to the present embodiment, all of the loading positions 43A to 43D are aligned to a side of the operator 60 who faces the rack 10, and directly face the operator 60. Thus, as is clear from FIG. 5-10, the four picking positions 41A to 41D and the four loading positions 43A to 43D are aligned surrounding the operator 60 on the floor 11 of the second floor.

Furthermore, the sections 13 further surrounding the four picking positions 41A to 41D and the four loading positions 43A to 43D define the movement route 15 of the transportation robot 30 on the floor 11 of the second floor. Although FIG. 5-10 omits illustration of the lines 17 for ease of description, the lines 17 are drawn in all of the sections 13 in which the four picking positions 41A to 41D and the four loading positions 43A to 43D, and the movement routes 15 are formed. Thus, as indicated by arrows in FIG. 5-10, the transportation robot 30 can enter the four picking positions 41A to 41D and the four loading positions 43A to 43D from the movement routes 15. Note that the storage bin 20 is not arranged in the sections 13 forming the movement routes 15. Thus, the transportation robot 30 can transport the storage bin 20 between the storage area 14 of the rack 10 and the four picking positions 41A to 41D. On the other hand, the transportation robot 30 can transport the shipment bin 42 on which the item 23 has been loaded, to, for example, a shipping station (not illustrated) established in the rack 10.

Although the storage bins 20 are aligned on each floor 11 of the rack 10 as is apparent from FIG. 5-9, the storage bins 20 for containing the items 23 of higher inventory turnover ratios are preferably aligned on the lower floors 11. In other words, the storage bins 20 for containing the items 23 of lower inventory turnover ratios are preferably aligned in the upper floors 11. In the present embodiment, the picking stations 40 are established on the floor 11 of the second floor, and therefore the items 23 of lower inventory turnover ratios are stored on the upper floors 11 for which physical movement distances of the transportation robots 30 from the second floor are assumed to be long. Similarly, the items 23 of higher inventory turnover ratios are stored on the floors 11 which are close to the second floor and to which physical movement distances are assumed to be short, or the second floor for which the transportation elevator 16 does not need to be used.

Hereinafter, delivery processing of the automated storage and retrieval system 1 according to the embodiment of the present disclosure will be described. FIG. 5-11 is a flowchart for explaining processing of the control unit 51 of the management server 50 of the automated storage and retrieval system 1 according to the embodiment. The operator 60 starts the delivery processing by using the terminal (not illustrated). The delivery processing starts from a time when, for example, the terminal specifies an order. The specified order includes an order line including at least SKUs and the number of the ordered items 23. The order line is displayed on a display screen of the terminal of the operator 60. Note that the terminal of the operator 60 is preferably electronic device terminals including, but not limited to, a personal computer, a smartphone, a tablet terminal, and a touch panel type display and the like.

When the delivery processing is started, the device control unit 513 specifies the storage bin 20 containing each item 23 specified by the order line (step S1). More specifically, the position of the section 13 of the floor 11 storing the storage bin 20 is specified. Specifying the positions is executed for all of the items 23 specified by the order line. On the other hand, the empty shipment bin 42 used for the specified order is arranged at one of the loading positions 43A to 43D. For this arrangement, the transportation robot 30 may be used. Furthermore, as the shipment bin 42, a container such as a shipment cardboard for an orderer may be prepared in advance. The terminal of the operator 60 is notified of the loading position 43A to 43D of the empty shipment bin 42 used for the order.

The device control unit 513 selects the transportation robot 30 which is available for transportation of the specified storage bin 20 (step S2). For example, the transportation robot 30 whose physical movement distance to the specified storage bin 20 is the shortest is selected. Note that, in addition to or instead of the physical movement distance, the transportation robot 30 which is located on the same floor 11 as the floor 11 on which the specified storage bin 20 is arranged may be selected. Next, the device control unit 513 generates the robot route R1 which is a movement route from the section 13 in which the selected transportation robot 30 is currently located to the section 13 of the specified storage bin 20, and the bin route R2 which is a movement route from the section 13 of the specified storage bin 20 to one of the picking positions 41A to 41D of the picking station 40 (step S3). The device control unit 513 transmits a transportation instruction to the selected transportation robot 30 based on the generated robot route R1 and bin route R2 (step S4).

The transportation robot 30 which has received the transportation instruction moves to the specified section 13 according to the generated robot route R1. The transportation robot 30 can transmit a use request to the transportation elevator 16 to use the transportation elevator 16. The transportation robot 30 which has moved to the specified section 13 enters the space below the bottom surface 21c of the storage bin 20 according to the first configuration, and stops at the center of the section 13. The transportation robot 30 changes the configuration from the first configuration to the second configuration in response to driving of the lifting mechanism 334. Thus, the upper surface of the housing 31 of the transportation robot 30 lifts the storage bin 20, so that the transportation robot 30 holds the storage bin 20. Next, the transportation robot 30 moves to the specified picking positions 41A to 41D according to the generated bin route R2 while employing the second configuration. This movement may include movement performed by the transportation elevator 16.

The transportation robot 30 which has arrived at the specified picking positions 41A to 41D changes the configuration from the second configuration to the first configuration. The transportation robot 30 stays at this position until picking work of the item 23 is completed. This arrival of the transportation robot 30 is indirectly notified to the terminal of the operator 60 via, for example, the management server 50, or is directly notified to the terminal of the operator 60. This notification may be, for example, an indication on a display of the terminal, may be a notification using a voice, or may be a notification using projection mapping. Thus, the operator 60 picks the ordered item 23 from the storage bin 20 to load in the target shipment bin 42. When loading of the item 23 is completed, the operator 60 notifies the management server 50 of completion of loading via the terminal. The device control unit 513 which has received the notification transmits to the transportation robot 30 a transportation instruction for returning the storage bin 20 to the original section 13 in which the storage bin 20 has been arranged, based on the generated bin route R2 (step S5).

The transportation robot 30 which has received the transportation instruction changes the configuration from the first configuration to the second configuration, and lifts the storage bin 20. The transportation robot 30 transports the storage bin 20 to the original section 13 according to the bin route R2 while employing the second configuration. The transportation robot 30 which has arrived at the original section 13 changes the configuration from the second configuration to the first configuration. Thus, the storage bin 20 is returned to the original section 13. The transportation robot 30 notifies the management server 50 of that the storage bin 20 has been returned. The device control unit 513 which has received the notification completes the delivery processing of the item 23 (step S6). The device control unit 513 executes delivery processing of all of the items 23 listed in the order line specified by the order. This delivery processing of the plurality of items 23 is preferably executed simultaneously in parallel.

When loading of all of the items 23 listed in the order line is completed, the operator 60 notifies the management server 50 of completion of loading via the terminal. The device control unit 513 which has received the notification transmits a transportation instruction to the transportation robot 30 transporting the shipment bin 42 based on the movement route R3 (hereinafter referred to as a "shipping route") to the shipping station (not illustrated) provided in the rack 10 (step S7). The transportation robot 30 which has received the transportation instruction changes the configuration from the first configuration to the second configuration to lift the storage bin 20. The transportation robot 30 transports the shipment bin 42 to a destination shipping station according to the bin route R2 while employing the second configuration. When completing transportation of the shipment bin 42 to the shipping station, the transportation robot 30 notifies the management server 50 of the completion. The device control unit 513 which has received the notification completes the order processing (step S8).

According to the above automated storage and retrieval system 1, the storage bin 20 which stores the item 23 specified by the order can be transported by the transportation robot 30 from the section 13 of the floor 11 of the rack 10 to the picking station 40. Mechanisms such as conveyers and operators which transport storage bins from a rack to a picking station and which are required in a conventional system are not required. Furthermore, the plurality of storage bins 20 are aligned at the plurality of picking positions 41A to 41D of the picking station 40. Consequently, the operator 60 can execute work of simultaneously picking the item 23 from each of the plurality of these storage bins 20. Efficiency of the picking work of the item 23 substantially improves. Furthermore, the storage bin 20 from which the item 23 has been picked is returned to the rack 10, so that it is possible to replace the storage bins 20 aligned at the picking positions 41A to 41D. This also contributes to making the picking work efficient.

Furthermore, the picking station 40, that is, the picking positions 41A to 41D are defined along the peripheral edge of the floor 11 which continues from the surface of the floor 11 of the second floor of the rack 10, so that the transportation robot 30 which can run on the floor 11 can easily arrive at the picking positions 41A to 41D. Furthermore, the picking stations 40 can be provided at the peripheral edge of the surface of the floor 11 of the rack 10, so that it is possible to substantially improve the degree of freedom of arrangement of the picking stations 40. In a case where, for example, in place of the operator 60, a robot arm can perform picking work of the item 23, the picking stations 40 may be provided at the peripheral edge of the surface of the upper floor 11 of the rack 10. In this case, the robot arms which can work at the picking stations 40 provided on the upper floor 11 of the rack 10 may be incorporated in the automated storage and retrieval system 1.

Furthermore, while the storage bin 20 is received on the floor 11 by the four support legs 22, the transportation robot 30 can enter the space below the bottom surface 21c of the storage bin 20, and lift the storage bin 20. That is, the transportation robot 30 can run not only on the movement route 15 of the transportation robot 30, but also in the storage area 14 of the storage bin 20. Consequently, the degree of freedom of arrangement of the storage bins 20 on each floor 11 substantially improves.

Furthermore, the outline of the transportation robot 30 in plan view is defined on an inner side of the outline of the storage bin 20 in plan view likewise. That is, the transportation robot 30 is formed smaller than the storage bin 20 in plan view. Consequently, at, for example, the picking positions 41A to 41D of the picking station 40, the storage bin 20 can be aligned close to the neighboring storage bin 20. That is, for example, the four storage bins 20 can be aligned close to each other in front of the operator 60. Similarly, the storage bins 20 are also aligned close to each other on the rack 10, so that an arrangement density of the storage bins 20 improves.

Next, another specific example where the transportation robot 30 transports the storage bin 20 from the section 13 of the floor 11 of the rack 10 to the picking station 40 will be described below. The above-described embodiment of the present disclosure has described the example where, as illustrated in FIG. 5-2, two rows of the bin groups of the plurality of storage bins 20 aligned along the y axis direction in the one storage area 14 are aligned in the x axis direction. This example is a case where the movement routes 15 of the transportation robots 30 face all of the storage bins 20. On the other hand, hereinafter, a configuration where, for example, three rows of the bin groups of the plurality of storage bins 20 are aligned in the x axis direction as illustrated in FIG. 5-12 will be described as an example. A scene is assumed that, at a time of, for example, order processing, a storage bin 20A in the middle row in the x axis direction among the three rows of the bin groups is transported to the picking station 40 by the transportation robot 30A. Note that, for ease of description, FIG. 5-12 omits illustration of the lines 17.

As is apparent from FIG. 5-12, the storage bin 20A is adjacent to another storage bin 20 in, for example, both of the x axis direction and the y axis direction, that is, four sides along the xy plane are surrounded by the other storage bins 20. Hence, the storage bin 20A is arranged in the section 13 which does not face the movement route 15 of the transportation robot 30. At a time of transportation of the storage bin 20A, it is necessary to move, for example, a storage bin 20B arranged between the storage bin 20A and the movement route 15. That is, the storage bin 20B becomes an obstacle for transportation of the storage bin 20A. In this case, the device control unit 513 of the management server 50 transmits a transportation instruction which is based on the robot route R1 and the bin route R2 to the transportation robot 30A selected for transportation of the storage bin 20A. The transportation robot 30A having received the transportation instruction passes, for example, a space below the storage bin 20B from the movement route 15 according to the robot route R1, and stops in the space below the storage bin 20A.

On the other hand, prior to, at the same time as, or after transmission of the transportation instruction to the transportation robot 30A, the device control unit 513 transmits a movement instruction for moving the storage bin 20B to a transportation robot 30B selected to move the storage bin 20B. This movement instruction includes, for example, at least the robot route R1, and the movement route R3 from the section 13 in which the storage bin 20B is arranged to the section 13 which is not the obstacle for transportation of the storage bin 20A on the floor 11 on which the storage bin 20B is arranged. Details of the movement route R3 will be described later. The sections 13 which are not obstacles for transportation include, for example, the sections 13 which are not on the bin route R2 of the storage bin 20A. Note that the sections 13 which are not obstacles for transportation may be the sections 13 on the movement route 15, and may be sections 13 in the storage area 14. The transportation robot 30B having received the movement instruction enters and stops in, for example, a space below the storage bin 20B from the movement route 15 according to the robot route R1.

As illustrated in FIG. 5-13, the transportation robot 30B lifts the storage bin 20B, and moves to the section 13 on the movement route 15 along the movement route R3. This section 13 is the section 13 other than the sections 13 making up the bin route R2 of the transportation robot 30A. In this regard, the bin route R2 is a route which goes from the section 13 in which the storage bin 20B is arranged to the movement route 15 in the x axis direction, then is bent toward the y axis direction, and extends as indicated by, for example, an arrow. On the other hand, the movement route R3 is a route which goes from the section 13 in which the storage bin 20B is arranged to the movement route 15 in the x axis direction, and then moves by, for example, one section to the section 13 in a direction opposite to a direction in which the bin route R2 extends in the y axis direction as indicated by, for example, an arrow. The storage bin 20B moves outside from the bin route R2 in this way, so that the transportation robot 30A can transport the storage bin 20A along the bin route R2.

The transportation robot 30A lifts the storage bin 20A, and transports the storage bin 20A toward the picking station 40 along the bin route R2. Note that the transportation robots 30A and 30B may simultaneously perform transmission and movement, or, after the transportation robot 30B moves, the transportation robot 30A may perform transportation. In the former case, for example, the device control unit 513 simultaneously transmits respectively to the transportation robots 30A and 30B instructions for executing transportation of the storage bin 20A along the bin route R2 and movement of the storage bin 20B along the movement route R3. In the latter case, for example, reception of a notification from the device control unit 513 that completion of movement of the storage bin 20B to an outside of the bin route R2 has been confirmed may trigger start of transportation of the storage bin 20A.

When confirming that the transportation robot 30A and the storage bin 20A have passed the original section 13 in which the storage bin 20B has been arranged, the transportation robot 30B executes work of returning the storage bin 20B lifted by the transportation robot 30B. More specifically, the storage bin 20B is moved not to the original section 13 in which the storage bin 20B has been arranged, but to the section 13 which is empty after the storage bin 20A is transported. Start of this work of moving the storage bin 20B may be triggered by, for example, reception of a notification from the device control unit 513 that that the transportation robot 30A transporting the storage bin 20A has passed at least the original section 13 of the storage bin 20B has been confirmed. Subsequently, the storage bin 20A from which picking work of the item 23 has been completed at the picking station 40 is returned to, for example, the section 13 in which the storage bin 20B has been stored.

In the above-described specific example, even in a case where three or more rows of the bin groups including the plurality of storage bins 20 are aligned on the floor 11, it is possible to easily transport the target storage bin 20A by using the transportation robot 30 and moving the storage bin 20B obstructive for transportation of the target storage bin 20A. As long as, for example, part of the movement route 15 of the transportation robot 30 is secured, a plurality of rows equal to or more than three rows of the storage bins 20 may be aligned. That is, as long as there is the section 13 for temporarily retracting the obstructive storage bin 20B, a minimum number of the sections 13 which need to be allocated to the movement route 15 may be set. In this way, it is possible to increase an arrangement density of the storage bins 20 on the floors 11 of the rack 10. In other words, it is possible to substantially improve containing efficiency of the storage bins 20.

Moreover, the transportation robot 30 can enter the space below the storage bin 20 from between the pair of adjacent support legs 22 of the storage bin 20, and consequently can arrive at the space below the storage bin 20A irrespectively of presence of the obstructive storage bin 20B. As a result, it is possible to simultaneously move the storage bins 20A and 20B by, for example, using the plurality of transportation robots 30. A decrease in transportation efficiency of the storage bins 20 is suppressed. Note that, in a case where, for example, there is the plurality of obstructive storage bins 20B at a time of transportation of the target storage bin 20A, it is possible to realize simultaneous movement of the storage bins 20 by using the transportation robots 30 the number of which corresponds to the number of the multiple storage bins 20B. Note that, although the one transportation robot 30 of each storage bin 20 is used in the above-described specific example, for example, the transportation robots 30 the number of which is smaller than the number of the storage bins 20 may execute the above work.

The above-described specific example has described the example where the storage bin 20B obstructive for transportation of the storage bin 20A is moved to the section 13 on the movement route 15 of the transportation robot 30. However, as illustrated in FIG. 5-5-14, one or more retracted positions 14A to which the obstructive storage bins 20 are temporarily retracted may be provided in the section 13 outside the movement route 15 such as an inside of the storage area 14. In this example, the retracted positions 14A are defined in the one section 13 in the storage area 14 facing the movement route 15. These retracted positions 14A may be defined at, for example, predetermined intervals in the section 13 of the storage area 14 facing the movement route 15. The presence of the retracted positions 14A makes it possible to temporarily retract the storage bins 20B obstructive for transportation to the retracted positions 14A, and does not disturb movement of the other transportation robots 30 moving on the movement route 15.

Next, a scene is assumed that the operator 60 is not working on picking work of the item 23 at the picking station in the above automated storage and retrieval system 1. A non-operation time of this picking work is a night time. This situation is, for example, a situation that the operator 60 is not at the picking station 40, and picking work or loading work of the item 23 is not performed at the picking station 40. The management server 50 stores, for example, information related to an order to be processed in future in the storage unit 52. These pieces of information include, for example, information such as SKUs, the numbers, and the like of the items 23 per order. In this example, at a night time which is a non-operation time of picking work, work of rearranging the storage bins 20 containing the items 23 which are necessary for picking work next day is performed in the rack 10 based on, for example, information of orders which need to be processed next day.

More specifically, the one or more storage bins 20 containing the one or more items 23 which are necessary for the orders which need to be processed next day are aligned in advance near the picking station 40 at the night time. Although the picking stations 40 are formed along the peripheral edge of the floor 11 continuing from the floor 11 of the second floor as described above, the word "near" is, for example, a concept including the floor 11 of the second floor or the floors 11 such as the first floor, the third floor, and the fourth floor relatively close to the second floor. That is, the storage bin 20 is moved from the section 13 of the floor 11 arranged at this time at a night time at which picking work is finished to the section 13 of the floor 11 having a shorter movement distance to the picking station 40. Furthermore, a shorter movement distance of the storage bin 20 to the picking station 40 is set as an order of picking work of the item 23 performed at the picking station 40 after picking work is started becomes earlier next day.

According to this configuration, at a non-operation time of picking work such as a night time, for example, the storage bins 20 for which picking work is scheduled next day are aligned near the picking stations 40 in advance in the rack 10. Moreover, as the order of picking work of the item 23 becomes earlier, the storage bin 20 is aligned closer to the picking station 40. Consequently, after picking work of the item 23 starts next day, the necessary storage bin 20 is quickly and smoothly transported to the picking station 40. As a result, efficiency of the picking work substantially improves. Moreover, these series of work are executed by the transportation robots 30 based on instructions from the device control unit 513, so that work of the operator 60 is not required at all. That is, it is possible to automatically execute rearrangement work of the storage bins 20 in the automated storage and retrieval system 1.

This description discloses some embodiments of the subject matter of the present disclosure, and uses examples to enable the one of ordinary skilled in the art to carry out the embodiments of the subject matter of the present disclosure including manufacturing and using an arbitrary device and system and executing an arbitrary incorporated method. The patentable scope of the subject matter of the present disclosure is defined by the claims, and may include other examples achieved by the one of ordinary skilled in the art. These other examples intend to be within the claims in a case where the other examples include components which are not different from wordings of the claims, or in a case where the other examples include equivalent components including non-substantial differences from the wordings of the claims.

[Sixth invention] Hereinafter, an embodiment of the present disclosure will be described with reference to the accompanying drawings. In all drawings, identical reference numerals are used to refer to identical or similar constituent elements. The following embodiment does not intend to limit the disclosure recited in the claims. Examples and features of the disclosed principal will be described in the present specification, yet can be changed and modified without departing from the idea and the scope of the disclosed embodiment. Furthermore, specific features, structures or characteristics can be combined by an arbitrary appropriate method in one or more embodiments. The following detailed description is taken into account only as exemplary description, and the true range and idea are intended to be indicated by the claims.

FIG. 6-1 is a perspective view schematically illustrating an external appearance of a warehouse system 1 to which a transportation robot control system for a warehouse system 3 according to an embodiment of the present disclosure is applied. The warehouse system 1 is constructed in, for example, a building 100. The building 100 includes a floor surface 101 extending along a horizontal plane, a plurality of sidewalls 102 vertically standing from the floor surface 101 and a ceiling (not illustrated) supported by the sidewalls 102. For example, the four sidewalls 102 surrounding four sides and the ceiling extending in parallel to the floor surface 101 establish an internal space with the floor surface 101. The warehouse system 1 is constructed in this internal space. Note that part of the sidewalls 102 are cut out for ease of description in FIG. 6-1. In the building 100, an x axis and a y axis extending in directions perpendicular to each other on the horizontal plane and a z axis extending in a vertical direction and perpendicular to the x axis and the y axis are defined.

The warehouse system 1 is a warehouse system which can automate a series of work from the warehousing to the storage and delivery of items including products and the like based on centralized management. The warehouse system 1 in the present example includes a rack 10 arranged on the floor surface 101, a plurality of storage bins 20 which are containers stored in the rack 10, a plurality of transportation robots 30 for transporting the storage bins 20, one or more picking stations 40 for picking items including products and the like contained in the storage bins 20 and a management server 50 for managing the series of work in the warehouse system 1. At the picking station 40, a human operator 60 performs picking work for picking an item from the storage bin 20.

The rack 10 includes a plurality of floors 11, each of floors 11 defining a surface which extends in parallel to each other along each xy plane, and a plurality of support columns 12 supporting the plurality of floors 11. In the present example, the floors 11 of a first floor to a ninth floor vertically standing in an x axis direction from the floor surface 101 are formed. A total height of the rack 10 from the floor surface 101 in the x axis direction can be set according to a height in the z axis direction of the ceiling of the building 100. Note that part of the floors 11 of the eighth floor and the ninth floor is omitted in FIG. 6-1 for explanatory convenience, and configurations of the floors 11 of the eighth floor and the ninth floor are configured similar to the floor 11 of the seventh floor.

FIG. 6-2 is a top view schematically illustrating an example of a structure of the floor 11 of the rack 10 in the warehouse system 1 in the present example. In the present example, each floor 11 of the rack 10 defines a plurality of sections 13 which are aligned along the xy plane. The section 13 defines, for example, outlines of a square or a rectangle in plan view. In the present example, the support columns 12 are respectively arranged at the four corners of one section 13. The one storage bin 20 occupies one section 13. Similarly, the one transportation robot 30 occupies the one section 13. That is, an outline of the storage bin 20 and an outline of the transportation robot 30 are respectively arranged in the outline of the one section 13 in plan view. Furthermore, an interval between a pair of the mutually neighboring support columns 12 is set larger than widths of the transportation robot 30 and the storage bin 20 defined in the x axis direction and a y axis direction.

Each floor 11 defines storage areas 14 including the sections 13 in which the storage bins 20 are aligned, and movement passages 15 of the transportation robots 30 including the sections 13 other than the storage areas 14. In the illustrated example, for example, two rows of bin groups of the plurality of storage bins 20 aligned along the y axis direction are aligned in the x axis direction in the storage area 14. That is, all of the storage bins 20 making up the bin group of these two rows of the storage bins 20 face the movement passages 15 at all times. On the other hand, the transportation robots 30 can run on the movement passages 14. As described later, the transportation robot 30 can also run in the storage area 14 through a space below the bottom surface of the storage bin 20.

FIG. 6-3 is a perspective view schematically illustrating an example of a structure of the rack 10 in the warehouse system 1 in the present example. Referring to FIGS. 6-1 to 6-3 together, the rack 10 includes one or more transportation elevators 16. The transportation elevators 16 can make reciprocating movement in the z axis direction from the first floor to the ninth floor of the floors 11, and stop each floor 11. Each transportation elevator 16 is arranged in one section in the movement passage 15 of the transportation robot 30 on each floor 11. In the present embodiment, the plurality of transportation elevators 16 may be provided to the rack 10. The transportation elevator 16 can have only the transportation robot 30 get thereon or have the transportation robot 30 holding the storage bin 20 get thereon to move to each floor of the first floor to the ninth floor.

The transportation elevator 16 includes, for example, shafts of four corners attached to the rack 10 and extend in the z axis direction, four roller chains attached to the respective shafts, and extend in the z axis direction, four sprockets enmeshing with the respective chains, and two electric motors (both of which are not illustrated) for respectively rotating and driving, for example, the two sprockets. The sprockets enmesh with the roller chains in response to rotation of the sprockets caused by the power of electric motors to ascend and descend the transportation elevator 16. Note that the shafts may be formed by the support columns 12 of the rack 10. The above mechanism is a mere example, and an arbitrary another mechanism realizing vertical movement of the transportation elevator 16 may be used.

FIG. 6-4 schematically illustrates an example of the structure of the storage bin 20 of the warehouse system 1 in the present example. In the present example, the storage bin 20 includes a bin main body 21 defining an internal space of, for example, a cuboid, and four support legs 22 extending downward from four corners of a bottom surface of the bin main body 21. The bin main body 21 includes four sidewalls 21a surrounding four sides, an opening part 21b opened along upper ends of the sidewalls 21a, and a bottom surface 21c closed along lower ends of the sidewalls 21a. Although the opening part 21b is opened in the present example, the opening part 21b may be closed with, for example, a lid or a cover. The sidewalls 21a extend along the xz plane or the yz plane. Furthermore, the bottom surface 21c extends along the xy plane. The storage bin 20 is in contact with the floor 11 with the four support legs 22. The storage bin 20 may be formed by, for example, a resin material. Furthermore, the storage bin 20 may be a foldable bin. A size of the storage bin 20 is preferably set appropriately based on a size of the rack 10 or each floor 11 or a size of an item 23.

The one or more items 23 are contained in the internal space in the bin main body 21. The item 23 can be identified by, for example, a unique Stock Keeping Unit (SKU) set to the item 23. Although the item 23 is, for example, one unit of a product or the like, the item 23 may be a so-called case product packaged in a unit of a plurality of identical products. Furthermore, the one storage bin 20 may contain only the items 23 of one type, or may contain the items 23 of a plurality of types. The storage bin 20 can be identified based on a unique ID set to each storage bin 20. The unique ID of this storage bin 20 is managed in correspondence with the SKU of the item 23 contained in the storage bin 20.

FIG. 6-5 is a perspective view schematically illustrating an external appearance of the transportation robot 30 in the warehouse system 1 in the present example. In the present example, a plurality of the transportation robots 30 is preferably arranged on each floor 11 of the rack 10. The transportation robot 30 is, for example, an autonomous running transportation robot including a thin housing 31 of a substantially cuboid shape. The housing 31 is formed by, for example, a resin material. The transportation robot 30 can run along a line 17 (see, for example, FIG. 6-2) by tracing the line 17 drawn on the floor 11 of the rack 10 (line tracing function). The line 17 is lines of two directions which extend passing center positions of the x axis direction and the y axis direction in, for example, each section 13, and are perpendicular to each other at a center of the section 13. These lines 17 are drawn in all of the sections 13 including the storage areas 14, the movement passages 15, and the transportation elevators 16 of the floor 11.

An upper surface of the housing 31 of the transportation robot 30 extends flat along the xy plane. A height of the transportation robot 30 is set smaller than the height of the support leg 22 of the storage bin 20. Furthermore, an outline of the housing 31 in top view is defined substantially as, for example, a square. Similarly, the length of one side of the transportation robot 30 is set smaller than the length of each side of the storage bin 20. That is, the transportation robot 30 can enter the space below the bin main body 21 from between the pair of mutually neighboring support legs 22 of the storage bin 20. In this regard, the size of the transportation robot 30 is preferably set appropriately based on sizes of the rack 10, each floor 11, and the storage bin 20.

The transportation robot 30 can change the height thereof between a first configuration where the height of the upper surface of the housing 31 is set to a first height, and a second configuration where the height is set to a second height higher than the first height. As described above, the transportation robot 30 of the first configuration can enter the space below the bin main body 21 from between the pair of mutually neighboring support legs 22 of the storage bin 20. In this case, when the transportation robot 30 changes the height of the housing 31 from the first configuration to the second configuration, the transportation robot 30 holds the storage bin 20 on the upper surface of the housing 31 as illustrated in FIG. 6-6. As a result, the storage bin 20 can be lifted from the floor 11. The transportation robot 30 can run in both of the first configuration and the second configuration. That is, the transportation robot 30 can run on the floor 11 while lifting the storage bin 20.

Back to FIG. 6-1, in the present example, the picking stations 40 are established along, for example, the peripheral edge of the surface of the floor 11 of the rack 10. That is, the picking station 40 is established in, for example, the rack 10. In the present example, for example, the two picking stations 40 are established on the floor 11 of the second floor of the rack 10. The picking station 40 is a station for picking the item 23 from the storage bin 20 transported by the transportation robot 30 from the rack 10. The operator 60 can execute picking work (delivery work) taking a standing posture on, for example, the surface of the floor 11 of the first floor.

The management server 50 manages all of the rack 10, the storage bins 20, the transportation robots 30, the transportation elevators 16, and the picking stations 40 for warehousing, storage, and delivery of the warehouse system 1. This management is realized when a program stored in a storage unit is executed by a control unit as described later. More specifically, operations and processing of the transportation robots 30, the transportation elevators 16, and the picking stations 40 are executed according to information processing described in the program. That is, the information processing described in the program functions as specific means collaborated by software in correspondence with the program, and various hardware resources of the warehouse system 1 when the program is read by the control unit.

FIG. 6-7 is a functional block diagram schematically illustrating a configuration of the management server 50 which forms part of the transportation robot control system for a warehouse system 3 according to the embodiment of the present disclosure. As illustrated in FIG. 6-7, the management server 50 includes a control unit 51 and a storage unit 52. The control unit 51 includes a communication control unit 511, a stock management unit 512, and a device control unit 513. On the other hand, the storage unit 52 stores a program 521, rack information 522, item information 523, bin information 524, and device information 525. The control unit 51 manages the warehouse system 1 by executing the program 521 stored in the storage unit 52. This management server 50 may be realized on a physical server, yet may be realized on, for example, a cloud server.

The communication control unit 511 controls communication between the management server 50 and at least the transportation robot 30 and the terminal of the operator 60 for the picking station 40. A communication method may be, for example, Wi-Fi (registered trademark), Ethernet (registered trademark), Thread, light or the like. The stock management unit 512 manages the stock status of the warehouse system 1. More specifically, the stock management unit 512 associates and manages information (SKU) for identifying each item 23, information related to the number of stocks of each item 23 specified based on the SKU, information (ID) for identifying the storage bin 20 in which the item 23 is stored, and information related to a position of the section 13 of the floor 11 in which the storage bin 20 is stored. Each of these pieces of information is stored as the rack information 522, the item information 523, and the bin information 524 in the storage unit 52.

The device control unit 513 manages and controls at least states and operations of the transportation robots 30 and the picking stations 40. More specifically, the device control unit 513 associates and manages information (robot ID) for identifying the transportation robot 30, information related to a current state of the transportation robot 30, i.e., a charging state of the transportation robot 30, information related to whether or not the transportation robot 30 engages in transportation, information (hereinafter also referred to as "order processing information") related to order processing in which the transportation robot 30 engages in a case where the transportation robot 30 engages in the transportation, and information related to a current position of the transportation robot 30 at the floor 11 of the rack 10 or the picking station 40. The information related to the order processing includes, for example, information related to transportation of which item 23 of the order processing the transportation robot 30 engages in. Each of these pieces of information is stored as the device information 525 in the storage unit 52. Furthermore, the device control unit 513 associates and manages information for identifying the picking station 40, and information related to an order for which picking work is executed at the picking station 40. Each of these pieces of information is stored as the device information 525 in the storage unit 52.

Furthermore, the device control unit 513 generates commands for the transportation robot 30 and the transportation elevator 16 per order processed by the warehouse system 1. More specifically, the device control unit 513 specifies the storage bin 20 for containing the item 23 designated by the order based on each of the above pieces of information, and specifies the transportation robot 30 which needs to be assigned to transport the storage bin 20. The device control unit 513 specifies a movement passage R1 (referred to as a "robot passage" below) of the transportation robot 30 to the section 13 in which the storage bin 20 is stored, and a movement passage R2 (referred to as a "bin passage" below) of the transportation robot 30 from the section 13 to the picking station 40 which is a destination. These pieces of generated information are transmitted as commands to the transportation robot 30 via the communication control unit 511.

FIG. 6-8 is a functional block diagram schematically illustrating a configuration of the transportation robot 30 which forms part of the transportation robot control system for a warehouse system 3 according to the embodiment of the present disclosure. As illustrated in FIG. 6-8, the transportation robot 30 includes a control unit 32, a mechanism unit 33 and a storage unit 34. The control unit 32 includes a communication control unit 321, a running control unit 322 and a raising/lowering control unit 323. The mechanism unit 33 includes a communication unit 331, a plurality of driving wheels 332, a plurality of driving motors 333, a raising/lowering mechanism 334, a sensor 335 and a battery 336. The control unit 32 controls an operation of the transportation robot 30 by executing a program (not illustrated) stored in the storage unit 34. Although the program may be stored in a physical storage unit incorporated in the transportation robot 30, yet may be stored on, for example, a cloud server.

The communication unit 331 establishes communication between at least the management server 50, the transportation elevator 16 and the terminal of the operator 60 for the picking station 40. A communication method may be, for example, Wi-Fi (registered trademark), Ethernet (registered trademark), Thread, light or the like. The communication performed through the communication unit 331 is controlled by the communication control unit 321. The driving wheel 332 is a wheel for realizing the running of the transportation robot 30. A plurality of driving motors 333 drive the driving wheels 332 and the raising/lowering mechanism 334. The driving of the driving wheels 332 is controlled by the running control unit 322. The raising/lowering mechanism 334 establishes the first configuration and the second configuration described above by raising and lowering the housing 31 of the transportation robot 30. The operation of the raising/lowering mechanism 334 is controlled by the raising/lowering control unit 323.

The sensor 335 is, for example, an optical sensor for realizing the line tracing function described previously. More specifically, the sensor 335 is used to control the running of the transportation robot 30 along the line 17 by reading a boundary of the line 17 drawn in each section 13. Furthermore, although two strips of the lines 17 cross at the center of each section 13, the sensor 335 reads the line 17 perpendicular to the line 17 along which the transportation robot 30 is running, and thus the transportation robot 30 can identify the center position of each section 13. In this way, the transportation robot 30 can stop at, for example, the center position of each section 13. The movement of the transportation robot 30 is controlled by the running control unit 322 based on information from the sensor 335. In the warehouse system 1, the transportation robot control system 3 which serves as the transportation robot control system for a warehouse system according to the embodiment of the present disclosure is provided, and thus the transportation robots 30 are also controlled by the transportation robot control system 3. The battery 336 is, for example, a rechargeable battery. On each floor 11 of the rack 10, one or more charging spots (not illustrated) may be formed which enable charging of the battery 336 of the transportation robot 30 may be formed.

The transportation robot control system for a warehouse system 3 according to the embodiment of the present disclosure (hereinafter simply referred to as the "transportation robot control system 3") will then be described. FIG. 6-9 is a functional block diagram schematically illustrating a configuration of the transportation robot control system 3.

The transportation robot control system 3 is a transportation robot control system for a warehouse system that stores items in a rack and includes a plurality of transportation robots for transporting the items stored, and controls, for example, the transportation robots 30 in the warehouse system 1 described above. The transportation robot control system 3 includes: a plurality of transportation robots 30, a central wireless communication unit 200 configured to be able to wirelessly communicate with the transportation robots 30 in a specific region of the warehouse system 1; an individual wireless communication unit 210 configured to be able to wirelessly communicate with the transportation robots 30; and individual control units 220 that respectively control the movements of the transportation robots 30. The individual wireless communication unit 210 includes information reading units 211 that are respectively provided in the transportation robots 30 and a plurality of information holding units 212 that are arranged in the rack 2. Each of the information holding units 212 holds position information indicating a position in the rack 2, at the position, the information holding unit 212 is arranged. The configuration of the transportation robot control system 3 will be specifically described below.

As illustrated in FIG. 6-9, the transportation robot control system 3 includes, for example, a central control unit 230 for controlling the basic movements of the transportation robots 30 in the warehouse system 1, and the transportation robot control system 3 also includes, for example, mutual wireless communication units 240 which allow each of the transportation robots 30 to wirelessly communicate with the other transportation robots 30. The mutual wireless communication unit 240 allows one of the transportation robots 30 to wirelessly communicate with the other transportation robots 30. The mutual wireless communication unit 240 can wirelessly communicate with the other mutual wireless communication units 240 in a predetermined range. A method for wireless communication between the mutual wireless communication units 240 may be Bluetooth (registered trademark), Wi-Fi (registered trademark), Ethernet (registered trademark), Thread, light or the like.

As illustrated in FIG. 6-7, the central wireless communication unit 200 is formed in the communication control unit 511 of the control unit 51 in the management server 50, and can wirelessly communicate with the transportation robots 30 in the warehouse system 1. As illustrated in FIG. 6-7, the central control unit 230 is formed in the device control unit 513 of the control unit 51 in the management server 50 to control the transportation robots 30 in the warehouse system 1 by wireless communication from the central wireless communication unit 200. As described above, the central wireless communication unit 200 can wirelessly communicate with the transportation robots 30 in the specific region of the warehouse system 1. For example, the central wireless communication unit 200 can wirelessly communicate with the transportation robots 30 in the picking stations 40. The specific region in which the central wireless communication unit 200 can wirelessly communicate with the transportation robots 30 is not limited to the picking stations 40, and may be another region. The transportation robot control system 3 may include a plurality of central wireless communication units 200, and in the warehouse system 1, a plurality of central wireless communication units 200 may be provided.

As illustrated in FIG. 6-8, the information reading unit 211 of the individual wireless communication unit 210 is formed in the communication unit 331 of the mechanism unit 33 included in each of the transportation robots 30, and the mutual wireless communication unit 240 is likewise formed in the communication unit 331 of the mechanism unit 33 included in each of the transportation robots 30. As illustrated in FIG. 6-8, the individual control unit 220 is formed in the running control unit 322 of the control unit 32 included in each of the transportation robots 30.

The individual wireless communication unit 210 includes a plurality of information holding units 212. For example, the individual wireless communication unit 210 includes a sufficient number of information holding units 212 which are uniformly distributed on the floors 11 in the rack 2, and the information holding units 212 are uniformly distributed on the floors 11 in the rack 2. For example, the information holding units 212 are provided in all the sections 13 of the rack 2. In the present embodiment, one information holding unit 212 is embedded in the center of each of the sections 13. The form of the arrangement of the information holding units 212 may be another form.

When each of the information reading units 211 approaches the vicinity of the information holding unit 212, the information reading unit 211 establishes wireless communication with the information holding unit 212 to be able to read information held by the information holding unit 212. For example, when the information reading unit 211 is in a predetermined range around the information holding unit 212, the information reading unit 211 can read the information of the information holding unit 212. In this way, the information reading unit 211 can recognize the position in which the transportation robot 30 incorporating the information reading unit 211 is present, and each of the transportation robots 30 can grasp the position thereof in the warehouse system 1. In the rack 2, the predetermined range of one of the information holding units 212 does not overlap the predetermined ranges of the other information holding units 212, and the predetermined ranges of the information holding units 212 do not overlap each other. The position information read by the information reading unit 211 is stored in the storage unit 34 of the transportation robot 30 to be controlled (transportation robot 3 which is the object of the control by the individual control unit 220) for a predetermined period or only a predetermined number of pieces of position information read by the information reading unit 211 are stored therein. The position information is stored in the storage unit 34 together with information indicating an order in which pieces of position information are read by the information reading unit 211. In this way, the individual control unit 220 can grasp the current position of the transportation robot 30 which is moving. The individual control unit 220 can also grasp the positions through which the transportation robot 30 has moved.

The individual wireless communication unit 210 is, for example, an RFID, the information reading unit 211 is an RFID reader and the information holding unit 212 is a RF tag. In the information holding unit 212, as described above, the position information is stored that indicates the position in the rack 2 in which the information holding unit 212 is arranged. For example, each of the sections 13 on each of the floors 11 is identified by the floor number of the floor 11, a number in the x axis direction and a number in the y axis direction (address), and each of the information holding units 212 stores, as the position information, the information indicating the floor number of the floor 11 on which the information holding unit 212 is provided and the information (address information) indicating the number in the x axis direction and the number in the y axis direction in the section 13. The individual wireless communication unit 210 is not limited to RFID. For example, the information holding unit 212 of the individual wireless communication unit 210 may be a QR code, and the information reading unit 211 may be a QR code reader. The information holding unit 212 of the individual wireless communication unit 210 is not limited as long as the information holding unit 212 can transmit the position information of the information holding unit 212 in the rack 2 as described previously, and the information reading unit 211 is also not limited as long as the information reading unit 211 can receive the information transmitted by the information holding unit 212.

The basic movement of each of the transportation robots 30 in the warehouse system 1 is controlled by the central control unit 230 in the management server 50 and the individual control unit 220 of the running control unit 220 in each of the transportation robots 30. The basic movement of each of the transportation robots 30 in the warehouse system 1 is controlled based on information from the line sensor 335 which traces the lines 17 provided on each of the floors 11 and the position information read from the information holding units 212 by the information reading units 211. The control of the basic movement of each of the transportation robots 30 in the warehouse system 1 will be described below.

The central control unit 230 identifies, based on the information stored in the storage unit 52, the storage bin 20 which stores the item 23 specified by each order, and identifies the transportation robot 30 which needs to be assigned to transport the identified storage bin 20. Then, the central control unit 230 identifies: the robot route R1 (movement route) of the identified transportation robot up to the section 13 in which the identified storage bin 20 is stored; and the bin route R2 (movement route) of the transportation robot 30 from the section 13 in which the identified storage bin 20 is stored to the picking station 40 serving as a destination. In order to identify them, the central control unit 230 refers to, for example, information indicating the order (order information), information for identifying the transportation robot 30 (robot ID), information on the charging state of the transportation robot 30, information on whether or not the transportation robot 30 performs transportation, information on order processing performed by the transportation robot 30 when the transportation robot 30 performs transportation, information on the current position of the transportation robot 30 on the floor 11 in the rack 10 or at the picking station 40 and the like.

The central control unit 230 generates individual route information R indicating the robot route R1 and the bin route R2 serving as the movement route of the transportation robot 30 identified for the order information, and transmits the generated individual route information R via the central wireless communication unit 200 to the communication unit 331 of the identified transportation robot 30. The individual route information R includes information indicating the identified storage bin 20 and the information (robot ID) indicating the identified transportation robot 30, and the communication control unit 511 identifies, based on the robot ID indicating the identified transportation robot 30, the transportation robot 30 to which the individual route information R is transmitted and transmits, with the central wireless communication unit 200, the individual route information R to the communication unit 331 of the identified transportation robot 30. When the identified transportation robot 30 is in the picking station 40 serving as a region in which the central wireless communication unit 200 can perform wireless communication, the central wireless communication unit 200 transmits the individual route information R to the communication unit 331 of the identified transportation robot 30.

When the communication unit 331 of the transportation robot 30 receives the individual route information R, the individual control unit 220 of the running control unit 322 in the transportation robot 30 controls the driving motors 333 of the mechanism unit 33 based on the received individual route information R (information of the robot route R1), and thereby drives the driving wheels 332 to move the transportation robot 30 along the robot route R1 included in the individual route information R. The individual control unit 220 controls the driving motors 333 of the mechanism unit 33 such that the lines 17 provided on the floor 11 trace the sensor 335, and thus the movement of the transportation robot 30 is controlled. The individual control unit 220 also grasps the current position of the transportation robot 30 based on the latest position information read by the information reading unit 211 of the transportation robot 30, and controls the driving motors 333 of the mechanism unit 33 such that the transportation robot 30 moves along the robot route R1. In this way, the transportation robot 30 moves to the section 13 at the end of the robot route R1 of the received individual route information R. When the transportation robot 30 arrives at this section 13 serving as a stopping point, the transportation robot 30 moves up the raising/lowering mechanism 334 by the control of the driving motors 333 performed by the raising/lowering control unit 323, and thus the housing 31 is lifted from the first height to the second height, with the result that the first configuration is changed to the second configuration. In this way, the transportation robot 30 lifts the identified storage bin 20.

Then, the individual control unit 322 of the transportation robot 30 controls the driving motors 333 of the mechanism unit 33 based on the received individual route information R (information of the bin route R2), and thereby drives the driving wheels 332 to move the transportation robot 30 along the bin route R2 included in the individual route information. The individual control unit 220 controls the driving motors 333 of the mechanism unit 33 such that the lines 17 provided on the floor 11 trace the sensor 335, and thus the movement of the transportation robot 30 is controlled. The individual control unit 220 also grasps the current position of the transportation robot 30 based on the latest position information read by the information reading unit 211 of the transportation robot 30, and controls the driving motors 333 of the mechanism unit 33 such that the transportation robot 30 moves along the bin route R2. In this way, the transportation robot 30 moves to the picking station 40 serving as the destination indicated by the bin route R2 of the received individual route information R. When the transportation robot 30 arrives at the picking station 40 serving as the destination, the transportation robot 30 lowers the raising/lowering mechanism 334 by the control of the driving motors 333 performed by the raising/lowering control unit 323, and thus the housing 31 is lowered from the second height to the first height, with the result that the second configuration is changed to the first configuration. In this way, the storage bin 20 is placed on the picking station 40, and thus the transportation robot 30 can move in a single state where the storage bin 20 is not loaded.

As described above, each of the transportation robots 30 is controlled by the individual control unit 220 of the running control unit 220 based on the individual route information R transmitted from the central wireless communication unit 200 of the management server 50, the information from the sensor 335 and the position information read by the information reading unit 211, and thereby moves to the section 13 in which the storage bin 20 for each order is stored, with the result that the transportation robot 30 loads the storage bin 20 for the order to carry it to the picking station 40. As described above, the basic movement of the transportation robot 30 is controlled. The individual route information R is not limited to the information which includes the robot route R1 and the bin route R2 indicating the stopping point and the destination, and may be information which includes one of the robot route R1 and the bin route R2 or information which includes various combinations of the robot route R1 and the bin route R2. The form of the basic movement of the transportation robot 30 is not limited to the form described above.

As described above, in the transportation robot control system 3, the control of the basic movement of the transportation robot 30 in the warehouse system 1 is performed based on only the information included in the transportation robot 30, that is, the information stored in the storage unit 34 of the transportation robot 30 and the information read from the information holding unit 212 in the rack 2 by the information reading unit 211 of the transportation robot 30. Hence, while the control of the basic movement of the transportation robot 30 is being performed, the transmission of the information of the central wireless communication unit 200 in the management server 50 is not needed. In this way, it is possible to reduce the amount of communication from the management server 50 to each of the transportation robots 30. Since the control of the basic movement of the transportation robot 30 requires only wireless communication between the information reading unit 211 and the information holding unit 212 which are close to each other, it is possible to prevent a failure to receive wireless information for the control of the movement depending on the position in the warehouse system 1. In this way, it is possible to control a large number of transportation robots 30 by wireless communication stably with high reliability.

When the information reading unit 211 and the information holding unit 212 for the mutual wireless communication unit 240 are assumed to be respectively a RFID reader and a RFID tag, it is possible to further increase the speed of wireless communication between the information reading unit 211 and the information holding unit 212, and even when the speed of the movement of the transportation robot 30 is further increased, it is possible to achieve stable and highly reliable control.

As described above, the individual control unit 220 controls the basic movement of the transportation robot 30 (hereinafter also referred to as the "transportation robot to be controlled") being the object of the control in which the individual control unit 220 is provided. The individual control unit 220 performs collision avoidance processing on the transportation robot 30 to be controlled. In the collision avoidance processing, in the warehouse system 1, the transportation robot 30 to be controlled by the individual control unit 220 is prevented from colliding with another transportation robot 30 (hereinafter also referred to as the "transportation robot to be uncontrolled") to be uncontrolled by the individual control unit 220.

FIG. 6-10 is a flowchart of the collision avoidance processing performed by the individual control unit 220. The collision avoidance processing is performed on the transportation robot 30 which is moving. As illustrated in FIG. 6-10, in the collision avoidance processing, the individual control unit 220 in each of the transportation robots 30 first performs nearby transportation robot detection processing (step S1). In the nearby transportation robot detection processing, whether or not the transportation robot 30 to be uncontrolled is present in a predetermined range around the transportation robot 30 to be controlled is determined. When it is determined that the transportation robot 30 to be uncontrolled is not present in the predetermined range (no in step S1-1), the individual control unit 220 determines that the transportation robot 30 to be controlled is prevented from colliding with the transportation robot 30 to be uncontrolled, and the collision avoidance processing is completed. On the other hand, when it is determined that the transportation robot 30 to be uncontrolled is present in the predetermined range (yes in step S1-1), the individual control unit 220 performs collision determination processing (step S2).

In the collision determination processing (step S2), the individual control unit 220 determines whether or not the transportation robot 30 to be controlled collides with the transportation robot 30 to be uncontrolled in the predetermined range which is detected in step S1. When the individual control unit 220 determines that the transportation robot 30 to be controlled does not collide with the transportation robot 30 to be uncontrolled in the predetermined range which is detected in step S1 (no in step S2-1), the collision avoidance processing is completed. On the other hand, when the individual control unit 220 determines that the transportation robot 30 to be controlled collides with the transportation robot 30 to be uncontrolled in the predetermined range which is detected in step S1 (yes in step S2-1), the individual control unit 220 performs priority determination processing (step S3).

In the priority determination processing (step S3), the priorities of the movements of the transportation robot 30 to be controlled and the transportation robot 30 to be uncontrolled which is determined to collide therewith in step S2 are determined. When the individual control unit 220 determines that the priority of the movement of the transportation robot 30 to be controlled is higher than the priority of the movement of the transportation robot 30 to be uncontrolled (yes in step S3-1), the individual control unit 220 in the transportation robot 30 to be uncontrolled is caused to perform processing for collision avoidance, and the collision avoidance processing is completed. On the other hand, when the individual control unit 220 determines that the priority of the movement of the transportation robot 30 to be controlled is lower than the priority of the movement of the transportation robot 30 to be uncontrolled (no in step S3-1), the individual control unit 220 performs stop processing for stopping the transportation robot 30 to be uncontrolled (step S4).

After the transportation robot 30 to be uncontrolled is stopped, the individual control unit 220 performs movement restart determination processing (step S5). In the movement restart determination processing, whether or not the movement of the transportation robot 30 to be controlled can be safely restarted without colliding with the transportation robot 30 to be uncontrolled is determined, and the movement restart determination processing is performed by determining whether or not a predetermined movement restart requirement is satisfied. The individual control unit 220 performs the movement restart determination processing until the predetermined movement restart requirement is determined to be satisfied (no in step S5-1), and when the predetermined movement restart requirement is determined to be satisfied (yes in step S5-1), the individual control unit 220 performs movement restart processing for restarting the movement of the transportation robot 30 to be controlled (step S6), and the collision avoidance processing is completed.

The collision avoidance processing may be performed on the transportation robot 30 to be uncontrolled and one transportation robot 30 to be uncontrolled or may be performed on the transportation robot 30 to be controlled and a plurality of transportation robots 30 to be uncontrolled. In other words, when in the nearby transportation robot detection processing (step S1), a plurality of transportation robots 30 to be uncontrolled are determined to be present in the predetermined range, the collision avoidance processing is performed on the transportation robot 30 to be controlled and a plurality of transportation robots 30 to be uncontrolled.

The individual types of processing (steps S1 to S6) in the collision avoidance processing described above will then be specifically described. FIG. 6-11 is a flowchart of the nearby transportation robot detection processing (step S1), FIG. 6-12 is a flowchart of the collision determination processing (step S2), FIG. 6-13 is a flowchart of the priority determination processing (step S3) and FIG. 6-14 is a flowchart of the movement restart determination processing (step S5).

As illustrated in FIG. 6-11, in the nearby transportation robot detection processing (step S1), as described above, whether or not the transportation robot 30 to be uncontrolled is present in the predetermined range around the transportation robot 30 to be controlled is determined. In the nearby transportation robot detection processing, the individual control unit 220 first checks whether or not the mutual wireless communication unit 240 has received information from the mutual wireless communication unit 240 of the transportation robot 30 to be uncontrolled (step S11). When the mutual wireless communication unit 240 has received information from the mutual wireless communication unit 240 of the transportation robot 30 to be uncontrolled (yes in step S11), the individual control unit 220 determines that the transportation robot 30 to be uncontrolled which is close to the transportation robot 30 to be controlled is present (step S12), and the nearby transportation robot detection processing is completed. On the other hand, when the mutual wireless communication unit 240 has not received information from the mutual wireless communication unit 240 of the transportation robot 30 to be uncontrolled (no in step S11), the individual control unit 220 determines that the transportation robot 30 to be uncontrolled which is close to the transportation robot 30 to be controlled is not present (step S13), and the nearby transportation robot detection processing is completed. In the nearby transportation robot detection processing, the individual control unit 220 may determine, based on other information, whether or not the transportation robot 30 to be uncontrolled which is close to the transportation robot 30 to be controlled is present.

As illustrated in FIG. 6-12, in the collision determination processing (step S2), whether or not the transportation robot 30 to be uncontrolled which is detected in the nearby transportation robot detection processing and is close to the transportation robot 30 to be controlled collides with the transportation robot 30 to be controlled is determined. In the collision determination processing, the individual control unit 220 first refers to the position information and the individual route information R that are received by the mutual wireless communication unit 240 and are related to the nearby transportation robot 30 to be uncontrolled, calculates the future position of the nearby transportation robot 30 to be uncontrolled and generates the path information of the nearby transportation robot to be uncontrolled which indicates the future path of the nearby transportation robot 30 to be uncontrolled (step S21). The path information of the nearby transportation robot to be uncontrolled is generated, for example, by calculating information indicating the positions of the sections 13 from the section 13 indicated by the latest position information of the nearby transportation robot 30 to be uncontrolled to the section 13 located after a predetermined period or located a predetermined distance on the robot route R1 or the bin route R2.

Then, the individual control unit 220 refers to the position information and the individual route information stored in the storage unit 34 of the transportation robot 30 to be controlled, calculates the future position of the transportation robot 30 to be controlled and generates the path information of the transportation robot to be controlled which indicates the future path of the transportation robot 30 to be controlled (step S22). For example, as with the path information of the nearby transportation robot to be uncontrolled, the path information of the transportation robot to be controlled is generated by calculating information indicating the positions of the sections 13 from the section 13 indicated by the latest position information of the transportation robot 30 to be controlled to the section 13 located after a predetermined period or located a predetermined distance on the robot route R1 or the bin route R2.

Then, the individual control unit 220 compares the path information of the nearby transportation robot to be uncontrolled which is generated in step S21 with the path information of the transportation robot to be controlled which is generated in step S22, and thereby determines whether or not the path of the nearby transportation robot 30 to be uncontrolled and the path of the transportation robot 30 to be controlled overlap each other (step S23). More specifically, whether or not the path of the nearby transportation robot 30 to be uncontrolled and the path of the transportation robot 30 to be controlled overlap each other is determined by whether or not the position information (address information of the section 13) included in the path information of the nearby transportation robot to be uncontrolled includes the same information as the position information (address information of the section 13) included in the path information of the transportation robot to be controlled. When the position information (address information of the section 13) included in the path information of the nearby transportation robot to be uncontrolled includes the same information as the position information (address information of the section 13) included in the path information of the transportation robot to be controlled, the individual control unit 220 determines that the path of the nearby transportation robot 30 to be uncontrolled and the path of the transportation robot 30 to be controlled overlap each other (yes in step S23). On the other hand, when the position information (address information of the section 13) included in the path information of the nearby transportation robot to be uncontrolled does not include the same information as the position information (address information of the section 13) included in the path information of the transportation robot to be controlled, the individual control unit 220 determines that the path of the nearby transportation robot 30 to be uncontrolled and the path of the transportation robot 30 to be controlled do not overlap each other (no in step S23).

When the individual control unit 220 determines that the path of the nearby transportation robot 30 to be uncontrolled and the path of the transportation robot 30 to be controlled overlap each other (yes in step S23), the individual control unit 220 determines that the nearby transportation robot 30 to be uncontrolled may collide with the transportation robot 30 to be controlled (step S24), and the collision determination processing is completed. On the other hand, when the individual control unit 220 determines that the path of the nearby transportation robot 30 to be uncontrolled and the path of the transportation robot 30 to be controlled do not overlap each other (no in step S23), the individual control unit 220 determines that the nearby transportation robot 30 to be uncontrolled is prevented from colliding with the transportation robot 30 to be controlled (step S25), and the collision determination processing is completed. In the collision determination processing, the individual control unit 220 may determine, based on other information, whether or not the transportation robot 30 to be controlled may collide with the nearby transportation robot 30 to be uncontrolled.

As illustrated in FIG. 6-13, in the priority determination processing (step S3), the priorities of the movements of the transportation robot 30 to be controlled and the transportation robot 30 to be uncontrolled which is determined to collide therewith in the collision determination processing are determined, and the individual control unit 220 determines the priorities based on priority information indicating the priorities of the transportation robot 30 to be controlled and the transportation robot 30 to be uncontrolled. The priority information indicates the movement of which one of the transportation robots 30 is prioritized, and is determined based on, for example, the item 23 which is transported. For example, the priority information is previously set, is received from the management server 50 and is stored in the storage unit 34 of each of the transportation robots 30. In the priority information, for example, the item 23 or the storage bin 20 which needs to be urgently transported is ranked. The individual control unit 220 determines the priorities based on whether or not the transportation robot 30 is transporting the item 23.

More specifically, in the priority determination processing, the individual control unit 220 refers to the priority information to compare the priority of the item 23 transported by the transportation robot 30 to be controlled with the priority of the item 23 transported by the transportation robot 30 to be uncontrolled which is determined to collide with the transportation robot 30 to be controlled, and thereby determines whether or not the priority of the item 23 transported by the transportation robot 30 to be controlled is higher than the priority of the item 23 transported by the transportation robot 30 to be uncontrolled (step S31). The priority of the transportation robot 30 which is not transporting the item 23 is determined to be the lowest. In the comparison of the priorities in step S31, the individual control unit 220 identifies the item 23 transported by the transportation robot 30 to be controlled by referring to information on the item 23 stored in the storage unit 34 and included in information on the order processing performed by the transportation robot 30 to be controlled. On the other hand, in the comparison of the priorities in step S31, the individual control unit 220 identifies the item 23 transported by the transportation robot 30 to be uncontrolled by referring to information on the item 23 received by the mutual wireless communication unit 240 and included in information on the order processing performed by the transportation robot 30 to be uncontrolled.

When in step S31, the individual control unit 220 determines that the priority of the item 23 transported by the transportation robot 30 to be controlled is higher than the priority of the item 23 transported by the transportation robot 30 to be uncontrolled (yes in step S31), the individual control unit 220 generates the result of the determination indicating that the priority of the movement of the transportation robot 30 to be controlled is higher (step S32), and the priority determination processing is completed. On the other hand, when in step S31, the individual control unit 220 determines that the priority of the item 23 transported by the transportation robot 30 to be controlled is lower than the priority of the item 23 transported by the transportation robot 30 to be uncontrolled (no in step S31), the individual control unit 220 generates the result of the determination indicating that the priority of the movement of the transportation robot 30 to be controlled is lower (step S33), and the priority determination processing is completed. In the priority determination processing, the individual control unit 220 may determine, based on other information, the priorities of the movements of the transportation robot 30 to be controlled and the transportation robot 30 to be uncontrolled. When the priorities of the movements of the transportation robot 30 to be controlled and the transportation robot 30 to be uncontrolled are the same as each other, the priorities of the movements of the transportation robot 30 to be controlled and the transportation robot 30 to be uncontrolled are determined, for example, by comparison of the robot IDs and wireless communication of the mutual wireless communication units 240.

In the stop processing (step S4), the individual control unit 220 controls the driving motors 330 of the transportation robot 30 to be controlled to stop the driving motors 330, and thus the transportation robot 30 to be controlled which is moving is stopped.

As illustrated in FIG. 6-14, in the movement restart determination processing (step S5), whether or not the movement of the transportation robot 30 to be controlled which has been stopped can be safely restarted without colliding with the transportation robot 30 to be uncontrolled is determined, and the movement restart determination processing is performed by determining whether or not the predetermined movement restart requirement is satisfied . In the movement restart determination processing, the individual control unit 220 first determines whether or not the movement restart requirement is satisfied (step S51). The movement restart requirement is, for example, a previously set condition such as a predetermined elapsed time after the stop of the driving motors 330 in the stop processing or a predetermined separation distance between the transportation robot 30 to be uncontrolled which is determined to collide and the transportation robot 30 to be uncontrolled. For example, the individual control unit 220 refers to information indicating the predetermined elapsed time stored in the storage unit 34, checks whether or not the predetermined elapsed time has passed after the stop of the driving motors 330 and determines that the movement restart requirement is satisfied after it is confirmed that the predetermined elapsed time has passed. For example, the individual control unit 220 calculates the current position of the transportation robot 30 to be uncontrolled from the position information and the individual route information R of the transportation robot 30 to be uncontrolled which are received by the mutual wireless communication unit 240 of the transportation robot 30 to be controlled, compares this with the latest position information of the transportation robot 30 to be controlled which is read by the information reading unit 211 and thereby calculates a distance between the transportation robot 30 to be uncontrolled and the transportation robot 30 to be controlled. Then, the individual control unit 220 checks whether or not the calculated distance exceeds the predetermined separation distance stored in the storage unit 34, and determines that the movement restart requirement is satisfied after it is confirmed that the calculated distance exceeds the predetermined separation distance. The movement restart requirement is not limited to the examples described above and may be based on other information.

When in step S51, the individual control unit 220 determines that the movement restart requirement is satisfied (yes in step S51), the individual control unit 220 determines that the movement of the transportation robot 30 to be controlled which has been stopped can be restarted (step S52), and the movement restart determination processing is completed. On the other hand, when in step S51, the individual control unit 220 determines that the movement restart requirement is not satisfied (no in step S51), the individual control unit 220 continues to determine whether or not the movement restart requirement is satisfied in step S51 until the individual control unit 220 determines that the movement can be restarted.

In the movement restart processing (step S6), the individual control unit 220 controls the driving motors 330 of the transportation robot 30 to be controlled to drive the driving motors 330, and thereby restarts the movement of the transportation robot 30 to be controlled in the individual route. When the individual control unit 220 restarts the movement of the transportation robot 30 to be controlled, the collision avoidance processing on the transportation robot 30 to be uncontrolled which is detected in the nearby transportation robot detection processing (step S1) of the collision avoidance processing is completed.

As described above, when the individual control unit 220 determines that the transportation robot 30 to be uncontrolled which is close to the transportation robot 30 to be controlled is present (steps S1 and S12) and determines that the transportation robot 30 to be uncontrolled which is determined to be close thereto collides with the transportation robot 30 to be controlled (steps S2 and S24), and the priority of the movement of the transportation robot 30 to be controlled is lower than the priority of the movement of the transportation robot 30 to be uncontrolled (steps S3 and S33), the individual control unit 220 stops the transportation robot 30 to be controlled (step S4). Then, when the individual control unit 220 determines that the movement of the transportation robot 30 to be controlled which has been stopped can be safely restarted (steps S5 and S52), the individual control unit 220 restarts the movement of the transportation robot 30 to be controlled.

The individual control unit 220 may repeatedly perform the collision avoidance processing, for example, at predetermined time intervals. In this case, a plurality of pieces of collision avoidance processing may be performed in an overlapping manner. In other words, even when one piece of collision avoidance processing is not completed, a new piece of collision avoidance processing may be performed. On the other hand, the individual control unit 220 may perform a new piece of collision avoidance processing after the completion of one piece of collision avoidance processing.

As described above, in the transportation robot control system 3, it is possible to avoid a collision between the transportation robots 30 in the warehouse system 1. The collision avoidance processing for avoiding a collision between the transportation robots 30 is performed based on only the information included in the transportation robots 30, that is, based on only the information included in the transportation robot 30 to be controlled and the information received from the transportation robot 30 to be uncontrolled by the wireless communication of the mutual wireless communication units 240. Hence, while the collision avoidance processing is being performed, it is not necessary for the central wireless communication unit 200 of the management server 50 to transmit information. Therefore, it is possible to reduce the amount of communication from the management server 50 to each of the transportation robots 30. Since the collision avoidance processing requires only wireless communication using the mutual wireless communication units 240 between the transportation robots 30 which are close to each other and wireless communication in the nearby individual wireless communication unit 210 (the information reading unit 211 and the information holding unit 212), it is possible to prevent a failure to receive wireless information for the collision avoidance processing depending on the position in the warehouse system 1. In this way, it is possible to control a large number of transportation robots 30 by wireless communication stably with high reliability.

When the information reading unit 211 and the information holding unit 212 for the mutual wireless communication unit 240 are assumed to be respectively a RFID reader and a RFID tag, it is possible to further increase the speed of wireless communication between the information reading unit 211 and the information holding unit 212, and even when the speed of the movement of the transportation robot 30 is further increased, it is possible to achieve stable and highly reliable control.

As described above, in the transportation robot control system for a warehouse system 3 according to the embodiment of the present disclosure, it is possible to stably control a large number of transportation robots 30 by wireless communication.

In the transportation robot control system 3, processing for changing the individual route information R transmitted from the central wireless communication unit 200 to each of the transportation robots 30 and processing for acquiring, for example, maintenance information such as the remaining amount in a battery in each transportation robot control system 3 may be performed. In the processing for changing the individual route information R, the central control unit 230 transmits the changed individual route information R to the communication unit 331 of the transportation robot 30 closest to the transportation robot 30 to be controlled in the communication range of the central wireless communication unit 200, and transmits, via this transportation robot 30 or via this transportation robot 30 and another transportation robot 30, by the wireless communication of the mutual wireless communication units 240, the changed individual route information R to the transportation robot 30 to be controlled. In the processing for acquiring the maintenance information, the central control unit 230 causes the central wireless communication unit 200 to transmit the maintenance information of the transportation robot 30 to be controlled via the communication unit 331 of the transportation robot 30 closest to the transportation robot 30 to be controlled in the communication range of the central wireless communication unit 200 or via this transportation robot 30 and another transportation robot 30 by the wireless communication of the mutual wireless communication units 240.

The control unit in the embodiment or example described above includes one or more processors. The processor is a CPU (Central Processing Unit), a GPU (Graphics Processing Unit) or the like.

The storage unit in the embodiment or example described above includes, for example, a memory device such as a RAM (Random Access Memory) or a ROM (Read Only Memory), a nonvolatile storage device (such as a HDD (Hard Disk Drive) or an SSD (Solid State Drive)) or the like. In the storage unit, various types of information are stored. In the storage unit, programs for providing instructions to the processor to execute various types of processing in collaboration with an OS (Operating System) are also recorded.

The present specification discloses several embodiments on the subject of the present disclosure, includes the manufacturing and the use of any device or system by a person skilled in the art and the performance of any incorporated method and uses examples to be able to practice the embodiments on the subject of the present disclosure. The patentable scope of the subject of the present disclosure is defined by the scope of claims and can include other examples generated for the person skilled in the art. The other examples described above are intended to be in the scope of the claims when they include constituent elements which are not different from those in the scope of claims or when they include equivalent constituent elements which are not substantially different from those in the scope of claims.

For example, all or part of processing functions included in the transportation robot control system 3 and the warehouse system 1, in particular, processing functions performed in the control units 32 and 511 may be realized by a processor and programs for instructing (processor instruction) the processor to perform interpretation and execution. The programs may be stored in a server which is connected via any network to the transportation robot control system 3 and the warehouse system 1, and all or part thereof can be downloaded as necessary.

Programs for executing processing such as the processing for controlling the basic movements of the transportation robots 30 and the collision avoidance processing described in the present embodiment may be stored in any appropriate computer-readable recording medium (computer-readable medium). Any appropriate computer-readable recording medium for programs on a processor includes a non-transitory computer-readable storage medium (non-transitory computer-readable medium).

A program refers to a data processing method which is described in any language or by a description method, and the form thereof such as a source code or a binary code is not limited. The program is not necessarily limited to a single configuration, and includes a dispersion configuration serving as a plurality of modules or libraries and a configuration for achieving its function in collaboration with a separate program such as an OS.

[Seventh invention] Hereinafter, an embodiment of the present disclosure will be described with reference to the accompanying drawings. In all drawings, identical reference numerals are used to refer to identical or similar components. The following embodiment does not intend to limit the invention recited in the claims. Examples and features of the disclosed principal will be described in this description yet can be changed and modified without departing from the idea and the scope of the disclosed embodiment. Furthermore, specific features, structures, or characteristics can be combined by an arbitrary appropriate method in one or more embodiments. The following detailed description is taken into account only as exemplary description, and the true range and idea are intended to be indicated by the claims.

Reference throughout this specification to "one embodiment", "this embodiment" and similar phrases, means that a particular feature, structure, or characteristic described in connection with the embodiment is included in at least one of the one or more embodiments. Thus, the appearances of these phrases in various places throughout this specification are not necessarily referring to the same embodiment.

Embodiments of present disclosure provide an automated storage and retrieval system. Typically, storage of items within a warehouse or similar environment requires a large building or storage structure space with an associated footprint. Autonomous vehicles or robots may be used in these warehouses to place items in storage and remove items from storage. On the other hand, in a Goods to Person (GTP) environment, pickers remain at their workstations while a software-driven ASRS retrieves, conveys and delivers required Stock-Keeping Units (SKU) to the order picker's workstation in a designated SKU donor tote or tray. Once the requested number of items has been selected and put into the correct order location, SKU donor totes/trays are returned to the ASRS for put-away. It is advantageous to have an autonomous vehicle that can efficiently pick items for removal from the storage structure and at the same time access multiple storage levels so that a storage density of the storage structure may be increased.

Embodiments of the present disclosure provide an autonomous vehicle-based storage and retrieval system. Storage and retrieval architecture in accordance with some embodiments includes one or more components. The one or more components includes a plurality of storage bins containing the inventory/goods/objects to be retrieved, transported and stored. The system further includes multi-floor storage structure designed to operate in one or more environments, for example, in a multi-floor structure where a plurality of storage bins is arranged. Embodiments of the present disclosure provides a plurality of autonomous vehicles, like robots, to move in and out under the plurality of storage bins. The system further includes vertical elevators to transport the one or more autonomous vehicle with/without the plurality of storage bins across multi-floor storage structure. Furthermore, in a GTP/PTG (Goods to Person/Person to Goods) setup, the present disclosure provides an automated picking or teleoperated picking and dropping of the goods at the picking station. In one embodiment, the ASRS may include two primary segments, namely, stacker crane and a combination of shuffle and evaluator at a fixed position for vertical movement. The ASRS in accordance with present embodiments may be implemented either as stand-alone units or in integrated workstations or systems. These units are usually integrated with various types of pick to light systems and use either a microprocessor controller for basic usage or inventory management software.

Embodiments of the present disclosure provide an improved speed of operation in an ASRS architecture with reduced cost. For example, by splitting the vertical and horizontal motions of an autonomous vehicle carrying bins, each mechanism of transportation, storage and retrieval is simplified and with greater speed and reduced cost. Embodiments of the present disclosure provide a ASRS structure with multi-floors structure with one or more vertical elevators. Herein, elevator poles may be used as pillars supporting the floors to optimize volume utilization.

Embodiments of the present disclosure provide an autonomous vehicle-based storage and retrieval system. A detailed description of the above-described system is shown with respect to illustrations represented with reference to FIGS. 7-1 through 7-9B.

FIG. 7-1 is a perspective view schematically illustrating an external appearance of an automated storage and retrieval system (ASRS) 1 according to an embodiment of the present disclosure. The automated storage and retrieval system 1 is constructed in, for example, a building 100. The building 100 includes a floor surface 101 extending along a horizontal plane, a plurality of sidewalls 102 vertically standing from the floor surface 101, and a ceiling (not illustrated) supported by the plurality of sidewalls 102. For example, the four sidewalls 102 surrounding four sides, and the ceiling extending in parallel to the floor surface 101 establish an internal space between the floor surface 101, and the sidewalls 102 and the ceiling. The automated storage and retrieval system 1 is constructed in this internal space. Note that part of the sidewalls 102 are cut out for ease of description in FIG. 7-1. In the building 100, an x-axis and a y-axis extending in a direction perpendicular to each other on the horizontal plane, and a z-axis extending in a vertical direction and perpendicular to the x- axis and the y-axis are defined.

The automated storage and retrieval system 1 can automate a series of work from warehousing and storage to delivery of items including products and the like based on centralized management. The automated storage and retrieval system 1 according to the present embodiment includes a multi-floor storage structure 10 arranged on the floor surface 101, a plurality of storage bins 20 which is containers stored in the multi-floor storage structure 10, at least one autonomous vehicle 30 for transporting the storage bins 20, one or more picking stations 40 for picking items including products and the like contained in the storage bins 20, and a management server 50 for managing the series of work of the automated storage and retrieval system 1. At the picking station 40, a human operator 60 performs picking work of picking an item from the storage bin 20.

The multi-floor storage structure 10 includes a plurality of floors 11, each floor 11 defining a surface which extends in parallel to each other along each xy plane, and a plurality of support pillars 12 supporting the plurality of floors 11. In the present embodiment, the floors 11 of a first floor to a ninth floor vertically standing in a z-axis direction from the floor surface 101 are formed. A total height of the multi-floor storage structure 10 from the floor surface 101 in the z-axis direction can be set according to a height in the z-axis direction of the ceiling of the building 100. Note that part of the floors 11 of the eighth floor and the ninth floor is omitted for ease of description in FIG. 7-1, and configurations of the floors 11 of the eighth floor and the ninth floor are configured similar to the floor 11 of the seventh floor.

FIG. 7-2 is a plan view schematically illustrating an example of a structure of the floor 11 of the multi-floor storage structure 10 of the automated storage and retrieval system 1 according to the present embodiment. In the present embodiment, each floor 11 of the multi-floor storage structure 10 defines a plurality of pallets 13 aligned along the xy plane. The pallets 13 defines, for example, outlines of a square or a rectangle in plan view. In the present embodiment, the support pillars 12 are respectively arranged at four corners of the one pallet 13. The one storage bin 20 occupies the one pallet 13. Similarly, the one autonomous vehicle 30 occupies the one pallet 13. That is, an outline of the storage bin 20 and an outline of the autonomous vehicle 30 are respectively arranged in the outline of the one pallet 13 in plan view. Furthermore, an interval between a pair of the mutually neighboring support pillars 12, is set larger than widths of the autonomous vehicle 30 and the storage bin 20 defined in an x axis direction and a y axis direction.

Each floor 11 defines storage areas 14 including the pallets 13 in which the storage bins 20 are aligned, and movement passages 15 of the autonomous vehicles 30 including the pallets 13 other than the storage areas 14. In the present embodiment, for example, two rows of bin groups of the plurality of storage bins 20 aligned along the y axis direction are aligned in the x axis direction in the storage area 14. That is, all of the storage bins 20 making up the bin group of these two rows of the storage bins 20 face the movement passages 15 at all times. On the other hand, the autonomous vehicles 30 can run on the movement passages 15. As described later, the autonomous vehicle 30 can also run in the storage area 14, through a space below a bottom surface of the storage bin 20.

FIG. 7-3 is a perspective schematically illustrating an example of a multi-floor storage structure 10 of the automated storage and retrieval system 1 according to the embodiment. Referring to FIGS. 7-1 to 7-3, the multi-floor storage structure 10 includes one or more vertical elevators 16. The vertical elevators 16 can make reciprocating movement in the z-axis direction from the first floor to the ninth floor of the floors 11 and may stop at each floor 11. Each vertical elevator 16 is arranged in one pallet 13 in the movement passage 15 of the autonomous vehicle 30 on each floor 11. In the present embodiment, the one or more vertical elevators 16 may be provided to the multi-floor storage structure 10. The vertical elevator 16 can have only the autonomous vehicle 30 get thereon or have the autonomous vehicle 30 holding the storage bin 20 get thereon to transport to each floor of the first floor to the ninth floor.

The vertical elevator 16 includes, for example, shafts of four corners attached to the multi-floor storage structure 10 and extend in the z axis direction, four roller chains attached to the respective shafts, and extend in the z axis direction, four sprockets meshing with the respective chains, and two electric motors (both of which are not illustrated) for respectively rotating and driving, for example, the two sprockets. The sprockets mesh with the roller chains in response to rotation of the sprockets caused by the electric motors to ascend and descend the vertical elevator 16. Note that the support pillars 12 making up the multi-floor storage structure 10 may be used in place of the shafts. The above mechanism is a mere example, and an arbitrary another mechanism realizing vertical movement of the vertical elevator 16 may be used.

FIG. 7-4 schematically illustrates an example of the structure of the storage bin 20 of the automated storage and retrieval system 1 according to the embodiment. In the present embodiment, the storage bin 20 includes a bin main body 21 defining an internal space of, for example, a cuboid, and one or more legs 22, here four legs, extending downward from four corners of a bottom surface of the bin main body 21. The bin main body 21 has a side wall structure which includes four sidewalls 21a surrounding four sides, an opening part 21b opened along upper ends of the sidewalls 21a, and a base 21c closed along lower ends of the sidewalls 21a. Although the opening part 21b is opened in the present embodiment, the opening part 21b may be closed with, for example, a lid or a cover. The sidewalls 21a extend in parallel to, for example, the z axis. Furthermore, the base 21c extends along the xy plane. The storage bin 20 is received on the floor 11 by the one or more legs 22. The storage bin 20 may be formed by, for example, a resin material. Furthermore, the storage bin 20 may be a foldable bin. An outline of the bin main body 21 in plan view is defined as a square or a rectangle. A size of the storage bin 20 is preferably set appropriately based on a size of the multi-floor storage structure 10 or each floor 11 or a size of an item 23.

The one or more items 23 are contained in the internal space in the bin main body 21. The item 23 can be identified by, for example, a unique Stock Keeping Unit (SKU) set to the item 23. Although the item 23 is, for example, one unit of a product or the like, the item 23 may be a so-called case product packaged in a unit of a plurality of identical products. Furthermore, the one storage bin 20 may contain only the items 23 of one type or may contain the items 23 of a plurality of types. The storage bin 20 can be identified based on a unique ID set to each storage bin 20. The unique ID of this storage bin 20 is managed in correspondence with the SKU of the item 23 contained in the storage bin 20.

FIG. 7-5 is a perspective view schematically illustrating an external appearance of the autonomous vehicle 30 of the automated storage and retrieval system 1 according to the embodiment. In the present embodiment, a plurality of the autonomous vehicles 30 are arranged on each floor 11 of the multi-floor storage structure 10. The autonomous vehicle 30 is, for example, an autonomous running transportation robot including a thin housing 31 of a substantially cuboid shape. The housing 31 is formed by, for example, a resin material. The autonomous vehicle 30 can run along a line 17 (see, for example, FIG. 7-2) by tracing the line 17 drawn on the floor 11 of the multi-floor storage structure 10 (line tracing function). The line 17 is two strips of lines. The two strips of lines extend passing center positions of the x axis direction and the y axis direction in, for example, each section 13, and are perpendicular to each other at a center of the section 13. These lines 17 are drawn in all of the sections 13 including the storage areas 14, the movement passages 15, and the vertical elevators 16 of the floor 11.

An upper surface of the housing 31 of the autonomous vehicle 30 extends flat along the xy plane. A height of the autonomous vehicle 30 is set smaller than the height of the one or more legs 22 of the storage bin 20. Furthermore, an outline of the housing 31 in top view is defined substantially as, for example, a square. Similarly, the length of one side of the autonomous vehicle 30 is set smaller than the length of each side of the storage bin 20. That is, the autonomous vehicle 30 can enter the space below the bin main body 21 from between the pair of mutually neighboring one or more legs 22 of the storage bin 20. In this regard, the size of the autonomous vehicle 30 is preferably set appropriately based on sizes of the multi-floor storage structure 10, each floor 11, and the storage bin 20.

The autonomous vehicle 30 can change the height thereof between a first configuration where the height of the upper surface of the housing 31 is set to a first height, and a second configuration where the height is set to a second height higher than the first height. As described above, the autonomous vehicle 30 of the first configuration can enter the space below the bin main body 21 from between the pair of mutually neighboring one or more legs 22 of the storage bin 20. In this case, when the autonomous vehicle 30 changes the height of the housing 31 from the first configuration to the second configuration, the autonomous vehicle 30 holds the storage bin 20 on the upper surface of the housing 31 as illustrated in FIG. 7-6. As a result, the storage bin 20 can be lifted from the floor 11. The autonomous vehicle 30 can run in both of the first configuration and the second configuration. That is, the autonomous vehicle 30 can run on the floor 11 while lifting the storage bin 20.

FIG. 7-7A is a perspective view of a portion of the multi-floor storage structure 10, in accordance with some embodiments of the present disclosure. As shown in FIG. 7-7A, the multi-floor storage structure 10 includes a plurality of storage bins 20 used for operating, namely, transporting, storing and retrieving items/objects in the automated storage and retrieval system 1. One or more autonomous vehicles, namely, robot 30 may be used to carry the four-legged storage bin 20 containing inventory to and from the warehouse. As shown in FIG. 7-7A, in an example embodiment, a two-level storage structure containing a plurality of four-legged storage bins 20 are used to transport, retrieve and store the inventory. Two level storage unit is built along pallets 13 arranged in one or more variations. Some portion of the floors may be fully packed and allow autonomous vehicle or robots 30 to move storage bins 20 to retrieve other storage bins 20 while other floors may allow direct access to storage bins 20. The autonomous vehicles 30 are able to move in the 2D space on each floor of the multi-floor storage structure 10 and external to the multi-floor structure 10, use the elevator 16, and move in the 3D space climbing each floor of the multi-floor storage structure 10. Some floors may be divided into storage space such that the elevator 16 may not necessarily be required to go to the complete full length of the multi-floor storage structure 10. For example, there may be fast-moving autonomous vehicles or robots 30 on the lower floors. The robots 30 not carrying any storage bins 20 will be moving very fast having more freedom for deviation, e.g. highways were storage bins 20 are not placed. In an embodiment, the bottom floor may have gaps between every two items and have a sufficient spacing for autonomous vehicles or robots 30 to move around at a high speed. The robot 30 may be configured to go under the bins 20 and pick them and bring them to the station. However, in top floor, because of the tight packing, the robots 30 may not be able to go below the bins 20 since there might be other bins 20 blocking the way. The autonomous vehicles or robots 30 then goes below the bins 20 that are blocking and move them from the path till the robot 30 reaches the required bin 20. Once the required bin 20 is found, the robot 30 goes underneath the bin 20 and brings it out of the packed region. The remaining bins 20 are then moved back into the vacant spaces in the same positions.

In one variation, the pallets 13 may be rectangle pallets that may include a locking mechanism, where each of the pallets is locked with another pallet 13 to create a large horizontal surface as shown in the FIG. 7-7A. The pallets 13 forming the horizontal surface is supported by vertical poles/elevators 16 to move the one or more autonomous vehicles 30. The pallets 13 include wedge shaped holes designed to accurately place the storage bin 20 thereby preventing the storage bins 20 from moving due to any external forces, for example, during an earthquake. In one embodiment, the multi-floor storage structure 10 may include any appropriate combination of hardware and/or software suitable to provide the described functionality. One or more different patterns of the multi-level structure is further described with reference to subsequent figures.

Embodiments of the present disclosure provide an improved volume utilization in a warehouse. Herein, the volume utilization is calculated using the following equation (1)

$$\text{Volume utilization} = (\text{bin-height-to-robot height}) \times (\text{elevator-volume}) \times (\text{space-utilization in each floor}) \times (\text{extra-space 80\%}) \tag{1}$$

Herein, extra space is for buffer between the storage bins 20 while moving, floor thickness and lifting height. In an example embodiment, bin-height-to-robot-height, for example, 50L of a bin with dimensions 521 *364*305 and an autonomous vehicle 30 height: 100 mm implied 305/305+100 - 0.75%.

As shown in FIG. 7-7B, the pallet 13 is a four-legged structure used in one or more combinations to unit a warehouse structure.

FIG. 7-8A is a perspective view of the multi-floor storage structure 10 with multiple floors, in accordance with some embodiments of the present disclosure. In this example, a three-level structure is shown. The autonomous vehicle 30 or robots are carried along the y-axis to each floor via the vertical elevator 16. There are openings defined for the vertical elevator 16 to be accommodated and move along the vertical y-axis. In one embodiment, there are multiple openings to facilitate multiple vertical elevators 16 to move and carry the autonomous vehicles 30 to multiple floors. The vertical elevators 16 may have variable lengths depending on the requirements of the multi-floor storage structure 10. The pallets 13 as discussed in FIG. 7-1 forms the horizontal surface at each floor. The pallets 13 are designed to rigidly attach to each other and easily moved to create one or more variations of multi-floor storage structure 10.

As shown in FIG. 7-8B, the vertical elevator 16 includes a pallet 13 or plate slidably connected to the support pillar 18 in one or more variations. The support pillar 18 is further described with reference to FIG. 7-8C.

FIG. 7-8C is an expanded view of the support pillar 18, in accordance with some embodiments of the present disclosure. The support pillar 18 includes an elongated member 18b with radially extended ridges 18c. In an example embodiment, the ridges 18c may include a wing shaped structure to lock in with the pallets 13. In another embodiment, the ridges 18c may be differently shaped to be in agreement with the one or more variations of the pallets design.

FIG. 7-8D is an expanded view of the vertical elevator 16 in operation, in accordance with some embodiments of the present disclosure. As shown in the FIG. 7-8D, the support pillar 18 includes ridges 18c to support vertical movement of the autonomous vehicle 30. The ridges 18c include wheels 16a along the axis for the vertical movement of the autonomous vehicle 30 as shown in the FIG. 7-8D.

FIG. 7-9A-7-9B are schematic representations of a automated storage and retrieval system 1 with one or more patterns, in accordance with some embodiments of the present disclosure. As shown in FIG. 7-7A, each floor has two rows of bins 20 and one empty space for the vertical elevator 16. and for free motion of autonomous vehicles 30. Herein, the vertical elevators 16 are placed in between the empty spaces thereby maximizing the space utilization. Also, the pick location may be placed in any arbitrary location. This pattern arrangement leads to better floor occupancy. In an alternative embodiment for a 3 to 4 floor setup, the elevators may be completely eliminated. Alternatively, an optional step-structure may be provided for pickers to pick from robots arriving at the edges of higher floors. As shown in FIG. 7-9B, a plurality of bins 20 is placed around vertical elevator 16 creating a unit pattern. The pattern may be repeated individually or in combination with other patterns, that may lead to further improvement in floor occupancy. The disclosure provides usage of one or more patterns to get an optimal floor occupancy, considering parameters like accessibility of bins. The ASRS structure based on such patterns may not necessarily require the robots to go below the storage bins 20 but may provide mechanisms to

pick front and back. In such scenarios, the system 1 may advantageously use a better height requirement that necessarily avoids the need for the autonomous vehicle 30 to go below the storage bins 20. In an example structure of FIG. 7-9B, the volume utilization using the aforementioned equation is calculated as follows

$$\text{Volume utilization} = 0.75 \times 0.66 \times 0.8 \sim 40\%$$

Embodiments of the present disclosure also provide one or more solutions to reduce picking area and increase volume utilization in an ASRS system. For example, autonomous vehicles, like robots transporting, retrieving and storing the inventory using a plurality of storage bins may be designed to move to any arbitrary location in any floor of a warehouse. The floor itself may be considered as an area where the autonomous vehicle may serve the bins to humans on that floor. In one embodiment, pickers at a picking location in a warehouse may be positioned close to the ASRS system. In another embodiment, the pickers and the autonomous vehicle may include a facility to interact at the lower floors of the warehouse, for example, the edges of the floors may be used as a pick station. The advantage with this solution is that the autonomous vehicle need not leave the structure. The facility to interact at the lower floors may significantly reduce the picking area and thereby increase the volume utilization. In an example, multiple dimensions of items may be picked up based on the height of a floor in the warehouse. Furthermore, the floors above the pickers may be extended to increase storage, again thereby increasing the overall volume utilization. In an alternative embodiment, the present system can also be used in smaller warehouses such as micro fulfillment centers. Further, the present system may be adaptable to any arbitrary 3D space as well as the items/objects may be delivered to any arbitrary surface point of the 3D space.

Embodiments of the present disclosure provide an architecture for ASRS where a conveyor belt system may be implemented by bringing in Stock-Keeping Unit (SKU) to a picker at an order or pick/drop station at a multi-level store house. In another embodiment, a single order with two or more SKUs may be associated with multiple pickers. For example, a single order containing sku_a and sku_b may be pick-dropped at different pick stations. The present system provides flexibility of associating a single order with multiple pickers.

In an example embodiment, ASRS structure may include a plurality of bins, one or more autonomous vehicles such as robots operating in an environment, for example, a multi-level warehouse. In this example, occupancy of the ASRS structure in a x, y and z axis may be as shown below

b_x=500 b_y=500 x b_z=400 100L (occupancy)

In an alternative embodiment, thickness in z direction may be reduced to accommodate buffer for floor thickness, lifting height (z direction) and side buffer (x, y direction) between a plurality of moving bins. In another alternative embodiment, maximum weight of a bin and inventory (bin carrying the inventory) may be around 30 kg with an autonomous vehicle weight around 15 kgs and height 100 mm. In this example, the total weight may be around

Total autonomous vehicle height + bin height -500 mm
Total autonomous vehicle weight + bin weight = 48 kg - 50kg
Floor max load - 200 kg/m2.

The aforementioned total weight includes the weight of an autonomous vehicle. In the present example, since the number of robots is less than the number of items, on average only the bin weights i.e., -140 kg is considered. Furthermore, in an example, an autonomous vehicle may be of 100mm height and width of 350-400mm, a payload of 30-50 kg and a speed of 4m/s. For example, assuming a single floor is made up of panels dimensions of $p\_x > p\_y >> p\_z$ (thickness).

In one embodiment, the structure may be made of steel or plywood or plastic. In another embodiment, the structure may be made of modular plastic structure. In one embodiment, there is no restriction of the pickers to be at a particular station of the warehouse. The pickers may be given locations at any location within the ASRS structure, for example, outside of the structure. The autonomous vehicle then may move the bins to the pickers located at the outside of the structure. For example, the autonomous vehicles may be underground and the pickers may be on multiple floors above the ground. In such scenarios, the autonomous vehicles may come to the pickers and deliver the picking units. This leads to savings both from cost and storage point of view for the warehouse owner.

Embodiments of the present disclosure also provide one or more technical solutions for the conventionally known problems in the art. For example, the present disclosure provides an ASRS architecture including a plurality of four-legged storage bins containing the inventory/goods/objects to be retrieved, transported and stored. The system further includes ASRS architecture designed to operate in one or more environments, for example, in a multi-floor structure where a plurality of bins is arranged. Embodiments of the present disclosure provides a plurality of autonomous vehicles, like robots, to move in and out under the plurality of bins. The system further includes vertical elevators to transport the one or more autonomous vehicle with/without the plurality of bins across multi-floors structure. The present disclosure further provides an automated picking or teleoperated picking and dropping of the goods at the picking station. The picking station may be designed at any place within the fulfillment center, including within the ASRS architecture. The ASRS in accordance with present embodiments may be implemented either as stand-alone units or in integrated workstations or systems. These units are usually integrated with various types of systems, for example pick to light systems and use either a microprocessor controller for basic usage or inventory management software.

Embodiments of the present disclosure provide an improved speed of operation in an ASRS architecture with reduced cost. For example, by splitting the vertical and horizontal motions of an autonomous vehicle carrying a bin, each mechanism of transportation, storage and retrieval is simplified and with greater speed and reduced cost. Embodiments of the present disclosure provide a ASRS structure with multi-floors structure with one or more elevators. Herein, elevator poles may be used as pillars supporting the floors to optimize volume utilization. Further, embodiments of the present disclosure allows the picker to be moved close to the wall of the ASRS structure and command the robots to bring the bins on the same floor in the same area.

In the preceding description, various aspects of an autonomous vehicle based storage and retrieval systems, according to the present disclosure have been described with reference to illustrative embodiment. However, this description is not intended to be construed in a limiting sense. Various modifications and variations of the illustrative embodiment, as well as other embodiments of the system, which are apparent to persons skilled in the art, are deemed to lie within the scope of the present disclosure.

According to some embodiments, and actual implementations may include one or more components arranged in other manners. Other topologies may be used in conjunction with other embodiments. Moreover, each component or device described herein may be implemented by any number of devices in communication via any number of other public and/or private networks. Two or more of such computing devices may be located remotely from one another and may communicate with one another via any known manner of protocol(s) and/or a dedicated connection. Each component or device may comprise any number of hardware and/or software elements suitable to provide the functions described herein as well as any other functions. For example, any computing device used in an implementation of a system according to some embodiments may include a processor to execute program code such that the computing device operates as described herein.

All systems and processes discussed herein may be embodied in program code read from one or more of non-transitory computer-readable media, such as a floppy disk, a CD-ROM, a DVD-ROM, a Flash drive, a magnetic tape, and solid-state Random-Access Memory (RAM) or Read Only Memory (ROM) storage units and then stored in a compressed, non-compiled and/or encrypted format. In some embodiments, hard-wired circuitry may be used in place of, or in combination with, program code for implementation of processes according to some embodiments. Embodiments are therefore not limited to any specific combination of hardware and software.

In an implementation, one or more of the method(s) described herein may be implemented at least in part as instructions embodied in a non-transitory computer-readable medium and executable by one or more computing devices. In general, a processor (for example a microprocessor) receives instructions, from a non-transitory computer-readable medium, for example, a memory, and executes those instructions, thereby performing one or more method(s), including one or more of the method(s) described herein. Such instructions may be stored and/or transmitted using any of a variety of known computer-readable media.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer-readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims (when included in the specification), the singular forms "a," "an," and "the" include plural references unless the context clearly dictates otherwise.

It is intended that the disclosure and examples be considered as exemplary only, those in the art will recognize other embodiments may be practiced with modifications and alterations to that described above.

## Claims

1. An automated storage and retrieval system comprising:

   a rack storing a plurality of bins for containing items;
   a picking station for picking the item from the bin; and
   a transportation robot for transporting the bin between the rack and the picking station,
   wherein the picking station defines a plurality of picking positions at which a plurality of the transportation robots transporting the bins are simultaneously aligned to enable picking work of the item from the bin.

2. The automated storage and retrieval system according to claim 1, wherein the picking station further defines one or more loading positions at which a plurality of shipment bins for loading the items are arranged.

3. The automated storage and retrieval system according to claim 1, wherein
   the rack includes

   a plurality of floors each of which stores the plurality of bins and allows the transportation robot run along a surface thereof, and
   one or more transportation elevators for transporting the transportation robot between the plurality of floors, and
   wherein the plurality of picking positions is defined on at least one of the floors.

4. The automated storage and retrieval system according to claim 3, wherein the plurality of picking positions is defined at an edge of the floor which continues from the surface of the floor.

5. The automated storage and retrieval system according to claim 3, wherein a plurality of the picking stations is defined at the rack.

6. The automated storage and retrieval system according to claim 5, wherein the transportation robot is configured to be able to transport the bin between the plurality of picking stations.

7. The automated storage and retrieval system according to claim 3, wherein

   the plurality of bins is received on the floor by a plurality of support legs extending from bottom surfaces of the plurality of bins, and
   the transportation robot is configured to be able to enter a space below the bin between a bottom surface of the bin and the floor, and supports the bin so as to enable transportation of the bin by lifting the bottom surface of the bin in the space below.

8. The automated storage and retrieval system according to claim 7, wherein

   each of the plurality of floors defines a storage area storing the plurality of bins, and a movement route allowing the transportation robot to run outside the storage area, and
   each of the plurality of bins faces the movement route.

9. The automated storage and retrieval system according to claim 8, wherein the storage area of the floor allows the transportation robot to run.

10. The automated storage and retrieval system according to claim 7, wherein an outline of the transportation robot is defined on an inner side of an outline of the bin in plan view in a case where the transportation robot enters the space below the bin.

11. The automated storage and retrieval system according to claim 3, wherein the bin containing an item of a higher inventory turnover ratio is stored in a floor below the plurality of floors.

12. The automated storage and retrieval system according to claim 1, wherein the transportation robot which has transported the bin to the picking station stays in a space below the bin at the picking station during the picking work at the picking station.

13. The automated storage and retrieval system according to claim 12, wherein the transportation robot operates to return the bin from the picking station to the rack after the picking work at the picking station.

**Fig.1-1**

EP 4 488 199 A1

*Fig.1-2*

Fig. 1-3

# Fig.1-4

# Fig.1-5

**Fig.1-6**

**Fig.1-7**

30

TRANSPORTATION ROBOT 32

33

CONTROL UNIT 321

COMMUNICATION
CONTROL UNIT

322

RUNNING
CONTROL UNIT

323

LIFTING
CONTROL UNIT

MECHANISM UNIT

COMMUNICATION
UNIT — 331

DRIVING WHEEL — 332

DRIVING MOTOR — 333

LIFTING
MECHANISM — 334

SENSOR — 335

BATTERY — 336

*Fig.1-8*

*Fig.1-9*

**Fig.1-10**

```
                        ┌─────────────┐
                        │    START    │
                        └─────────────┘
                               │
          ┌────────────────────────────────────────┐
          │  SPECIFY SECTION IN WHICH STORAGE       │──── S1
          │  BIN STORING ITEM IS ARRANGED           │
          └────────────────────────────────────────┘
                               │
          ┌────────────────────────────────────────┐
          │  SELECT TRANSPORTATION ROBOT            │
          │  AVAILABLE TO TRANSPORT SPECIFIED       │──── S2
          │  TRANSPORTATION BIN                     │
          └────────────────────────────────────────┘
                               │
          ┌────────────────────────────────────────┐
          │  GENERATE ROBOT ROUTE AND BIN ROUTE     │──── S3
          └────────────────────────────────────────┘
                               │
          ┌────────────────────────────────────────┐
          │  TRANSMIT TRANSPORTATION INSTRUCTION TO │
          │  TRANSPORTATION ROBOT BASED ON          │──── S4
          │  GENERATED ROBOT ROUTE AND BIN ROUTE    │
          └────────────────────────────────────────┘
                               │
          ┌────────────────────────────────────────┐
          │  TRANSMIT TRANSPORTATION INSTRUCTION    │
          │  FOR RETURNING STORAGE BIN TO ORIGINAL  │──── S5
          │  SECTION TO TRANSPORTATION ROBOT        │
          └────────────────────────────────────────┘
                               │
          ┌────────────────────────────────────────┐
          │  COMPLETE ITEM DELIVERY PROCESSING      │──── S6
          └────────────────────────────────────────┘
                               │
          ┌────────────────────────────────────────┐
          │  TRANSMIT TRANSPORTATION INSTRUCTION    │
          │  TO TRANSPORTATION ROBOT BASED ON       │──── S7
          │  SHIPMENT ROUTE OF SHIPMENT BIN         │
          └────────────────────────────────────────┘
                               │
          ┌────────────────────────────────────────┐
          │  COMPLETE ORDER PROCESSING              │──── S8
          └────────────────────────────────────────┘
                               │
                        ┌─────────────┐
                        │     END     │
                        └─────────────┘
```

# FIG.1-11

Fig.2-1

*Fig.2-2*

Fig.2-3

EP 4 488 199 A1

**Fig.2-4**

**Fig.2-5**

20

21

22    22

31

30

**Fig.2-6**

50

**MANAGEMENT SERVER**    51    52

**CONTROL UNIT**    511

COMMUNICATION CONTROL UNIT

512

STOCK MANAGEMENT UNIT

513

DEVICE CONTROL UNIT

**STORAGE UNIT**

PROGRAM    521

RACK INFORMATION    522

ITEM INFORMATION    523

BIN INFORMATION    524

DEVICE INFORMATION    525

**Fig.2-7**

**Fig.2-8**

**Fig.2-9**

**Fig.2-10**

START

SPECIFY SECTION IN WHICH STORAGE BIN STORING ITEM IS ARRANGED — S1

SELECT TRANSPORTATION ROBOT AVAILABLE TO TRANSPORT SPECIFIED TRANSPORTATION BIN — S2

GENERATE ROBOT ROUTE AND BIN ROUTE — S3

TRANSMIT TRANSPORTATION INSTRUCTION TO TRANSPORTATION ROBOT BASED ON GENERATED ROBOT ROUTE AND BIN ROUTE — S4

TRANSMIT TRANSPORTATION INSTRUCTION FOR RETURNING STORAGE BIN TO ORIGINAL SECTION TO TRANSPORTATION ROBOT — S5

COMPLETE ITEM DELIVERY PROCESSING — S6

TRANSMIT TRANSPORTATION INSTRUCTION TO TRANSPORTATION ROBOT BASED ON SHIPMENT ROUTE OF SHIPMENT BIN — S7

COMPLETE ORDER PROCESSING — S8

END

*FIG.2-11*

**Fig.2-12**

EP 4 488 199 A1

Fig.3-1

*Fig.3-2*

Fig.3-3

EP 4 488 199 A1

## Fig.3-4

## Fig.3-5

92

20

21

22                                                          22

31

30

**Fig.3-6**

50

MANAGEMENT SERVER            51                    52

CONTROL UNIT        511        STORAGE UNIT

COMMUNICATION
CONTROL UNIT                   PROGRAM                  521

512
STOCK                          RACK
MANAGEMENT UNIT                INFORMATION              522

513                            ITEM
DEVICE CONTROL                 INFORMATION              523
UNIT
                               BIN INFORMATION          524

                               DEVICE
                               INFORMATION              525

**Fig.3-7**

*Fig.3-8*

**Fig.3-9**

**Fig.3-10**

EP 4 488 199 A1

Fig.3-11

Fig.3-12A

Fig.3-12B

**Fig.3-13A**

*Fig.3-13B*

**Fig.3-13C**

EP 4 488 199 A1

Fig.3-13D

*Fig.3-13E*

**Fig.3-13F**

73

76c                                            76c

    76e  76d  76e  75f  75a  76e  76d  76e        76

P4            76e                    76e
                                                    P1

76c → 76d                              76d ← 76c

    76e                                76e

75c        75c        75c

        75b    75b

75a →              a1              ← 75a

    76e        75b    75b        76e

        75c    75c        75c

76e                                    76e

76c → 76d                              76d ← 76c

    76e                                76e

P3                                        P2

    76e  76d  76e    75e    76e  76d  76e

76c                    75e                76c

        76e  76d  76e      76e  76d  76e

**Fig.3-13G**

**Fig.3-14**

EP 4 488 199 A1

80

86

84a(84b,84c,84d)

76e

85

76d

86

76e

86

85

86

76e

76d

76e

82

83a(83b,83c,83d)

**Fig.3-15**

*Fig.3-16*

**Fig.3-17**

**Fig.3-18A**

**Fig.3-18B**

*Fig.3-19A*

Fig.3-19B

## FIG.3-20

## FIG.3-21

FIG.3-22

# FIG.3-23

FIG.3-24

# FIG.3-25

FIG.3-26

91c

91c

91

91c

91e — 91b

96

91a

91e

91c

91c

91c

*Fig.3-27*

Fig. 4-1

*Fig.4-2*

**Fig.4-3**

EP 4 488 199 A1

## Fig.4-4

## Fig.4-5

20

21

22    22

31

30

**Fig.4-6**

50

**MANAGEMENT SERVER**    51    52

**CONTROL UNIT**    511

COMMUNICATION
CONTROL UNIT

512

STOCK
MANAGEMENT UNIT

513

DEVICE CONTROL
UNIT

**STORAGE UNIT**

PROGRAM    521

RACK
INFORMATION    522

ITEM
INFORMATION    523

BIN INFORMATION    524

DEVICE
INFORMATION    525

**Fig.4-7**

**Fig.4-8**

*Fig.4-9*

**Fig.4-10**

EP 4 488 199 A1

Fig. 4-11

**Fig.4-12A**

EP 4 488 199 A1

Fig.4-12B

EP 4 488 199 A1

*Fig.4-13*

**Fig.4-14**

**Fig.4-15**

**Fig.4-16A**

**Fig.4-16B**

Fig.4-17

Fig. 4-18

*Fig.4-19*

*Fig.4-20*

Fig.4-21

Fig.5-1

**Fig.5-2**

Fig.5-3

EP 4 488 199 A1

## Fig.5-4

## Fig.5-5

20

21

22                                    22

31

30

**Fig.5-6**

50

MANAGEMENT SERVER    51                    52

CONTROL UNIT    511        STORAGE UNIT

| COMMUNICATION CONTROL UNIT |    | PROGRAM | 521 |

512                              RACK INFORMATION    522

| STOCK MANAGEMENT UNIT |    | ITEM INFORMATION | 523 |

513                              BIN INFORMATION    524

| DEVICE CONTROL UNIT |    | DEVICE INFORMATION | 525 |

**Fig.5-7**

30

TRANSPORTATION ROBOT 32

CONTROL UNIT 321

COMMUNICATION
CONTROL UNIT

322

RUNNING
CONTROL UNIT

323

LIFTING
CONTROL UNIT

33

MECHANISM UNIT

COMMUNICATION
UNIT — 331

DRIVING WHEEL — 332

DRIVING MOTOR — 333

LIFTING
MECHANISM — 334

SENSOR — 335

BATTERY — 336

*Fig.5-8*

*Fig.5-9*

EP 4 488 199 A1

Fig.5-10

10, 11(2F), 43C, 43D, 13, 15, 20, 41D, 42, 41C, 41B, 41A, 60, 11(1F), 40, 43A, 43B, 15

150

START

SPECIFY SECTION IN WHICH STORAGE BIN STORING ITEM IS ARRANGED — S1

SELECT TRANSPORTATION ROBOT AVAILABLE TO TRANSPORT SPECIFIED TRANSPORTATION BIN — S2

GENERATE ROBOT ROUTE AND BIN ROUTE — S3

TRANSMIT TRANSPORTATION INSTRUCTION TO TRANSPORTATION ROBOT BASED ON GENERATED ROBOT ROUTE AND BIN ROUTE — S4

TRANSMIT TRANSPORTATION INSTRUCTION FOR RETURNING STORAGE BIN TO ORIGINAL SECTION TO TRANSPORTATION ROBOT — S5

COMPLETE ITEM DELIVERY PROCESSING — S6

TRANSMIT TRANSPORTATION INSTRUCTION TO TRANSPORTATION ROBOT BASED ON SHIPMENT ROUTE OF SHIPMENT BIN — S7

COMPLETE ORDER PROCESSING — S8

END

*FIG.5-11*

**Fig.5-12**

EP 4 488 199 A1

Fig.5-13

EP 4 488 199 A1

**Fig.5-14**

Fig.6-1

**Fig.6-2**

Fig. 6-3

EP 4 488 199 A1

# Fig.6-4

# Fig.6-5

20

21

22    22

31

30

**Fig.6-6**

50

MANAGEMENT SERVER          51                    52

CONTROL UNIT      511        STORAGE UNIT

COMMUNICATION
CONTROL UNIT                        PROGRAM                   521
                          200
CENTRAL WIRELESS
COMMUNICATION UNIT                  RACK INFORMATION          522

                          512       ITEM INFORMATION          523
STOCK MANAGEMENT
UNIT                                BIN INFORMATION           524

                          513
DEVICE CONTROL UNIT                 DEVICE INFORMATION        525
                          230
CENTRAL CONTROL
UNIT

**Fig.6-7**

*Fig.6-8*

# Fig.6-9

3

TRANSPORTATION ROBOT CONTROL SYSTEM

50
230
200

CENTRAL CONTROL UNIT

CENTRAL WIRELESS COMMUNICATION UNIT

210

30 | INDIVIDUAL WIRELESS COMMUNICATION UNIT

TRANSPORTATION ROBOT

INDIVIDUAL CONTROL UNIT 220

COMMUNICATION UNIT 240

MUTUAL WIRELESS COMMUNICATION UNIT

INFORMATION READING UNIT 211

2

RACK 212

INFORMATION HOLDING UNIT

212

INFORMATION HOLDING UNIT

30

TRANSPORTATION ROBOT

INDIVIDUAL CONTROL UNIT 220

COMMUNICATION UNIT 240

MUTUAL WIRELESS COMMUNICATION UNIT

INFORMATION READING UNIT 211

212

INFORMATION HOLDING UNIT

212

INFORMATION HOLDING UNIT

212

INFORMATION HOLDING UNIT

30

TRANSPORTATION ROBOT

INDIVIDUAL CONTROL UNIT 220

COMMUNICATION UNIT 240

MUTUAL WIRELESS COMMUNICATION UNIT

INFORMATION READING UNIT 211

212

INFORMATION HOLDING UNIT

212

INFORMATION HOLDING UNIT

## Fig.6-10

```
         ┌─────────────────────────────────┐
         │  COLLISION AVOIDANCE PROCESSING  │
         └─────────────────────────────────┘
                        │
              ┌─────────────────────┐
              │ NEARBY TRANSPORTATION│  S1
              │ ROBOT DETECTION PROCESSING │
              └─────────────────────┘
                        │
              ◇ NEARBY TRANSPORTATION ◇  S1-1
          No  ◇ ROBOT IS PRESENT?    ◇
              │
              │ Yes
              ┌─────────────────────┐
              │ COLLISION DETERMINATION │  S2
              │      PROCESSING      │
              └─────────────────────┘
                        │
          No  ◇    COLLISION?    ◇  S2-1
              │
              │ Yes
              ┌─────────────────────┐
              │ PRIORITY DETERMINATION │  S3
              │      PROCESSING      │
              └─────────────────────┘
                        │
     Yes  ◇ PRIORITY OF MOVEMENT ◇  S3-1
          ◇ OF TRANSPORTATION ROBOT TO BE CONTROLLED ◇
          ◇       IS HIGHER?     ◇
              │ No
              ┌─────────────────────┐
              │ STOP TRANSPORTATION ROBOT │  S4
              │    TO BE CONTROLLED  │
              └─────────────────────┘
                        │
              ┌─────────────────────┐
              │  MOVEMENT RESTART   │  S5
              │ DETERMINATION PROCESSING │
              └─────────────────────┘
                        │
          No  ◇     MOVEMENT     ◇  S5-1
              ◇ CAN BE RESTARTED? ◇
              │ Yes
              ┌─────────────────────┐
              │   MOVEMENT RESTART  │  S6
              └─────────────────────┘
                        │
                 ┌──────────┐
                 │   END    │
                 └──────────┘
```

# Fig.6-11

```
        ┌─────────────────────────────┐
        │  NEARBY TRANSPORTATION ROBOT │
        │     DETECTION PROCESSING     │
        └─────────────────────────────┘
                      │
                      ▼
                    ╱───╲
                 ╱         ╲                          S11
              ╱   RECEIVE     ╲
     No     ╱   INFORMATION     ╲
   ◄───────   OF MUTUAL WIRELESS
            ╲  COMMUNICATION UNIT? ╱
              ╲                  ╱
                 ╲            ╱
                    ╲──────╱
                      │ Yes
                      ▼                               S12
        ┌─────────────────────────────┐
        │  MUTUAL TRANSPORTATION ROBOT │
        │         IS PRESENT           │
        └─────────────────────────────┘
                      │
  S13                 │
 ┌─────────────────────────────┐
 │  MUTUAL TRANSPORTATION ROBOT │
 │         IS PRESENT           │
 └─────────────────────────────┘
                      │
                      ▼
                 ┌─────────┐
                 │   END   │
                 └─────────┘
```

# Fig.6-12

```
        ┌──────────────────────────┐
        │  COLLISION DETERMINATION │
        │        PROCESSING        │
        └──────────────────────────┘
                     │
                     ▼
        ┌──────────────────────────┐
        │ GENERATE PATH INFORMATION│── S21
        │ OF NEARBY TRANSPORTATION │
        │ ROBOT TO BE UNCONTROLLED │
        └──────────────────────────┘
                     │
                     ▼
        ┌──────────────────────────┐
        │ GENERATE PATH INFORMATION│── S22
        │ OF TRANSPORTATION ROBOT  │
        │      TO BE CONTROLLED    │
        └──────────────────────────┘
                     │
                     ▼
                  ╱──────╲
          No     ╱ PATH OF ╲        S23
        ◄───────  NEARBY    ╲
                ╲ TRANSPORTATION
                 ╲ ROBOT ... ╱
                  ╲────────╱
                     │ Yes
                     ▼
        ┌──────────────────────────┐
        │        COLLISION         │── S24
        └──────────────────────────┘
```

PATH OF NEARBY TRANSPORTATION ROBOT TO BE UNCONTROLLED OVERLAPS PATH OF TRANSPORTATION ROBOT TO BE CONTROLLED?

S25

NO COLLISION

END

# Fig.6-13

S31

```
┌─────────────────────────────────────┐
│  PRIORITY DETERMINATION PROCESSING   │
└─────────────────────────────────────┘
```

PRIORITY OF ITEM
TRANSPORTED BY TRANSPORTATION ROBOT
TO BE CONTROLLED IS HIGHER THAN
PRIORITY OF ITEM TRANSPORTED BY
TRANSPORTATION ROBOT TO BE
UNCONTROLLED?

No

Yes

S32

PRIORITY OF MOVEMENT OF
TRANSPORTATION ROBOT TO BE
CONTROLLED IS HIGHER

S33

PRIORITY OF MOVEMENT OF
TRANSPORTATION ROBOT TO BE
CONTROLLED IS LOWER

```
┌──────────┐
│   END    │
└──────────┘
```

# Fig.6-14

MOVEMENT RESTART
DETERMINATION PROCESSING

S51

MOVEMENT RESTART
REQUIREMENT
IS SATISFIED?

No

Yes

MOVEMENT CAN BE RESTARTED — S52

END

Fig.7-1

Fig.7-2

Fig.7-3

EP 4 488 199 A1

# Fig.7-4

# Fig.7-5

**Fig.7-6**

**Fig.7-7A**

**Fig.7-7B**

**Fig.7-8A**

**Fig.7-8B**

18

18c

18b

18a

**Fig.7-8C**

16

16a

**Fig.7-8D**

**Fig.7-9A**

**Fig.7-9B**

<div align="center">

**INTERNATIONAL SEARCH REPORT**

</div>

| International application No. |
|---|
| **PCT/JP2023/006764** |

**A. CLASSIFICATION OF SUBJECT MATTER**

*B65G 1/00*(2006.01)i; *B65G 1/137*(2006.01)i
FI:  B65G1/00 501A; B65G1/137 E

According to International Patent Classification (IPC) or to both national classification and IPC

**B. FIELDS SEARCHED**

Minimum documentation searched (classification system followed by classification symbols)

B65G1/00; B65G1/137

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/122218 A1 (AUTOSTORE TECHNOLOGY AS) 24 June 2021 (2021-06-24) p. 15, lines 11-19, p. 19, lines 1-18, fig. 1, 9 | 1, 12-13 |
| Y | | 2 |
| A | | 3-11 |
| X | US 2021/0221615 A1 (SSI SCHAEFER AUTOMATION GMBH AT) 22 July 2021 (2021-07-22) paragraphs [0063], [0065], fig. 1 | 1, 12-13 |
| Y | | 2 |
| A | | 3-11 |
| Y | JP 06-024506 A (MURATA MACHINERY LTD) 01 February 1994 (1994-02-01) paragraphs [0009]-[0017], fig. 1 | 2 |
| A | JP 2018-516824 A (COMMONSENSE ROBOTICS LTD.) 28 June 2018 (2018-06-28) entire text, all drawings | 1-13 |
| A | JP 2017-522247 A (DEMATIC CORP.) 10 August 2017 (2017-08-10) entire text, all drawings | 1-13 |

☑ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **23 March 2023** | **04 April 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

International application No.

**PCT/JP2023/006764**

| C. | DOCUMENTS CONSIDERED TO BE RELEVANT | |
|---|---|---|
| Category* | Citation of document, with indication, where appropriate, of the relevant passages | Relevant to claim No. |
| A | WO 2021/218931 A1 (HANGZHOU YIWU TECHNOLOGES CO., LTD.) 04 November 2021 (2021-11-04)<br>entire text, all drawings | 1-13 |

Form PCT/ISA/210 (second sheet) (January 2015)

**INTERNATIONAL SEARCH REPORT**
**Information on patent family members**

International application No.

**PCT/JP2023/006764**

| Patent document cited in search report | | | Publication date (day/month/year) | Patent family member(s) | | | Publication date (day/month/year) |
|---|---|---|---|---|---|---|---|
| WO | 2021/122218 | A1 | 24 June 2021 | EP | 4077171 | A1 | |
| | | | | NO | 20191511 | A1 | |
| | | | | CN | 114829272 | A | |
| US | 2021/0221615 | A1 | 22 July 2021 | WO | 2017/216127 | A1 | |
| | | | | EP | 3468899 | A1 | |
| | | | | DE | 102016110820 | A1 | |
| JP | 06-024506 | A | 01 February 1994 | (Family: none) | | | |
| JP | 2018-516824 | A | 28 June 2018 | US | 2017/0267452 | A1 | |
| | | | | entire text, all drawings | | | |
| | | | | WO | 2016/199033 | A1 | |
| | | | | EP | 3307652 | A1 | |
| | | | | CN | 107635891 | A | |
| JP | 2017-522247 | A | 10 August 2017 | US | 2016/0009493 | A1 | |
| | | | | entire text, all drawings | | | |
| | | | | WO | 2016/007940 | A1 | |
| | | | | EP | 3166876 | A1 | |
| | | | | CA | 2954073 | A1 | |
| WO | 2021/218931 | A1 | 04 November 2021 | US | 2022/0106122 | A1 | |
| | | | | entire text, all drawings | | | |
| | | | | EP | 3971114 | A1 | |
| | | | | CN | 113554379 | A | |
| | | | | KR | 10-2022-0011169 | A | |
| | | | | JP | 2022-527879 | A | |

Form PCT/ISA/210 (patent family annex) (January 2015)

**REFERENCES CITED IN THE DESCRIPTION**

**Patent documents cited in the description**

• WO 2018189110 A1